# EUROPEAN PATENT APPLICATION

(11) **EP 1 811 362 A1**
(43) Date of publication of application: **25.07.2007**
(21) Application number: 05800028.2
(22) Date of filing: 27.10.2005
(51) Int. Cl.: G06F 3/041, G09G 3/20, B60R 11/02, G09G 5/00, B60R 16/02, H04N 5/66

(54) **DISPLAY**

(30) Priority: 27.10.2004 JP 2004312798; 30.11.2004 JP 2004346798; 14.12.2004 JP 2004361806; 11.01.2005 JP 2005003948; 14.06.2005 JP 2005174054; 07.09.2005 JP 2005259574; 22.09.2005 JP 2005276772; 22.09.2005 JP 2005276771; 22.09.2005 JP 2005276770
(71) Applicant: FUJITSU TEN LIMITED, Kobe-shi, Hyogo 652-8510 (JP)
(72) Inventor: WATANABE, Shinji c/o FUJITSU TEN LIMITED, Hyogo 652-8510 (JP); YASUDA, Katsuhiro c/o FUJITSU TEN LIMITED, Hyogo 652-8510 (JP); MIYAZAWA, Eiji c/o FUJITSU TEN LIMITED, Hyogo 652-8510 (JP); KAJIMOTO, Nobuaki c/o FUJITSU TEN LIMITED, Hyogo 652-8510 (JP); KOUJIMOTO, Kenichi c/o FUJITSU TEN LIMITED, Hyogo 652-8510 (JP); HAMATANI, Kiyoshi c/o FUJITSU TEN LIMITED, Hyogo 652-8510 (JP); ENOMOTO, Daisuke c/o FUJITSU TEN LIMITED, Hyogo 652-8510 (JP); NISHIDA, Yuusuke c/o FUJITSU TEN LIMITED, Hyogo 652-8510 (JP); KOMATSU, Kazuhiro c/o FUJITSU TEN LIMITED, Hyogo 652-8510 (JP); YOKOYAMA, Masaho c/o FUJITSU TEN LIMITED, Hyogo 652-8510 (JP); FUJIMOTO, Hiroyuki c/o FUJITSU TEN LIMITED, Hyogo 652-8510 (JP); HASHIMOTO, Yoshiyuki c/o FUJITSU TEN LIMITED, Hyogo 652-8510 (JP); KAMOTO, Mitsuhiro c/o FUJITSU TEN LIMITED, Hyogo 652-8510 (JP); YOKAWA, Taku c/o FUJITSU TEN LIMITED, Hyogo 652-8510 (JP); UETA, Yoshikazu c/o FUJITSU TEN LIMITED, Hyogo 652-8510 (JP); SAITOU, Tomoki c/o FUJITSU TEN LIMITED, Hyogo 652-8510 (JP); EGUTI, Takashi c/o FUJITSU TEN LIMITED, Hyogo 652-8510 (JP); TANAKA, Shougo c/o FUJITSU TEN LIMITED, Hyogo 652-8510 (JP)
(74) Representative: Sunderland, James Harry
(86) International application number: PCT/JP2005/020393
(87) International publication number: WO 2006/046783

(57) **Abstract**

A display device whereby appropriate operation control desired by a user can be conducted is implemented even if an image for driver's seat which can be seen by a driver but cannot be seen by a passenger in a passenger seat and an image for passenger seat which can be seen by the passenger in the passenger seat but cannot be seen by the driver are displayed on a common screen. The display device comprises a unit for conducting operation control on an image with priority of an image G_{DR} for driver's seat and an image G_{PA} for passenger seat when an operation is performed to an operating switch arranged in such a manner that the operation area for the image G_{DR} for driver's seat on the display screen and the operation area for the image G_{PA} for passenger seat on the display screen overlap each other.

## Description

### Technical Field

The present invention relates to a display device and, more particularly, to a display device for simultaneously providing a plurality of observers (users) with separate and different pieces of information, respectively, on a common screen.

### Background Art

A driver is prohibited from watching TV programs or movies in driving, and current display devices cannot display TV programs or movies in driving. Therefore, a passenger other than the driver (e.g. a passenger in a passenger seat beside the driver) cannot watch TV programs or movies in driving even though the one is not prohibited from watching TV programs or movies.

On the other hand, in recent years, concerning display devices to be mounted on a vehicle, various kinds of techniques have been proposed, whereby contents displayed to a driver and contents displayed to a passenger other than the driver are differentiated. For example, a technique has been disclosed in the below-mentioned patent document 1, wherein as shown in Fig. 34, by arranging masking stripes 302 and 303 on a transparent cover 301, light emitted from a strip display 304 for displaying an image G_{DR} for driver's seat comes into the eyes of a driver DR, but light emitted from a strip display 305 for displaying an image G_{PA} for passenger seat is prevented from coming into the eyes of the driver DR, while the light emitted from the strip display 305 for displaying the image G_{PA} for passenger seat comes into the eyes of a passenger PA in a passenger seat, but the light emitted from the strip display 304 for displaying the image G_{DR} for driver's seat is prevented from coming into the eyes of the passenger PA in the passenger seat.

In the below-mentioned patent documents 2 and 3, display devices have been disclosed, wherein two images are simultaneously displayed on a liquid crystal display (LCD) and each of the different images can be seen from a driver's seat and a passenger seat, respectively. In the below-mentioned patent documents 4 and 5, double-screen display devices wherein two kinds of images are simultaneously displayed on a common screen, have been disclosed.

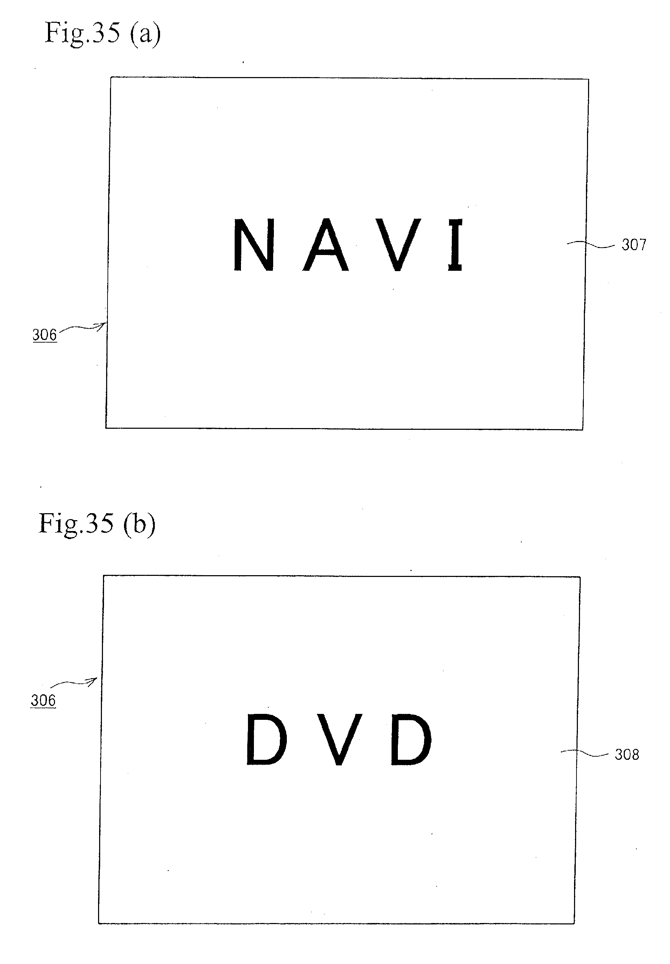

By adopting the above-described techniques, as shown in Fig. 35, a map image 307 by a navigation system can be displayed on a display 306 in a manner that can be seen by the driver DR (cannot be seen by the passenger PA in the passenger seat), while a DVD image 308 can be displayed on the display 306 in a manner that can be seen by the passenger PA in the passenger seat (cannot be seen by the driver DR). Thus, the passenger PA in the passenger seat can watch TV programs or movies even in driving.

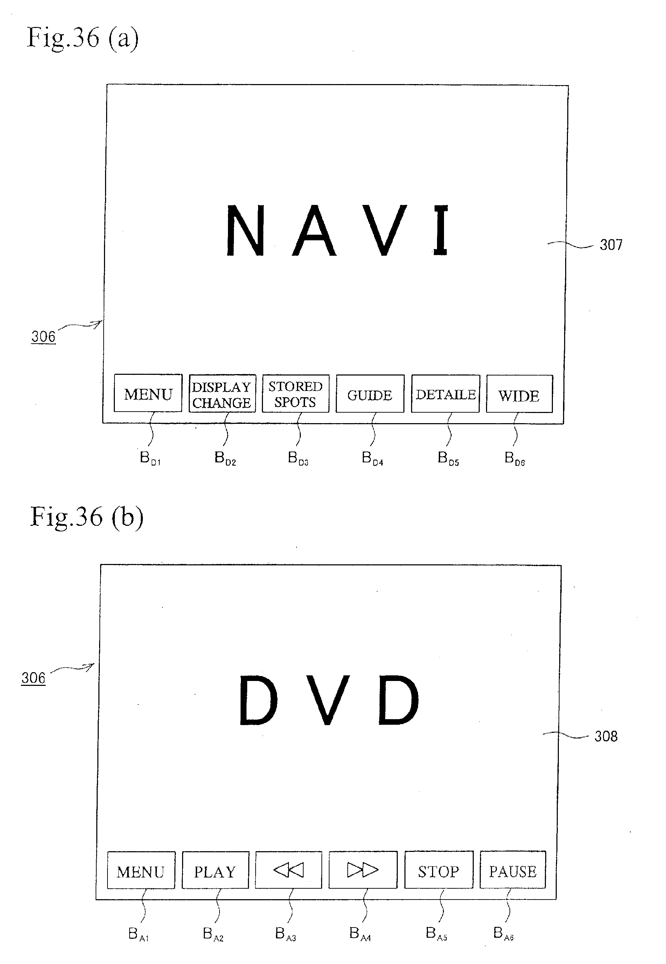

By the way, a touch panel is adopted in the recent display devices, wherein operating switches are formed on a display screen. Therefore, when contents displayed to a driver and contents displayed to a passenger other than the driver are differentiated, as shown in Fig. 36, on a display picture to the driver and a display picture to the passenger other than the driver, operating switches B_{D1}-B_{D6} and B_{A1}-B_{A6} related to each of the display contents may be displayed, respectively.

The operating switches B_{D1}-B_{D6} can be seen only by the driver, while the operating switches B_{A1}-B_{A6} can be seen only by the passenger in the passenger seat. As shown in Fig. 37, the operating switches B_{D1}-B_{D6} are arranged in areas P₁-P₆ which are also operation areas of the operating switches B_{A1}-B_{A6} on the display screen, respectively. It is called 'the same' or 'overlapping' that, as described above, operating switches are arranged in areas where operation areas thereof are the same in each image on a display screen.

As a result, for example, when the area P₅ on the display screen was pressed, it is necessary to properly decide whether control to be conducted when the operating switch B_{D5} of "Detail" was pressed (control for making a map image detailed one) should be performed or control to be conducted when the operating switch B_{A5} of "Stop" was pressed (control for stopping reproducing a DVD image) should be performed. In other words, if this decision cannot be properly made, appropriate operation control desired by a user cannot be performed.

In addition, since the image G_{PA} for passenger seat cannot be seen from the driver's seat, the driver DR must move and look into the image G_{PA} for passenger seat from the passenger seat side when the driver DR wants to know what kind of operations the passenger PA in the passenger seat is doing. Therefore, it is inconvenient, for example, when the passenger PA in the passenger seat is a small child or an elderly person, or a person who is machine illiterate.

And switches other than the touch panel, for example, operating switches arranged around a display unit also have a problem similar to the above-described problem.

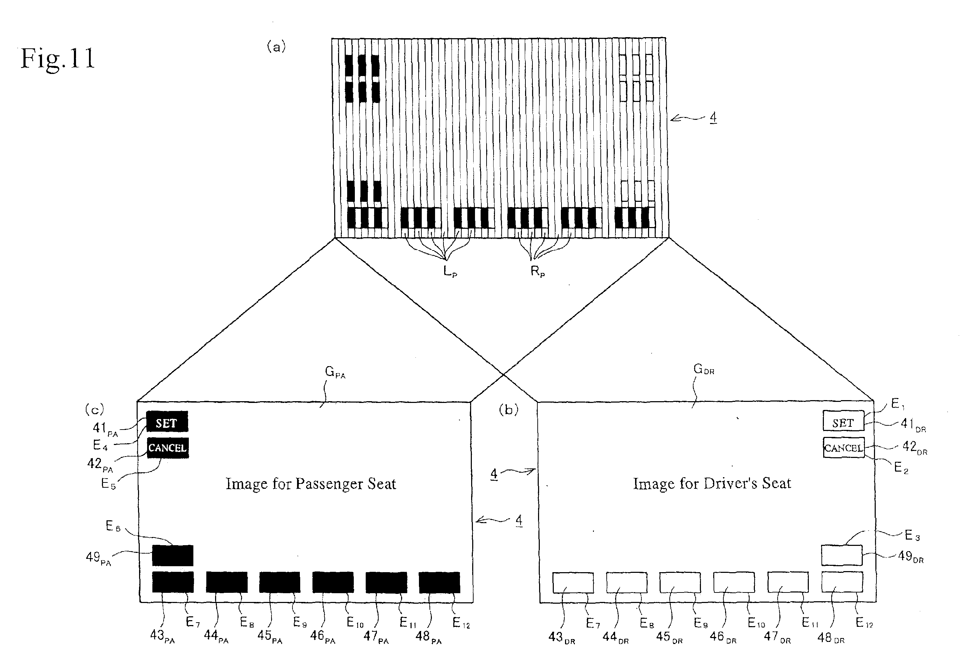

Here, as described later in detail, it is called 'the same' or 'overlapping' that operating switches are arranged in areas where operation areas thereof are the same in each image on a display screen, while it is called 'not overlapping' that operating switches are arranged in locations where operation areas thereof are different in each image on a display screen, like setting switches 41_{DR} and 41_{PA}, cancel switches 42_{DR} and 42_{PA}, and operating switches 49_{DR} and 49_{PA} shown in Fig. 11.
[Patent Document 1] Japanese Patent Application Laid-Open Publication No. 2003-137005
[Patent Document 2] Japanese Patent Application Laid-Open Publication No. 06-186526
[Patent Document 3] Japanese Patent Application Laid-Open Publication No. 2000-137443
[Patent Document 4] Japanese Patent Application Laid-Open Publication No. 11-331876
[Patent Document 5] Japanese Patent Application Laid-Open Publication No. 09-46622
[Patent Document 6] Japanese Patent Application Laid-Open Publication No. 2003-244591
[Patent Document 7] Japanese Patent Application Laid-Open Publication No. 2003-308032
[Patent Document 8] Japanese Patent Application Laid-Open Publication No. 2004-206089

### Disclosure of Invention

The present invention was developed in order to solve the above problem, and it is an object of the present invention to provide a display device whereby appropriate operation control desired by a user is conducted even if individual information is displayed in a plurality of viewing directions on a common screen, for example, even if an image for driver's seat which can be seen from a direction in which a driver is present but cannot be seen from a direction in which a passenger in a passenger seat is present and an image for passenger seat which can be seen from the direction in which the passenger in the passenger seat is present but cannot be seen from the direction in which the driver is present are displayed on a common screen.

In order to achieve the above object, a display device according to a first aspect of the present invention is characterized by comprising a display unit for displaying individual information in a plurality of viewing directions on a common screen, an operation input unit for receiving operation inputs, a limiting unit for limiting the reception of operation inputs to reception of operation inputs associated with information displayed in a particular viewing direction and a switching unit for switching the particular viewing direction.

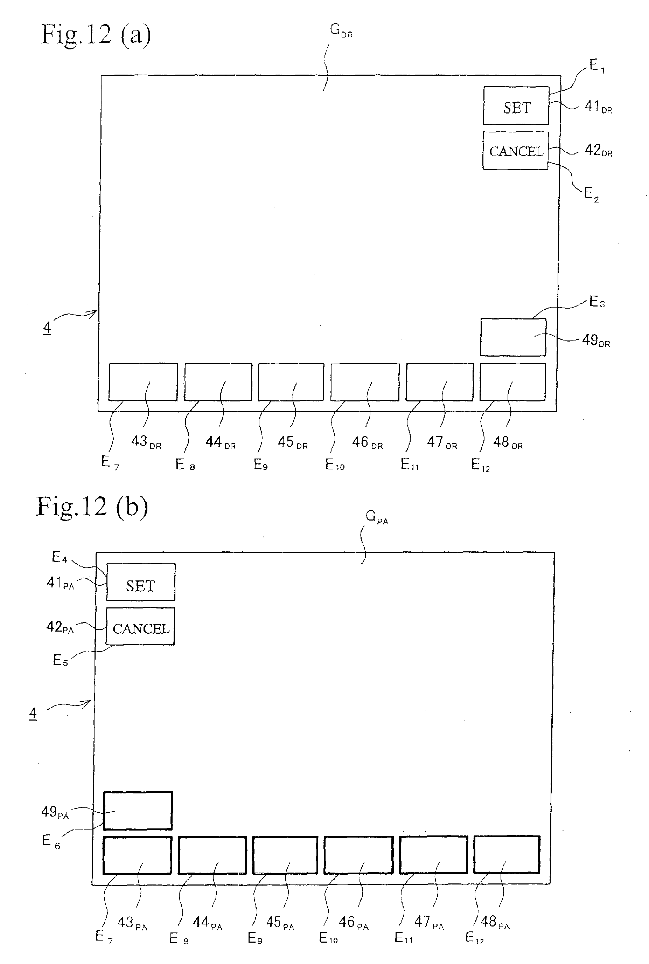

When the display device according to the first aspect of the present invention is used, individual information is displayed in the plurality of viewing directions on the common screen. For example, as shown in below-described Figs. 11 and 12, it is possible to allow a driver DR to see an image G_{DR} for driver's seat (e.g. a map image by a navigation system) and to allow a passenger PA in a passenger seat to see an image G_{PA} for passenger seat (e.g. a DVD image).

However, as shown in Figs. 11 and 12, when an operation is performed to operating switches 43_{DR}-48_{DR} or 43_{PA}-48_{PA} arranged in the same areas E₇-E₁₂ where operation areas thereof for the image G_{DR} for driver's seat on the display screen and operation areas thereof for the image G_{PA} for passenger seat on the display screen overlap each other, there is a possibility that operation control the user does not desire may be conducted if some constraint is not added to the operation.

When the display device according to the first aspect of the present invention is used, the reception of operation inputs is limited to reception of operation inputs associated with information (an image) displayed in the particular viewing direction (e.g. a direction in which the driver DR is present). As a result, the operation inputs associated with the information (image) displayed in the particular viewing direction are received, but operation inputs associated with information (an image) displayed in a viewing direction other than the particular viewing direction are not received.

For example, in a case where operations were performed to the operating switches arranged in such a manner that the operation areas for the image G_{DR} for driver's seat on the display screen and the operation areas for the image G_{PA} for passenger seat on the display screen overlap each other when the viewing direction of the driver DR has been set to the particular viewing direction, only operation inputs associated with the image G_{DR} for driver's seat are valid and operation inputs associated with the image G_{PA} for passenger seat are invalid. That is, the image G_{DR} for driver's seat becomes a priority image. Therefore, by grasping which has been set to the priority image, it is possible to prevent operation control the user does not desire from being conducted.

And since it is possible to realize appropriate operation control by receiving operation inputs associated with the priority image even when operations are performed to the operating switches arranged in such a manner that the operation areas for the image G_{DR} for driver's seat on the display screen and the operation areas for the image G_{PA} for passenger seat on the display screen overlap each other, it is possible to effectively use the display screen by arranging operating switches which have different functions in the same areas E₇-E₁₂ like the operating switches 43_{DR}-48_{DR} and 43_{PA}-48_{PA} shown in Figs. 11 and 12.

Furthermore, when the display device according to the first aspect of the present invention is used, the particular viewing direction is switched and the priority image is not fixed. Therefore, for example, operation inputs through the operating switches arranged in such a manner that the operation areas for the image G_{DR} for driver's seat on the display screen and the operation areas for the image G_{PA} for passenger seat on the display screen overlap each other can be switched between operation inputs associated with the image G_{DR} for driver's seat and operation inputs associated with the image G_{PA} for passenger seat. As a result, the user can realize desired operation control by properly conducting setting of the priority image or switching thereof, or exactly recognizing which has been set to the priority image.

A display device according to a second aspect of the present invention is characterized by comprising a prohibition unit for prohibiting reception of operation inputs associated with information displayed in viewing directions other than the particular viewing direction in the display device according to the first aspect of the present invention.

When operating switches are arranged in the same areas E₇-E₁₂ like the operating switches 43_{DR}-48_{DR} and 43_{PA}-48_{PA} shown in Figs. 11 and 12, there is a possibility that operation control the user does not desire may be conducted if some constraint is not added to operations. However, differently from this case, when each operating switch is arranged in different areas which do not overlap each other, it is possible to avoid operation control the user does not desire from being conducted without placing constraints on operations.

However, the driver DR cannot see the image G_{PA} for passenger seat, while the passenger PA in the passenger seat cannot see the image G_{DR} for driver's seat. As a result, since the driver DR cannot recognize where on the image G_{PA} for passenger seat operating switches are arranged, the driver DR might touch the operating switches arranged on the image G_{PA} for passenger seat though the driver DR thinks that he/she is touching a portion where no operating switch is arranged. Therefore, even if the operating switches which receive only operation inputs associated with the image G_{DR} for driver's seat and the operating switches which receive only operation inputs associated with the image G_{PA} for passenger seat are arranged in different areas so as not to overlap each other, it is desired that some constraint should be added to the operations.

When the display device according to the second aspect of the present invention is used, the reception of operation inputs associated with information displayed in viewing directions other than the particular viewing direction is prohibited. That is, operation control according to operations associated with images other than the priority image is not conducted. For example, in a case where an operation was performed to the operating switch 49_{PA} related to the image G_{PA} for passenger seat when the image G_{DR} for driver's seat has been set to the priority image, the operation becomes invalid. Thus, it is possible to certainly prevent wrong operations.

A display device according to a third aspect of the present invention is characterized by a certain viewing direction which has been set to the particular viewing direction under normal conditions in the display device according to the first or second aspect of the present invention.

When the display device according to the third aspect of the present invention is used, the certain viewing direction has been set to the particular viewing direction under normal conditions. That is, an image (information) displayed in the certain viewing direction has been set to the priority image under normal conditions. Therefore, the user can easily grasp which has been set to the priority image (information) under normal conditions.

A display device according to a fourth aspect of the present invention is characterized by the switching unit which switches a viewing direction in which information of more importance is displayed to the particular viewing direction based on the importance of individual information displayed in each viewing direction in the display device according to the first or second aspect of the present invention.

When the display device according to the fourth aspect of the present invention is used, a viewing direction in which information of more importance is displayed is set to the particular viewing direction. That is, it is possible to make operations of more importance valid and make operations of less importance invalid.

For example, in a case where operations are conducted to the operating switches arranged in such a manner that the operation areas for the image G_{DR} for driver's seat on the display screen and the operation areas for the image G_{PA} for passenger seat on the display screen overlap each other when the degree of importance of the image G_{PA} for passenger seat is higher than that of the image G_{DR} for driver's seat, only operation inputs associated with the image G_{PA} for passenger seat are valid and operation inputs associated with the image G_{DR} for driver's seat are invalid. Therefore, it is possible to make operation control on the image which more needs operations by the user valid.

A display device according to a fifth aspect of the present invention is characterized by the limiting unit which erases individual information displayed in viewing directions other than the particular viewing direction from a screen in any one of the display devices according to the first to fourth aspects of the present invention.

When the display device according to the fifth aspect of the present invention is used, individual information displayed in viewing directions other than the particular viewing direction (i.e. viewing directions from which the operation inputs are not received) are not displayed on the screen. As a result, the user can easily grasp whether information (an image) displayed to oneself is priority information (a priority image) or not. Thus, since wrong operations can be certainly prevented, operation control desired by the user can be realized.

A display device according to a sixth aspect of the present invention is characterized by the limiting unit which erases operation-related pictures for operation inputs individually displayed in viewing directions other than the particular viewing direction from a screen in any one of the display devices according to the first to fourth aspects of the present invention.

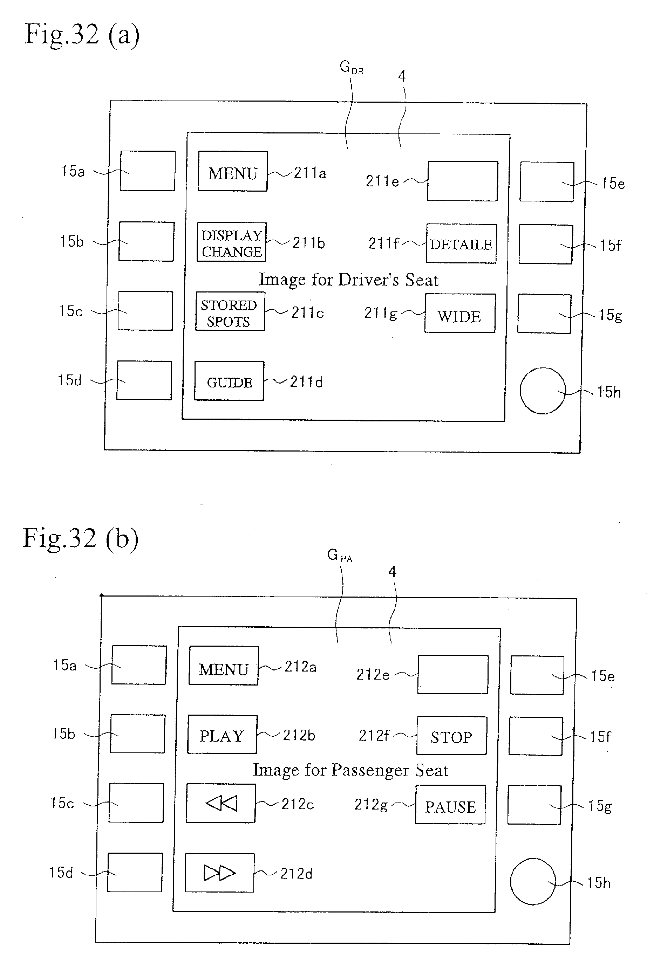

When the display device according to the sixth aspect of the present invention is used, operation-related pictures for individual operation inputs displayed in viewing directions other than the particular viewing direction (i.e. viewing directions from which the operation inputs are not received) are not displayed on the screen. As a result, the user can easily grasp whether information (an image) displayed to oneself is priority information (a priority image) or not. Thus, since wrong operations can be certainly prevented, operation control desired by the user can be realized. Here, as the operation-related pictures, the operating switches 43_{DR}-49_{DR} and 43_{PA}-49_{PA} shown in Fig. 12, or key display pictures 211a-211g and 212a-212g for describing functions of operating switches 15a-15g arranged around the display unit 4 shown in Fig. 32 are exemplified.

A display device according to a seventh aspect of the present invention is characterized by the switching unit which switches a certain viewing direction to the particular viewing direction for a predetermined period of time when it is judged that a condition for setting the certain viewing direction to the particular viewing direction was satisfied in any one of the display devices according to the first to sixth aspects of the present invention.

When the display device according to the seventh aspect of the present invention is used, the certain viewing direction is switched to the particular viewing direction for the predetermined period of time if a condition for setting the certain viewing direction to the particular viewing direction was satisfied. For example, if the condition is satisfied by an indication of the user's intention, the user can freely set an image (information) displayed to the user to the priority image (information) when the user wants to perform operations. If the condition is satisfied depending on use environments, the image G_{PA} for passenger seat can be set to the priority image so as to form a situation where the driver DR cannot operate when greater attention should be given to driving, for example.

As a method of the indication of one's intention, the below-described options a-f are exemplified.
a) Operating switches for setting the image G_{DR} for driver's seat and the image G_{PA} for passenger seat to the priority image are separately arranged.
b) A toggle switch for switching the priority image is arranged.
c) The priority image is set by the user's voice.
   i) Voice recognition is adopted. For example, when the user says "Right", "First" or "Driver", the image G_{DR} for driver's seat is set to the priority image, and when the user says "Left" or "Second", the image G_{PA} for passenger seat is set to the priority image.
   ii) The priority image is set based on the direction that the voice came from. For example, when a voice of "Action" came from the driver's seat side, the image G_{DR} for driver's seat is set to the priority image, and when the voice of "Action" came from the passenger seat side, the image G_{PA} for passenger seat is set to the priority image.
d) The priority image is set by an operating switch arranged on a power steering.
e) The priority image is set based on a time lag between a release of a hand from the power steering and a touch or an approach of an object (such as a finger) on or to a touch panel. For example, since the possibility that the operation was performed by the driver DR is high when said time lag is short, the image G_{DR} for driver's seat is set to the priority image.
f) The priority image is set based on operations of operating switches arranged separately around the driver's seat and the passenger seat.
   i) When a prescribed operation is conducted by using an operating switch for operating a power window of the driver's seat, the image G_{DR} for driver's seat is set to the priority image. On the other hand, when a prescribed operation is conducted by using an operating switch for operating a power window of the passenger seat, the image G_{PA} for passenger seat is set to the priority image.
   ii) An operating switch for operating not the power window but a door lock, a dome light or the like is utilized.

As the use environments, the below-described options a-c are exemplified.
a) In cases where further attention to driving is required, the image G_{PA} for passenger seat is set to the priority image.
   i) High-speed running. It can be judged from a speed pulse or the like.
   ii) A situation where a parking brake is in the off position.
   iii) A situation where the vehicle is running on an expressway. It can be judged from a GPS signal or the like.
   iv) A situation where the vehicle is widely vibrating. It can be judged from a signal obtained from a G sensor or the like.
   v) Night driving. It can be judged from a state of an illumination lamp or the like.
b) In cases where there is no problem even if the driver DR operates, the image G_{DR} for driver's seat is set to the priority image.
   i) A situation where the parking brake is in the on position.
c) In cases where there is no passenger in one seat, an image displayed to a person in the other seat is set to the priority image.
   i) When the passenger PA in the passenger seat is not present, the image G_{DR} for driver's seat is set to the priority image.
   ii) When the driver DR is not present, the image G_{PA} for passenger seat is set to the priority image.

Here, as the predetermined period of time, the below-described options a-d are exemplified.
a) A period of time before the next operation is performed
b) A period of time before the next operation is performed or a period of time before a prescribed time (e.g. 10 seconds) elapses
c) A period of time before a time during which no operation is performed exceeds a prescribed time (e.g. 10 seconds)
d) A period of time before the priority image is newly set

A display device according to an eighth aspect of the present invention is characterized by the switching unit which switches the particular viewing direction every time a predetermined period of time elapses in any one of the display devices according to the first to sixth aspects of the present invention.

When the display device according to the eighth aspect of the present invention is used, the particular viewing direction is switched every time the predetermined period of time elapses. That is, the priority image is automatically switched. For example, every time the predetermined period of time elapses, the priority image is automatically alternated between the image G_{DR} for driver's seat and the image G_{PA} for passenger seat. As a result, this makes it possible that the user does not have to set the priority image or conduct the switching operation.

Here, as the predetermined period of time, the below-described options a-c are exemplified.
a) A period of time before a predetermined period of time (e.g. 20 seconds) elapses
b) A period of time before a time during which no operation is performed exceeds a prescribed time (e.g. 10 seconds)
c) A period of time before an instruction to switch the priority image is provided by another trigger (e.g. an operation by the user)

A display device according to a ninth aspect of the present invention is characterized by further comprising a notification unit for notifying a user of the particular viewing direction in any one of the display devices according to the first to eighth aspects of the present invention.

When the display device according to the ninth aspect of the present invention is used, the user is notified of the particular viewing direction. For example, the user is informed which of the image G_{DR} for driver's seat and the image G_{PA} for passenger seat is the priority image. As a result, since said user can easily recognize which of the both images has been set to the priority image, it is possible to prevent wrong operations.

Here, as the notification method, the below-described options a and b are exemplified.
a) Lighting, flashing, a change of the color or a change of the thickness of outlines of operating switches
   i) Only switches which can be operated are displayed (switches which cannot be operated are not displayed).
   ii) Switches which can be operated are displayed with flashing.
   iii) Switches which can be operated are displayed with black letters, while switches which cannot be operated are displayed with hollow letters.
   iv) The outlines of switches which can be operated are made thick.
b) Display and erase marks
   i) Display of an arrow showing a viewing direction corresponding to the priority image. When the image G_{DR} for driver's seat is the priority image in a right-hand drive car, a right-pointing arrow is displayed. When the image G_{PA} for passenger seat is the priority image, a left-pointing arrow is displayed.
   ii) When the image G_{DR} for driver's seat is the priority image, a picture of a steering wheel is displayed. When the image G_{PA} for passenger seat is the priority image, a mark '×' is overlaid on the picture of a steering wheel.

A display device according to a tenth aspect of the present invention is characterized by comprising a notification unit for notifying a user of switching of the particular viewing direction in any one of the display devices according to the first to eighth aspects of the present invention.

When the display device according to the tenth aspect of the present invention is used, the user is notified of switching of the particular viewing direction. That is, the user is informed that a change of the priority image was caused. As a result, since said user can easily recognize which of the both images has been set to the priority image, wrong operations can be prevented. Here, as the notification method, briefly flashing a screen of a touch panel, providing a voice message and producing a beeping sound are exemplified.

A display device according to an eleventh aspect of the present invention is characterized by comprising a display unit for displaying individual information in a plurality of viewing directions on a common screen, an operation input unit for receiving operation inputs, a limiting unit for limiting the reception of operation inputs to reception of operation inputs associated with information displayed in a particular viewing direction, a switching unit for switching the particular viewing direction and a notification unit for notifying the particular viewing direction.

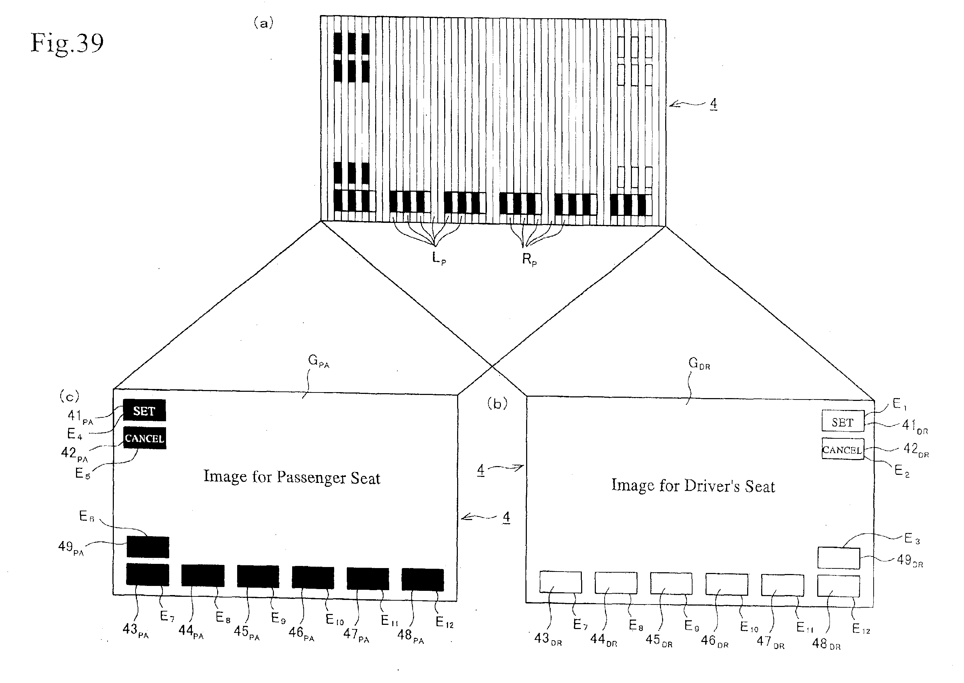

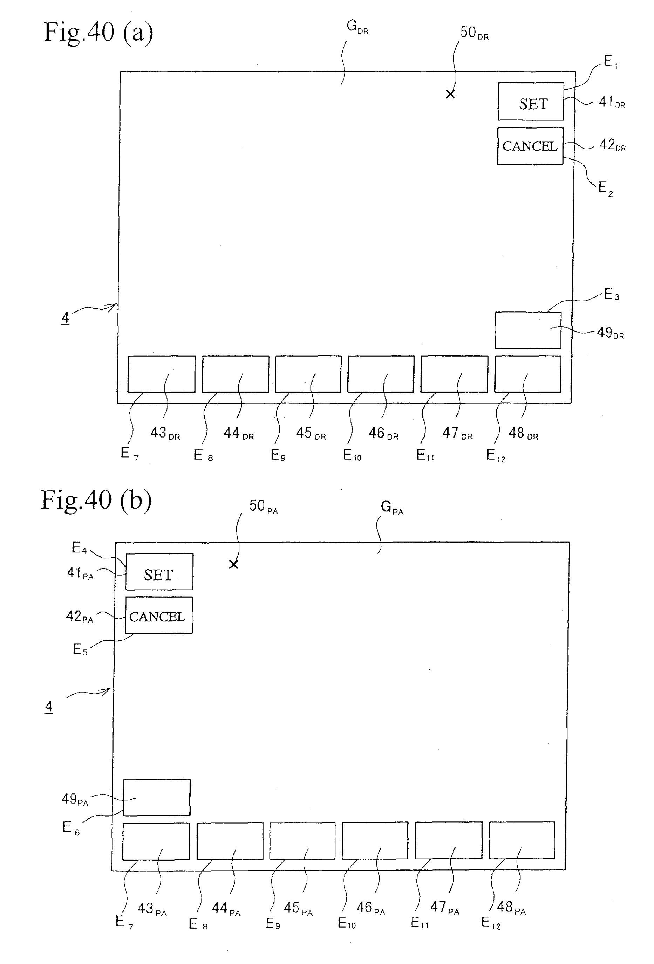

When the display device according to the eleventh aspect of the present invention is used, individual information is displayed in the plurality of viewing directions on the common screen. For example, as shown in Figs. 39 and 40 described below, it is possible to allow a driver DR to see an image G_{DR} for driver's seat (e.g. a map image by a navigation system), and allow a passenger PA in a passenger seat to see an image G_{PA} for passenger seat (e.g. a DVD image).

However, as shown in Figs. 39 and 40, when an operation is performed to operating switches 43_{DR}-48_{DR} or 43_{PA}-48_{PA} arranged in the same areas E₇-E₁₂ where operation areas thereof for the image G_{DR} for driver's seat on the display screen and operation areas thereof for the image G_{PA} for passenger seat on the display screen overlap each other, there is a possibility that operation control the user does not desire may be conducted if some constraint is not added to the operation.

When the display device according to the eleventh aspect of the present invention is used, the reception of operation inputs is limited to reception of operation inputs associated with information (e.g. the image G_{DR} for driver's seat) displayed in the particular viewing direction. As a result, the operation inputs associated with the information displayed in the particular viewing direction are received, but operation inputs associated with information displayed in a viewing direction other than the particular viewing direction are not received.

For example, in a case where operations were performed to the operating switches arranged in such a manner that the operation areas for the image G_{DR} for driver's seat on the display screen and the operation areas for the image G_{PA} for passenger seat on the display screen overlap each other when the viewing direction of the driver DR has been set to the particular viewing direction, only operation inputs associated with the image G_{DR} for driver's seat are valid and operation inputs associated with the image G_{PA} for passenger seat are invalid. That is, the image G_{DR} for driver's seat becomes a priority image. Therefore, by grasping which has been set to the priority image, it is possible to prevent operation control the user does not desire from being conducted.

And since it is possible to realize appropriate operation control by receiving operation inputs associated with the priority image even when operations are performed to the operating switches arranged in such a manner that the operation areas for the image G_{DR} for driver's seat on the display screen and the operation areas for the image G_{PA} for passenger seat on the display screen overlap each other, it is possible to effectively use the display screen by arranging operating switches which have different functions in the same areas E₇-E₁₂ like the operating switches 43_{DR}-48_{DR} and 43_{PA}-48_{PA} shown in Figs. 39 and 40.

Moreover, when the display device according to the eleventh aspect of the present invention is used, the particular viewing direction is switched and the priority image is not fixed. Therefore, for example, operation inputs through the operating switches arranged in such a manner that the operation areas for the image G_{DR} for driver's seat on the display screen and the operation areas for the image G_{PA} for passenger seat on the display screen overlap each other can be performed not from either of the driver's seat direction and the passenger seat direction but from both of them. As a result, the user can realize desired operation control by properly conducting setting of the priority image or switching thereof, or exactly recognizing which has been set to the priority image.

Furthermore, when the display device according to the eleventh aspect of the present invention is used, the particular viewing direction (i.e. information associated with which the operation inputs can be received) is notified. For example, when the image G_{DR} for driver's seat has been set to the priority image, the driver DR is notified that the information displayed to the driver DR is the priority image while the passenger PA in the passenger seat is notified that the information displayed to the passenger PA is not the priority image. As a result, the user can correctly grasp whether it is in a situation where operations to the image the user can watch are practicable. Thus, wrong operations by the user can be prevented.

A display device according to a twelfth aspect of the present invention is characterized by the notification unit which notifies the particular viewing direction by individually notifying whether operation inputs associated with information displayed in each viewing direction can be received or not in the display device according to the eleventh aspect of the present invention.

When the display device according to the twelfth aspect of the present invention is used, whether the operation inputs can be received or not is notified individually in each viewing direction. For example, when the image G_{DR} for driver's seat has been set to the priority image, the driver DR is notified that the information displayed to the driver DR is the priority image while the passenger PA in the passenger seat is notified that the information displayed to the passenger PA is not the priority image. Thus, the user can more certainly grasp whether it is in a situation where operations to the image the user can watch are practicable.

A display device according to a thirteenth aspect of the present invention is characterized by the notification unit which notifies the particular viewing direction by notifying which viewing direction has been set to the particular viewing direction in the display device according to the eleventh aspect of the present invention.

When the display device according to the thirteenth aspect of the present invention is used, which viewing direction has been set to the particular viewing direction is notified. For example, when the image G_{DR} for driver's seat has been set to the priority image, the user is notified of that. As a result, the driver DR can know that the information displayed to the driver DR is the priority image, while the passenger PA in the passenger seat can know that the image G_{DR} for driver's seat is the priority image and that the information displayed to the passenger PA is not the priority image.

Here, as a method of notifying which viewing direction has been set to the particular viewing direction, a method of notification by voice is exemplified. In the method, for example, when operations associated with the image G_{DR} for driver's seat are practicable (i.e. when the image G_{DR} for driver's seat is the priority image), a piece of music A is played. On the other hand, when operations to the image G_{PA} for passenger seat are practicable (i.e. when the image G_{PA} for passenger seat is the priority image), a piece of music B different from the piece of music A is played.

A display device according to a fourteenth aspect of the present invention is characterized by the notification unit which notifies the particular viewing direction by changing at least either of at least a part of a display mode of information individually displayed in the particular viewing direction and at least a part of a display mode of information individually displayed in viewing directions other than the particular viewing direction in the display device according to the twelfth or thirteenth aspect of the present invention.

When the display device according to the fourteenth aspect of the present invention is used, at least either of at least a part of a display mode of information individually displayed in the particular viewing direction and at least a part of a display mode of information displayed in viewing directions other than the particular viewing direction is changed. Thus, the user can recognize whether it is in a situation where operations to the image the user can see are practicable by seeing the information individually displayed to the user.

As a method of changing a display mode of information individually displayed, the below-described options a-c are exemplified.
a) Only the display mode of the image to which operations can be conducted is changed.
   i) When operations associated with the image G_{DR} for driver's seat are practicable:
      A word of 'Practicable', a word of 'DR SEAT', a mark '○', a mark of 'a steering wheel' which is an image of the driver DR or the like is additionally displayed on the image G_{DR} for driver's seat. Due to the additional display showing 'practicable', the driver DR can know that operations associated with the image G_{DR} for driver's seat are practicable.
      The above-described additional display is not given to the image G_{PA} for passenger seat. Since there is no additional display showing 'practicable', the passenger PA in the passenger seat can know that operations associated with the image G_{DR} for driver's seat which the driver DR, a person on the other side, can see are practicable.
b) Only the display mode of the image to which operations cannot be conducted is changed.
   i) When operations associated with the image G_{DR} for driver's seat are practicable:
      A word of 'Impracticable', a mark '×' or the like is additionally displayed on the image G_{PA} for passenger seat. Due to the additional display showing 'impracticable', the passenger PA in the passenger seat can know that operations associated with the image G_{PA} for passenger seat which the passenger PA can see are impracticable.
      The above-described additional display is not given to the image G_{DR} for driver's seat. Since there is no additional display showing 'impracticable', the driver DR can know that operations associated with the image G_{DR} for driver's seat which the driver DR can see are practicable.
   ii) When operations associated with the image G_{DR} for driver's seat are practicable:
      A word of 'DR SEAT', a mark of 'a steering wheel' or the like is additionally displayed on the image G_{PA} for passenger seat. Since there is an additional display such as the word of 'DR SEAT' or the mark of 'a steering wheel', the passenger PA in the passenger seat can know that operations associated with the image G_{DR} for driver's seat which the driver DR can see are practicable.
      The above-described additional display is not given to the image G_{DR} for driver's seat. Since there is no additional display, the driver DR can know that operations associated with the image G_{DR} for driver's seat which the driver DR can see are practicable.
c) Both of the display mode of the image to which operations can be conducted and that of the image to which operations cannot be conducted are changed.
   i) When operations associated with the image G_{DR} for driver's seat are practicable:
      A word of 'Practicable', a mark '○' or the like is additionally displayed on the image G_{DR} for driver's seat.
      A word of 'Impracticable', a mark '×' or the like is additionally displayed on the image G_{PA} for passenger seat.
   ii) When operations associated with the image G_{DR} for driver's seat are practicable:
      A word of 'DR SEAT', a mark of 'a steering wheel' or the like is additionally displayed on the image G_{DR} for driver's seat and the image G_{PA} for passenger seat.

Here, as a method of changing the display mode, not only the additional display of those words or marks, but also deformation, coloring, composition and the like are exemplified. A change of the display mode is concretely described in the below-described options a-g.
a) A change in size
b) A change in shape
   i) A change from a rectangle to a round
   ii) To make an image look angled
c) A change in lightness, hue, chroma or the like
d) A change in transmittance when a plurality of images are overlaid
e) To limit usable colors
   i) To make an image a monochrome picture
   ii) To make the overall image whitish
f) A change in display time
   i) To make flashing display
g) To add a picture such as a word or a mark
   i) A word of 'Practicable', a mark '○' or the like is additionally displayed.

A display device according to a fifteenth aspect of the present invention is characterized by information whose display mode is changed, which includes each operation-related picture for operation inputs to be individually displayed in the display device according to the fourteenth aspect of the present invention.

When the display device according to the fifteenth aspect of the present invention is used, information whose display mode is changed includes each operation -related picture for operation inputs to be individually displayed. As a result, the user can recognize whether it is in a situation where operations associated with the image the user can see are practicable by seeing the display mode of the operation-related picture.

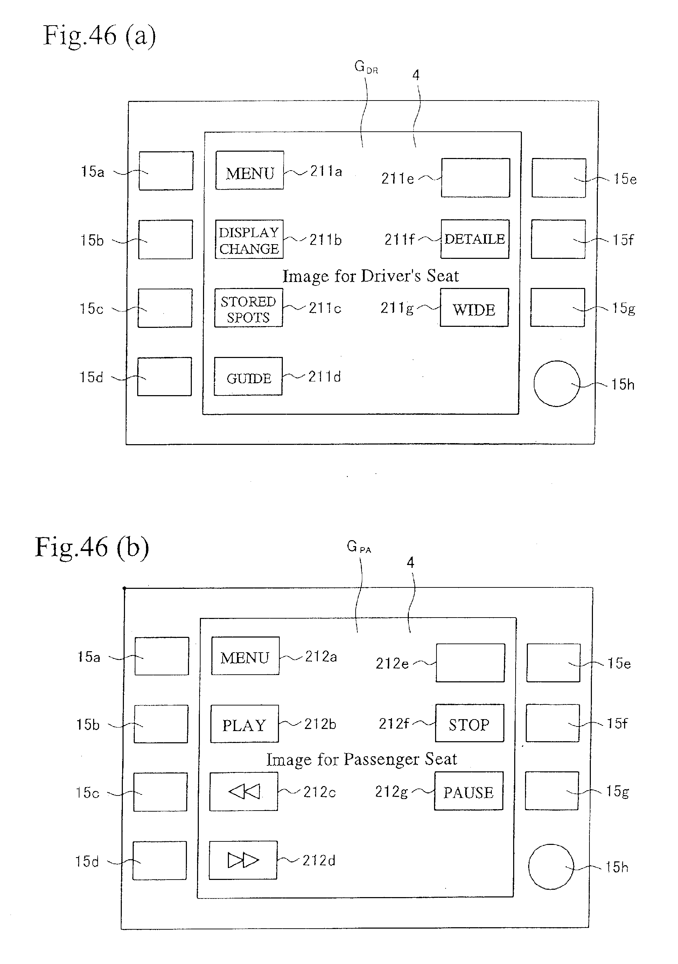

Here, as the operation-related picture, operating switches 43_{DR}-49_{DR} and 43_{PA}-49_{PA} shown in Fig. 40, and key display pictures 211a-211g and 212a-212g for describing functions of operating switches 15a-15g arranged around a display unit 4 shown in Fig. 46 are exemplified.

A display device according to a sixteenth aspect of the present invention is characterized by the notification unit which notifies the particular viewing direction by changing a placement of the display unit or the device body in the display device according to the eleventh aspect of the present invention.

When the display device according to the sixteenth aspect of the present invention is used, the placement of the display unit or the device body is changed. For example, when it is possible to conduct operations associated with the image G_{DR} for driver's seat, the display unit or the device body is angled in such a manner that the driver DR can easily watch. On the other hand, when it is possible to conduct operations associated with the image G_{PA} for passenger seat, the display unit or the device body is angled in such a manner that the passenger PA in the passenger seat can easily watch. Thus, the user can recognize operations associated with which image can be conducted from the placement of the display unit or the device body without watching the screen.

A display device according to a seventeenth aspect of the present invention is characterized by the notification unit which notifies the particular viewing direction by changing a lighting state of light-emitting members in the display device according to the eleventh aspect of the present invention.

When the display device according to the seventeenth aspect of the present invention is used, the lighting state of light-emitting members is changed. For example, a red LED (light-emitting diode) and a green LED are arranged around the display unit. When it is possible to conduct operations associated with the image G_{DR} for driver's seat, the red LED is lit up. On the other hand, when it is possible to conduct operations associated with the image G_{PA} for passenger seat, the green LED is lit up. Thus, the user can recognize operations associated with which image can be conducted from the lighting state of the LEDs without watching the screen. Here, light-emitting members dedicated to the notification may not be necessarily arranged. For example, light-emitting members which light hard switches arranged on a frame of the display unit may be adopted.

A display device according to an eighteenth aspect of the present invention is characterized by the notification unit which notifies the particular viewing direction by differentiating between voice outputs associated with information displayed in the particular viewing direction and voice outputs associated with information displayed in viewing directions other than the particular viewing direction in the display device according to the eleventh aspect of the present invention.

When the display device according to the eighteenth aspect of the present invention is used, voice outputs associated with information displayed in the particular viewing direction and voice outputs associated with information displayed in viewing directions other than the particular viewing direction are differentiated. For example, when it is possible to conduct operations associated with the image G_{DR} for driver's seat in a case where a map image by a navigation system is displayed as the image G_{DR} for driver's seat and a DVD image is displayed as the image G_{PA} for passenger seat, the volume of voice guidance of navigation is enhanced. On the other hand, when it is possible to conduct operations associated with the image G_{PA} for passenger seat, the volume of the DVD sound is enhanced. Thus, the user can recognize operations associated with which image can be conducted without watching the screen.

A display device according to a nineteenth aspect of the present invention is characterized by the notification unit which starts to provide a notification to the particular viewing direction with the operation input in any one of the display devices according to the eleventh to eighteenth aspects of the present invention.

When the display device according to the nineteenth aspect of the present invention is used, providing the notification to the particular viewing direction is started with the operation input to the operation input unit. For example, when a finger touches the touch panel or approaches the touch panel, the notification is provided. As a result, the notification can be provided when it is highly required.

A display device according to a twentieth aspect of the present invention is characterized by the notification unit which finishes the notification when a period of time in which the operation input is not conducted continued for a prescribed time in the display device according to the nineteenth aspect of the present invention.

When the display device according to the twentieth aspect of the present invention is used, the notification is finished when a period of time in which the operation input to the operation input unit is not conducted continued for the prescribed time. For example, when 10 seconds or so elapsed after the finger left away from the touch panel, the notification is finished. Thus, it is possible to prevent the display mode of individually displayed information from remaining changed more than necessary.

A display device according to a twenty-first aspect of the present invention is characterized by the notification unit which notifies the particular viewing direction by notifying switching of the particular viewing direction when the particular viewing direction was switched by the switching unit in the display device according to the eleventh aspect of the present invention.

When the display device according to the twenty-first aspect of the present invention is used, the switching is notified when the particular viewing direction was switched. For example, when an image to which operations can be conducted is switched from the image G_{DR} for driver's seat to the image G_{PA} for passenger seat, the user is informed of that. Thus, the user can easily recognize that the image to which operations can be conducted was switched, and therefore, wrong operations by the user can be prevented. If the notification is provided by voice, the user can recognize the change of the image to which operations can be conducted without watching the screen.

A display device according to a twenty-second aspect of the present invention is characterized by comprising a priority setting unit for setting information displayed in any one of the plurality of viewing directions to have priority, wherein the switching unit switches a viewing direction in which information with the priority is displayed to the particular viewing direction if it is judged that a condition for keeping a situation where a viewing direction in which information without the priority is displayed has been switched to the particular viewing direction became unsatisfied in the situation where the viewing direction in which information without the priority is displayed has been switched to the particular viewing direction in the display device according to the eleventh aspect of the present invention.

When the display device according to the twenty-second aspect of the present invention is used, the viewing direction in which information with the priority is displayed is switched to the particular viewing direction if it is judged that a condition for keeping a situation where the viewing direction in which information without the priority is displayed has been switched to the particular viewing direction became unsatisfied in the situation where the viewing direction in which information without the priority is displayed has been switched to the particular viewing direction.

For example, when no operation to the image G_{PA} for passenger seat was conducted for 10 seconds in a case where the priority has been given to the image G_{DR} for driver's seat and operations to the image G_{PA} for passenger seat are practicable, it is decided that a condition for keeping the operations to the image G_{PA} for passenger seat practicable became unsatisfied, and the situation is changed to a situation where operations to the image G_{DR} for driver's seat are practicable. Thus, the operations to the image G_{DR} for driver's seat are practicable under normal conditions. As a result, it is possible to take some of the load of operating off the driver DR.

A display device according to a twenty-third aspect of the present invention is characterized by the display device to be mounted on a vehicle for use, wherein the priority setting unit sets the priority according to a load state of the vehicle in the display device according to the twenty-second aspect of the present invention.

When the display device according to the twenty-third aspect of the present invention is used, the priority is set according to the load state of the vehicle. For example, when the driver DR is not in the vehicle, the priority is given to the image G_{PA} for passenger seat. When the passenger PA in the passenger seat is not in the vehicle, the priority is given to the image G_{DR} for driver's seat. Thus, it is possible to achieve a higher level of user satisfaction. Here, the load state of the vehicle can be judged based on information obtained from a passenger detection sensor arranged within the vehicle, for example.

A display device according to a twenty-fourth aspect of the present invention is characterized by the display device to be mounted on a vehicle for use, wherein the priority setting unit sets the priority according to a running state of the vehicle in the display device according to the twenty-second or twenty-third aspect of the present invention.

When the display device according to the twenty-fourth aspect of the present invention is used, the priority is set according to the running state of the vehicle. For example, when the vehicle is at a stop, the priority is given to the image G_{DR} for driver's seat. When the vehicle is running, the priority is given to the image G_{PA} for passenger seat. Thus, it is possible to improve safety of driving and achieve a higher level of user satisfaction.

A display device according to a twenty-fifth aspect of the present invention is characterized by comprising a display unit for displaying individual information in a plurality of viewing directions on a common screen, an operation input unit for receiving operation inputs, a limiting unit for limiting the reception of operation inputs to reception of operation inputs associated with information displayed in a particular viewing direction, a notification unit for switching the particular viewing direction among the plurality of viewing directions in turn based on the operation inputs and notifying the particular viewing direction, and a decision unit for deciding the particular viewing direction based on timing of the notification by the notification unit and timing of a prescribed operation input.

When the display device according to the twenty-fifth aspect of the present invention is used, based on the operation inputs to the operation input unit, the particular viewing direction is switched among the plurality of viewing directions in turn, the particular viewing direction is notified, and the particular viewing direction is decided based on timing of this notification and timing of a prescribed operation input to the operation input unit. The flow of these controls is concretely described below with an example.
Step 1: An operation to an operating switch by the user
Step 2: Recognizably notify each viewing direction in turn
   e.g. Notify the kind of a displayed image
   Voice announcement of 'NAVI' → A blank of 1 second → Voice announcement of 'DVD' → A blank of 1 second → Voice announcement of 'NAVI' → ...
Step 3: A prescribed operation by the user
   e.g. Operate the same operating switch again
Step 4: Decide an image to which operations become practicable
   e.g. When the prescribed operation was conducted between the voice announcement of 'NAVI' and the next voice announcement of 'DVD', an image of 'NAVI' is decided to be an image to which operations become practicable. Thus, without switching an image to which operations can be conducted, the user can conduct operations to an image which the user can see.

A display device according to a twenty-sixth aspect of the present invention is characterized by comprising a display unit for displaying individual information in a plurality of viewing directions on a common screen, an operation input unit for receiving operation inputs, a limiting unit for limiting the reception of operation inputs to reception of operation inputs associated with information displayed in a particular viewing direction, a switching unit for switching the particular viewing direction and a notification unit for notifying the particular viewing direction by controlling display of separately displayed information.

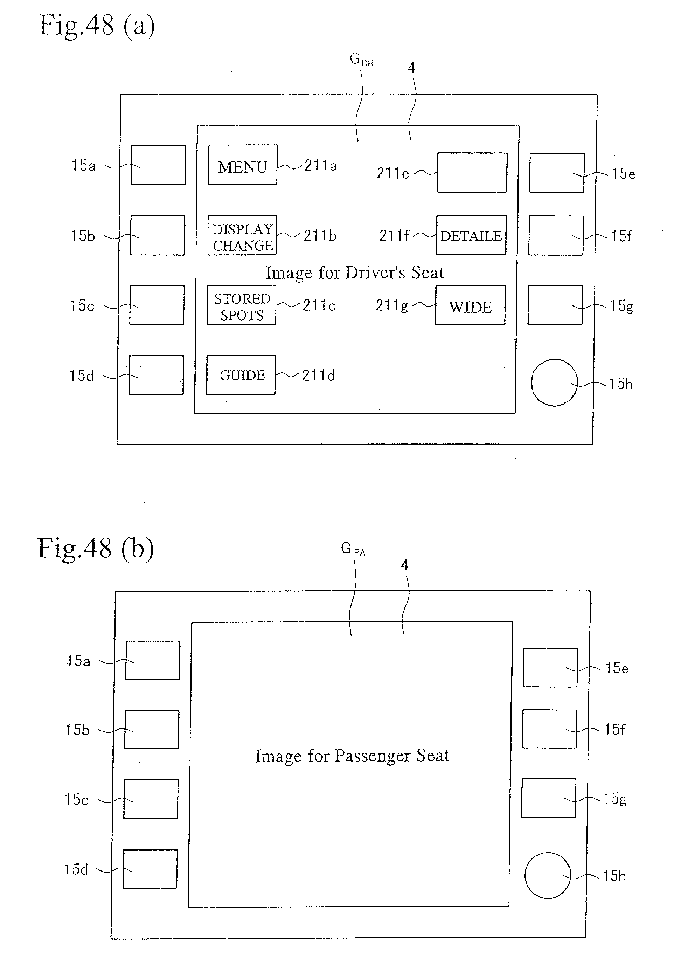

When the display device according to the twenty-sixth aspect of the present invention is used, individual information is displayed in the plurality of viewing directions on the common screen. For example, as shown in Fig. 48, it is possible to allow a driver DR to see an image G_{DR} for driver's seat (e.g. a map image by a navigation system) and allow a passenger PA in a passenger seat to see an image G_{PA} for passenger seat (e.g. a DVD image).

However, as shown in Fig. 49, when an operation was conducted to the operating switches B_{D1}-B_{D6} or B_{A1}-B_{A6} arranged within the same areas in which the operation areas for the image G_{DR} for driver's seat on the display screen and the operation areas for the image G_{PA} for passenger seat on the display screen overlap each other, there is a possibility that operation control which the user does not desire may be conducted if no constraint is added to the operations.

When the display device according to the twenty-sixth aspect of the present invention is used, the reception of the operation inputs is limited to that of operation inputs associated with information (e.g. the image G_{DR} for driver's seat) displayed in the particular viewing direction. As a result, operation inputs associated with information displayed in the particular viewing direction are received, but operation inputs associated with information displayed in viewing directions other than the particular viewing direction are not received.

For example, when operations are conducted to an operating switch arranged in such a manner that the operation area for the image G_{DR} for driver's seat on the display screen and the operation area for the image G_{PA} for passenger seat on the display screen overlap each other in a case where the viewing direction from the driver DR has been set to the particular viewing direction, only operations to the image G_{DR} for driver's seat become valid, while operations to the image G_{PA} for passenger seat become invalid. That is, the image G_{DR} for driver's seat becomes an image to which operations can be conducted. As a result, the user can prevent undesired operation control from being carried out by grasping which has been set to the image to which operations can be conducted.

Even when operations are conducted to an operating switch arranged in such a manner that the operation area for the image G_{DR} for driver's seat on the display screen and the operation area for the image G_{PA} for passenger seat on the display screen overlap each other, appropriate operation control can be realized by receiving operation inputs associated with the image to which operations can be conducted. Therefore, by arranging operating switches having different functions within the same areas, like the operating switches B_{D1}-B_{D6} and B_{A1}-B_{A6} shown in Fig. 49, the display screen can be effectively utilized.

When the display device according to the twenty-sixth aspect of the present invention is used, the particular viewing direction can be switched and the image to which operations can be conducted is not fixed. As a result, operations to operating switches arranged in such a manner that the operation areas for the image G_{DR} for driver's seat on the display screen and the operation areas for the image G_{PA} for passenger seat on the display screen overlap each other can be conducted not by either of the driver DR and the passenger PA in the passenger seat, but by both of them. Therefore, the user can realize desired operation control by properly setting or switching the image to which operations can be conducted or by precisely recognizing which has been set to the image to which operations can be conducted.

Furthermore, when the display device according to the twenty-sixth aspect of the present invention is used, by controlling display of information individually displayed in the plurality of viewing directions, the particular viewing direction (i.e. information associated with which operation inputs can be received) is notified. For example, when the viewing direction from the driver DR is the particular viewing direction, as shown in the below-described options a-c, it is notified that the image G_{DR} for driver's seat is the image to which operations can be conducted by controlling display of information.
a) The image G_{DR} for driver's seat is displayed, but the image G_{PA} for passenger seat is not displayed.
b) An operation-related picture for operation inputs to the image G_{DR} for driver's seat is displayed on the image G_{DR} for driver's seat, but an operation-related picture for operation inputs to the image G_{PA} for passenger seat is not displayed on the image G_{PA} for passenger seat.
c) An operation-related picture for operation inputs to the image G_{DR} for driver's seat is displayed on the image G_{DR} for driver's seat, but an operation-related picture for operation inputs to the image G_{PA} for passenger seat is not displayed on the image G_{PA} for passenger seat and instead of that, the operation-related picture for operation inputs to the image G_{DR} for driver's seat is displayed on the image G_{PA} for passenger seat.

Thus, it is possible to inform the driver DR that the information (the image G_{DR} for driver's seat) displayed to the driver DR is an image to which operations can be conducted, and to inform the passenger PA in the passenger seat that not the information (the image G_{PA} for passenger seat) displayed to the passenger PA but the information (the image G_{DR} for driver's seat) displayed to the other (driver DR) is an image to which operations can be conducted. As a result, the user can correctly grasp whether operations to an image which the user can see are practicable or not.

A display device according to a twenty-seventh aspect of the present invention is characterized by the notification unit which erases individual information displayed in viewing directions other than the particular viewing direction from a screen in the display device according to the twenty-sixth aspect of the present invention.

When the display device according to the twenty-seventh aspect of the present invention is used, individual information displayed in viewing directions other than the particular viewing direction is erased from the screen. For example, when the viewing direction from the driver DR has been set to the particular viewing direction, the image G_{DR} for driver's seat is displayed, but the image G_{PA} for passenger seat is not displayed. As a result, it is possible to allow the driver DR to know that the information (the image G_{DR} for driver's seat) displayed to the driver DR is an image to which operations can be conducted, and to allow the passenger PA in the passenger seat to know that the information displayed to the other person is an image to which operations can be conducted.

A display device according to a twenty-eighth aspect of the present invention is characterized by information erased from the screen by the notification unit, which is an operation-related picture for operation inputs among individual information displayed in the viewing directions other than the particular viewing direction in the display device according to the twenty-seventh aspect of the present invention.

When the display device according to the twenty-eighth aspect of the present invention is used, the information erased from the screen by the notification unit is an operation-related picture for operation inputs among individual information displayed in the viewing directions other than the particular viewing direction. For example, when the viewing direction from the driver DR has been set to the particular viewing direction, an operation-related picture for operation inputs to the image G_{DR} for driver's seat is displayed on the image G_{DR} for driver's seat, but an operation-related picture for operation inputs to the image G_{PA} for passenger seat is not displayed on the image G_{PA} for passenger seat.

Thus, it is possible to allow the driver DR to know that the image G_{DR} for driver's seat displayed to the driver DR is an image to which operations can be conducted, and to allow the passenger PA in the passenger seat to know that the image G_{PA} for passenger seat displayed to the passenger PA is not an image to which operations can be conducted. At this time, if the image G_{PA} for passenger seat which the passenger PA in the passenger seat originally wants to see is not erased from the screen to be left, the passenger PA, in the passenger seat can capture required information without interruption.

A display device according to a twenty-ninth aspect of the present invention is characterized by the notification unit which displays individual information displayed in the particular viewing direction in viewing directions other than the particular viewing direction in the display device according to the twenty-sixth aspect of the present invention.

When the display device according to the twenty-ninth aspect of the present invention is used, individual information displayed in the particular viewing direction is displayed in viewing directions other than the particular viewing direction. For example, when the viewing direction from the driver DR has been set to the particular viewing direction, the image G_{DR} for driver's seat is displayed to the driver DR as usual, while not the image G_{PA} for passenger seat but the image G_{DR} for driver's seat is displayed to the passenger PA in the passenger seat. Thus, it is possible to allow the driver DR and the passenger PA in the passenger seat to know that the image G_{DR} for driver's seat is an image to which operations can be conducted.

A display device according to a thirtieth aspect of the present invention is characterized by information displayed in the viewing directions other than the particular viewing direction by the notification unit, which is an operation-related picture for operation inputs among individual information displayed in the particular viewing direction in the display device according to the twenty-ninth aspect of the present invention.

When the display device according to the thirtieth aspect of the present invention is used, the information displayed in the viewing directions other than the particular viewing direction by the notification unit is an operation-related picture for operation inputs among individual information displayed in the particular viewing direction. For example, when the viewing direction from the driver DR has been set to the particular viewing direction, both the image G_{DR} for driver's seat and an operation-related picture for operation inputs to said image G_{DR} are displayed in the driver's seat direction, while the image G_{PA} for passenger seat and the operation-related picture for operation inputs to the image G_{DR} for driver's seat in place of said image G_{PA} are displayed in the passenger seat direction. Thus, it is possible to allow the driver DR and the passenger PA in the passenger seat to know that the image G_{DR} for driver's seat is an image to which operations can be conducted.

At this time, if the image G_{PA} for passenger seat which the passenger PA in the passenger seat originally wants to know is not erased from the screen to be left, the passenger PA in the passenger seat can capture required information without interruption. Conversely, if the image G_{PA} for passenger seat is erased from the screen, a needless image which has nothing to do with operations is erased, and therefore, the passenger PA in the passenger seat can easily monitor operations by the driver DR.

A display device according to a thirty-first aspect of the present invention is characterized by the notification unit which changes a display mode based on at least one of the particular viewing direction, a running state of a vehicle on which the device body is mounted, a load sate of the vehicle and a kind of information displayed in the particular viewing direction, and in the changed display mode, displays individual information displayed in the particular viewing direction in viewing directions other than the particular viewing direction in the display device according to the twenty-ninth or thirtieth aspect of the present invention.

When the display device according to the thirty-first aspect of the present invention is used, the display mode is changed based on at least one of the particular viewing direction, a running state of a vehicle on which the device body is mounted, a load sate of the vehicle and a kind of information displayed in the particular viewing direction, and in the changed display mode, individual information displayed in the particular viewing direction is displayed in viewing directions other than the particular viewing direction. As a result, a balance between convenience and safety can be kept.

As a method of changing the display mode, the below-described options a-d are exemplified.
a) The display mode is changed depending on whether the particular viewing direction is the driver's seat direction or the passenger seat direction.
b) The display mode is changed depending on whether the vehicle is during running or at a stop.
c) The display mode is changed depending on whether the driver DR is in the vehicle or not, or whether the passenger PA in the passenger seat is in the vehicle or not.
d) The display mode is changed depending on whether an image displayed in the particular viewing direction is a moving image such as a DVD image or a TV image, or a still image.
e) By combining the conditions for change shown in the above-described options a-d, the display mode may be changed.

i) When the passenger seat direction has been set to the particular viewing direction:
   1) In the case of the vehicle being running
      When the image G_{PA} for passenger seat is not a moving image such as a DVD image or a TV image, the image G_{PA} for passenger seat is displayed in the driver's seat direction, and on the other hand,
      when the image G_{PA} for passenger seat is a moving image such as a DVD image or a TV image, the image G_{DR} for driver's seat is displayed in the driver's seat direction.
   2) In the case of the vehicle being at a stop
      Without regard to kind of the image, the image G_{PA} for passenger seat is displayed in the driver's seat direction.
ii) When the driver's seat direction has been set to the particular viewing direction, the image G_{DR} for driver's seat is displayed in the passenger seat direction without regard to the running state of the vehicle or kind of the image.

A display device according to a thirty-second aspect of the present invention is characterized by comprising a return unit for returning the display state to the state before notification by the notification unit if a certain return condition was satisfied in any one of the display devices according to the twenty-sixth to thirty-first aspects of the present invention.

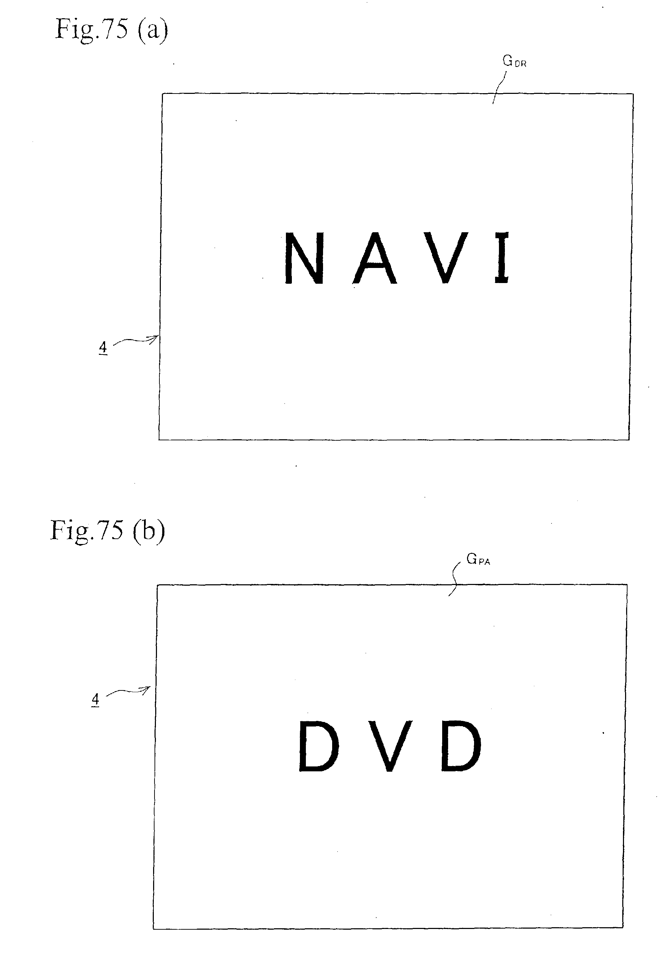

When the display device according to the thirty-second aspect of the present invention is used, the display state is returned to the state before notification by the notification unit if the certain return condition was satisfied. For example, an operation-related picture for operation inputs associated with the image G_{PA} for passenger seat is erased from the image G_{DR} for driver's seat, and as shown in the below-described Fig. 75(a), the state is returned to a state where an operation-related picture (operating switches) for operation inputs to the image G_{DR} for driver's seat is displayed on said image G_{DR}. Thus, the driver DR can clearly see again the image (e.g. map image) which the driver DR originally wants to see.

A display device according to a thirty-third aspect of the present invention is characterized by the certain return condition which is that an operation input of return instruction for instructing a return to the state before the notification is conducted, or that no operation input to individual information displayed in the particular viewing direction is conducted for a prescribed time in the display device according to the thirty-second aspect of the present invention.

When the display device according to the thirty-third aspect of the present invention is used, in cases where the user gave an instruction, or in cases where no operation input to individual information displayed in the particular viewing direction is conducted for the prescribed time (i.e. in cases where it is possible to judge that there became no need to conduct an operation to the individual information), the display state is returned to the usual state where individual information is displayed in a plurality of viewing directions. Therefore, it is possible to return the display state to the usual one with appropriate timing.

A display device according to a thirty-fourth aspect of the present invention is characterized by a priority setting unit for giving priority to information displayed in one viewing direction among the plurality of viewing directions, wherein the switching unit preferentially sets a viewing direction in which the information with the priority is displayed to the particular viewing direction in any one of the display devices according to the twenty-sixth to thirty-third aspects of the present invention.

When the display device according to the thirty-fourth aspect of the present invention is used, the viewing direction in which the information with the priority is displayed is preferentially set to the particular viewing direction. For example, when the priority has been given to the image G_{DR} for driver's seat which can be seen from the driver's seat direction, the driver's seat direction in which the image G_{DR} for driver's seat is displayed is preferentially set to the particular viewing direction than the passenger seat direction in which the image G_{PA} for passenger seat is displayed. Thus, it is possible to reduce a frequency of switching operations for setting an image to an image to which operations can be conducted, resulting in taking some of the load of operating off the user.

A display device according to a thirty-fifth aspect of the present invention is characterized by the switching unit which preferentially sets a viewing direction in which information with the priority is displayed to the particular viewing direction at a start of display of individual information in the plurality of viewing directions in the display device according to the thirty-fourth aspect of the present invention.

When the display device according to the thirty-fifth aspect of the present invention is used, at a start of display of individual information in the plurality of viewing directions (i.e. multiview display), a viewing direction in which information with the priority is displayed is preferentially set to the particular viewing direction. For example, when the priority has been given to the image G_{DR} for driver's seat which can be seen from the driver's seat direction, operations to the image G_{DR} for driver's seat become practicable at a start of multiview display. Thus, it is possible to take some of the load of operating off the user.

A display device according to a thirty-sixth aspect of the present invention is characterized by the priority setting unit which decides information to which the priority should be given based on at least one of a kind of information individually displayed in the plurality of viewing directions, a running state of a vehicle on which the device body is mounted and a load state of the vehicle in the display device according to the thirty-fourth or thirty-fifth aspect of the present invention.

When the display device according to the thirty-sixth aspect of the present invention is used, information to which the priority should be given is decided based on at least one of a kind of information individually displayed in the plurality of viewing directions, a running state of a vehicle on which the device body is mounted and a load state of the vehicle, and therefore, the convenience can be enhanced.

As a method of deciding the priority, the below-described options a-c are exemplified.
a) When a map image (by the navigation system) which guides a vehicle to a destination is displayed as the image G_{DR} for driver's seat while a movie is displayed as the image G_{PA} for passenger seat, it is judged that the frequency of operations to the map image (the image G_{DR} for driver's seat) is relatively high and the image G_{DR} for driver's seat is decided to be information to which the priority should be given.
b) When the vehicle is at a stop, the image G_{DR} for driver's seat which can be seen from the driver's seat direction is decided to be information to which the priority should be given. When the vehicle is running, the image G_{PA} for passenger seat which can be seen from the passenger seat direction is decided to be information to which the priority should be given.
c) When the driver DR is not in the vehicle, the image G_{PA} for passenger seat which can be seen from the passenger seat direction is decided to be information to which the priority should be given. When the passenger PA in the passenger seat is not in the vehicle, the image G_{DR} for driver's seat which can be seen from the driver's seat direction is decided to be information to which the priority should be given. Here, the load state of the vehicle can be judged based on information obtained from a passenger detection sensor installed in the vehicle.

A display device according to a thirty-seventh aspect of the present invention is characterized by comprising an operation frequency estimating unit for estimating frequencies of operations conducted from each viewing direction, wherein the priority setting unit decides information to which the priority should be given based on the frequencies of operations estimated by the operation frequency estimating unit in any one of the display devices according to the thirty-fourth to thirty-sixth aspects of the present invention.

The frequency of operations to each image varies depending on the image or situations at different times. For example, in the case of a map image by the navigation system which guides a vehicle to a destination, the operation frequency is high between turning-on of an engine and an end of destination setting, but the operation frequency becomes lower after the destination setting was ended and guidance was actually started. About the same is also true for a movie.

When the display device according to the thirty-seventh aspect of the present invention is used, the frequencies of operations from each viewing direction are estimated based on conditions of each kind, and information to which the priority should be given is decided according to the estimated operation frequencies. For example, a map image is decided to be information to which the priority should be given until a start of guidance to a destination (or until a prescribed time after turning-on of an engine), and another image is decided to be information to which the priority should be given after the guidance to the destination was started (or after the prescribed time elapsed from the turning-on of the engine). Thus, the convenience can be further improved.

A display device according to a thirty-eighth aspect of the present invention is characterized by the switching unit which switches a viewing direction in which information with the priority has been displayed to the particular viewing direction if it is judged that no operation input to information displayed in the particular viewing direction has been conducted for a prescribed time in a situation where a viewing direction in which information without the priority has been displayed remains switched to the particular viewing direction in any one of the display devices according to the thirty-fourth to thirty-seventh aspects of the present invention.

When the display device according to the thirty-eighth aspect of the present invention is used, a viewing direction in which information with the priority has been displayed is switched to the particular viewing direction if it is judged that no operation input to information displayed in the particular viewing direction has been conducted for a prescribed time in a situation where a viewing direction in which information without the priority has been displayed remains switched to the particular viewing direction.

For example, if it is judged that no operation input to the image G_{PA} for passenger seat has been conducted for the prescribed time (e.g. 6 seconds) in a situation where the priority has been given to the image G_{DR} for driver's seat which can be seen from the driver's seat direction but the image G_{PA} for passenger seat to which the priority has not been given remains switched to an image to which operations can be conducted (i.e. when operations to the image G_{PA} for passenger seat can be received), operation inputs to the image G_{PA} for passenger seat are regarded as being unnecessary, and the image G_{DR} for driver's seat is switched to an image to which operations can be conducted. Thus, a viewing direction in which information with the priority has been displayed can be set to the particular viewing direction under normal conditions, resulting in taking some of the load of operating off the user.

A display device according to a thirty-ninth aspect of the present invention is characterized by comprising a display unit for displaying individual pictures in a plurality of viewing directions on a common screen and a control unit for controlling at least one of display of a picture displayed in a particular viewing direction of the plurality of viewing directions, reception of operation inputs from the particular viewing direction and display of an operation input picture for operation inputs from the particular viewing direction.

When the display device according to the thirty-ninth aspect of the present invention is used, at least one of display of a picture displayed in a particular viewing direction of the plurality of viewing directions, reception of operation inputs from the particular viewing direction and display of an operation input picture for operation inputs from the particular viewing direction is controlled in the case of displaying individual pictures in the plurality of viewing directions on the common screen. Therefore, it is possible to conduct appropriate input/output control in the plurality of viewing directions, respectively.

A display device according to a fortieth aspect of the present invention is characterized by comprising a moving state detection unit for detecting a moving state of a movable body on which the display device is mounted, wherein the control unit conducts the control based on a detection result by the moving state detection unit in the display device according to the thirty-ninth aspect of the present invention.

When the display device according to the fortieth aspect of the present invention is used, in cases where the display device is mounted on a movable body such as a vehicle and individual pictures are displayed in a plurality of viewing directions on a common screen, at least one of display of a picture displayed in a particular viewing direction of the plurality of viewing directions, reception of operation inputs from the particular viewing direction and display of an operation input picture for operation inputs from the particular viewing direction is controlled based on a moving state, and therefore, a display device which conducts control adapted to the moving state can be obtained.

A display device according to a forty-first aspect of the present invention is characterized by comprising a source selection unit which can select a source corresponding to the picture, wherein the control unit conducts the control based on a detection result by the moving state detection unit when the source corresponding to the picture displayed in the particular viewing direction is a source to be restricted in the display device according to the fortieth aspect of the present invention.

When the display device according to the forty-first aspect of the present invention is used, the display device is mounted on a movable body such as a vehicle, and based on a moving state thereof, display of a picture, reception of operation inputs or display of an operation input picture is controlled when a source corresponding to a picture displayed in the particular viewing direction is a source to be restricted, and therefore, a display device in which a restriction is added according to a running state can be obtained.

A display device according to a forty-second aspect of the present invention is characterized by the moving state detection unit which detects a moving state based on at least one of a running speed of a vehicle on which the display device is mounted, a state of a transmission, a state of a brake and a state of a steering in the display device according to the fortieth or forty-first aspect of the present invention.

When the display device according to the forty-second aspect of the present invention is used, the display device is mounted on a vehicle and a moving state is detected based on a running speed of the vehicle, a state of a transmission, a state of a brake or a state of a steering. And display of a picture, reception of operation inputs or display of an operation input picture is controlled based on the detected moving state. Therefore, a display device which correctly decides the running state of the vehicle and conducts control adapted to the running state can be obtained.

A display device according to a forty-third aspect of the present invention is characterized by a range of the control which can be selected through the control unit in any one of the display devices according to the thirty-ninth to forty-second aspects of the present invention.

When the display device according to the forty-third aspect of the present invention is used, the control range of display of a picture, reception of operation inputs or display of an operation input picture is selectable, and therefore, a display device wherein each control range conducted in plurality of viewing directions is selectable can be obtained.

A display device according to a forty-fourth aspect of the present invention is characterized by the control unit which can change the control range based on a detection result by the moving state detection unit in the display device according to the forty-third aspect of the present invention.

When the display device according to the forty-fourth aspect of the present invention is used, the display device is mounted on a movable body such as a vehicle, and the control range of display of a picture, reception of operation inputs or display of an operation input picture is selected based on the moving state thereof. And therefore, a display device which conducts control adapted to the running state of the vehicle can be obtained.

A display device according to a forty-fifth aspect of the present invention is characterized by comprising an operation input unit which can determine from which direction of the plurality of viewing directions an operation input is being performed in any one of the display devices according to the thirty-ninth to forty-fourth aspects of the present invention.

When the display device according to the forty-fifth aspect of the present invention is used, from which direction of the plurality of viewing directions an operation input is being conducted is determined, and therefore, a compact display device which identifies an operator and conducts optimum operation control for each operator can be obtained.

A display device according to a forty-sixth aspect of the present invention is characterized by a reception notice control unit for having the display unit display a reception notice of an operation input in at least one viewing direction other than the particular viewing direction when said operation input from the particular viewing direction was received in any one of the display devices according to the thirty-ninth to forty-fifth aspects of the present invention.

When the display device according to the forty-sixth aspect of the present invention is used, a reception notice of an operation input is displayed in at least one viewing direction other than the particular viewing direction when said operation input from the particular viewing direction was received, and therefore, a display device which supports operations performed by a plurality of operators in cooperation with one another can be obtained.

A display device according to a forty-seventh aspect of the present invention is characterized by comprising a confirmation unit for confirming an operation input from the particular viewing direction by a confirmation operation from at least one viewing direction other than the particular viewing direction when the operation input from said particular viewing direction was received in any one of the display devices according to the thirty-ninth to forty-sixth aspects of the present invention.

When the device according to the forty-seventh aspect of the present invention is used, an operation input from the particular viewing direction is confirmed by a confirmation operation from at least one viewing direction other than said particular viewing direction when the operation input from said particular viewing direction was received, and therefore, a display device which supports operations performed by a plurality of operators in cooperation with one another can be obtained.

A display device according to a forty-eighth aspect of the present invention is characterized by the particular viewing direction which is a direction of the driver's seat side in the display device according to the forty-second aspect of the present invention.
When the display device according to the forty-eighth aspect of the present invention is used, a moving state is detected based on a running speed of a vehicle, a state of a transmission, a state of a brake or a state of a steering, and display of a picture in the driver's seat direction, reception of operation inputs or display of an operation input picture is controlled based on the detected moving state. Therefore, a display device which restricts operations by a driver during running and can receive operations by non-drivers can be obtained.

A display device according to a forty-ninth aspect of the present invention is characterized by the particular viewing direction which is a direction other than a direction of the driver's seat side in the display device according to the forty-second aspect of the present invention.
When the display device according to the forty-ninth aspect of the present invention is used, a moving state is detected based on a running speed of a vehicle, a state of a transmission, a state of a brake or a state of a steering, and display of pictures in directions other than the driver's seat direction, reception of operation inputs or display of an operation input picture is controlled based on the detected moving state. Therefore, a display device which correctly decides the running state to restrict operations by a driver and can receive operations by non-drivers can be obtained.

A display device according to a fiftieth aspect of the present invention is characterized by the control unit which imposes a partial restriction on the reception of operation inputs to a navigation system based on a moving state detection result by the moving state detection unit when a picture displayed in the particular viewing direction is a picture from the navigation system in the display device according to the forty-eighth aspect of the present invention.

When the display device according to the fiftieth aspect of the present invention is used, a partial restriction is imposed on the reception of operation inputs to the navigation system based on a moving state detection result by the moving state detection unit when a picture displayed in the particular viewing direction is a picture from said navigation system. Therefore, a display device which can restrict operations to said navigation system during running can be obtained.

A display device according to a fifty-first aspect of the present invention is characterized by the control unit which imposes a restriction on the reception of an operation input for a change of name of contents data based on a moving state detection result by the moving state detection unit when a picture displayed in the particular viewing direction is a picture by a contents data output device for outputting said contents data in the display device according to the forty-eighth aspect of the present invention.

When the display device according to the fifty-first aspect of the present invention is used, a restriction is imposed on the reception of an operation input for a change of name of contents data based on a moving state detection result by the moving state detection unit when a picture displayed in the particular viewing direction is a picture by a contents data output device for outputting said contents data. Therefore, a display device which inhibits performance of complicated operations during running can be obtained.

A display device according to a fifty-second aspect of the present invention is characterized by the control unit which outputs information concerning running of a vehicle on which the display device is mounted in the particular viewing direction in any one of the display devices according to the thirty-ninth to fifty-first aspects of the present invention.

When the display device according to the fifty-second aspect of the present invention is used, information concerning running of a vehicle on which the display device is mounted is output in the particular viewing direction. Therefore, a display device with improved convenience of both a driver and non-drivers can be obtained.

A display device according to a fifty-third aspect of the present invention is characterized by the information concerning running of the vehicle which is at least one of traffic information, a route guidance picture and information about the surroundings of the vehicle in the display device according to the fifty-second aspect of the present invention.

When the display device according to the fifty-third aspect of the present invention is used, traffic information, a route guidance picture, information about the surroundings of the vehicle and the like are output in the particular viewing direction. Therefore, a display device which selectively provides the driver with information required for driving can be obtained.

A display device according to a fifty-fourth aspect of the present invention is characterized by further comprising a voice recognition unit for receiving operation inputs by voice in any one of the display devices according to the thirty-ninth to fifty-third aspects of the present invention.
When the display device according to the fifty-fourth aspect of the present invention is used, operation inputs by voice are received. Therefore, a display device which a driver and non-drivers can operate by means of voice can be obtained.

A display device according to a fifty-fifth aspect of the present invention is characterized by the voice recognition unit which has an identification unit to detect a direction of the voice and determine from which direction of the plurality of viewing directions the voice came in the display device according to the fifty-fourth aspect of the present invention.
When the display device according to the fifty-fifth aspect of the present invention is used, a direction of the voice is detected and from which direction of the plurality of viewing directions the voice came is determined. Therefore, a display device which conducts appropriate input/output control to a driver and non-drivers, respectively, according to the voice direction can be obtained.

A display device according to a fifty-sixth aspect of the present invention is characterized by the control unit which comprises a display control unit for displaying a picture displayed in the particular viewing direction or a reception notice of an operation input from the particular viewing direction in at least one viewing direction other than the particular viewing direction, and a timing control unit for controlling timing of displaying the same in at least one viewing direction other than the particular viewing direction in any one of the display devices according to the thirty-ninth to fifty-fifth aspects of the present invention.

When the display device according to the fifty-sixth aspect of the present invention is used, the timing with which a picture displayed in the particular viewing direction or a reception notice of an operation input from the particular viewing direction is displayed in at least one viewing direction other than the particular viewing direction is controlled. Therefore, a display device which coordinates input/output control to a driver and to a non-driver without inhibiting display to the driver can be obtained.

A display device according to a fifty-seventh aspect of the present invention is characterized by the timing control unit which controls the timing based on at least one of an operational state of the display unit, an operation input state from at least one viewing direction other than the particular viewing direction and a state of a vehicle on which the display device is mounted in the display device according to the fifty-sixth aspect of the present invention.

When the display device according to the fifty-seventh aspect of the present invention is used, the timing with which a picture displayed in the particular viewing direction or a reception notice of an operation input from the particular viewing direction is displayed in at least one viewing direction other than the particular viewing direction is controlled based on an operational state of the display unit, an operation input state, a state of a vehicle and the like. Therefore, a display device which coordinates input/output control to a driver and to a non-driver according to the running state of the vehicle without inhibiting display to the driver can be obtained.

A display device according to a fifty-eighth aspect of the present invention is characterized by further comprising a setting change unit for changing a setting to a source corresponding to a picture displayed in the particular viewing direction based on operation inputs from at least one direction other than the particular viewing direction in any one of the display devices according to the thirty-ninth to fifty-seventh aspects of the present invention.

When the display device according to the fifty-eighth aspect of the present invention is used, a setting to a source corresponding to a picture displayed in the particular viewing direction is changed based on operation inputs from at least one direction other than the particular viewing direction. Therefore, a display device wherein the display setting for a driver can be changed by a non-driver can be obtained.

### Brief Description of Drawings

Fig. 1 is an illustration to describe a function of displaying individual images in a plurality of viewing directions on a common screen that a display device according to a first embodiment of the present invention has;

Fig. 2 is a perspective view showing an example of a case where the display device according to the first embodiment is mounted on a vehicle;

Fig. 3(a) is a diagram schematically showing a display state of a display unit when viewed from the front, and Fig. 3(b) is a sectional view taken along the line B-B of Fig. 3(a);

Fig. 4 is a circuit diagram showing an outline of a TFT substrate constituting the display unit;

Fig. 5 is a block diagram schematically showing the principal part of an AV navigation system to be mounted on a vehicle, wherein the display device according to the first embodiment is adopted;

Fig. 6 is a block diagram showing a schematic construction of a picture output unit;

Fig. 7 is a block diagram showing a schematic construction of a memory;

Fig. 8 is a block diagram showing a schematic construction of a control unit;

Fig. 9 is an external front view of the display device according to the first embodiment;

Fig. 10 is a flowchart showing a processing operation performed by the control unit in the AV navigation system wherein the display device according to the first embodiment is adopted;

Fig. 11(a) is an illustration to describe pixels used for an image for driver's seat and pixels used for an image for passenger seat, Fig. 11(b) is a diagram showing an example of the image for driver's seat and Fig. 11(c) is a diagram showing an example of the image for passenger seat;

Fig. 12(a) is a diagram showing an example of the image for driver's seat and Fig. 12(b) is a diagram showing an example of the image for passenger seat;

Fig. 13-1 is a flowchart showing a processing operation performed by the control unit in the AV navigation system wherein the display device according to the first embodiment is adopted;

Fig. 13-2 is a flowchart showing a processing operation performed by the control unit in the AV navigation system wherein the display device according to the first embodiment is adopted;

Fig. 14 is a flowchart showing a processing operation performed by the control unit in the AV navigation system wherein the display device according to the first embodiment is adopted;

Fig. 15 is a flowchart showing a processing operation performed by a control unit in an AV navigation system wherein a display device according to a second embodiment is adopted;

Fig. 16(a) is a diagram showing an example of an image for driver's seat and Fig. 12(b) is a diagram showing an example of an image for passenger seat;

Fig. 17(a) is a diagram showing an example of the image for driver's seat and Fig. 17(b) is a diagram showing an example of the image for passenger seat;

Fig. 18-1 is a flowchart showing a processing operation performed by the control unit in the AV navigation system wherein the display device according to the second embodiment is adopted;

Fig. 18-2 is a flowchart showing a processing operation performed by the control unit in the AV navigation system wherein the display device according to the second embodiment is adopted;

Fig. 19 is a flowchart showing a processing operation performed by the control unit in the AV navigation system wherein the display device according to the second embodiment is adopted;

Fig. 20 is an external front view of a display device according to a third embodiment;

Fig. 21 is a flowchart showing a processing operation performed by a control unit in an AV navigation system wherein a display device according to the third embodiment is adopted;

Fig. 22(a) is an illustration to describe pixels used for an image for driver's seat and pixels used for an image for passenger seat, Fig. 22(b) is a diagram showing an example of the image for driver's seat and Fig. 22(c) is a diagram showing an example of the image for passenger seat;

Fig. 23(a) is a diagram showing an example of the image for driver's seat and Fig. 23(b) is a diagram showing an example of the image for passenger seat;

Fig. 24(a) is a diagram showing an example of the image for driver's seat and Fig. 24(b) is a diagram showing an example of the image for passenger seat;

Fig. 25 is a flowchart showing a processing operation performed by the control unit in the AV navigation system wherein the display device according to the third embodiment is adopted;

Fig. 26 is a flowchart showing a processing operation performed by the control unit in the AV navigation system wherein the display device according to the third embodiment is adopted;

Fig. 27 is a flowchart showing a processing operation performed by a control unit in an AV navigation system wherein a display device according to a fourth embodiment is adopted;

Fig. 28 is a flowchart showing a processing operation performed by the control unit in the AV navigation system wherein the display device according to the fourth embodiment is adopted;

Fig. 29 is a flowchart showing a processing operation performed by the control unit in the AV navigation system wherein the display device according to the fourth embodiment is adopted;

Fig. 30 is a flowchart showing a processing operation performed by a control unit in an AV navigation system wherein a display device according to a fifth embodiment is adopted;

Fig. 31(a) is a diagram showing an example of an image for driver's seat and Fig. 31(b) is a diagram showing an example of an image for passenger seat;

Figs. 32(a) and 32(b) are diagrams showing examples of display modes displayed on a display unit constituting the display device;

Figs. 33(a) and 33(b) are diagrams showing examples of display modes displayed on the display unit constituting the display device;

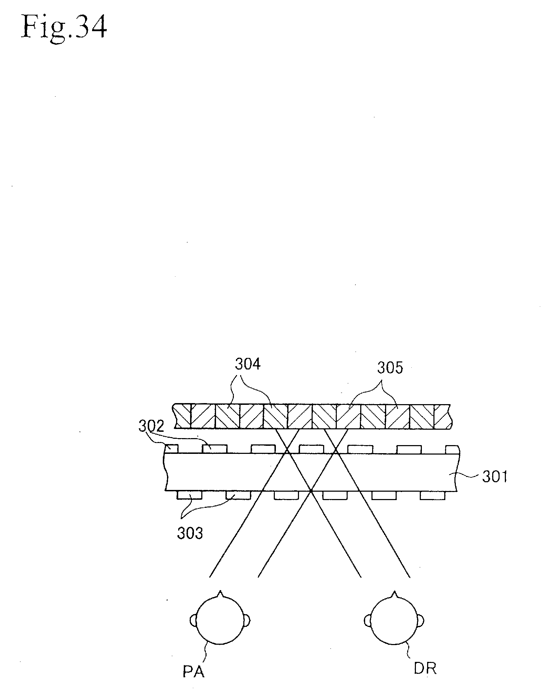

Fig. 34 is a diagram schematically showing a construction of a display device which realizes a separate display;

Figs. 35(a) and 35(b) are diagrams showing examples of display modes displayed on the display unit constituting the display device;

Figs. 36(a) and 36(b) are diagrams showing examples of display modes displayed on the display unit constituting the display device;

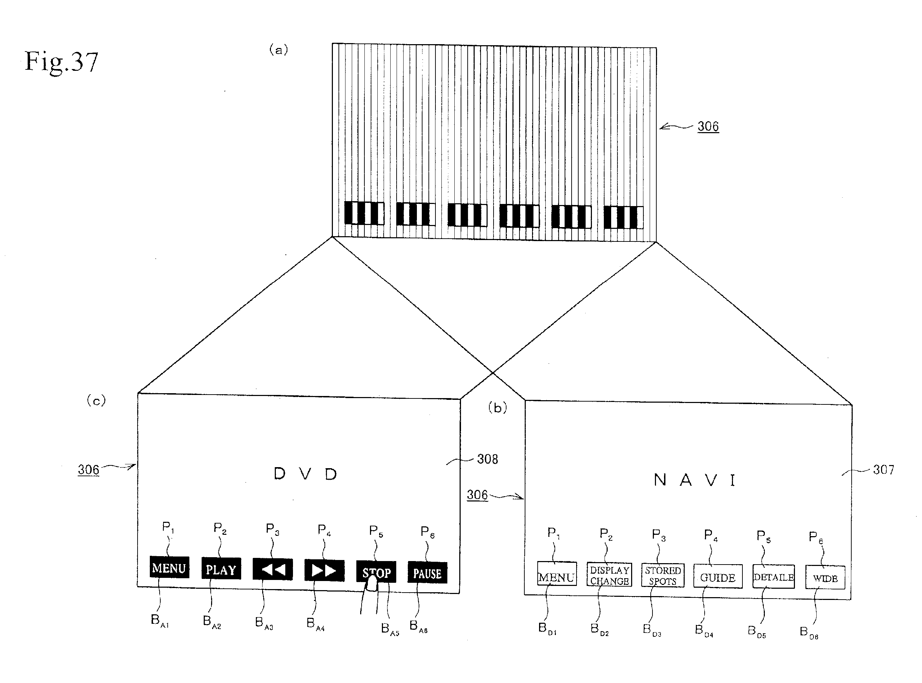

Fig. 37 is an illustration to describe a display mode;

Fig. 38 is a flowchart showing a processing operation performed by a control unit in an AV navigation system wherein a display device according to a sixth embodiment is adopted;

Fig. 39(a) is an illustration to describe pixels used for an image for driver's seat and pixels used for an image for passenger seat, Fig. 39(b) is a diagram showing an example of the image for driver's seat and Fig. 39(c) is a diagram showing an example of the image for passenger seat;

Fig. 40(a) is a diagram showing an example of the image for driver's seat and Fig. 40(b) is a diagram showing an example of the image for passenger seat;

Fig. 41 (a) is a diagram showing an example of the image for driver's seat and Fig. 41 (b) is a diagram showing an example of the image for passenger seat;

Fig. 42(a) is a diagram showing an example of the image for driver's seat and Fig. 42(b) is a diagram showing an example of the image for passenger seat;

Fig. 43(a) is a diagram showing an example of the image for driver's seat and Fig. 43(b) is a diagram showing an example of the image for passenger seat;

Fig. 44(a) is a diagram showing an example of the image for driver's seat and Fig. 44(b) is a diagram showing an example of the image for passenger seat;

Fig. 45(a) is a diagram showing an example of the image for driver's seat and Fig. 45(b) is a diagram showing an example of the image for passenger seat;

Fig. 46(a) is a diagram showing an example of the image for driver's seat and Fig. 46(b) is a diagram showing an example of the image for passenger seat;

Fig. 47(a) is a diagram showing an example of the image for driver's seat and Fig. 47(b) is a diagram showing an example of the image for passenger seat;

Fig. 48(a) is a diagram showing an example of the image for driver's seat and Fig. 48(b) is a diagram showing an example of the image for passenger seat;

Fig. 49-1 is a flowchart showing a processing operation performed by the control unit in the AV navigation system wherein the display device according to the sixth embodiment is adopted;

Fig. 49-2 is a flowchart showing a processing operation performed by the control unit in the AV navigation system wherein the display device according to the sixth embodiment is adopted;

Fig. 50 is a flowchart showing a processing operation performed by the control unit in the AV navigation system wherein the display device according to the sixth embodiment is adopted;

Fig. 51 is a flowchart showing a processing operation performed by a control unit in an AV navigation system wherein a display device according to a seventh embodiment is adopted;

Fig. 52(a) is a diagram showing an example of an image for driver's seat and Fig. 52(b) is a diagram showing an example of an image for passenger seat;

Fig. 53 (a) is a diagram showing an example of the image for driver's seat and Fig. 53(b) is a diagram showing an example of the image for passenger seat;

Fig. 54-1 is a flowchart showing a processing operation performed by the control unit in the AV navigation system wherein the display device according to the seventh embodiment is adopted;

Fig. 54-2 is a flowchart showing a processing operation performed by the control unit in the AV navigation system wherein the display device according to the seventh embodiment is adopted;

Fig. 55 is a flowchart showing a processing operation performed by the control unit in the AV navigation system wherein the display device according to the seventh embodiment is adopted;

Fig. 56 is a flowchart showing a processing operation performed by a control unit in an AV navigation system wherein a display device according to an eighth embodiment is adopted;

Fig. 57(a) is an illustration to describe pixels used for an image for driver's seat and pixels used for an image for passenger seat, Fig. 57(b) is a diagram showing an example of the image for driver's seat and Fig. 57(c) is a diagram showing an example of the image for passenger seat;

Fig. 58(a) is a diagram showing an example of the image for driver's seat and Fig. 58(b) is a diagram showing an example of the image for passenger seat;

Fig. 59(a) is a diagram showing an example of the image for driver's seat and Fig. 59(b) is a diagram showing an example of the image for passenger seat;

Fig. 60-1 is a flowchart showing a processing operation performed by the control unit in the AV navigation system wherein the display device according to the eighth embodiment is adopted;

Fig. 60-2 is a flowchart showing a processing operation performed by the control unit in the AV navigation system wherein the display device according to the eighth embodiment is adopted;

Fig. 61 is a flowchart showing a processing operation performed by a control unit in an AV navigation system wherein a display device according to a ninth embodiment is adopted;

Fig. 62-1 is a flowchart showing a processing operation performed by the control unit in the AV navigation system wherein the display device according to the ninth embodiment is adopted;

Fig. 62-2 is a flowchart showing a processing operation performed by the control unit in the AV navigation system wherein the display device according to the ninth embodiment is adopted;

Fig. 63 is a flowchart showing a processing operation performed by the control unit in the AV navigation system wherein the display device according to the ninth embodiment is adopted;

Fig. 64 is a flowchart showing a processing operation performed by the control unit in the AV navigation system wherein the display device according to the ninth embodiment is adopted;

Fig. 65 is a flowchart showing a processing operation performed by a control unit in an AV navigation system wherein a display device according to another embodiment is adopted;

Fig. 66 is a flowchart showing a processing operation performed by a control unit in an AV navigation system wherein a display device according to another embodiment is adopted;

Fig. 67 is a plan view showing an example of a change of a setup state of a display device;

Fig. 68 is an external front view of a display device according to another embodiment;

Fig. 69 is a flowchart showing a processing operation performed by a control unit in an AV navigation system wherein a display device according to a tenth embodiment is adopted;

Fig. 70(a) is an illustration to describe pixels used for an image for driver's seat and pixels used for an image for passenger seat, Fig. 70(b) is a diagram showing an example of the image for driver's seat and Fig. 70(c) is a diagram showing an example of the image for passenger seat;

Fig. 71(a) is a diagram showing an example of the image for driver's seat and Fig. 71 (b) is a diagram showing an example of the image for passenger seat;

Fig. 72 is a flowchart showing a processing operation performed by the control unit in the AV navigation system wherein the display device according to the tenth embodiment is adopted;

Fig. 73 is an external front view of a display device according to an eleventh embodiment;

Fig. 74 is a flowchart showing a processing operation performed by a control unit in an AV navigation system wherein the display device according to the eleventh embodiment is adopted;

Fig. 75(a) is a diagram showing an example of an image for driver's seat and Fig. 75(b) is a diagram showing an example of an image for passenger seat;

Fig. 76(a) is a diagram showing an example of an image displayed in the driver's-seat direction and Fig. 76(b) is a diagram showing an example of an image displayed in the passenger-seat direction;

Fig. 77(a) is a diagram showing an example of an image displayed in the driver's-seat direction and Fig. 77(b) is a diagram showing an example of an image displayed in the passenger-seat direction;

Fig. 78(a) is a diagram showing an example of an image displayed in the driver's-seat direction and Fig. 78(b) is a diagram showing an example of an image displayed in the passenger-seat direction;

Fig. 79-1 is a flowchart showing a processing operation performed by the control unit in the AV navigation system wherein the display device according to the eleventh embodiment is adopted;

Fig. 79-2 is a flowchart showing a processing operation performed by the control unit in the AV navigation system wherein the display device according to the eleventh embodiment is adopted;

Fig. 79-3 is a flowchart showing a processing operation performed by the control unit in the AV navigation system wherein the display device according to the eleventh embodiment is adopted;

Fig. 80 is a flowchart showing a processing operation performed by the control unit in the AV navigation system wherein the display device according to the eleventh embodiment is adopted;

Fig. 81 (a) is a diagram showing an example of an image displayed in the driver's-seat direction and Fig. 81(b) is a diagram showing an example of an image displayed in the passenger-seat direction;

Fig. 82(a) is a diagram showing an example of an image displayed in the driver's-seat direction and Fig. 82(b) is a diagram showing an example of an image displayed in the passenger-seat direction;

Fig. 83-1 is a flowchart showing a processing operation performed by a control unit in an AV navigation system wherein a display device according to a twelfth embodiment is adopted;

Fig. 83-2 is a flowchart showing a processing operation performed by the control unit in the AV navigation system wherein the display device according to the twelfth embodiment is adopted;

Fig. 83-3 is a flowchart showing a processing operation performed by the control unit in the AV navigation system wherein the display device according to the twelfth embodiment is adopted;

Fig. 84 is a flowchart showing a processing operation performed by the control unit in the AV navigation system wherein the display device according to the twelfth embodiment is adopted;

Fig. 85(a) is a diagram showing an example of an image displayed in the driver's-seat direction and Fig. 85(b) is a diagram showing an example of an image displayed in the passenger-seat direction;

Fig. 86(a) is a diagram showing an example of an image displayed in the driver's-seat direction and Fig. 86(b) is a diagram showing an example of an image displayed in the passenger-seat direction;

Fig. 87-1 is a flowchart showing a processing operation performed by a control unit in an AV navigation system wherein a display device according to a thirteenth embodiment is adopted;

Fig. 87-2 is a flowchart showing a processing operation performed by the control unit in the AV navigation system wherein the display device according to the thirteenth embodiment is adopted;

Fig. 87-3 is a flowchart showing a processing operation performed by the control unit in the AV navigation system wherein the display device according to the thirteenth embodiment is adopted;

Fig. 88 is a flowchart showing a processing operation performed by the control unit in the AV navigation system wherein the display device according to the thirteenth embodiment is adopted;

Fig. 89 is a flowchart showing a processing operation performed by a control unit in an AV navigation system wherein a display device according to another embodiment is adopted;

Fig. 90 is a flowchart showing a processing operation performed by a control unit in an AV navigation system wherein a display device according to another embodiment is adopted;

Fig. 91 is a flowchart showing a processing operation performed by a control unit in an AV navigation system wherein a display device according to another embodiment is adopted;

Figs. 92(a) and 92(b) are diagrams showing examples of images displayed on a display unit constituting a display device;

Fig. 93 is a flowchart showing a processing operation performed by a control unit in an AV navigation system wherein a display device according to another embodiment is adopted;

Fig. 94 is a flowchart showing a processing operation performed by a control unit in an AV navigation system wherein a display device according to another embodiment is adopted;

Fig. 95 is a diagram showing an example of an image displayed on a display unit constituting a display device;

Fig. 96 is an external front view of a display device according to a fourteenth embodiment;

Fig. 97 is a flowchart showing a processing operation performed by a control unit in an AV navigation system wherein the display device according to the fourteenth embodiment is adopted;

Fig. 98(a) is a diagram showing an example of an image displayed in the driver's-seat direction and Fig. 98(b) is a diagram showing an example of an image displayed in the passenger-seat direction;

Fig. 99(a) is a diagram showing an example of an image displayed in the driver's-seat direction and Fig. 99(b) is a diagram showing an example of an image displayed in the passenger-seat direction;

Fig. 100(a) is a diagram showing an example of an image displayed in the driver's-seat direction and Fig. 100(b) is a diagram showing an example of an image displayed in the passenger-seat direction;

Fig. 101-1 is a flowchart showing a processing operation performed by the control unit in the AV navigation system wherein the display device according to the fourteenth embodiment is adopted;

Fig. 101-2 is a flowchart showing a processing operation performed by the control unit in the AV navigation system wherein the display device according to the fourteenth embodiment is adopted;

Fig. 102(a) is a diagram showing an example of an image displayed in the driver's-seat direction and Fig. 102(b) is a diagram showing an example of an image displayed in the passenger-seat direction;

Fig. 103 is a flowchart showing a processing operation performed by the control unit in the AV navigation system wherein the display device according to the fourteenth embodiment is adopted;

Fig. 104 is an external front view of a display device according to another embodiment;

Fig. 105 is a diagram showing an example of an image displayed on a display unit constituting a display device;

Fig. 106 is an external front view of a display device according to a fifteenth embodiment;

Fig. 107 is a flowchart showing a processing operation performed by a control unit in an AV navigation system wherein the display device according to the fifteenth embodiment is adopted;

Fig. 108-1 is a flowchart showing a processing operation performed by the control unit in the AV navigation system wherein the display device according to the fifteenth embodiment is adopted;

Fig. 108-2 is a flowchart showing a processing operation performed by the control unit in the AV navigation system wherein the display device according to the fifteenth embodiment is adopted;

Fig. 108-3 is a flowchart showing a processing operation performed by the control unit in the AV navigation system wherein the display device according to the fifteenth embodiment is adopted;

Fig. 109 is a flowchart showing a processing operation performed by the control unit in the AV navigation system wherein the display device according to the fifteenth embodiment is adopted;

Fig. 110 is a flowchart showing a processing operation performed by the control unit in the AV navigation system wherein the display device according to the fifteenth embodiment is adopted;

Fig. 111 is an overview block diagram showing the overview construction of an on-vehicle device which is a sixteenth embodiment of the present invention;

Fig. 112-1 is an illustration to describe a method of individually displaying a picture for a driver and a picture for a non-driver;

Fig. 112-2 is an illustration to describe a method of overlapping of a picture for a driver and a picture for a non-driver for display;

Fig. 112-3 is a construction sketch of a case where a display for driver's seat and a display for passenger seat are installed;

Fig. 112-4 is a construction sketch of a case where a display for front-side seats and a display for rear-side seats are installed;

Fig. 113-1 is a block diagram of a case where a single display control unit controls a plurality of displays;

Fig. 113-2 is a block diagram of a case where a display control unit is arranged for every display;

Fig. 114 is a flowchart to describe a processing operation of a main control unit shown in Fig. 111;

Fig. 115-1 is an illustration to describe operation control at the passenger seat side (for a non-driver) and at the driver's seat side (for a driver);

Fig. 115-2 is an illustration to describe operation restrictions to the passenger seat side;

Fig. 116 is a diagram showing a concrete example of display in a case where operation restrictions to a driver are conducted;

Fig. 117 is a diagram showing an example of display in a case where an operation from the passenger seat is displayed to a driver and the driver is allowed to confirm the operation;

Fig. 118 is a diagram showing a concrete example of an interrupt display when guidance should be carried out;

Fig. 119 is a diagram showing a concrete example of an interrupt display of a back monitor;

Fig. 120 is an overview block diagram showing the overview construction of an on-vehicle device which is a seventeenth embodiment of the present invention;

Fig. 121-1 is an illustration to describe a method of installing two microphones near the driver's seat and the passenger seat;

Fig. 121-2 is an illustration to describe a method wherein a directional microphone is used;

Fig. 122 is a flowchart to describe a processing operation of a transmission timing control unit shown in Fig. 120; and

Fig. 123 is an illustration to describe screen setting for a driver's seat.

### Best Mode for Carrying Out the Invention

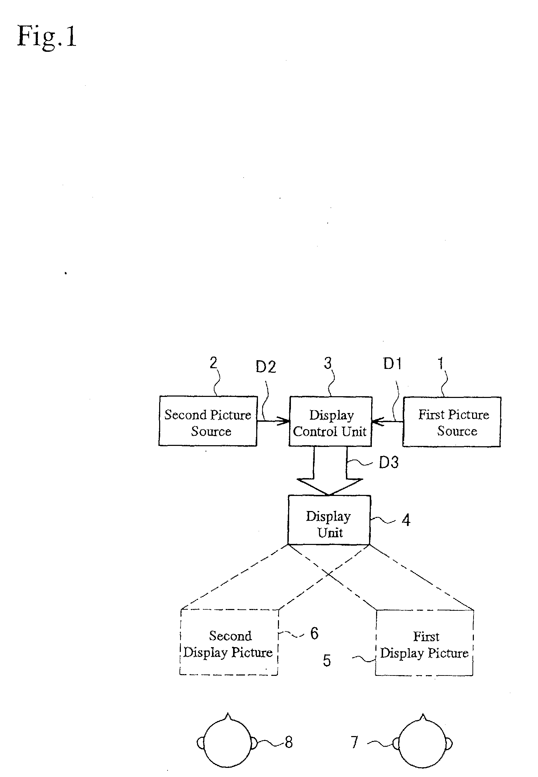

The preferred embodiments of the display device according to the present invention are described below by reference to the Figures noted above. Fig. 1 is an illustration to describe a function of displaying individual images in a plurality of viewing directions on a common screen that a display device according to a first embodiment has. Reference numerals 1 and 2 in Fig. 1 represent a first picture source and a second picture source, respectively. As the picture sources, a DVD player, a television receiver and a navigation system are exemplified.

A first picture data D 1 obtained from the first picture source 1 and a second picture data D2 obtained from the second picture source 2 are provided to a display control unit 3. Both the first picture data D1 and the second picture data D2 are processed in the display control unit 3 into a form which can be displayed substantially at the same time on a display unit 4, and the processed display data D3 is provided to the display unit 4.

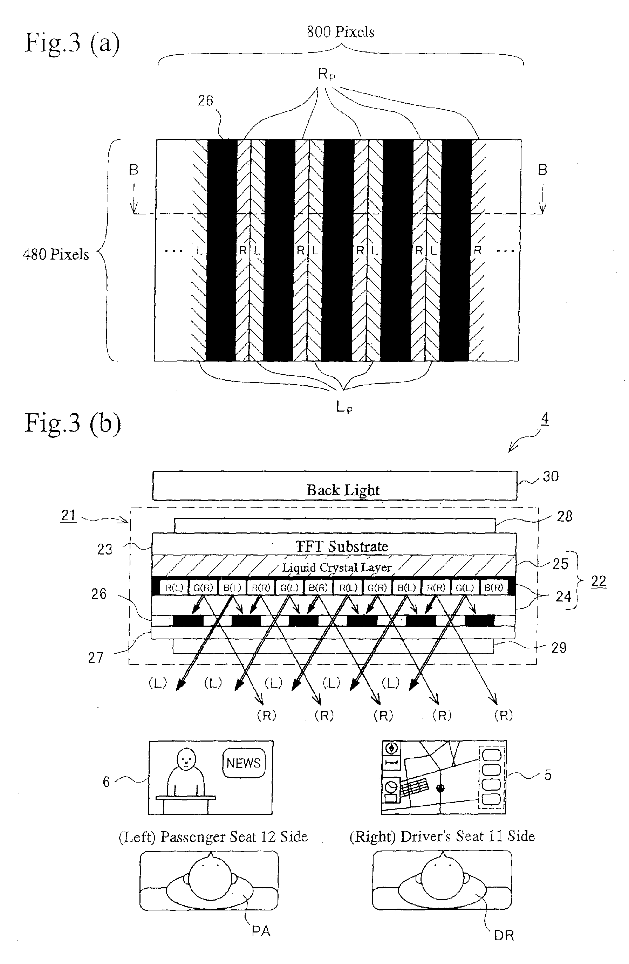

The display unit 4, which is described in detail later, comprises a liquid crystal panel 21 having parallax barriers 26 as shown in Fig. 3(b). A half of the total number of lateral pixels thereof (e.g. even-numbered lines) are used for display of a first display picture 5 based on the first picture source 1, while the rest of the total number of the lateral pixels (e.g. odd-numbered lines) are used for display of a second display picture 6 based on the second picture source 2.

The pixels used for the first display picture 5 can be seen by an observer (user) 7 in a right-hand position facing the display unit 4, but the pixels used for the second display picture 6, which are blocked by the parallax barriers 26 formed on a surface of the display unit 4, cannot be seen by the observer 7. On the other hand, the pixels used for the second display picture 6 can be seen by an observer (user) 8 in a left-hand position facing the display unit 4, but the pixels used for the first display picture 5, which are blocked by the parallax barriers 26 formed on the surface of the display unit 4, cannot be seen by the observer 8.

As described above, in accordance with the positional relations with the display unit 4, in other words, in accordance with viewing angles to the display unit 4, a situation where the second display picture 6 cannot be seen but the first display picture 5 can be seen on one hand, and the first display picture 5 cannot be seen but the second display picture 6 can be seen on the other hand, can be produced. As a result, different pieces of information or contents can be provided on a common screen to the right and left observers (users) 7 and 8. As a matter of course, if the first picture source 1 and the second picture source 2 are identical, the right and left observers 7 and 8 can see the same display picture.

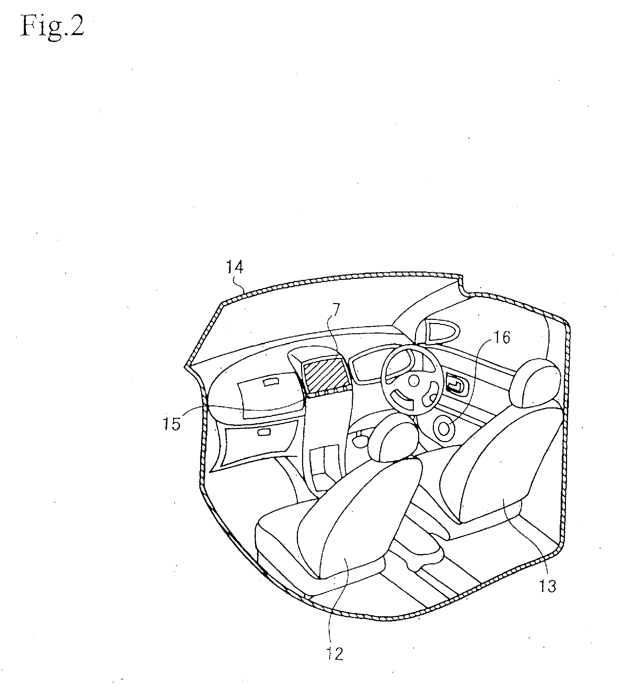

Fig. 2 is a perspective view showing an example of a case where the display device according to the first embodiment is mounted on a vehicle. The display unit 4 constituting the display device is installed around the center of a dashboard 14 arranged in front of a driver's seat 11 and a passenger seat 12 and under a windshield 13, and every kind of operation to the display device is conducted by operating a touch panel formed on the surface of the display unit 4, an operating unit 15 arranged therearound, or an infrared or wireless remote control (not shown). A speaker 17 is arranged on each door 16 of the vehicle, and a voice in synchronization with a display picture or a warning is output through the speakers 17.

Thus, for example, it is possible to allow only a map picture by a navigation system to be seen from the driver's seat 11 to be a first viewing direction, while it is possible to allow only a television picture or a DVD movie picture to be seen from the passenger seat 12 to be a second viewing direction. As a result, while a driver DR sitting in the driver's seat 11 obtains driving assistance by car navigation, a passenger PA sitting in the passenger seat 12 can enjoy a television program or a movie.

Moreover, since each display picture is displayed with filling the screen (e.g. a 7-inch diagonal screen) of the display unit 4, the screen size thereof is not reduced, differently from the conventional multi-window display. That is, since the driver DR and the passenger PA in the passenger seat can see the screen as if to have the entire screen to oneself, it is possible to appropriately provide information or contents to the driver DR and the passenger PA in the passenger seat, respectively.

The construction of the display unit 4 of the display device according to the first embodiment is described below in detail. Fig. 3(a) is a diagram schematically showing a display state of the display unit 4 when viewed from the front, and Fig. 3(b) is a sectional view taken along the line B-B of Fig. 3(a). The display unit 4 comprises the liquid crystal panel 21 and a back light 30. The liquid crystal panel 21 is arranged slightly apart from the back light 30 and has pixels consisting of RGB colors (the three primary colors).

In the liquid crystal panel 21, a substrate 22 wherein a liquid crystal layer 25 is sandwiched between a TFT (Thin Film Transistor) substrate 23 and a color filter substrate 24, the parallax barriers 26 and a glass substrate 27 are sandwiched between a polarizing plate 28 arranged on the back light 30 side and a polarizing plate 29 arranged on the front face in the direction of light emission thereof. As the liquid crystal panel 21, for example, a panel with 800 pixels wide by 480 pixels high is adopted.

Each pixel of the liquid crystal 21 is grouped alternately in a vertical direction into pixels R_{P} for the right (driver's seat 11) and pixels L_{P} for the left (passenger seat 12) for display control. That is, a half of the total number of lateral pixels of the liquid crystal panel 21 are used for display of the first display picture 5, while the rest of the total number of the lateral pixels thereof are used for display of the second display picture 6.

The parallax barriers 26 are arranged laterally at prescribed intervals (intervals whereby the outgoing direction of light from each pixel can be restricted to either right or left) in the form of vertical stripes. By the parallax barriers 26, display to the left (passenger seat 12) with the pixels R_{P} for the right (driver's seat 11) is blocked, but display to the right therewith is not blocked and can be seen from the driver's seat 11 at the right side. On the other hand, display to the right (driver's seat 11) with the pixels Lp for the left (passenger seat 12) is blocked, but display to the left therewith is not blocked and can be seen from the passenger seat 12 at the left side.

That is, when the liquid crystal panel 21 is viewed from the right side, the parallax barriers 26 conceal the pixels L_{P} for the left and the pixels R_{P} for the right can be seen. On the other hand, when the liquid crystal panel 21 is viewed from the left side, the parallax barriers 26 conceal the pixels R_{P} for the right and the pixels L_{P} for the left can be seen. Here, when the liquid crystal panel 21 is viewed from around the front, both the pixels R_{P} for the right and the pixels L_{P} for the left can be seen, and therefore, the first display picture 5 and the second display picture 6 look like overlapping each other.

If the display control on each pixel of the liquid crystal panel 21 and the arrangement of the parallax barriers 26 are changed, it is possible to display separate pictures in three or more directions. By making the parallax barriers 26 of electrically drivable liquid crystal shutters or the like, the viewing angles may be made adjustable. Here, to the parallax barriers 26, for example, the construction disclosed in Japanese Patent Application Laid-Open Publication No.10-123461 or No.11-84131 can be applied.

In Fig. 3, the pixels R_{P} for the right and the pixels Lp for the left which are alternately in line have RGB colors, but each vertical group may be in a single color such as an R line, a G line and a B line, or may be a line of two or more of RGB.

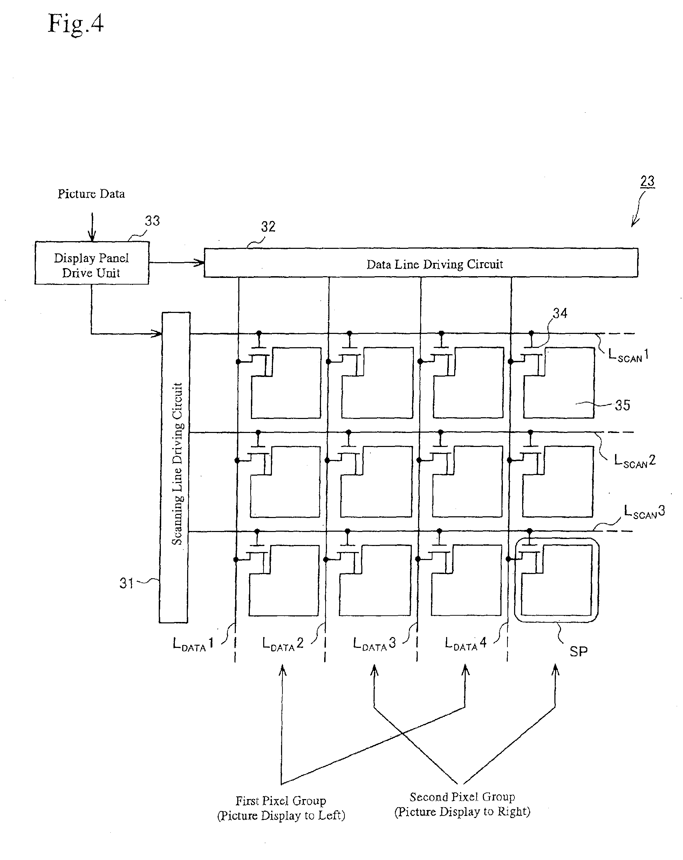

Fig. 4 is a circuit diagram showing an outline of the TFT substrate 23 constituting the display unit 4. The TFT substrate 23 comprises a scanning line driving circuit 31, a data line driving circuit 32, scanning lines L_{SCAN}1, L_{SCAN}2, ... connected to the scanning line driving circuit 31, data lines L_{DATA}1, L_{DATA}2, ... connected to the data line driving circuit 32, and a display panel drive unit 33 connected to the scanning line driving circuit 31 and the data line driving circuit 32.

Regarding an area surrounded by each of the scanning lines L_{SCAN}1, L_{SCAN}2, ... with each of the data lines L_{DATA}1, L_{DATA}2, ..., respectively as one unit, a plurality of subpixels SP are formed. In each subpixel SP, a pixel electrode 34 for applying a voltage to the liquid crystal layer 25 (see Fig. 3(b)) and a TFT element 35 for switching control thereof are formed.

The display panel drive unit 33 controls the timing of driving of the scanning line driving circuit 31 and the data line driving circuit 32. The scanning line driving circuit 31 conducts selective scanning of the TFT elements 35, and the data line driving circuit 32 controls voltage applied to the pixel electrodes 34.

By sending the first picture data D 1 (for display of a picture for the right) on the data lines L_{DATA}2 and L_{DATA}4, and the second picture data D2 (for display of a picture for the left) on the data lines L_{DATA}1 and L_{DATA}3, for example, based on a composite data of the first picture data D1 (see Fig. 1) and the second picture data D2, or each individual picture data of the first picture data D1 and the second picture data D2, the subpixels SP are divided into a first picture data D1 group forming the first display picture 5 (see Fig. 1) and a second picture data D2 group forming the second display picture 6. Here, in cases where individual pictures are displayed in three or more directions, drive control similar to the above-described control may be conducted. For example, in a case where individual pictures are displayed in three directions, first, second and third picture data groups may be formed.

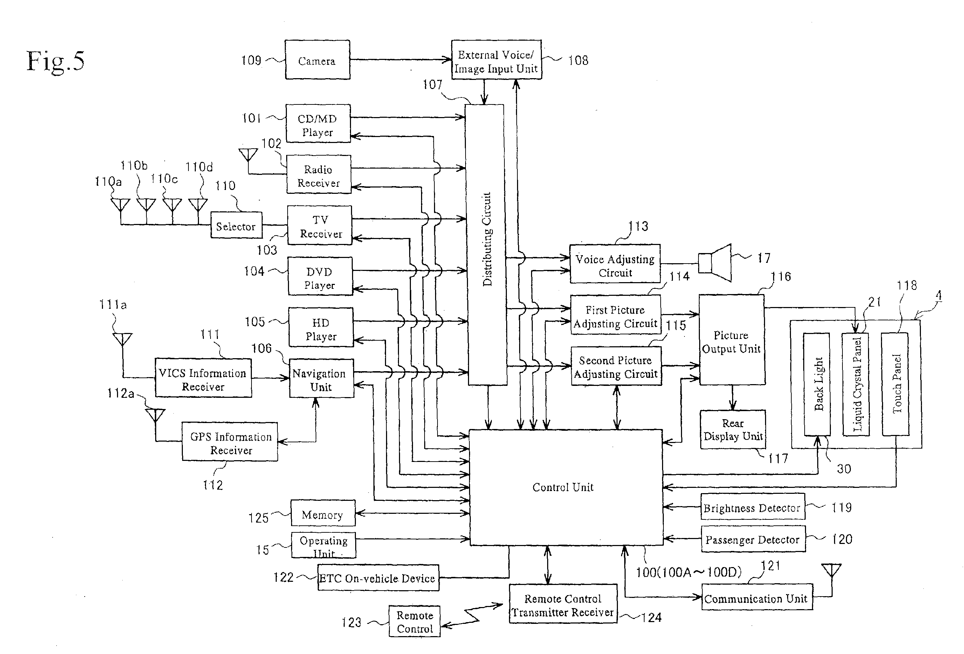

Fig. 5 is a block diagram schematically showing the principal part of an AV (Audio Visual) navigation system to be mounted on a vehicle, wherein the display device according to the first embodiment is adopted. Here, components having the same functions as each part described in Figs. 1-4 are similarly marked.

The AV navigation system has various kinds of sources including a CD/MD player 101, a radio receiver 102, a TV receiver 103, a DVD player 104, an HD (Hard Disk) player 105 and a navigation unit 106. Each of these sources is connected through a signal line to a distributing circuit 107. In addition, an external voice/image input unit 108 is connected through a signal line to the distributing circuit 107. To the external voice/image input unit 108, a camera (e.g. a back monitoring camera) 109 is connected here, and a video camera, a game and the like are also connectable.

To the TV receiver 103, a selector 110 is connected, and to the selector 110, antennas 110a-110d arranged at the right front, left front, right rear and left rear, respectively, are connected. To the navigation unit 106, a VICS information receiver 111 and a GPS information receiver 112 are connected, and to the VICS information receiver 111 and the GPS information receiver 112, antennas 111a and 112b are connected, respectively.

The distributing circuit 107 is connected through signal lines to a voice adjusting circuit 113, a first picture adjusting circuit 114 and a second picture adjusting circuit 115, respectively. The voice adjusting circuit 113 is connected to speakers 17 arranged on each of doors 16 (see Fig. 2). The first picture adjusting circuit 114 and the second picture adjusting circuit 115 are connected through signal lines to a picture output unit 116, which is connected though signal lines to a liquid crystal panel 21 of a display unit 4 and a rear display unit 117, respectively.

Here, the rear display unit 117 is arranged for rear seats of the vehicle, and the same picture as a picture displayed through the picture output unit 116 on the display unit 4, or either of a picture for driver's seat and a picture for passenger seat can be displayed thereon. The display unit 4 comprises a back light 30, the liquid crystal panel 21 and a touch panel 118, and an operation signal to the touch panel 118 is input to a control unit 100.

Moreover, a brightness detector (e.g. a light switch of a vehicle, a light sensor) 119, a passenger detector (e.g. a pressure sensor) 120, a communication unit 121 having a function of radio communication, an ETC on-vehicle device 122, a remote control transmitter receiver 124 transmitting/receiving data to/from a remote control 123, an operating unit 15 and a memory 125 are connected to the control unit 100.

The control unit 100 is connected through control lines to each part of the system such as the various kinds of sources 101-106, the distributing circuit 107, the external voice/image input unit 108, the adjusting circuits of each kind 113-115, the picture output unit 116 and the display unit 4, and has control over each part of the system.

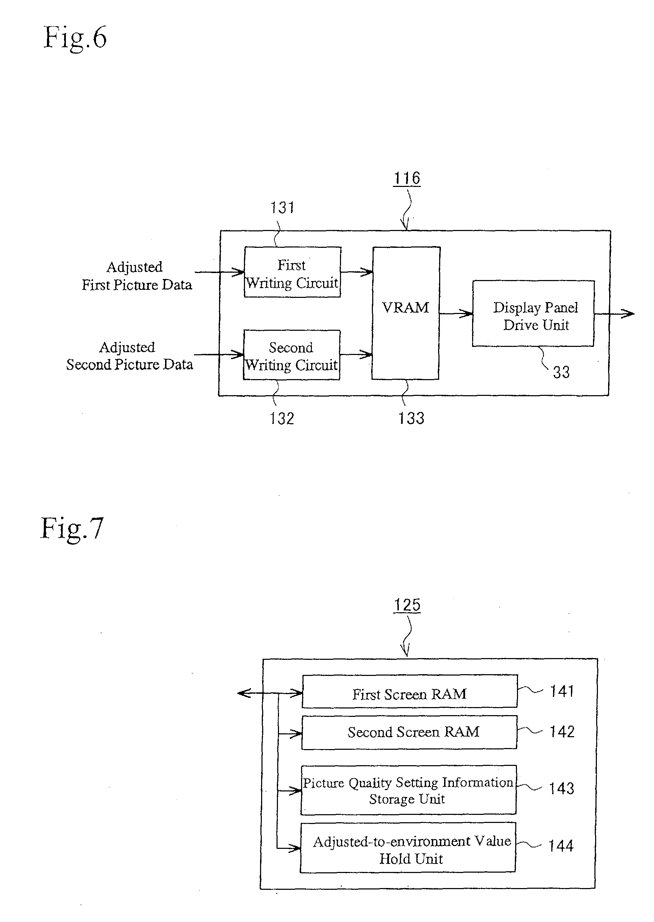

Fig. 6 is a block diagram showing a schematic construction of the picture output unit 116. Here, components having the same functions as each part described in Figs. 1-5 are similarly marked. The picture output unit 116 comprises a first writing circuit 131 connected to the first picture adjusting circuit 114 (see Fig. 5), a second writing circuit 132 connected to the second picture adjusting circuit 115, a VRAM 133 and a display panel drive unit 33.

For example, the first writing circuit 131 writes in an appropriate area in the VRAM 133 based on picture data corresponding to even-numbered lines of pixels in picture data adjusted through the first picture adjusting circuit 114, and the second writing circuit 132 writes in an appropriate area in the VRAM 133 based on picture data corresponding to odd-numbered lines of pixels in picture data adjusted through the second picture adjusting circuit 115. The display panel drive unit 33 is a circuit for driving the liquid crystal panel 21 (see Figs. 3 and 5), and drives pixels of the liquid crystal panels 21 corresponding to picture data (composite data of first picture data D1 and second picture data D2) stored in the VRAM 133.

Here, since the picture data is written in the VRAM 133 in such a manner to correspond to the picture for multiview display made by combining the first picture data D1 and the second picture data D2, only one drive circuit is required, and the operation thereof is the same as that of a drive circuit of a usual liquid crystal display device. In another embodiment, a display device may comprise a first display panel drive unit and a second display panel drive unit for driving pixels of a liquid crystal panel 21 corresponding to each of a first picture data D1 and a second picture data D2, respectively, without combining the both.

Fig. 7 is a block diagram showing a schematic construction of the memory 125. The memory 125 comprises a first screen RAM 141 and a second screen RAM 142 in which user-specified picture quality adjusted values of a first display picture 5 (see Fig. 1) and a second display picture 6 can be written, respectively, a picture quality setting information storage unit 143 in which selectable adjusted values in a plurality of levels are previously stored for adjusting each picture quality of the first display picture 5 and the second display picture 6, and an adjusted-to-environment value hold unit 144 which holds adjusted states of the picture quality of the first display picture 5 and the second display picture 6 to the surrounding environment. The picture quality setting information storage unit 143 and the adjusted-to-environment value hold unit 144 comprise an electrically rewritable nonvolatile memory such as a flash memory or a volatile memory with battery backup.

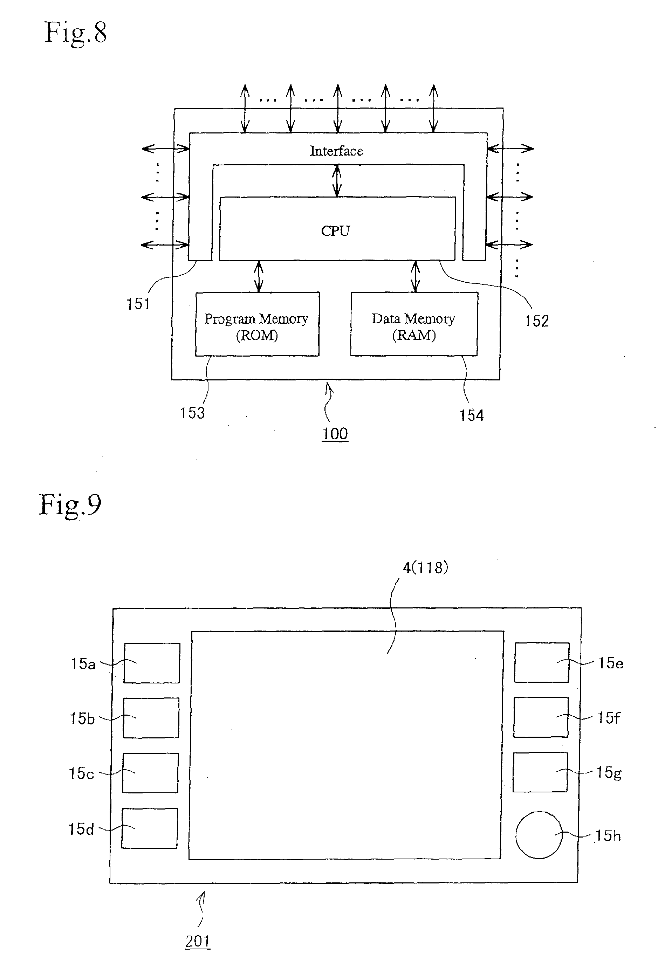

Fig. 8 is a block diagram showing a schematic construction of the control unit 100. The control unit 100 comprises an interface 151 connected to each part of the system, a CPU 152 which controls over each part of the system, a program memory (ROM) 153 in which programs of each kind necessary for system operations are stored and a data memory (RAM) 154 for storing each kind of data. Here, the ROM 153 and the RAM 154 may be included in the CPU 152 or may be arranged outside the CPU 152. The ROM 153 may be an electrically rewritable nonvolatile memory such as a flash memory.

The control unit 100 conducts each kind of control based on operating signals from the touch panel 118, the operating unit 15, the remote control 123 and the like as shown in Fig. 5. For example, the control unit 100 controls the sources of each kind 101-106 and the distributing circuit 107 so as to control outputs of picture data and voice data of selected two sources or one source. And the control unit 100 conducts a control to distribute the picture data and voice data of the selected sources through the distributing circuit 107, leading to distributing the picture data to the first picture adjusting circuit 114 and the second picture adjusting circuit 115, and distributing the voice data to the voice adjusting circuit 113, respectively.

In the first picture adjusting circuit 114 and the second picture adjusting circuit 115, the brightness, color tone, contrast or the like of the picture data are adjusted based on a control signal from the control unit 100. The adjusted picture data is output to the picture output unit 116, wherein processing of driving the liquid crystal panel 21 to display the picture is conducted based on a control signal from the control unit 100.

In the voice adjusting circuit 113, the distribution to each speakers 17, volume, voice and the like are adjusted based on a control signal from the control unit 100, and the adjusted voice is output through the speakers 17. Moreover, the control unit 100 conducts a control to display an operation menu for controlling these sources of each kind 101-106.

For example, when the HD player 105 is selected, music data such as an MP3 file, picture data such as a JPEG file, map data for navigation and the like stored in a hard disk (not shown) are read out, and a menu display or picture data for selecting music data or the like is displayed on the display unit 4. Here, the navigation unit 106 has a map information memory (using a part of areas of said hard disk) in which map information used for navigation is stored, and can display a navigation picture produced by using information obtained through the VICS information receiver 111 and the GPS information receiver 112 on the display unit 4. The TV receiver 103 receives a desired analog TV broadcast wave or digital TV broadcast wave through any of the antennas 110a-110d.

The control unit 100 conducts a control to change settings of the output picture and voice based on information detected by the brightness detector 119 and the passenger detector 120. The communication unit 121 and the ETC on-vehicle device 122 are connected to the control unit 100, which conducts a control to display toll information or the like from the ETC on-vehicle device 122 on the display unit 4, and controls the communication unit 121 for wireless connection with a cellular phone or the like to conduct a control to display information about said control on the display unit 4. The control unit 100 conducts processing of storing setting information of each kind such as picture quality setting information, programs and vehicle information in the memory 125.

Fig. 9 is an external front view of the display device according to the first embodiment. Reference numeral 201 in Fig. 9 represents a display device, comprising the display unit 4 with the touch panel 118 formed on a surface thereof, and the operating unit 15 (operating switches 15a-15h) arranged therearound.

The display unit 4 comprises the parallax barriers 26 and associated parts, as shown in Fig. 3, and displays an image G_{DR} for driver's seat and an image G_{PA} for passenger seat separately on the same screen. Therefore, it is possible to allow a driver DR to see the image G_{DR} for driver's seat and to allow a passenger PA in a passenger seat to see the image G_{PA} for passenger seat.

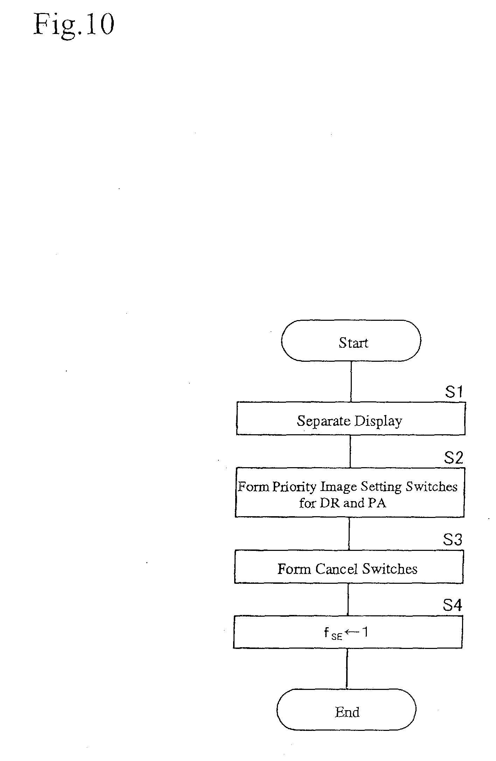

A processing operation [1-1] performed by the control unit 100 in the AV navigation system wherein the display device according to the first embodiment is adopted is described below with a flowchart shown in Fig. 10. Here, this processing operation [1-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by operating the operating switches formed on the display unit 4, the operating unit 15, the remote control 123 or the like.

Here, in cases where the separate display is standard (i.e. the separate display starts after tuning-on of the AV navigation system), the user's instruction for separate display is not required. And therefore, the processing operation [1-1] described below is not needed and a separate display flag f_{SE} for showing that the separate display has been conducted is not required.

When an instruction for separate display is provided by the user, based on prescribed conditions, as shown in Figs. 11 and 12, one of two images is displayed as an image G_{DR} for driver's seat and the rest is displayed as an image G_{PA} for passenger seat (Step S1). A priority image setting switch 41_{DR} for setting the image G_{DR} for driver's seat to a priority image is formed on the upper right portion of the image G_{DR} for driver's seat, while a priority image setting switch 41_{PA} for setting the image G_{PA} for passenger seat to a priority image is formed on the upper left portion of the image G_{PA} for passenger seat (Step S2).

Fig. 11(a) is an illustration to describe pixels used for the image G_{DR} for driver's seat and pixels used for the image G_{PA} for passenger seat, Fig. 11(b) is a diagram showing an example of the image G_{DR} for driver's seat and Fig. 11(c) is a diagram showing an example of the image G_{PA} for passenger seat. As shown in Fig. 11(a), a half of the total number of lateral pixels, even-numbered lines (pixels R_{P} for the right) are used for the image G_{DR} for driver's seat, while odd-numbered lines (pixels L_{P} for the left) are used for the image G_{PA} for passenger seat.

Fig. 12(a) is an enlarged diagram showing an example of the image G_{DR} for driver's seat, and Fig. 12(b) is an enlarged diagram showing an example of the image G_{PA} for passenger seat. As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified.

As can be seen from Figs. 11 and 12, the priority image setting switch 41_{DR}, a cancel switch 42_{DR} and an operating switch 49_{DR} are arranged within areas E₁-E₃, while the priority image setting switch 41_{PA}, a cancel switch 42_{PA} and an operating switch 49_{PA} are arranged within areas E₄-E₆ which do not overlap the areas E₁-E₃. And the priority image setting switch 41_{DR}, the cancel switch 42_{DR} and the operating switch 49_{DR} are arranged in such a manner to receive only operation inputs associated with the image G_{DR} for driver's seat, while the priority image setting switch 41_{PA}, the cancel switch 42_{PA} and the operating switch 49_{PA} are arranged in such a manner to receive only operation inputs associated with the image G_{PA} for passenger seat.

Operating switches 43_{DR}-48_{DR} formed on the image G_{DR} for driver's seat and operating switches 43_{PA}-48_{PA} formed on the image G_{PA} for passenger seat are arranged within the same areas E₇-E₁₂. These operating switches are arranged in such a manner that the operation areas for the image G_{DR} for driver's seat on the display screen and the operation areas for the image G_{PA} for passenger seat on the display screen overlap each other.

After the processing in Step S2, the cancel switches 42_{DR} and 42_{PA} for canceling this separate display are formed on the image G_{DR} for driver's seat and the image G_{PA} for passenger seat, respectively (Step S3). Thereafter, the separate display flag f_{SE} for showing that the separate display has been conducted is turned to 1 (Step S4). Here, in Fig. 12, outlines of the operating switches 43_{PA}-48_{PA} and 49_{PA} are thicker, which shows that the image G_{PA} for passenger seat has been set to a priority image. As a result, the user can easily recognize that operations to the image G_{PA} for passenger seat can be conducted.

The operating switches 15a-15h (see Fig. 9) arranged around the display unit 4 may include only switches which can deal with both the image G_{DR} for driver's seat and the image G_{PA} for passenger seat, or switches which can deal with either of them, or a combination of the both.

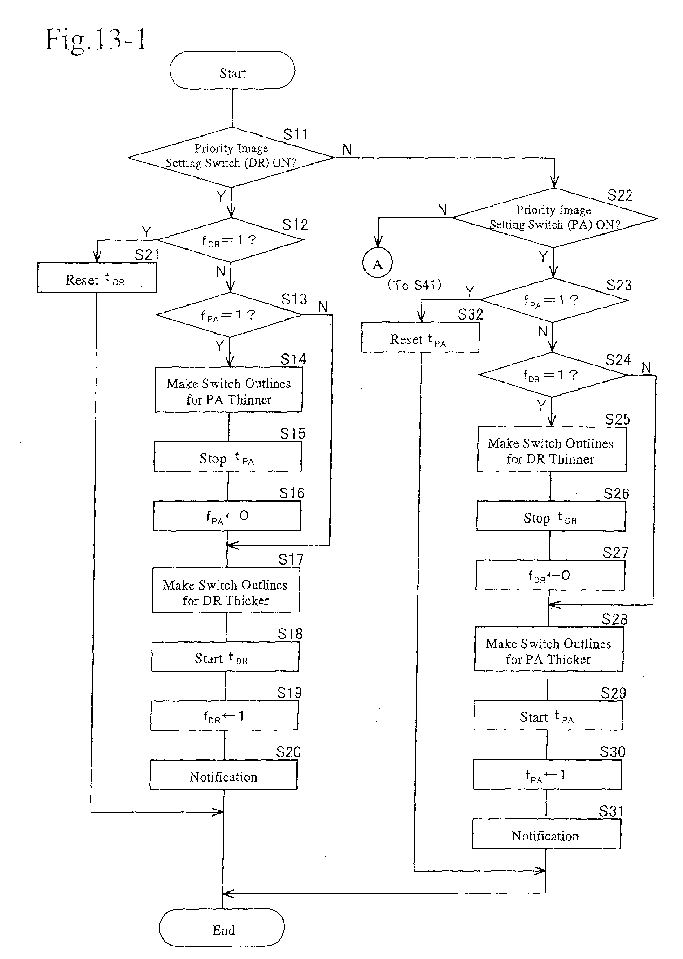

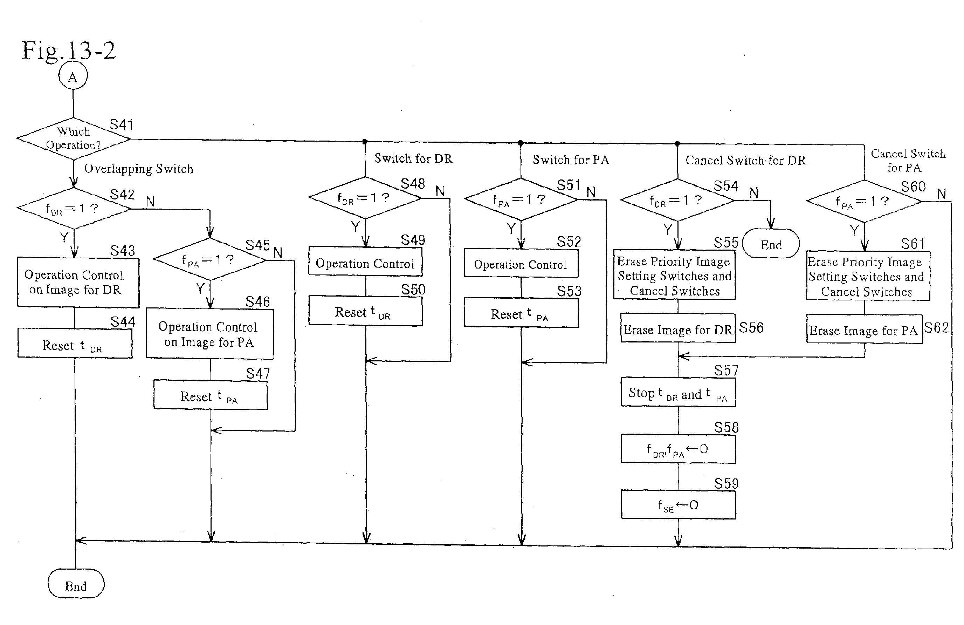

A processing operation [1-2] performed by the control unit 100 in the AV navigation system wherein the display device according to the first embodiment is adopted is described below with flowcharts shown in Figs. 13-1 and 13-2. Here, this processing operation [1-2] is performed in cases where the user operated the priority image setting switch 41_{DR} or 41_{PA}, the cancel switch 42_{DR} or 42_{PA}, or the operating switches 43_{DR}-49_{DR} or 43_{PA}-49_{PA} formed on the display unit 4, the operating switches 15a-15h constituting the operating unit 15 or the like. Here, as described above, when the separate display is standard, as a matter of course, the separate display flag f_{SE} is not required, and therefore, it is not included in starting conditions that the separate display flag f_{SE} is 1.

Whether the priority image setting switch 41_{DR} for setting the image G_{DR} for driver's seat to a priority image was operated or not is judged (Step S11). When it is judged that the priority image setting switch 41_{DR} was operated, whether a driver's seat flag f_{DR} showing that the image G_{DR} for driver's seat has been set to a priority image is 1 or not is judged (Step S12).

When it is judged that the driver's seat flag f_{DR} is not 1 (i.e. the image G_{DR} for driver's seat has not been set to a priority image), whether a passenger seat flag f_{PA} showing that the image G_{PA} for passenger seat has been set to a priority image is 1 or not is judged (Step S 13). When it is judged that the passenger seat flag f_{PA} is 1 (i.e. the image G_{PA} for passenger seat has been set to a priority image), the outlines of the operating switches 43_{PA}-49_{PA} formed on the image G_{PA} for passenger seat are made thinner (Step S14), a timer t_{PA} for measuring a time during which no operation to the image G_{PA} for passenger seat is conducted (i.e. a time elapsed after the last operation) is brought to a stop (Step S 15), the passenger seat flag f_{PA} is returned to 0 (Step S16), and then, the processing operation goes to Step S17. On the other hand, when it is judged that the passenger seat flag f_{PA} is not 1 in Step S 13, Steps S14-S16 are bypassed and the processing operation directly goes to Step S 17.

The outlines of the operating switches 43_{DR}-49_{DR} formed on the image G_{DR} for driver's seat are made thicker (Step S 17), a timer t_{DR} for measuring a time during which no operation to the image G_{DR} for driver's seat is conducted (i.e. a time elapsed after the last operation) is turned to 0 and started up (Step S 18), the driver's seat flag f_{DR} is set to be 1 (Step S 19), and then, the user is notified that the image G_{DR} for driver's seat was set to a priority image (Step S20). When it is judged that the driver's seat flag f_{DR} is 1 (i.e. the image G_{DR} for driver's seat has been already set to a priority image) in Step S12, the timer t_{DR} is returned to 0 (Step S21) and the processing operation [1-2] is concluded at once. Here, as a method for notification, a method of outputting by voice through the speakers 17 and a method of displaying a notification picture are exemplified, and to make the outlines of the operating switches thicker as described above may work as a notification.

On the other hand, when it is judged that the priority image setting switch 41_{DR} has not been operated in Step S11, whether the priority image setting switch 41_{PA} for setting the image G_{PA} for passenger seat to a priority image was operated or not is judged (Step S22). When it is judged that the priority image setting switch 41_{PA} was operated, whether the passenger seat flag f_{PA} is 1 or not is judged (Step S23).

When it is judged that the passenger seat flag f_{PA} is not 1 (i.e. the image G_{PA} for passenger seat has not been set to a priority image), whether the driver's seat flag f_{DR} is 1 or not is judged (Step S24). When it is judged that the driver's seat flag f_{DR} is 1 (i.e. the image G_{DR} for driver's seat has been set to a priority image), the outlines of the operating switches 43_{DR}-49_{DR} formed on the image G_{DR} for driver's seat are made thinner (Step S25), the timer t_{DR} is brought to a stop (Step S26), the driver's seat flag f_{DR} is returned to 0 (Step S27), and then, the processing operation goes to Step S28. On the other hand, when it is judged that the driver's seat flag f_{DR} is not 1 in Step S24, Steps S25-S27 are bypassed and the processing operation directly goes to Step S28.

The outlines of the operating switches 43_{PA}-49_{PA} formed on the image G_{PA} for passenger seat are made thicker (Step S28), the timer t_{PA} is turned to 0 and started up (Step S29), the passenger seat flag f_{PA} is set to be 1 (Step S30), and then, the user is notified that the image G_{PA} for passenger seat was set to a priority image (Step S31). When it is judged that the passenger seat flag f_{PA} is 1 (i.e. the image G_{PA} for passenger seat has been already set to a priority image) in Step S23, the timer t_{PA} is returned to 0 (Step S32) and the processing operation [1-2] is concluded at once. Here, as a method for notification, a method of outputting by voice through the speakers 17 and a method of displaying a notification picture are exemplified, and to make the outlines of the operating switches thicker as described above may work as a notification.

On the other hand, when it is judged that the priority image setting switch 41_{PA} has not been operated (i.e. neither the priority image setting switch 41_{DR} nor 41_{PA} has been operated) in Step S22, the processing operation goes to Step S41 (Fig. 13-2), wherein which operation other than operations to the priority image setting switches 41_{DR} and 41_{PA} was conducted is judged.

When it is judged that an operating switch arranged in such a manner that the operation area for the image G_{DR} for driver's seat on the display screen and the operation area for the image G_{PA} for passenger seat on the display screen overlap each other (an overlapping switch (e.g. the operating switches 43_{DR}-48_{DR} and 43_{PA}-48_{PA})) was operated, whether the driver's seat flag f_{DR} is 1 or not is judged (Step S42). When it is judged that the driver's seat flag f_{DR} is 1 (i.e. the image G_{DR} for driver's seat has been set to a priority image), operation control on the image G_{DR} for driver's seat according to the operation is conducted (Step S43), and then, the timer t_{DR} is returned to 0 (Step S44).

On the other hand, when it is judged that the driver's seat flag f_{DR} is not 1, whether the passenger seat flag f_{PA} is 1 or not is judged (Step S45). When it is judged that the passenger seat flag f_{PA} is 1 (i.e. the image G_{PA} for passenger seat has been set to a priority image), operation control on the image G_{PA} for passenger seat according to the operation is conducted (Step S46), and then, the timer t_{PA} is returned to 0 (Step S47). When it is judged that the passenger seat flag f_{PA} is not 1, the operation is regarded as a wrong operation and the processing operation [1-2] is concluded at once.

When it is judged that an operating switch which receives only operation inputs to the image G_{DR} for driver's seat (e.g. the operating switch 49_{DR}, excluding the priority image setting switch 41_{DR} and the cancel switch 42_{DR}) was operated in Step S41, whether the driver's seat flag f_{DR} is 1 or not is judged (Step S48). When it is judged that the driver's seat flag f_{DR} is 1 (i.e. the image G_{DR} for driver's seat has been set to a priority image), operation control according to the operation is conducted (Step S49), and then, the timer t_{DR} is returned to 0 (Step S50). On the other hand, when it is judged that the driver's seat flag f_{DR} is not 1, the operation is regarded as a wrong operation and the processing operation [1-2] is concluded at once.

When it is judged that an operating switch which receives only operation inputs to the image G_{PA} for passenger seat (e.g. the operating switch 49_{PA}, excluding the priority image setting switch 41_{PA} and the cancel switch 42_{PA}) was operated in Step S41, whether the passenger seat flag f_{PA} is 1 or not is judged (Step S51). When it is judged that the passenger seat flag f_{PA} is 1 (i.e. the image G_{PA} for passenger seat has been set to a priority image), operation control according to the operation is conducted (Step S52), and then, the timer t_{PA} is returned to 0 (Step S53). On the other hand, when it is judged that the passenger seat flag f_{PA} is not 1, the operation is regarded as a wrong operation and the processing operation [1-2] is concluded at once.

When it is judged that the cancel switch 42_{DR} for canceling the separate display formed on the image G_{DR} for driver's seat was operated in Step S41, whether the driver's seat flag f_{DR} is 1 or not is judged (Step S54). When it is judged that the driver's seat flag f_{DR} is 1, the priority image setting switches 41_{DR} and 41_{PA}, and the cancel switches 42_{DR} and 42_{PA} are erased from the screen (Step S55), the image G_{DR} for driver's seat of the two images is erased and the image G_{PA} for passenger seat is displayed in a full-screen display mode (Step S56). The timers t_{DR} and t_{PA} are brought to a stop (Step S57), the driver's seat flag f_{DR} and the passenger seat flag f_{PA} are returned to 0 (Step S58), and then, the separate display flag f_{SE} is returned to 0 (Step S59). On the other hand, when it is judged that the driver's seat flag f_{DR} is not 1, the operation is regarded as a wrong operation and the processing operation [1-2] is concluded at once.

When it is judged that the cancel switch 42_{PA} for canceling the separate display formed on the image G_{PA} for passenger seat was operated in Step S41, whether the passenger seat flag f_{PA} is 1 or not is judged (Step S60). When it is judged that the passenger seat flag f_{PA} is 1, the priority image setting switches 41_{DR} and 41_{PA}, and the cancel switches 42_{DR} and 42_{PA} are erased from the screen (Step S61), the image G_{PA} for passenger seat of the two images is erased and the image G_{DR} for driver's seat is displayed in the full-screen display mode (Step S62), and then, the processing operation goes to Step S57.

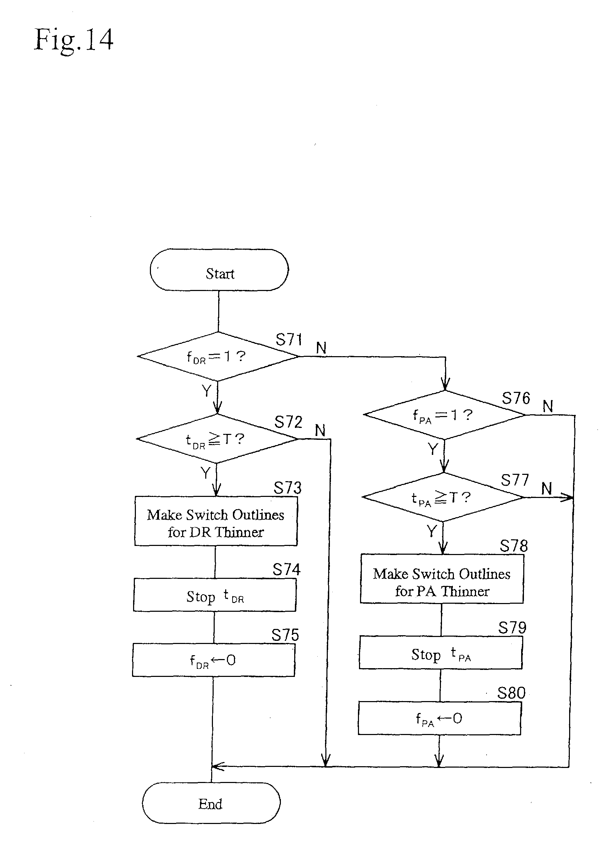

A processing operation [1-3] performed by the control unit 100 in the AV navigation system wherein the display device according to the first embodiment is adopted is described below with a flowchart shown in Fig. 14. Here, this processing operation [1-3] is performed at every prescribed interval in the separate display mode (i.e. when the separate display flag f_{SE} is 1). Here, as described above, when the separate display is standard, as a matter of course, the separate display flag f_{SE} is not required, and therefore, it is not included in starting conditions that the separate display flag f_{SE} is 1.

Whether the driver's seat flag f_{DR} is 1 or not is judged (Step S71). When it is judged that the driver's seat flag f_{DR} is 1, whether the timer t_{DR} has counted to a predetermined time T (e.g. 10 sec.) or more is judged (Step S72). When it is judged that the timer t_{DR} has counted to the predetermined time T or more (i.e. 10 sec. has elapsed since the last operation was conducted), the outlines of the operating switches 43_{DR}-49_{DR} formed on the image G_{DR} for driver's seat are made thinner (Step S73), the timer t_{DR} is brought to a stop (Step S74), and the driver's seat flag f_{DR} is returned to 0 (Step S75). On the other hand, when it is judged that the timer t_{DR} has counted to less than the predetermined time T, the processing operation [1-3] is concluded at once.

When it is judged that the driver's seat flag f_{DR} is not 1 in Step S71, whether the passenger seat flag f_{PA} is 1 or not is judged (Step S76). When it is judged that the passenger seat flag f_{PA} is 1, whether the timer t_{PA} has counted to the predetermined time T or more is judged (Step S77). When it is judged that the timer t_{PA} has counted to the predetermined time T or more (i.e. 10 sec. has elapsed since the last operation was conducted), the outlines of the operating switches 43_{PA}-49_{PA} formed on the image G_{PA} for passenger seat are made thinner (Step S78), the timer t_{PA} is brought to a stop (Step S79), and the passenger seat flag f_{PA} is returned to 0 (Step S80). On the other hand, when it is judged that the timer t_{PA} has counted to less than the predetermined time T or that the passenger seat flag f_{PA} is not 1, the processing operation [1-3] is concluded at once.

By using the AV navigation system wherein the display device according to the first embodiment is adopted, when an operation to the operating switch arranged in such a manner that the operation area for the image G_{DR} for driver's seat on the display screen and the operation area for the image G_{PA} for passenger seat on the display screen overlap each other (e.g. the operating switches 43_{DR}-48_{DR} and 43_{PA}-48_{PA}, arranged within the same areas E₇-E₁₂ in Figs. 11 and 12) is conducted, operation control according to the operation on a priority image selected from the image G_{DR} for driver's seat and the image G_{PA} for passenger seat is conducted. That is, operation control on an image other than the priority image is not conducted.

For example, when an operation to an operating switch arranged in such a manner that the operation area for the image G_{DR} for driver's seat on the display screen and the operation area for the image G_{PA} for passenger seat on the display screen overlap each other is conducted in a case where the image G_{PA} for passenger seat has been set to a priority image, only operations to the image G_{PA} for passenger seat are valid, and operations to the image G_{DR} for driver's seat are invalid. As a result, the user can realize desired operation control by properly setting or switching a priority image or correctly recognizing which image has been set to a priority image.

Thus, even when an operation to an operating switch arranged in such a manner that the operation area for the image G_{DR} for driver's seat on the display screen and the operation area for the image G_{PA} for passenger seat on the display screen overlap each other is conducted, operation control desired by the user can be realized. In other words, since operating switches having different functions can be arranged within the same areas E₇-E₁₂ like the operating switches 43_{DR}-48_{DR} and 43_{PA}-48_{PA} shown in Figs. 11 and 12, the display screen can be more effectively utilized.

As for the display device according to the first embodiment, a case where the priority image setting switch 41_{DR} is arranged in the area E₁ and the priority image setting switch 41_{PA} is arranged in the area E₄ which does not overlap the area E₁ was described, and a case where the cancel switch 42_{DR} is arranged in the area E₂ and the cancel switch 42_{PA} is arranged in the area E₅ which does not overlap the area E₂ was described. But this is not only the arrangement of these switches. In another embodiment, for example, a priority image setting switch 41_{PA} may be arranged in an area E₁ in which a priority image setting switch 41_{DR} is arranged, or a cancel switch 42_{PA} may be arranged in an area E₂ in which a cancel switch 42_{DR} is arranged.

An AV navigation system wherein a display device according to a second embodiment is adopted is described below. Here, since the construction of said AV navigation system is similar to that of the AV navigation system shown in Fig. 5 except the control unit 100, a control unit is differently marked and the other components are not described below.

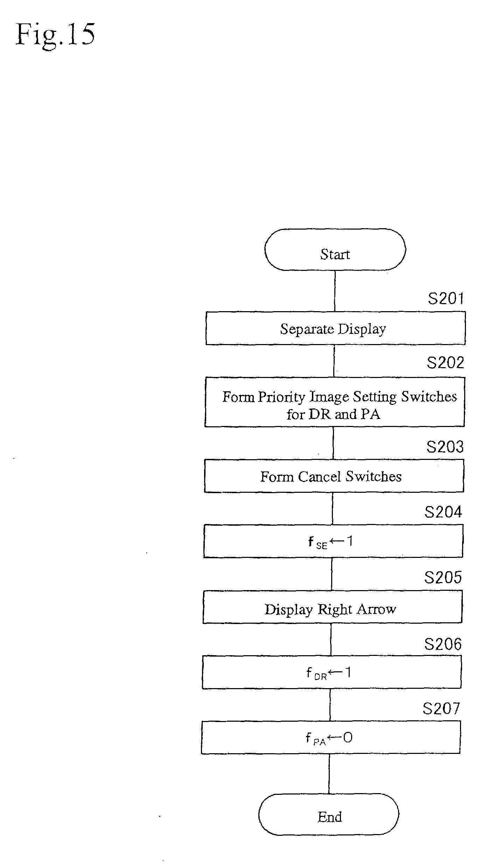

A processing operation [2-1] performed by the control unit 100A in the AV navigation system wherein the display device according to the second embodiment is adopted is described below with a flowchart shown in Fig. 15. Here, this processing operation [2-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on a display unit 4, an operating unit 15, a remote control 123 or the like.

Here, in cases where the separate display is standard (i.e. the separate display starts after turning-on of the AV navigation system), the user's instruction for separate display is not required. And therefore, the processing operation [2-1] described below is not needed and a separate display flag f_{SE} for showing that the separate display has been conducted is not required.

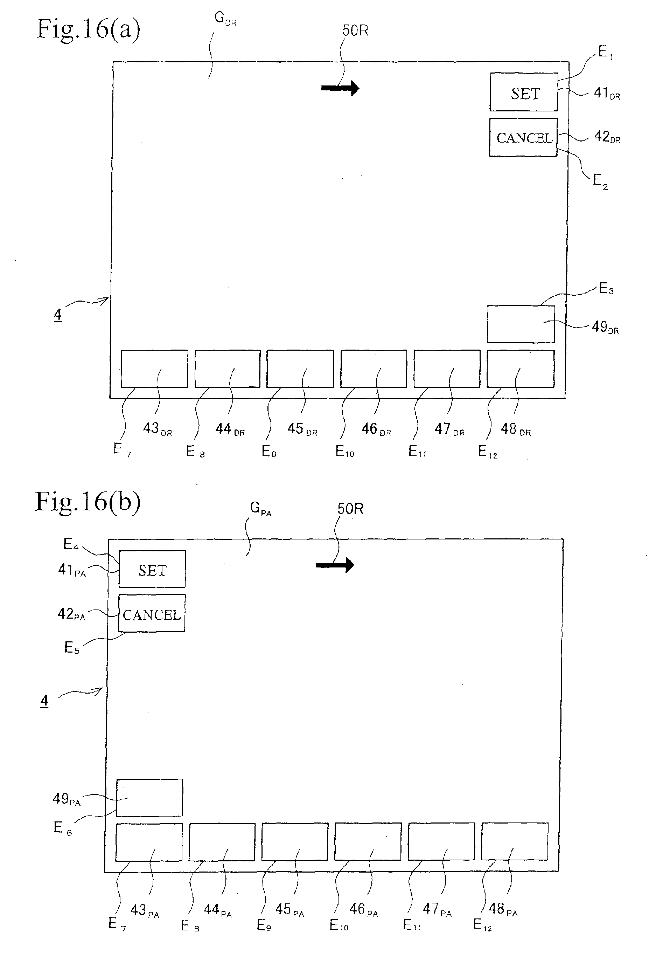

When an instruction for separate display is provided by the user, based on prescribed conditions, as shown in Fig. 15, one of two images is displayed as an image G_{DR} for driver's seat and the rest is displayed as an image G_{PA} for passenger seat (Step S201). A priority image setting switch 41_{DR} for setting the image G_{DR} for driver's seat to a priority image is formed on the upper right portion of the image G_{DR} for driver's seat, while a priority image setting switch 41_{PA} for setting the image G_{PA} for passenger seat to a priority image is formed on the upper left portion of the image G_{PA} for passenger seat (Step S202). Fig. 16(a) is a diagram showing an example of the image G_{DR} for driver's seat, and Fig. 16(b) is a diagram showing an example of the image G_{PA} for passenger seat.

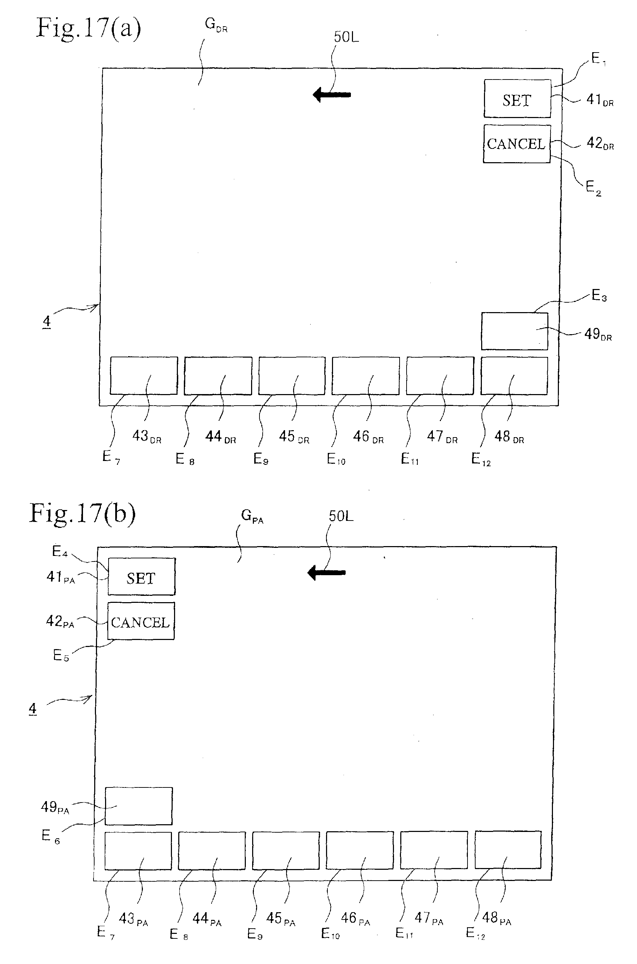

Cancel switches 42_{DR} and 42_{PA} for canceling this separate display are formed on the image G_{DR} for driver's seat and the image G_{PA} for passenger seat, respectively (Step S203). Thereafter, the separate display flag f_{SE} for showing that the separate display has been conducted is turned to 1 (Step S204). Then, an arrow 50R pointing the right (i.e. driver's seat side) is displayed (Step S205), a driver's seat flag f_{DR} is set to be 1 and a passenger seat flag f_{PA} is set to be 0 (Steps S206 and S207). Here, in Fig. 16, the right-pointing arrow 50R is displayed, which shows that the image G_{DR} for driver's seat has been set to a priority image. As a result, the user can easily recognize that operations to the image G_{DR} for driver's seat can be conducted. When the image G_{PA} for passenger seat has been set to a priority image, an arrow 50L pointing the left (i.e. passenger seat side) is displayed as shown in Fig. 17.

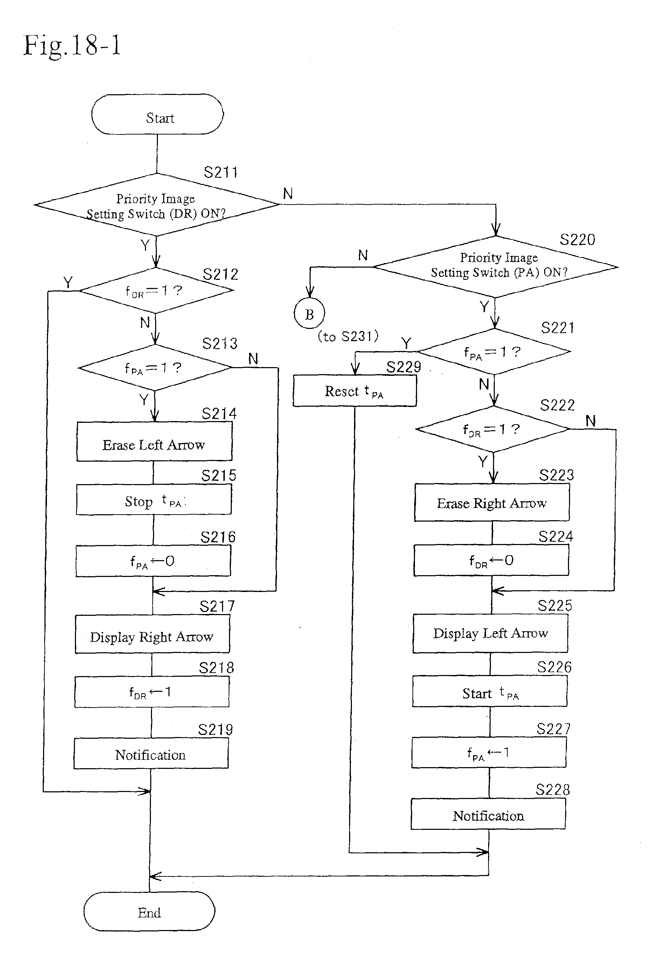

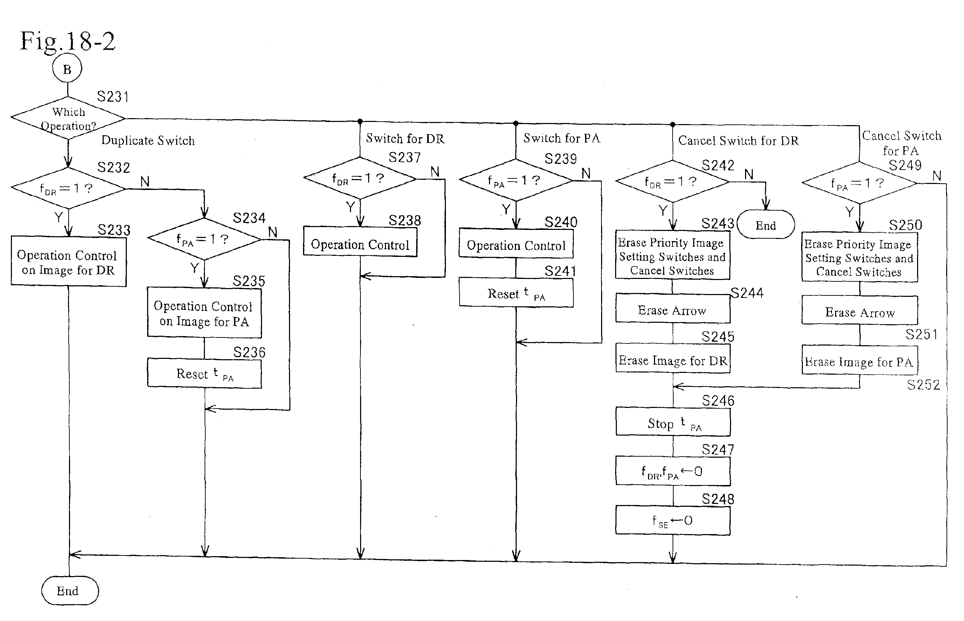

A processing operation [2-2] performed by the control unit 100A in the AV navigation system wherein the display device according to the second embodiment is adopted is described below with flowcharts shown in Figs. 18-1 and 18-2. Here, this processing operation [2-2] is performed in cases where the user operated the priority image setting switch 41_{DR} or 41_{PA}, the cancel switch 42_{DR} or 42_{PA}, the operating switches 43_{DR}-49_{DR} or 43_{PA}-49_{PA} formed on the display unit 4, operating switches 15a-15h constituting the operating unit 15 or the like. Here, as described above, when the separate display is standard, as a matter of course, the separate display flag f_{SE} is not required, and therefore, it is not included in starting conditions that the separate display flag f_{SE} is 1.

Whether the priority image setting switch 41_{DR} for setting the image G_{DR} for driver's seat to a priority image was operated or not is judged (Step S211). When it is judged that the priority image setting switch 41_{DR} was operated, whether the driver's seat flag f_{DR} showing that the image G_{DR} for driver's seat has been set to a priority image is 1 or not is judged (Step S212).

When it is judged that the driver's seat flag f_{DR} is not 1 (i.e. the image G_{DR} for driver's seat has not been set to a priority image), whether the passenger seat flag f_{PA} showing that the image G_{PA} for passenger seat has been set to a priority image is 1 or not is judged (Step S213). When it is judged that the passenger seat flag f_{PA} is 1 (i.e. the image G_{PA} for passenger seat has been set to a priority image), the left-pointing arrow 50L is erased from the screen (Step S214), a timer t_{PA} for measuring a time during which no operation to the image G_{PA} for passenger seat is conducted is brought to a stop (Step S215), the passenger seat flag f_{PA} is returned to 0 (Step S216), and then, the processing operation goes to Step S217. On the other hand, when it is judged that the passenger seat flag f_{PA} is not 1 in Step S213, Steps S214-S216 are bypassed and the processing operation directly goes to Step S217.

The right-pointing arrow 50R is displayed (Step S217), the driver's seat flag f_{DR} is set to be 1 (Step S218), and then, the user is notified that the image G_{DR} for driver's seat was set to a priority image (Step S219). When it is judged that the driver's seat flag f_{DR} is 1 (i.e. the image G_{DR} for driver's seat has been already set to a priority image) in Step S212, the processing operation [2-2] is concluded at once. Here, as a method for notification, a method of outputting by voice through speakers 17 and a method of displaying a notification picture are exemplified, and the display of the above-described arrows may work as a notification.

On the other hand, when it is judged that the priority image setting switch 41_{DR} has not been operated in Step 5211, whether the priority image setting switch 41_{PA} for setting the image G_{PA} for passenger seat to a priority image was operated or not is judged (Step S220). When it is judged that the priority image setting switch 41_{PA} was operated, whether the passenger seat flag f_{PA} is 1 or not is judged (Step 5221).

When it is judged that the passenger seat flag f_{PA} is not 1 (i.e. the image G_{PA} for passenger seat has not been set to a priority image), whether the driver's seat flag f_{DR} is 1 or not is judged (Step 5222). When it is judged that the driver's seat flag f_{DR} is 1 (i.e. the image G_{DR} for driver's seat has been set to a priority image), the right-pointing arrow 50R is erased from the screen (Step S223), the driver's seat flag f_{DR} is returned to 0 (Step S224), and then, the processing operation goes to Step S225. On the other hand, when it is judged that the driver's seat flag f_{DR} is not 1 in Step S222, Steps S223 and S224 are bypassed and the processing operation directly goes to Step 5225.

The left-pointing arrow 50L is displayed (Step 5225), the timer t_{PA} is turned to 0 and started up (Step S226), the passenger seat flag f_{PA} is set to be 1 (Step S227), and then, the user is notified that the image G_{PA} for passenger seat was set to a priority image (Step S228). When it is judged that the passenger seat flag f_{PA} is 1 (i.e. the image G_{PA} for passenger seat has been already set to a priority image) in Step 5221, the timer t_{PA} is returned to 0 (Step S229) and the processing operation [2-2] is concluded at once. Here, as a method for notification, a method of outputting by voice through the speakers 17 and a method of displaying a notification picture are exemplified, and the display of the above-described arrows may work as a notification.

On the other hand, when it is judged that the priority image setting switch 41_{PA} has not been operated (i.e. neither the priority image setting switch 41_{DR} nor 41_{PA} has been operated) in Step S220, the processing operation goes to Step S231 (Fig. 18-2), wherein which operation other than operations to the priority image setting switches 41_{DR} and 41_{PA} was conducted is judged.

When it is judged that an operating switch arranged in such a manner that the operation area for the image G_{DR} for driver's seat on the display screen and the operation area for the image G_{PA} for passenger seat on the display screen overlap each other (an overlapping switch (e.g. the operating switches 43_{DR}-48_{DR} and 43_{PA}-48_{PA})) was operated, whether the driver's seat flag f_{DR} is 1 or not is judged (Step S232). When it is judged that the driver's seat flag f_{DR} is 1 (i.e. the image G_{DR} for driver's seat has been set to a priority image), operation control on the image G_{DR} for driver's seat according to the operation is conducted (Step S233).

On the other hand, when it is judged that the driver's seat flag f_{DR} is not 1, whether the passenger seat flag f_{PA} is 1 or not is judged (Step S234). When it is judged that the passenger seat flag f_{PA} is 1 (i.e. the image G_{PA} for passenger seat has been set to a priority image), operation control on the image G_{PA} for passenger seat according to the operation is conducted (Step S235), and then, the timer t_{PA} is returned to 0 (Step S236). When it is judged that the passenger seat flag f_{PA} is not 1, the operation is regarded as a wrong operation and the processing operation [2-2] is concluded at once.

When it is judged that an operating switch which receives only operation inputs to the image G_{DR} for driver's seat (e.g. the operating switch 49_{DR}, excluding the priority image setting switch 41_{DR} and the cancel switch 42_{DR}) was operated in Step S231, whether the driver's seat flag f_{DR} is 1 or not is judged (Step S237). When it is judged that the driver's seat flag f_{DR} is 1 (i.e. the image G_{DR} for driver's seat has been set to a priority image), operation control according to the operation is conducted (Step S238). On the other hand, when it is judged that the driver's seat flag f_{DR} is not 1, the operation is regarded as a wrong operation and the processing operation [2-2] is concluded at once.

When it is judged that an operating switch which receives only operation inputs to the image G_{PA} for passenger seat (e.g. the operating switch 49_{PA}, excluding the priority image setting switch 41_{PA} and the cancel switch 42_{PA}) was operated in Step S231, whether the passenger seat flag f_{PA} is 1 or not is judged (Step S239). When it is judged that the passenger seat flag f_{PA} is 1 (i.e. the image G_{PA} for passenger seat has been set to a priority image), operation control according to the operation is conducted (Step S240), and then, the timer t_{PA} is returned to 0 (Step S241). On the other hand, when it is judged that the passenger seat flag f_{PA} is not 1, the operation is regarded as a wrong operation and the processing operation [2-2] is concluded at once.

When it is judged that the cancel switch 42_{DR} for canceling the separate display formed on the image G_{DR} for driver's seat was operated in Step S231, whether the driver's seat flag f_{DR} is 1 or not is judged (Step S242). When it is judged that the driver's seat flag f_{DR} is 1, the priority image setting switches 41_{DR} and 41_{PA}, and the cancel switches 42_{DR} and 42_{PA} are erased from the screen (Step S243), the arrow 50R or the arrow 50L is erased from the screen (Step S244), the image G_{DR} for driver's seat of the two images is erased and the image G_{PA} for passenger seat is displayed in a full-screen display mode (Step S245). The timer t_{PA} is brought to a stop (Step S246), the driver's seat flag f_{DR} and the passenger seat flag f_{PA} are returned to 0 (Step S247), and then, the separate display flag f_{SE} is returned to 0 (Step S248). On the other hand, when it is judged that the driver's seat flag f_{DR} is not 1, the operation is regarded as a wrong operation and the processing operation [2-2] is concluded at once.

When it is judged that the cancel switch 42_{PA} for canceling the separate display formed on the image G_{PA} for passenger seat was operated in Step S231, whether the passenger seat flag f_{PA} is 1 or not is judged (Step S249). When it is judged that the passenger seat flag f_{PA} is 1, the priority image setting switches 41_{DR} and 41_{PA}, and the cancel switches 42_{DR} and 42_{PA} are erased from the screen (Step S250), the arrow 50R or the arrow 50L is erased from the screen (Step S251), the image G_{PA} for passenger seat of the two images is erased and the image G_{DR} for driver's seat is displayed in the full-screen display mode (Step S252). Then, the processing operation goes to Step S246.

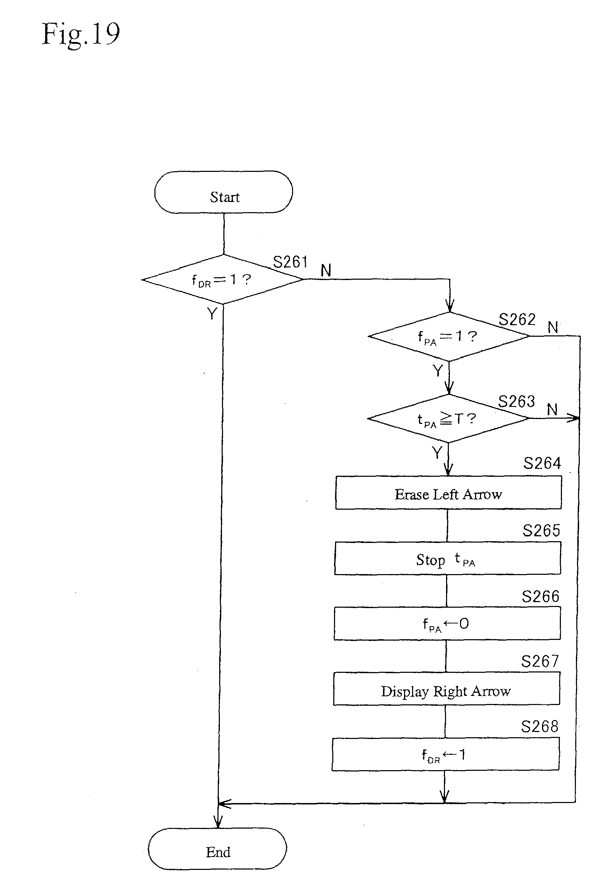

A processing operation [2-3] performed by the control unit 100A in the AV navigation system wherein the display device according to the second embodiment is adopted is described below with a flowchart shown in Fig. 19. Here, this processing operation [2-3] is performed at every prescribed interval in the separate display mode (i.e. when the separate display flag f_{SE} is 1).

Whether the driver's seat flag f_{DR} is 1 or not is judged (Step S261). When it is judged that the driver's seat flag f_{DR} is 1, the processing operation [2-3] is concluded at once. On the other hand, when it is judged that the driver's seat flag f_{DR} is not 1, whether the passenger seat flag f_{PA} is 1 or not is judged (Step S262). When it is judged that the passenger seat flag f_{PA} is 1, whether the timer t_{PA} has counted to a predetermined time T or more is judged (Step S263). When it is judged that the timer t_{PA} has counted to the predetermined time T or more (i.e. 6 sec. has elapsed since the last operation was conducted), the left-pointing arrow 50L is erased from the screen (Step S264), the timer t_{PA} is brought to a stop (Step S265), and the passenger seat flag f_{PA} is returned to 0 (Step S266).

Then, the right-pointing arrow 50R is displayed (Step S267), and the driver's seat flag f_{DR} is turned to 1 (Step S268). On the other hand, when it is judged that the timer t_{PA} has counted to less than the predetermined time T in Step S263 or it is judged that the passenger seat flag f_{PA} is not 1 in Step S262, the processing operation [2-3] is concluded at once.

By using the AV navigation system wherein the display device according to the second embodiment is adopted, either of the image G_{DR} for driver's seat and the image G_{PA} for passenger seat can be inevitably set to a priority image during separate display. Here, the image G_{DR} for driver's seat is set to a priority image under normal conditions, but in another embodiment, not an image G_{DR} for driver's seat but an image G_{PA} for passenger seat may be set to a priority image under normal conditions.

An AV navigation system wherein a display device according to a third embodiment is adopted is described below. Here, since the construction of said AV navigation system is similar to that of the AV navigation system shown in Fig. 5 except the control unit 100, a control unit is differently marked and the other components are not described below.

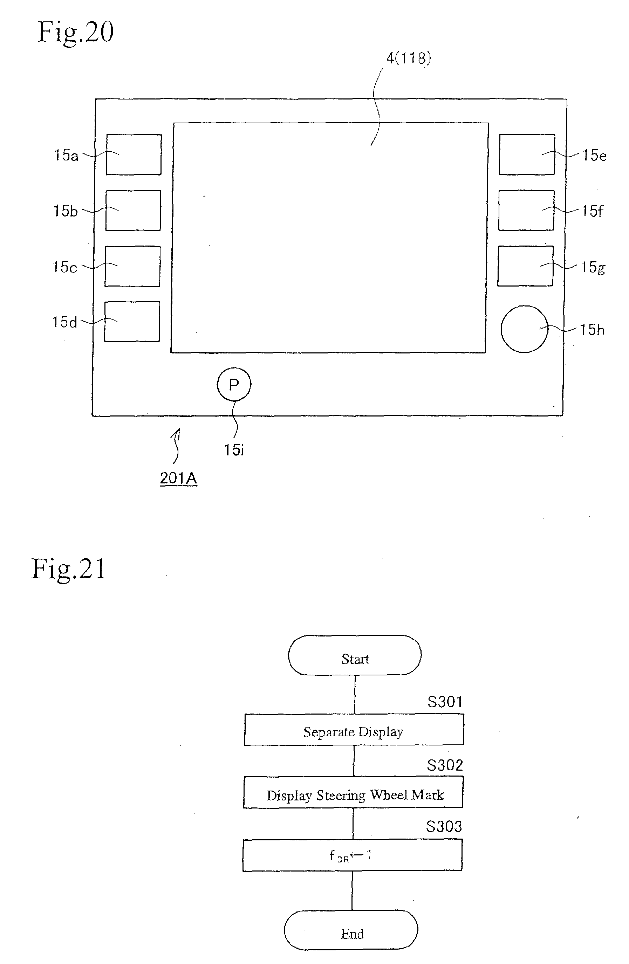

Fig. 20 is an external front view of the display device according to the third embodiment. Reference numeral 201A in Fig. 20 represents a display device, comprising a display unit 4 with a touch panel 118 formed on a surface thereof, and an operating unit 15A (operating switches 15a-15h and a selection switch 15i for setting an image G_{PA} for passenger seat to a priority image) arranged therearound.

A processing operation [3-1] performed by the control unit 100B in the AV navigation system wherein the display device according to the third embodiment is adopted is described below with a flowchart shown in Fig. 21. Here, this processing operation [3-1] is performed after power is provided to the AV navigation system, and a separate display mode is standard.

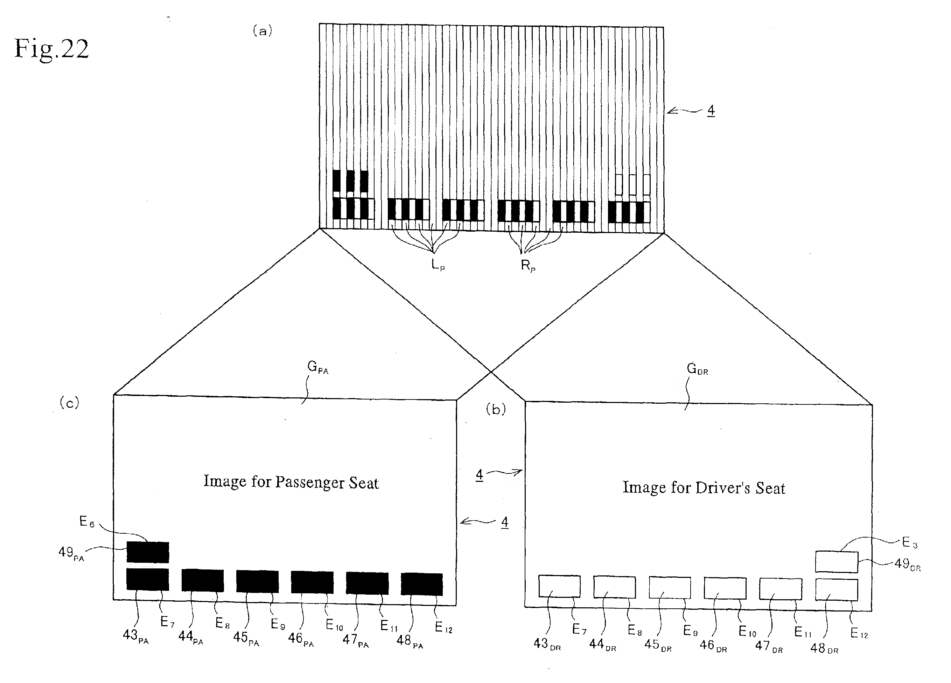

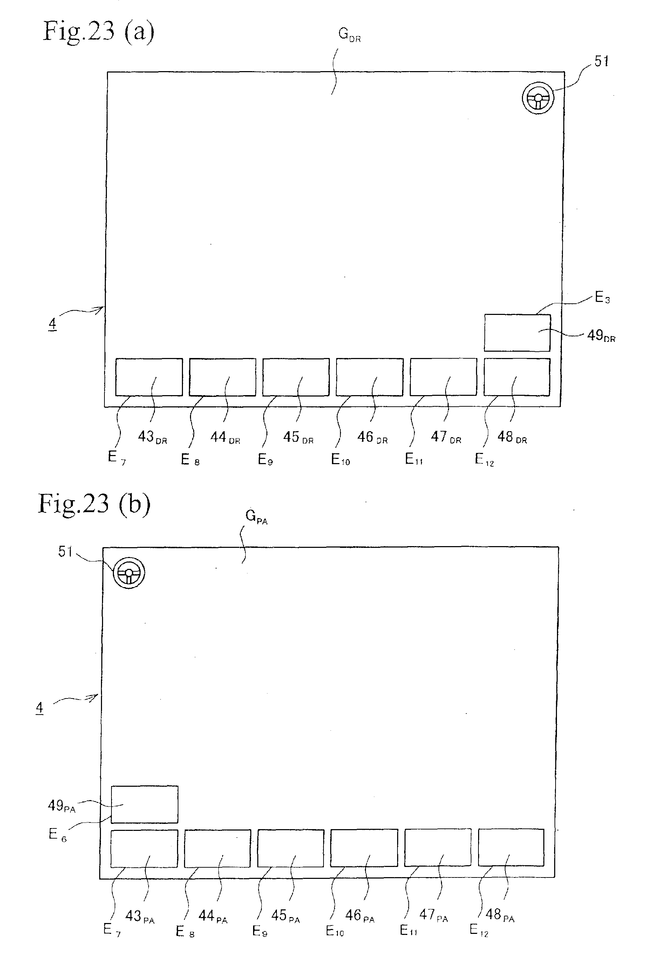

Based on prescribed conditions, as shown in Figs. 22 and 23, one of two images is displayed as an image G_{DR} for driver's seat and the rest is displayed as an image G_{PA} for passenger seat (Step S301). Fig. 22(a) is an illustration to describe pixels used for the image G_{DR} for driver's seat and pixels used for the image G_{PA} for passenger seat. Fig. 22(b) is a diagram showing an example of the image G_{DR} for driver's seat and Fig. 22(c) is a diagram showing an example of the image G_{PA} for passenger seat. As shown in Fig. 22(a), a half of the total number of lateral pixels, even-numbered lines (pixels R_{P} for the right) are used for the image G_{DR} for driver's seat and odd-numbered lines (pixels L_{P} for the left) are used for the image G_{PA} for passenger seat. Fig. 23(a) is an enlarged diagram showing an example of the image G_{DR} for driver's seat and Fig. 23(b) is an enlarged diagram showing an example of the image G_{PA} for passenger seat.

In order to indicate that the image G_{DR} for driver's seat has been set to a priority image, a steering wheel mark 51 which is an image of a driver's seat is displayed (Step S302), and a driver's seat flag f_{DR} is set to be 1 (Step S303). Here, in Fig. 23, by displaying the steering wheel mark 51, it is indicated that the image G_{DR} for driver's seat has been set to a priority image. Therefore, a user can easily acknowledge that operations to the image G_{DR} for driver's seat can be conducted.

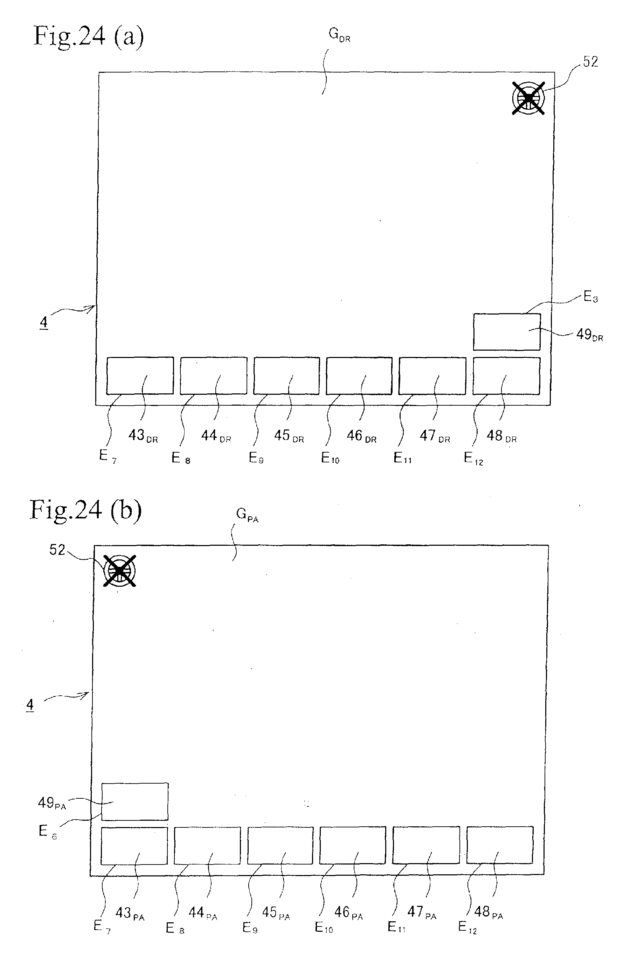

When the image G_{PA} for passenger seat has been set to a priority image (i.e. the image G_{DR} for driver's seat has not been set to a priority image), a prohibition mark 52 made by overlaying a mark '×' on the steering wheel mark 51 is displayed as shown in Fig. 24.

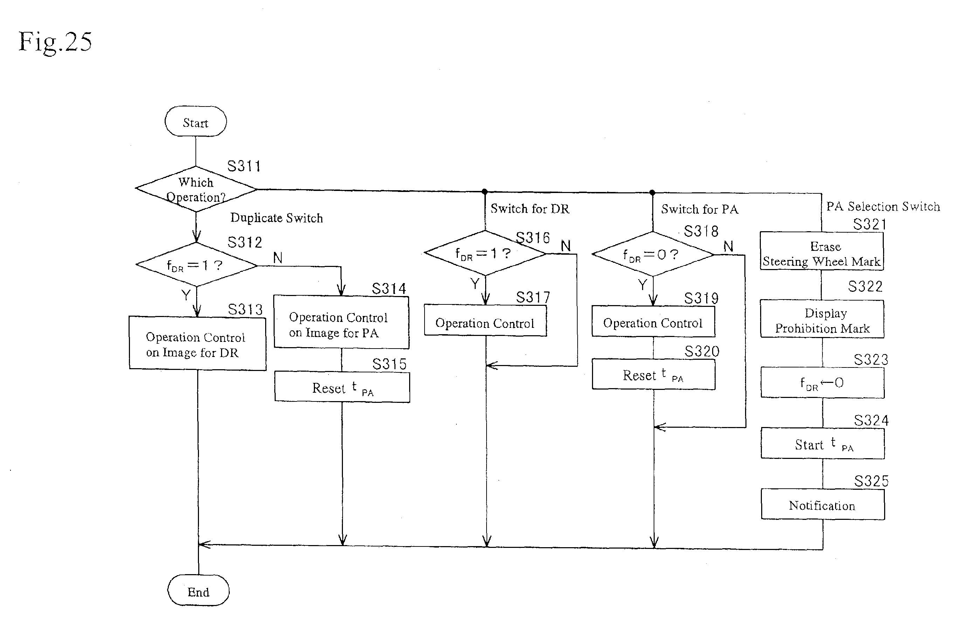

A processing operation [3-2] performed by the control unit 100B in the AV navigation system wherein the display device according to the third embodiment is adopted is described below with a flowchart shown in Fig. 25. Here, this processing operation [3-2] is performed at every prescribed interval. Which operation was conducted is judged (Step S311). When it is judged that an operating switch (an overlapping switch (e.g. operating switches 43_{DR}-48_{DR} and 43_{PA}-48_{PA})) arranged in such a manner that the operation area for the image G_{DR} for driver's seat on the display screen and the operation area for the image G_{PA} for passenger seat on the display screen overlap each other was operated, whether a driver's seat flag f_{DR} is 1 or not is judged (Step S312).

When it is judged that the driver's seat flag f_{DR} is 1 (i.e. the image G_{DR} for driver's seat has been set to a priority image), operation control on the image G_{DR} for driver's seat according to the operation is conducted (Step S313). On the other hand, when it is judged that the driver's seat flag f_{DR} is not 1 (i.e. the image G_{PA} for passenger seat has been set to a priority image), operation control on the image G_{PA} for passenger seat according to the operation is conducted (Step S314). Then, a timer t_{PA} for measuring a time during which no operation to the image G_{PA} for passenger seat is conducted (i.e. a time elapsed after the last operation) is returned to 0 (Step S315).

When it is judged that an operating switch (e.g. the operating switch 49_{DR}) which receives only operation inputs to the image G_{DR} for driver's seat was operated in Step 5311, whether the driver's seat flag f_{DR} is 1 or not is judged (Step S316). When it is judged that the driver's seat flag f_{DR} is 1 (i.e. the image G_{DR} for driver's seat has been set to a priority image), operation control according to the operation is conducted (Step S317). On the other hand, when it is judged that the driver's seat flag f_{DR} is not 1, the operation is regarded as a wrong operation and the processing operation [3-2] is concluded at once.

When it is judged that an operating switch (e.g. the operating switch 49_{PA}) which receives only operation inputs to the image G_{PA} for passenger seat was operated in Step S311, whether the driver's seat flag f_{DR} is 0 or not is judged (Step S318). When it is judged that the driver's seat flag f_{DR} is 0 (i.e. the image G_{PA} for passenger seat has been set to a priority image), operation control according to the operation is conducted (Step S319), and then, the timer t_{PA} is returned to 0 (Step S320). On the other hand, when it is judged that the driver's seat flag f_{DR} is not 0, the operation is regarded as a wrong operation and the processing operation [3-2] is concluded at once.

When it is judged that the selection switch 51i for setting the image G_{PA} for passenger seat to a priority image arranged around the display unit 4 was operated in Step S311, in order to indicate that the image G_{PA} for passenger seat has been set to a priority image, the steering wheel mark 51 which is an image of the driver's seat is erased from the screen (Step 5321). And in place of that, the prohibition mark 52 is displayed (Step S322) and the driver's seat flag f_{DR} is turned to 0 (Step S323).

Then, the timer t_{PA} is turned to 0 and started up (Step S324), and the user is notified that the image G_{PA} for passenger seat was set to a priority image (Step S325). Here, as a method for notification, a method of outputting by voice through speakers 17 and a method of displaying a notification picture are exemplified, and the display of the above-described steering wheel mark 51 and prohibition mark 52 may work as a notification.

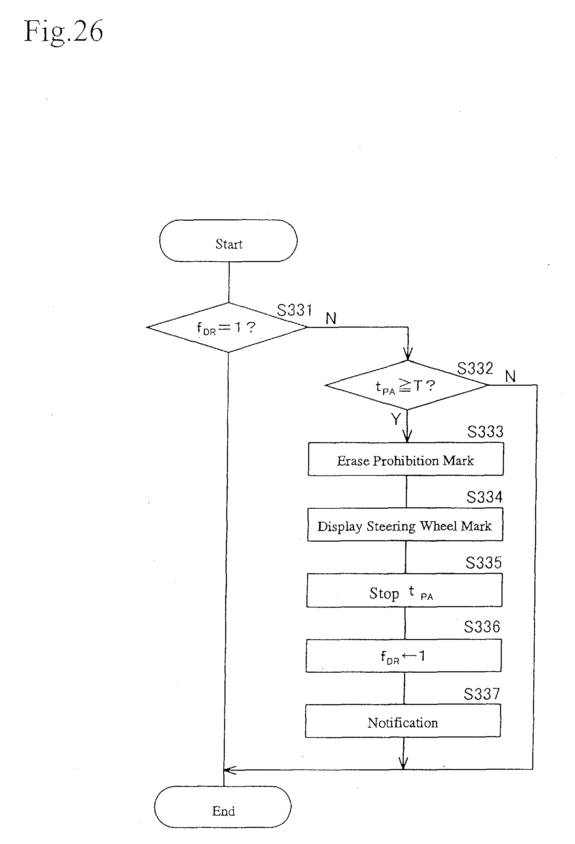

A processing operation [3-3] performed by the control unit 100B in the AV navigation system wherein the display device according to the third embodiment is adopted is described below with a flowchart shown in Fig. 26. Here, this processing operation [3-3] is performed at every prescribed interval. Whether the driver's seat flag f_{DR} is 1 or not is judged (Step S331). When it is judged that the driver's seat flag f_{DR} is 1, the processing operation [3-3] is concluded at once.

On the other hand, when it is judged that the driver's seat flag f_{DR} is not 1 (i.e. the image G_{PA} for passenger seat has been set to a priority image), whether the timer t_{PA} has counted to a prescribed time T or more is judged (Step S332). When it is judged that the timer t_{PA} has counted to the prescribed time T or more (i.e. 6 sec. has elapsed since the last operation was conducted), the prohibition mark 52 is erased from the screen (Step S333) and the steering wheel mark 51 is displayed (Step S334).

Then, the timer t_{PA} is brought to a stop (Step S335), the driver's seat flag f_{DR} is turned to 1 (Step S336), and the user is notified that the image G_{DR} for driver's seat was set to a priority image (Step S337). Here, as a method for notification, a method of outputting by voice through the speakers 17 and a method of displaying a notification picture are exemplified, and the display of the above-described steering wheel mark 51 and prohibition mark 52 may work as a notification.

By using the AV navigation system wherein the display device according to the third embodiment is adopted, either of the image G_{DR} for driver's seat and the image G_{PA} for passenger seat can be inevitably set to a priority image. Here, the image G_{DR} for driver's seat is set to a priority image under normal conditions, but in another embodiment, not an image G_{DR} for driver's seat but an image G_{PA} for passenger seat may be set to a priority image under normal conditions.

An AV navigation system wherein a display device according to a fourth embodiment is adopted is described below. Here, since the construction of said AV navigation system is similar to that of the AV navigation system shown in Fig. 5 except the control unit 100, a control unit is differently marked and the other components are not described below.

The control unit 100C performs a processing operation [4-1] similar to the processing operation [1-1] (see Fig. 10) performed by the control unit 100. The control unit 100C controls pixel display as shown in Fig. 11(a), so as to display an image G_{DR} for driver's seat as shown in Figs. 11(b) and 12(a), and display an image G_{PA} for passenger seat as shown in Figs. 11(c) and 12(b).

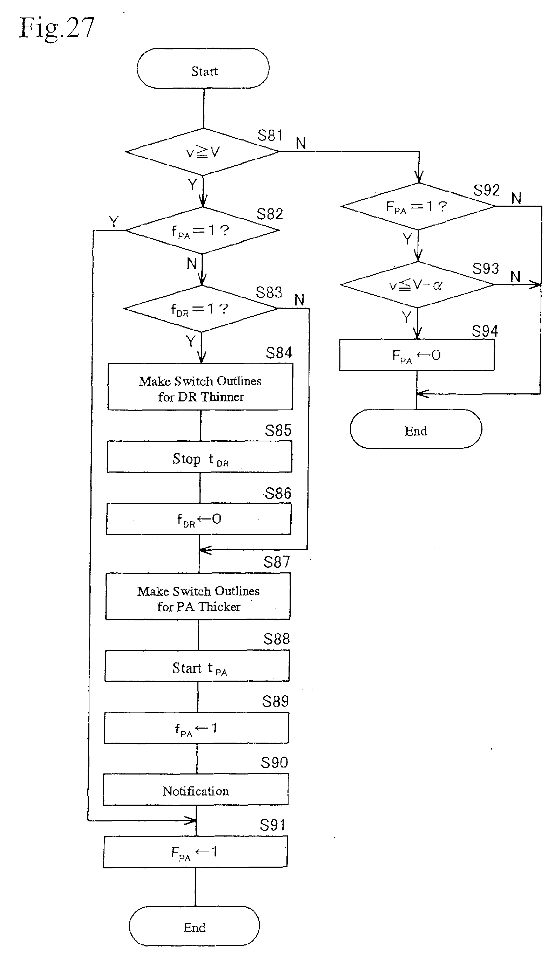

A processing operation [4-2] performed by the control unit 100C in the AV navigation system wherein the display device according to the fourth embodiment is adopted is described below with a flowchart shown in Fig. 27. Here, this processing operation [4-2] is performed at every prescribed interval in a separate display mode (i.e. when a separate display flag f_{SE} is 1). Here, as described above, when the separate display is standard, as a matter of course, the separate display flag f_{SE} is not required, and therefore, it is not included in starting conditions that the separate display flag f_{SE} is 1.

Whether a speed v is a prescribed speed V (e.g. 60 km/h) or more is judged based on speed information obtained from a navigation unit 106 (Step S81). When it is judged that the speed v is the prescribed speed V or more (i.e. the vehicle is running at a high speed and a setting condition for setting the image G_{PA} for passenger seat to a priority image has been satisfied), whether a passenger seat flag f_{PA} is 1 or not is judged (Step S82). Here, the speed information may be directly obtained from a speed sensor.

When it is judged that the passenger seat flag f_{PA} is not 1 (i.e. the image G_{PA} for passenger seat has not been set to a priority image), the processing operation goes to Step S83, wherein processing for setting the image G_{PA} for passenger seat to a priority image is conducted. Here, since processing operations in Steps S83-S90 are similar to those in Steps S24-S31 shown in Fig. 13-1, they are not described below.

After the processing in Step 90, a setting condition satisfaction flag F_{PA} for showing that the setting condition for setting the image G_{PA} for passenger seat to a priority image has been satisfied is turned to 1 (Step S91). When it is judged that the passenger seat flag f_{PA} is 1 (i.e. the image G_{PA} for passenger seat has been already set to a priority image) in Step 82, the processing operation goes to Step S91, wherein the setting condition satisfaction flag F_{PA} is turned to 1.

When it is judged that the speed v is less than the prescribed speed V in Step S81, whether the setting condition satisfaction flag F_{PA} is 1 or not is judged (Step S92). When it is judged that the setting condition satisfaction flag F_{PA} is 1, whether the speed v is a prescribed speed (V- α) or less is judged based on speed information (Step S93). The numerical value of α is a positive number, which plays a role of a buffer area.

When it is judged that the speed v is the prescribed speed (V- α) or less (i.e. the setting condition for setting the image G_{PA} for passenger seat to a priority image became unsatisfied), the setting condition satisfaction flag F_{PA} is returned to 0 (Step S94). On the other hand, when it is judged that the speed v is more than the prescribed speed (V- α), the processing operation [4-2] is concluded at once. In addition, when it is judged that the setting condition satisfaction flag F_{PA} is not 1 in Step S92, the processing operation [4-2] is concluded at once.

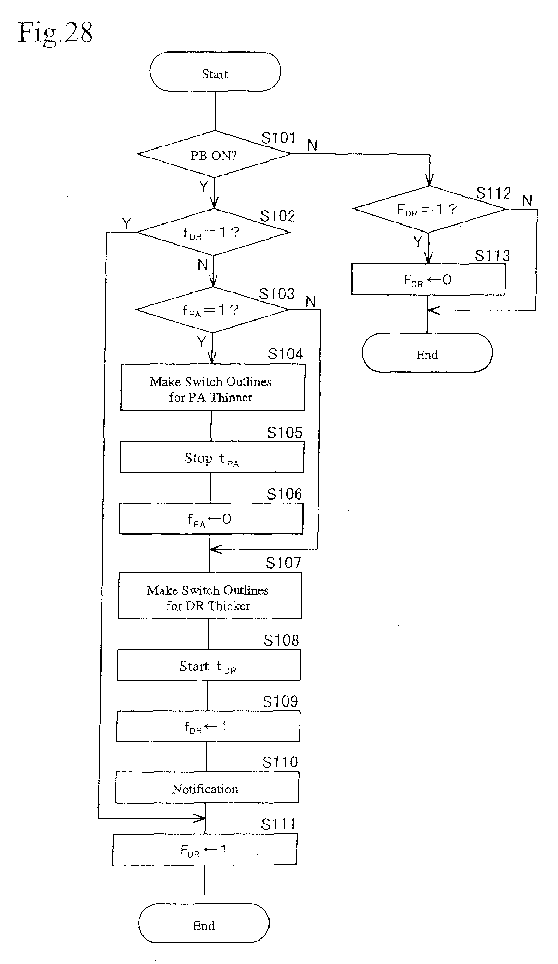

A processing operation [4-3] performed by the control unit 100C in the AV navigation system wherein the display device according to the fourth embodiment is adopted is described below with a flowchart shown in Fig. 28. Here, this processing operation [4-3] is performed at every prescribed interval in the separate display mode (i.e. when the separate display flag f_{SE} is 1).

Whether a parking brake is in the on position or not is judged based on parking brake ON/OFF information obtained from the navigation unit 106 (Step S101). When it is judged that the parking brake is in the on position (i.e. the vehicle is at a stop and a setting condition for setting the image G_{DR} for driver's seat to a priority image has been satisfied), whether a driver's seat flag f_{DR} is 1 or not is judged (Step S102). Here, the parking brake ON/OFF information may be directly obtained from a sensor which detects an operational state of the parking brake.

When it is judged that the driver's seat flag f_{DR} is not 1 (i.e. the image G_{DR} for driver's seat has not been set to a priority image), the processing operation goes to Step S 103, wherein processing for setting the image G_{DR} for driver's seat to a priority image is conducted. Here, since processing operations in Steps S103-S110 are similar to those in Steps S13-S20 shown in Fig. 13-1, they are not described below.

After the processing in Step S110, a setting condition satisfaction flag F_{DR} for showing that the setting condition for setting the image G_{DR} for driver's seat to a priority image has been satisfied is turned to 1 (Step S111). When it is judged that the driver's seat flag f_{DR} is 1 (i.e. the image G_{DR} for driver's seat has been already set to a priority image) in Step S102, the processing operation goes to Step S111, wherein the setting condition satisfaction flag F_{DR} is turned to 1.

When it is judged that the parking brake is not in the on position (i.e. the setting condition for setting the image G_{DR} for driver's seat to a priority image became unsatisfied) in Step S101, whether the setting condition satisfaction flag F_{DR} is 1 or not is judged (Step S 112). When it is judged that the setting condition satisfaction flag F_{DR} is 1, the setting condition satisfaction flag F_{DR} is returned to 0 (Step S 113). On the other hand, when it is judged that the setting condition satisfaction flag F_{DR} is not 1, the processing operation [4-3] is concluded at once.

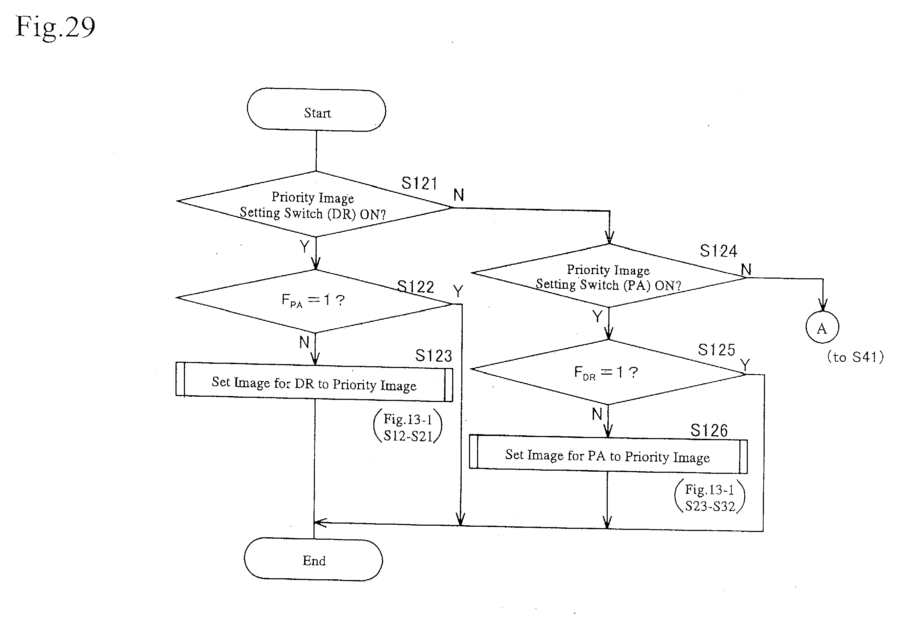

A processing operation [4-4] performed by the control unit 100C in the AV navigation system wherein the display device according to the fourth embodiment is adopted is described below with a flowchart shown in Fig. 29. Here, this processing operation [4-4] is performed in cases where the user operated a priority image setting switch 41_{DR} or 41_{PA}, a cancel switch 42_{DR} or 42_{PA}, or operating switches 43_{DR}-49_{DR} or 43_{PA}-49_{PA} formed on a display unit 4, operating switches 15a-15h constituting an operating unit 15 or the like.

Whether the priority image setting switch 41_{DR} for setting the image G_{DR} for driver's seat to a priority image was operated or not is judged (Step S121). When it is judged that the priority image setting switch 41_{DR} was operated, whether the setting condition satisfaction flag F_{PA} is 1 or not is judged (Step S122). When it is judged that the setting condition satisfaction flag F_{PA} is 1 (i.e. the setting condition for setting the image G_{PA} for passenger seat to a priority image has been satisfied), the operation of the priority image setting switch 41_{DR} is regarded as being invalid, and the processing operation [4-4] is concluded at once.

On the other hand, when it is judged that the setting condition satisfaction flag F_{PA} is not 1, the processing operation goes to Step S123, wherein processing for setting the image G_{DR} for driver's seat to a priority image is conducted. Here, since the processing operation in Step 123 is similar to the processing operations in Steps S12-S21 shown in Fig. 13-1, that is not described below.

When it is judged that the priority image setting switch 41_{DR} has not been operated in Step S121, whether the priority image setting switch 41_{PA} for setting the image G_{PA} for passenger seat to a priority image was operated or not is judged (Step S124). When it is judged that the priority image setting switch 41_{PA} was operated, whether the setting condition satisfaction flag F_{DR} is 1 or not is judged (Step S125). When it is judged that the setting condition satisfaction flag F_{DR} is 1 (i.e. the setting condition for setting the image G_{DR} for driver's seat to a priority image has been satisfied), the operation of the priority image setting switch 41_{PA} is regarded as being invalid, and the processing operation [4-4] is concluded at once.

On the other hand, when it is judged that the setting condition satisfaction flag F_{DR} is not 1, the processing operation goes to Step S126, wherein processing for setting the image G_{PA} for passenger seat to a priority image is conducted. Here, since the processing operation in Step 126 is similar to the processing operations in Steps S23-S32 shown in Fig. 13-1, that is not described below.

On the other hand, when it is judged that the priority image setting switch 41_{PA} has not been operated (i.e. neither the priority image setting switch 41_{DR} nor 41_{PA} has been operated) in Step S124, the processing operation goes to Step S41 (Fig. 13-2), wherein which operation other than operations to the priority image setting switches 41_{DR} and 41_{PA} was conducted is judged. Here, processing operations after Step S41 are not described below.

The control unit 100C performs a processing operation [4-5] similar to the processing operation [1-3] (see Fig. 14) performed by the control unit 100. Here, this processing operation [4-5] is performed at every prescribed interval when the setting condition satisfaction flags F_{DR} and F_{PA} are not 1 in the separate display mode (i.e. when the separate display flag f_{SE} is 1).

By using the AV navigation system wherein the display device according to the fourth embodiment is adopted, while a setting condition for setting either of the image G_{DR} for driver's seat and the image G_{PA} for passenger seat to a priority image has been satisfied, an appropriate image selected from both of the images is set to a priority image. Thus, for example, in cases where more attention to driving is required, by setting the image G_{PA} for passenger seat to a priority image in order to make a situation where the driver DR cannot operate, the safety of driving can be enhanced.

An AV navigation system wherein a display device according to a fifth embodiment is adopted is described below. Here, since the construction of said AV navigation system is similar to that of the AV navigation system shown in Fig. 5 except the control unit 100, a control unit is differently marked and the other components are not described below.

The control unit 100D performs processing operations [5-1]-[5-3] similar to the processing operations [1-1]-[1-3] (see Figs. 10, 13 and 14) performed by the control unit 100. The control unit 100D controls pixel display as shown in Fig. 11(a), so as to display an image G_{DR} for driver's seat as shown in Figs. 11(b) and 12(a) and display an image G_{PA} for passenger seat as shown in Figs. 11(c) and 12(b).

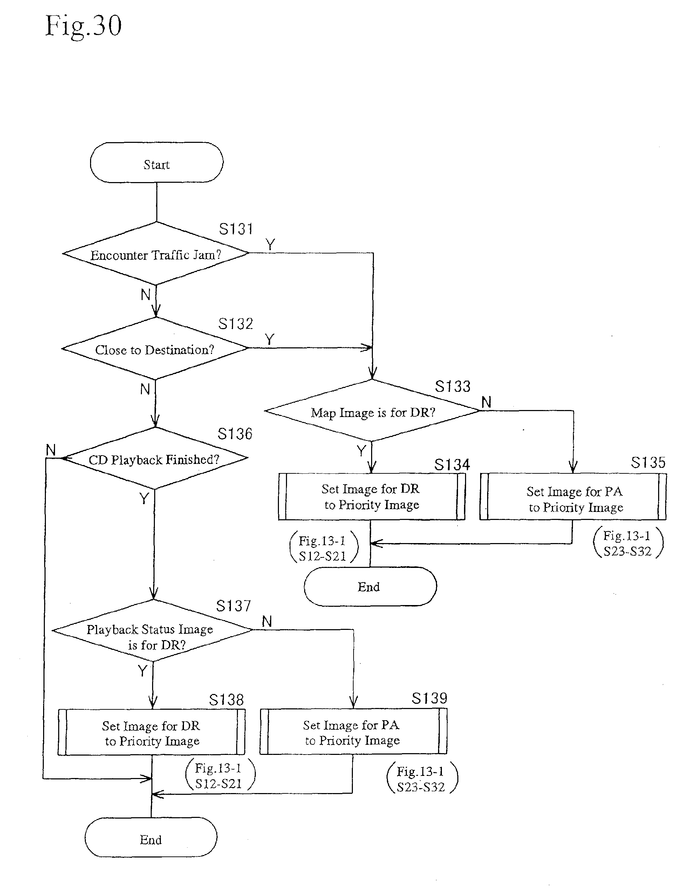

A processing operation [5-4] performed by the control unit 100D in the AV navigation system wherein the display device according to the fifth embodiment is adopted is described below with a flowchart shown in Fig. 30. Here, this processing operation [5-4] is performed at every prescribed interval in a separate display mode (i.e. when a separate display flag f_{SE} is 1). Here, as described above, when the separate display is standard, as a matter of course, the separate display flag f_{SE} is not required, and therefore, it is not included in starting conditions that the separate display flag f_{SE} is 1.

Whether traffic jam encounter information or destination approach information obtained from a navigation unit 106 was received or not is judged (Steps S131 and S 132). When it is judged that the traffic jam encounter information or destination approach information was received (i.e. a map image for guiding to a destination is important), whether a map image is an image G_{DR} for driver's seat or not is judged (Step S 133).

When it is judged that the map image is the image G_{DR} for driver's seat, the processing operation goes to Step S 134, wherein processing for setting the image G_{DR} for driver's seat to a priority image is conducted. Here, since the processing operation in Step S134 is similar to the processing operations in Steps S12-S21 shown in Fig. 13-1, that is not described below.

On the other hand, when it is judged that the map image is not the image G_{DR} for driver's seat (i.e. the map image is an image G_{PA} for passenger seat), the processing operation goes to Step S 135, wherein processing for setting the image G_{PA} for passenger seat to a priority image is conducted. Here, since the processing operation in Step S 135 is similar to the processing operations in Steps S23-S32 shown in Fig. 13-1, that is not described below.

When it is judged that neither the traffic jam encounter information nor the destination approach information was received in Steps S131 and S132, whether CD playback end information obtained from a CD/MD player 101 was received or not is judged (Step S136). When it is judged that the CD playback end information was received (i.e. a playback status image showing the CD playback status is important), whether a playback status image is the image G_{DR} for driver's seat or not is judged (Step S 137).

When it is judged that the playback status image is the image G_{DR} for driver's seat, the processing operation goes to Step S 138, wherein processing for setting the image G_{DR} for driver's seat to a priority image is conducted. On the other hand, when it is judged that the playback status image is not the image G_{DR} for driver's seat (i.e. the playback status image is the image G_{PA} for passenger seat), the processing operation goes to Step S 139, wherein processing for setting the image G_{PA} for passenger seat to a priority image is conducted. When it is judged that no CD playback end information has been received in Step S 136, the processing operation [5-4] is concluded at once.

By using the AV navigation system wherein the display device according to the fifth embodiment is adopted, in cases where an operation to an operating switch (e.g. operating switches arranged in the same areas E₇-E₁₂ like the operating switches 43_{DR}-48_{DR} and 43_{PA}-48_{PA} shown in Figs. 11 and 12) which can deal with both the map image from the navigation unit 106 and the playback status image by the CD/MD player 101 was conducted, operation control according to the operation on an important image (e.g. an image having a higher possibility of being given an operation) selected from the map image and the playback status image is conducted. That is, no operation control on an image which is not the important image is conducted.

For example, when an operation to an operating switch arranged in such a manner that the operation area for the image G_{DR} for driver's seat on the display screen and the operation area for the image G_{PA} for passenger seat on the display screen overlap each other was conducted while the playback status image displayed as the image G_{PA} for passenger seat has been set to the important image, only operations to the image G_{PA} for passenger seat are valid and operations to the image G_{DR} for driver's seat are invalid. As a result, operation control on an image which more requires operations by the user can be made valid.

In the display devices according to the first to fifth embodiments, by setting a priority image or an important image with information of intention to operate from the user or vehicle environment information (e.g. speed information, parking brake ON/OFF information, traffic jam encounter information and cruising road type information (general roads, expressways, etc.)) as a trigger, appropriate operation control desired by the user is realized. But in another embodiment, a priority image may be switched every prescribed period of time. For example, every the prescribed period of time, the priority image is switched from an image G_{DR} for driver's seat to an image G_{PA} for passenger seat, therefrom to the image G_{DR} for driver's seat and therefrom to the image G_{PA} for passenger seat in turn. Thus, simplification of the operation can be achieved. Moreover, since the processing is simplified, the load of processing can be reduced.

Here, as the prescribed period of time, the below-described options a-c are exemplified:
a) A period of time until a fixed time (e.g. 20 sec.) elapses
b) A period of time until a time of no operation exceeds a predetermined time (e.g. 10 sec.)
c) A period of time until switching of the priority image is instructed by another trigger (e.g. an operation by the user)

In still another embodiment, in switching a priority image, a period of time (e.g. 3 sec.) during which neither of them is set to the priority image may be set. For example, when the priority image is switched from an image G_{DR} for driver's seat to an image G_{PA} for passenger seat, it is not immediately switched and a period of time during which no operation is received from both of the images is set. As a result, it is possible to prevent an operation conducted simultaneously with switching from being a wrong operation.

In the display devices according to the first to fifth embodiments, by changing the thickness of the outlines of the operating switches (see Fig. 12), by displaying the right-pointing arrow 50R or the left-pointing arrow 50L (see Figs. 16 and 17), or by displaying the steering wheel mark 51 which is an image of a driver's seat or the prohibition mark 52 (see Figs. 23 and 24), the user is notified which is set to a priority image. But in another embodiment, individual information may be displayed only to a priority image. For example, when an image G_{DR} for driver's seat has been set to a priority image, only the image G_{DR} for driver's seat is displayed on a display unit 4 and an image G_{PA} for passenger seat is not displayed on the display unit 4.

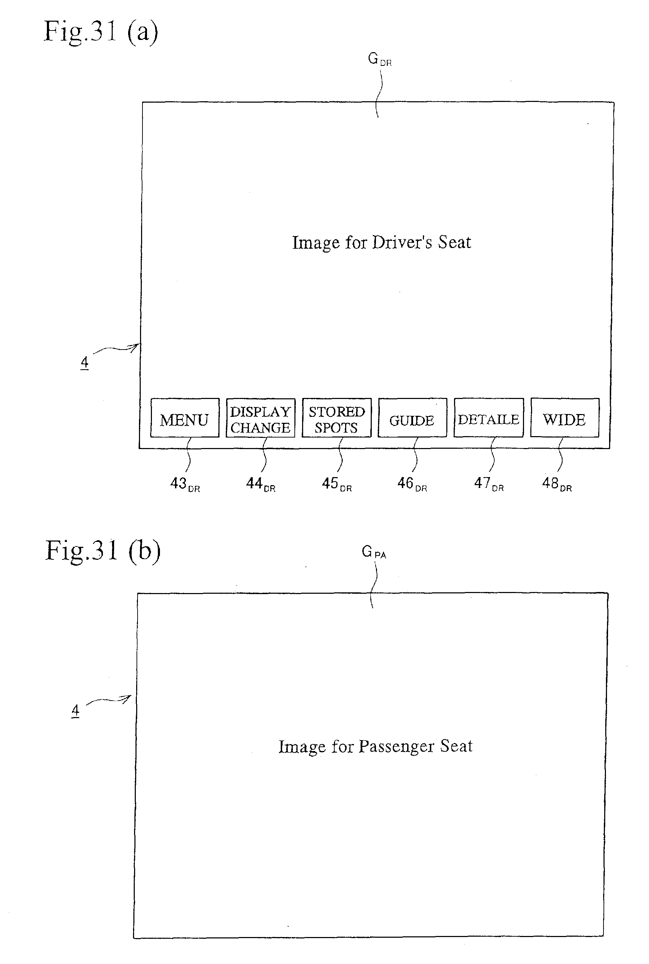

In another embodiment, operation-related pictures for operation inputs may be displayed only to an image set to a priority image. For example, when an image G_{DR} for driver's seat has been set to a priority image, operating switches 43_{DR}-48_{DR} which receive operation inputs to the image G_{DR} for driver's seat are displayed, while operating switches 43_{PA}-48_{PA} which receive operation inputs to an image G_{PA} for passenger seat are not displayed, as shown in Fig. 31.

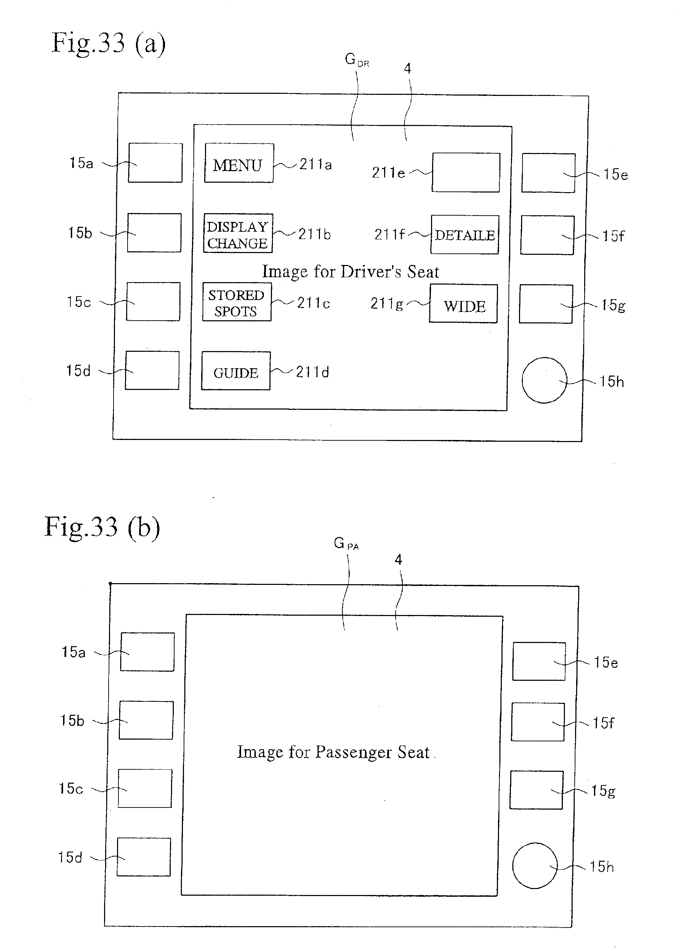

As the operation-related pictures, key display pictures 211a-211g and 212a-212g describing functions of the operating switches 15a-15g arranged around the display unit 4 as shown in Fig. 32 are exemplified. For example, when the image G_{DR} for driver's seat has been set to a priority image, the key display pictures 211a-211g related to the image G_{DR} for driver's seat are displayed, while the key display pictures 212a-212g related to the image G_{PA} for passenger seat are not displayed, as shown in Fig. 33.

In still another embodiment, display of operation-related pictures for operation inputs to a priority image may not be limited to display on the priority image. For example, when an image G_{DR} for driver's seat has been set to a priority image, operating switches 43_{DR}-48_{DR} related to the image G_{DR} for driver's seat are displayed not only on the image G_{DR} for driver's seat as shown in Fig. 31, but also on an image G_{PA} for passenger seat.

In the display devices according to the first, second, fourth and fifth embodiments, the priority image setting switch 41_{DR} for setting the image G_{DR} for driver's seat to a priority image and the priority image setting switch 41_{PA} for setting the image G_{PA} for passenger seat to a priority image are arranged. But in another embodiment, a toggle switch which can alternately switch from one state to the other every time the same operation is conducted may be arranged.

The display devices according to the present invention which are adopted in an AV navigation system to be mounted on a vehicle have been described above. But the display devices according to the present invention are not adopted only in systems to be mounted on a vehicle. They may be adopted in a home-use television set or the like. The present invention is effective in products which display individual information in a plurality of viewing directions on a common screen. And the number of viewing directions is not limited to two. Three or more directions may be adopted.

A display device according to a sixth embodiment is described below by reference to drawings. The constructions shown in Figs. 1-9 are similar to those in the sixth embodiment.
A display unit 4 comprises parallax barriers 26 and associated parts, as shown in Fig. 3, and displays an image G_{DR} for driver's seat and an image G_{PA} for passenger seat individually on a common screen. Therefore, it is possible to allow a driver DR to see the image G_{DR} for driver's seat and to allow a passenger PA in a passenger seat to see the image G_{PA} for passenger seat.

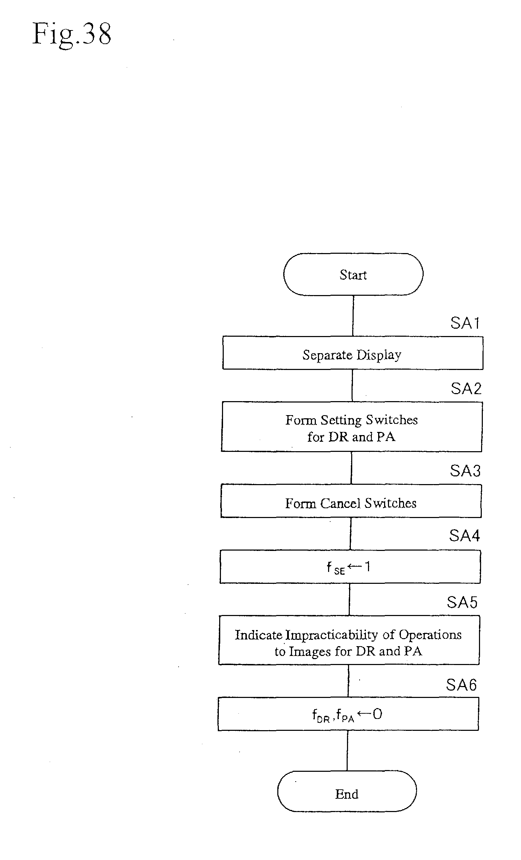

A processing operation [6-1] performed by a control unit 100 in an AV navigation system wherein the display device according to the sixth embodiment is adopted is described below with a flowchart shown in Fig. 38. Here, this processing operation [6-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on the display unit 4, an operating unit 15, a remote control 123 or the like.

Here, in cases where the separate display is standard (i.e. the separate display starts after turning-on of the AV navigation system), the user's instruction for separate display is not required. And therefore, the processing operation [6-1] described below is not needed and a separate display flag f_{SE} for showing that the separate display has been conducted is not required.

When an instruction for separate display is provided by the user, based on prescribed conditions, as shown in Figs. 39 and 40, one of two images is displayed as an image G_{DR} for driver's seat and the rest is displayed as an image G_{PA} for passenger seat (Step SA1). A setting switch 41_{DR} for setting operations to the image G_{DR} for driver's seat to be practicable is formed on the upper right portion of said image G_{DR}, while a setting switch 41_{PA} for setting operations to the image G_{PA} for passenger seat to be practicable is formed on the upper left portion of said image G_{PA} (Step SA2).

Fig. 39(a) is an illustration to describe pixels used for the image G_{DR} for driver's seat and pixels used for the image G_{PA} for passenger seat, Fig. 39(b) is a diagram showing an example of the image G_{DR} for driver's seat and Fig. 39(c) is a diagram showing an example of the image G_{PA} for passenger seat. As shown in Fig. 39(a), a half of the total number of lateral pixels, even-numbered lines (pixels R_{P} for the right) are used for the image G_{DR} for driver's seat, while odd-numbered lines (pixels L_{P} for the left) are used for the image G_{PA} for passenger seat.

Fig. 40(a) is an enlarged diagram showing an example of the image G_{DR} for driver's seat, and Fig. 40(b) is an enlarged diagram showing an example of the image G_{PA} for passenger seat. As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified.

As can be seen from Figs. 39 and 40, the setting switch 41_{DR}, a cancel switch 42_{DR} and an operating switch 49_{DR} are arranged within areas E₁-E₃, while the setting switch 41_{PA}, a cancel switch 42_{PA} and an operating switch 49_{PA} are arranged within areas E₄-E₆ which do not overlap the areas E₁-E₃. And the setting switch 41_{DR}, the cancel switch 42_{DR} and the operating switch 49_{DR} are arranged in such a manner to receive only operation inputs associated with the image G_{DR} for driver's seat, while the setting switch 41_{PA}, the cancel switch 42_{PA} and the operating switch 49_{PA} are arranged in such a manner to receive only operation inputs associated with the image G_{PA} for passenger seat.

Operating switches 43_{DR}-48_{DR} formed on the image G_{DR} for driver's seat and operating switches 43_{PA}-48_{PA} formed on the image G_{PA} for passenger seat are arranged within the same areas E₇-E₁₂. These switches are arranged in such a manner that the operation areas for the image G_{DR} for driver's seat on the display screen and the operation areas for the image G_{PA} for passenger seat on the display screen overlap each other. Operating switches 15a-15h (see Fig. 9) arranged around the display unit 4 may include only switches which can deal with both the image G_{DR} for driver's seat and the image G_{PA} for passenger seat, or switches which can deal with either of them, or a combination of the both.

After the processing in Step SA2, the cancel switches 42_{DR} and 42_{PA} for canceling this separate display are formed on the image G_{DR} for driver's seat and the image G_{PA} for passenger seat, respectively (Step SA3). Thereafter, the separate display flag f_{SE} for showing that the separate display has been conducted is set to be 1 (Step SA4). In order to inform the driver DR that operations to the image G_{DR} for driver's seat are impracticable, a display indicating impracticability of the operations is made on the image G_{DR} for driver's seat, while in order to inform the passenger PA in the passenger seat that operations to the image G_{PA} for passenger seat are impracticable, a display indicating impracticability of the operations is made on the image G_{PA} for passenger seat (Step SA5).

For example, as shown in Fig. 40, by displaying a mark '×' 50_{DR} on the upper right portion of the image G_{DR} for driver's seat, the driver DR is notified that operations to the image G_{DR} for driver's seat are impracticable, while by displaying a mark '×' 50_{PA} on the upper left portion of the image G_{PA} for passenger seat, the passenger PA in the passenger seat is notified that operations to the image G_{PA} for passenger seat are impracticable.

A driver's seat flag f_{DR} for showing that operations to the image G_{DR} for driver's seat are practicable/impracticable is set to be 0 (operations to the image G_{DR} for driver's seat are impracticable), while a passenger seat flag f_{PA} for showing that operations to the image G_{PA} for passenger seat are practicable/impracticable is set to be 0 (operations to the image G_{PA} for passenger seat are impracticable) (Step SA6).

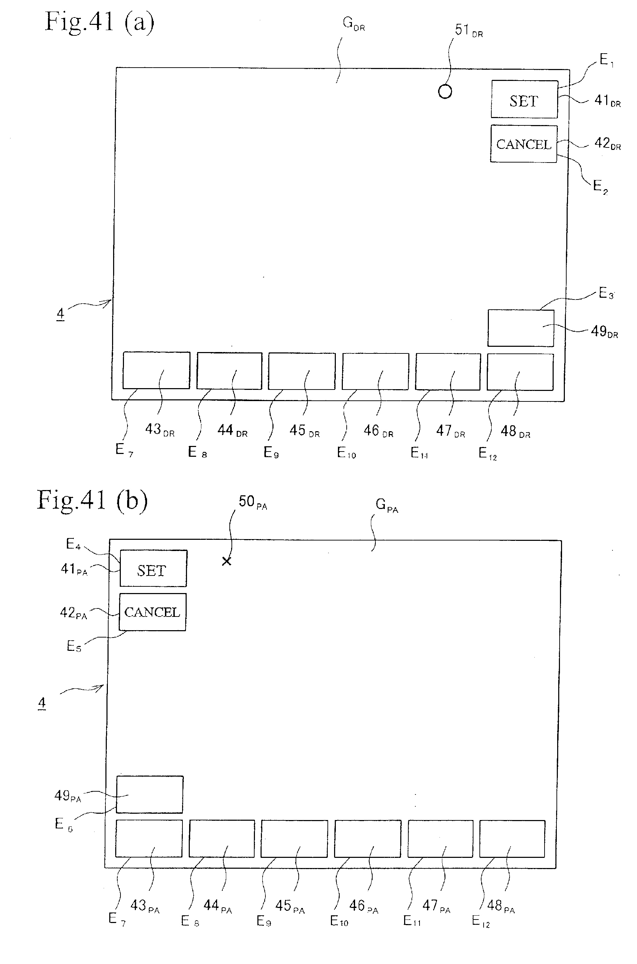

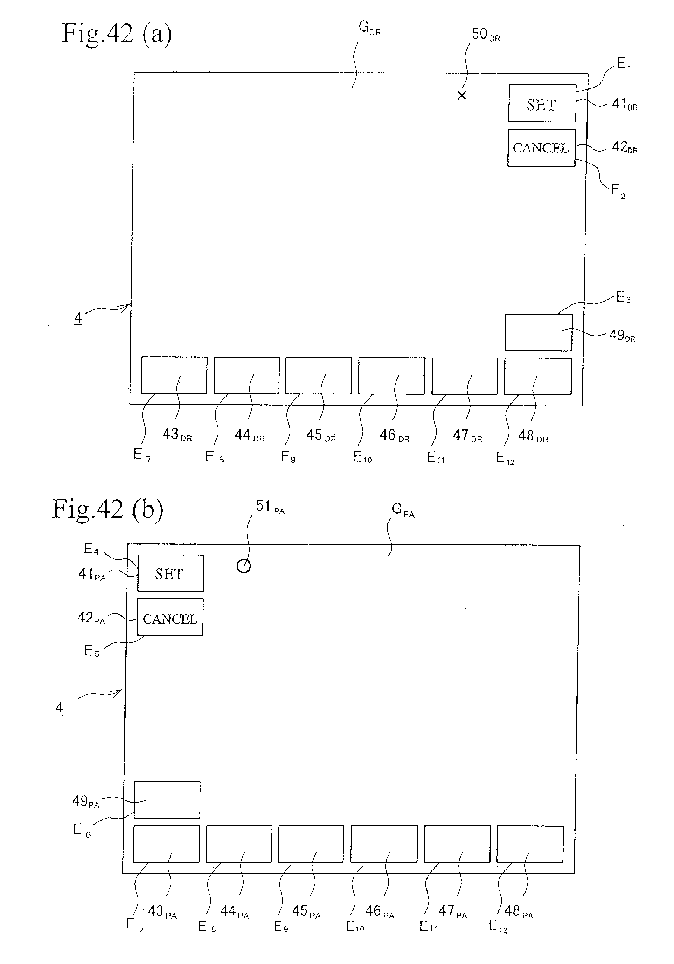

In cases where operations to the image G_{DR} for driver's seat are practicable, for example, as shown in Fig. 41, by displaying a mark '○' 51_{DR} on the upper right portion of the image G_{DR} for driver's seat, the driver DR is notified that operations to the image G_{DR} for driver's seat are practicable, while by displaying the mark '×' 50_{PA} on the upper left portion of the image G_{PA} for passenger seat, the passenger PA in the passenger seat is notified that operations to the image G_{PA} for passenger seat are impracticable. On the other hand, in cases where operations to the image G_{PA} for passenger seat are practicable, for example, as shown in Fig. 42, the mark '×' 50_{DR} is displayed on the upper right portion of the image G_{DR} for driver's seat, while a mark '○' 51_{PA} is displayed on the upper left portion of the image G_{PA} for passenger seat.

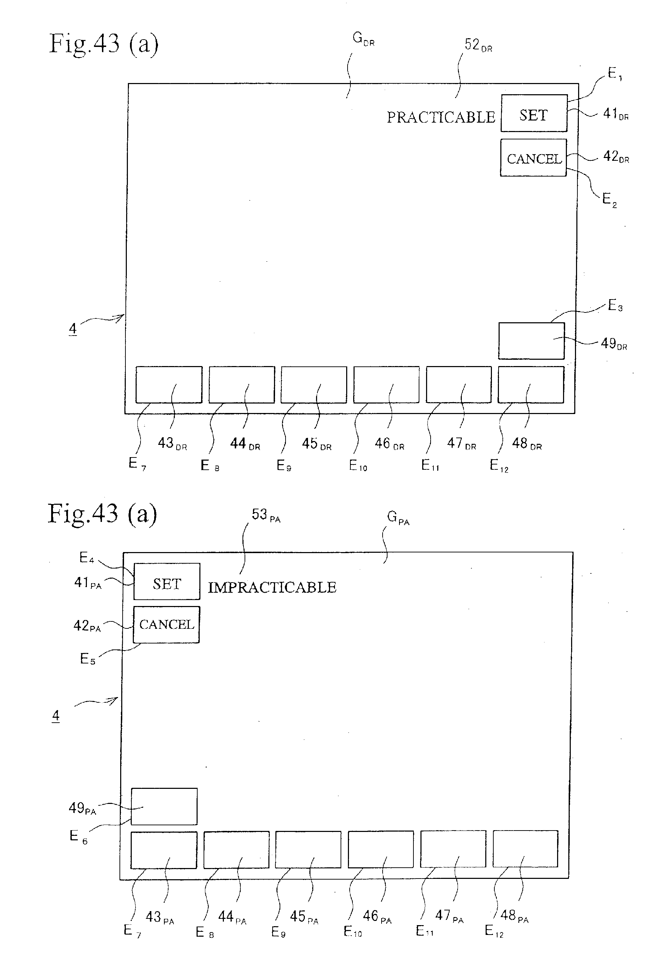

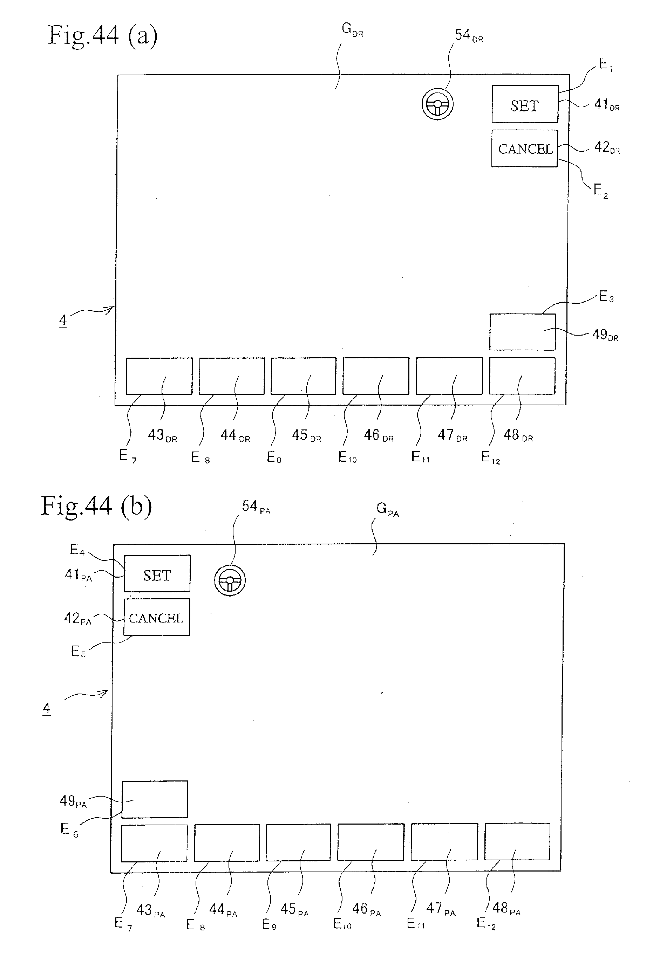

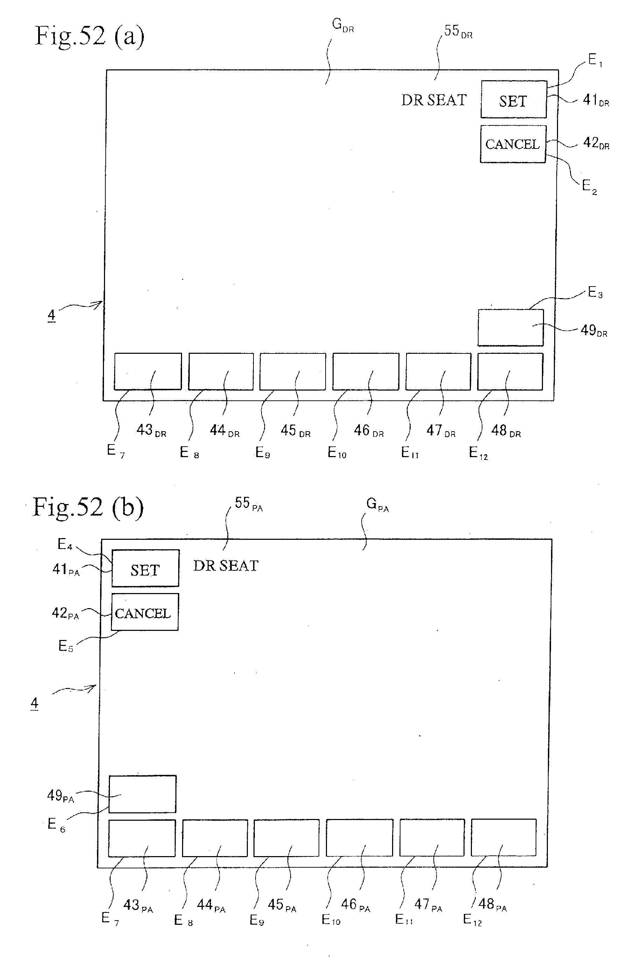

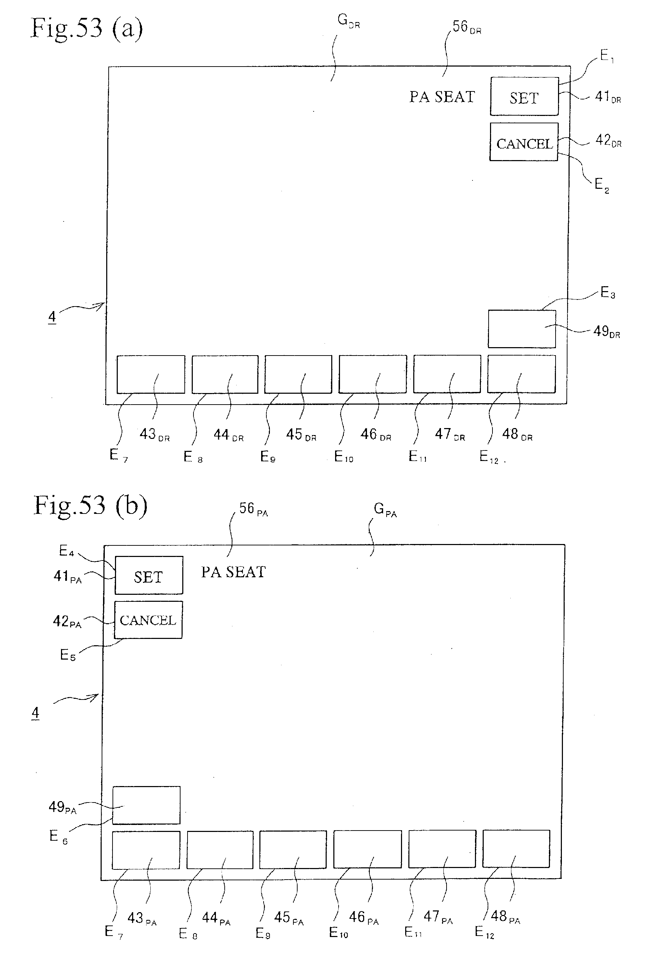

Here, the mode of notifying that operations to the image are practicable or impracticable is not limited to the display of the marks '○' 51_{DR} and 51_{PA}, and the marks '×' 50_{DR} and 50_{PA}. As other modes, the below-described options a-g are exemplified.
a) The image G_{DR} for driver's seat and the image G_{PA} for passenger seat are changed in size depending on whether operations to them are practicable or impracticable.
b) The display space of the image G_{DR} for driver's seat and that of the image G_{PA} for passenger seat are changed in shape depending on whether operations to them are practicable or impracticable.
   i) A change from a rectangle (when practicable) to a round (when impracticable)
   ii) To make an image look angled when impracticable
c) A change in lightness, hue, chroma or the like depending on whether operations to them are practicable or impracticable
d) A change in transmittance when a plurality of images overlap one another
e) To limit usable colors when impracticable
   i) To make an image a monochrome picture when impracticable
   ii) To make the overall image whitish
f) A change in display time
   i) To make flashing display when impracticable
g) To display a picture such as a word or a mark
   i) To display the marks '○' 51_{DR} and 51_{PA}, and the marks '×' 50_{DR} and 50_{PA} (see Figs. 40-42)
   ii) To display a word 'PRACTICABLE' 52_{DR} and a word 'IMPRACTICABLE' 53_{PA} (see Fig. 43)
   iii) To display words 'DR SEAT' 55_{DR} and 55_{PA} which show that operations to the image G_{DR} for driver's seat are practicable and words 'PA SEAT' 56_{DR} and 56_{PA} which show that operations to the image G_{PA} for passenger seat are practicable (see Figs. 52 and 53)
   iv) To display 'steering wheel' marks 54_{DR} and 54_{PA}, being an image of the driver DR, which show that operations to the image G_{DR} for driver's seat are practicable (see Fig. 44)

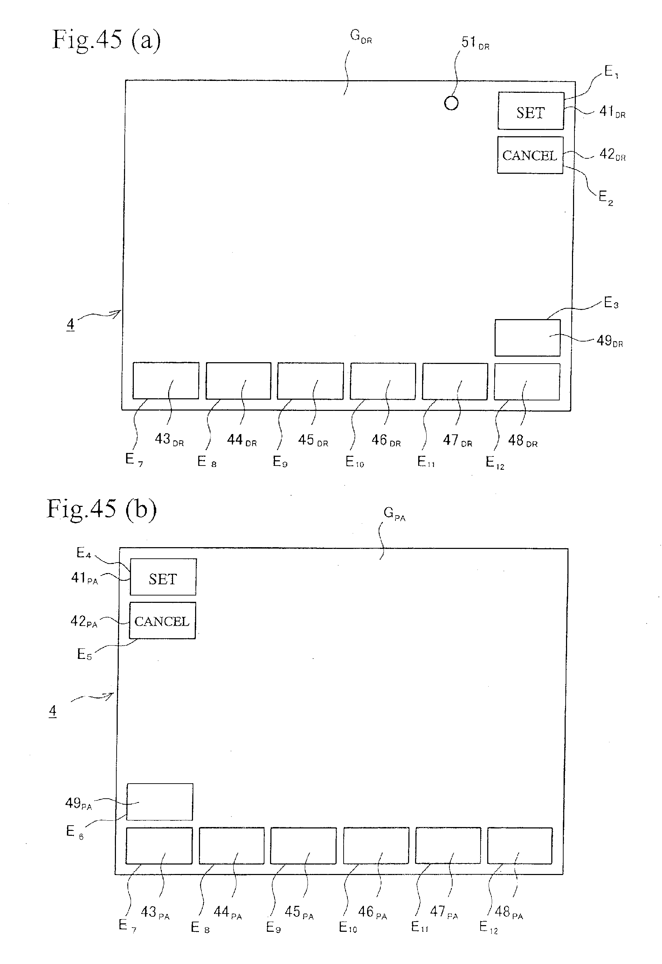

The cases where the marks '○' 51_{DR} and 51_{PA} are displayed in order to notify an image to which operations are practicable and the marks '×' 50_{DR} and 50_{PA} are displayed in order to notify an image to which operations are impracticable have been described above. However, like cases where the mark '○' 51_{DR} or 51_{PA} is displayed on an image to which operations are practicable, but the mark '×' 50_{DR} or 50_{PA} is not displayed on an image to which operations are impracticable, or cases where the mark '○' 51_{DR} or 51_{PA} is not displayed on an image to which operations are practicable, but the mark '×' 50_{DR} or 50_{PA} is displayed on an image to which operations are impracticable, a certain mark or word may be displayed on either of the images (see Fig. 45).

The cases where by changing the display mode of the image G_{DR} for driver's seat and that of the image G_{PA} for passenger seat, whether the image is practicable or impracticable is notified have been described above. In another embodiment, picture processing such as deformation, coloring or composition may be conducted on the operating switches 41_{DR}-49_{DR} and 41_{PA}-49_{PA}, and key display pictures 211a-211g and 212a-212g which describe functions of the operating switches 15a-15g arranged around the display unit 4 as shown in Fig. 46. Furthermore, only operable operating switches and key display pictures describing functions thereof may be displayed without displaying inoperable operating switches and key display pictures describing functions thereof.

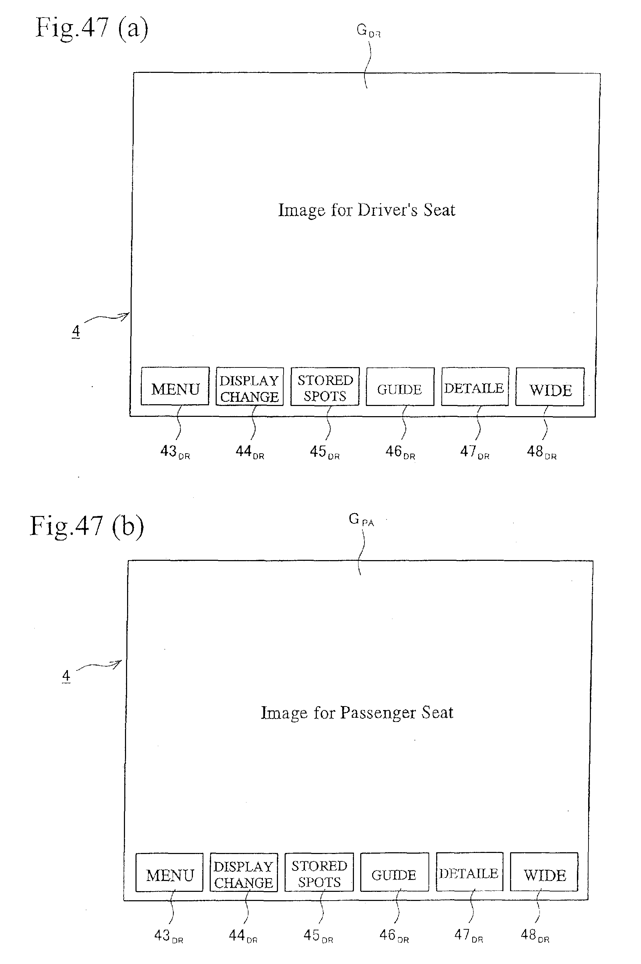

Fig. 47 is an example of a display mode in cases where operations to the image G_{DR} for driver's seat are practicable, which shows a situation where the operating switches 43_{DR}-48_{DR} related to the image G_{DR} for driver's seat are displayed not only on the image G_{DR} for driver's seat but also on the image G_{PA} for passenger seat.

Fig. 48 is an example of a display mode in cases where operations to the image G_{DR} for driver's seat are practicable, which shows a situation where the key display pictures 211a-211g related to the image G_{DR} for driver's seat are displayed, but the key display pictures 212a-212g related to the image G_{PA} for passenger seat are not displayed.

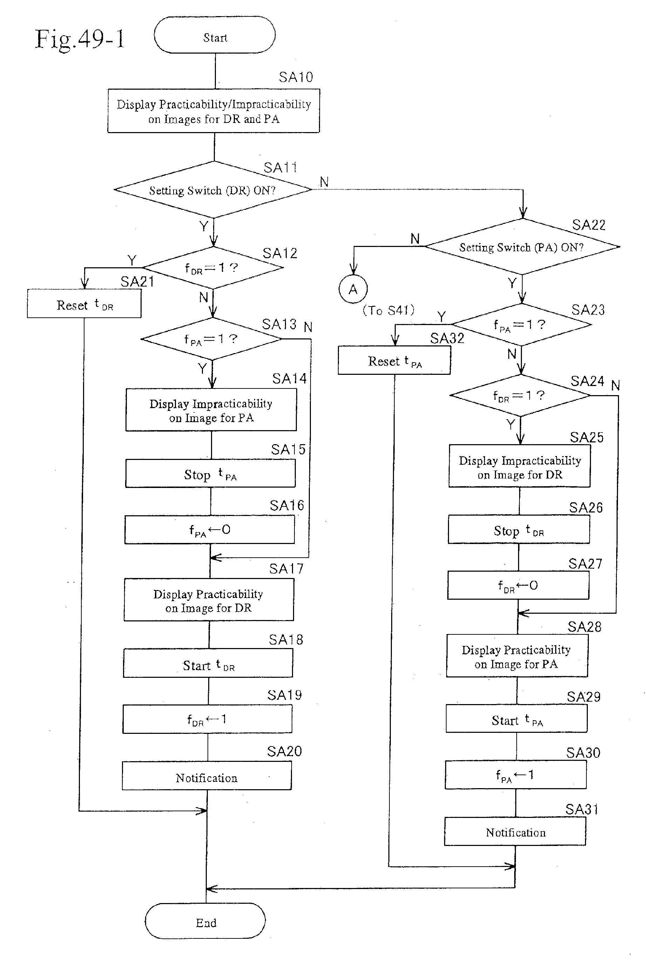

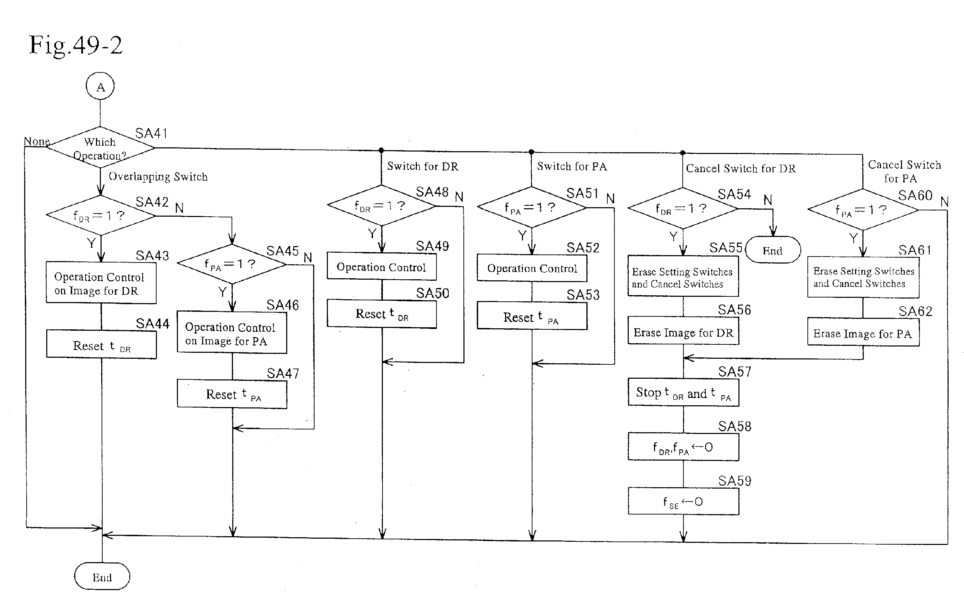

A processing operation [6-2] performed by the control unit 100 in the AV navigation system wherein the display device according to the sixth embodiment is adopted is described below with flowcharts shown in Figs. 49-1 and 49-2. Here, this processing operation [6-2] is performed in cases where the user operated the setting switch 41_{DR} or 41_{PA}, the cancel switch 42_{DR} or 42_{PA}, or the operating switches 43_{DR}-49_{DR} or 43_{PA}-49_{PA} formed on the display unit 4, the operating switches 15a-15h constituting the operating unit 15, the remote control 123 or the like. Here, as described above, when the separate display is standard, as a matter of course, the separate display flag f_{SE} is not required, and therefore, it is not included in starting conditions that the separate display flag f_{SE} is 1.

To which image of the image G_{DR} for driver's seat and the image G_{PA} for passenger seat operations are practicable is judged from the driver's seat flag f_{DR} and the passenger seat flag f_{PA}. And based on the judgment result, the mark '○' 51_{DR} or 51_{PA} is displayed on an image to which operations are practicable so as to inform the user that operations to the image are practicable, while the mark '×' 50_{DR} or 50_{PA} is displayed on an image to which operations are impracticable so as to inform the user that operations to the image are impracticable (Step SA10). Here, a case where the mark '○' 51_{DR} or 51_{PA} and the mark '×' 50_{DR} or 50_{PA} are displayed has been described, but as described above, the mode of notifying that operations to the image is practicable or impracticable is not limited to this. However, in order to make the description simpler, a case where the mark '○' 51_{DR} or 51_{PA} is displayed on an image to which operations are practicable and the mark '×' 50_{DR} or 50_{PA} is displayed on an image to which operations are impracticable is described here.

Whether the setting switch 41_{DR} for setting operations to the image G_{DR} for driver's seat to be practicable was operated or not is judged (Step SA11). When it is judged that the setting switch 41_{DR} was operated, whether the driver's seat flag f_{DR} showing that operations to the image G_{DR} for driver's seat are practicable/impracticable is 1 or not is judged (Step SA12).

When it is judged that the driver's seat flag f_{DR} is not 1 (i.e. operations to the image G_{DR} for driver's seat are not practicable), whether the passenger seat flag f_{PA} showing that operations to the image G_{PA} for passenger seat are practicable/impracticable is 1 or not is judged (Step SA13). When it is judged that the passenger seat flag f_{PA} is 1 (i.e. operations to the image G_{PA} for passenger seat are practicable), the mark '○' 51_{PA} displayed on the image G_{PA} for passenger seat is erased and in place of that, the mark '×' 50_{PA} is displayed (Step SA14). And a timer t_{PA} for measuring a time during which no operation to the image G_{PA} for passenger seat is conducted (i.e. a time elapsed after the last operation) is brought to a stop (Step SA15), the passenger seat flag f_{PA} is returned to 0 (Step SA16), and then, the processing operation goes to Step SA17. On the other hand, when it is judged that the passenger seat flag f_{PA} is not 1 in Step SA13, Steps SA14-SA16 are bypassed and the processing operation directly goes to Step SA17.

The mark '×' 50_{DR} displayed on the image G_{DR} for driver's seat is erased and in place of that, the mark '○' 51_{DR} is displayed (Step SA17). And a timer t_{DR} for measuring a time during which no operation to the image G_{DR} for driver's seat is conducted (i.e. a time elapsed after the last operation) is turned to 0 and started up (Step SA18), the driver's seat flag f_{DR} is set to be 1 (Step SA19), and then, the user is notified that operations to the image G_{DR} for driver's seat were set to be practicable (Step SA20). Here, as a method for notification, a method of outputting by voice through speakers 17 (beeps may be adoptable) and a method of displaying a notification picture are exemplified, and the display of the above-described mark '○' 51_{DR} and mark '×' 50_{PA} may work as a notification.

When it is judged that the driver's seat flag f_{DR} is 1 (i.e. operations to the image G_{DR} for driver's seat have been already set to be practicable) in Step SA12, the timer t_{DR} is returned to 0 (Step SA21) and the processing operation [6-2] is concluded at once.

On the other hand, when it is judged that the setting switch 41_{DR} has not been operated in Step SA11, whether the setting switch 41_{PA} for setting operations to the image G_{PA} for passenger seat to be practicable was operated or not is judged (Step SA22). When it is judged that the setting switch 41_{PA} was operated, whether the passenger seat flag f_{PA} is 1 or not is judged (Step SA23).

When it is judged that the passenger seat flag f_{PA} is not 1 (i.e. operations to the image G_{PA} for passenger seat have not been set to be practicable), whether the driver's seat flag f_{DR} is 1 or not is judged (Step SA24). When it is judged that the driver's seat flag f_{DR} is 1 (i.e. operations to the image G_{DR} for driver's seat have been set to be practicable), the mark '○' 51_{DR} displayed on the image G_{DR} for driver's seat is erased and in place of that, the mark '×' 50_{DR} is displayed (Step SA25). And the timer t_{DR} is brought to a stop (Step SA26), the driver's seat flag f_{DR} is returned to 0 (Step SA27), and then, the processing operation goes to Step SA28. On the other hand, when it is judged that the driver's seat flag f_{DR} is not 1 in Step SA24, Steps SA25-SA27 are bypassed and the processing operation directly goes to Step SA28.

The mark '×' 50_{PA} displayed on the image G_{PA} for passenger seat is erased and in place of that, the mark '○' 51_{PA} is displayed (Step SA28). And the timer t_{PA} is turned to 0 and started up (Step SA29), the passenger seat flag f_{PA} is set to be 1 (Step SA30), and then, the user is notified that operations to the image G_{PA} for passenger seat were set to be practicable (Step SA31). Here, as a method for notification, a method of outputting by voice through the speakers 17 (beeps may be adoptable) and a method of displaying a notification picture are exemplified, and the display of the above-described mark '○' 51_{PA} and mark '×' 50_{DR} may work as a notification.

When it is judged that the passenger seat flag f_{PA} is 1 (i.e. operations to the image G_{PA} for passenger seat have been already set to be practicable) in Step SA23, the timer t_{PA} is returned to 0 (Step SA32) and the processing operation [6-2] is concluded at once.

On the other hand, when it is judged that the setting switch 41_{PA} has not been operated (i.e. neither the setting switch 41_{DR} nor 41_{PA} has been operated) in Step SA22, the processing operation goes to Step SA41 (Fig. 49-2), wherein which operation other than operations to the setting switches 41_{DR} and 41_{PA} was conducted is judged. Here, when it is judged that no operation was conducted, the processing operation [6-2] is concluded at once.

When it is judged that an operating switch arranged in such a manner that the operation area for the image G_{DR} for driver's seat on the display screen and the operation area for the image G_{PA} for passenger seat on the display screen overlap each other (an overlapping switch (e.g. the operating switches 43_{DR}-48_{DR} and 43_{PA}-48_{PA})) was operated, whether the driver's seat flag f_{DR} is 1 or not is judged (Step SA42). When it is judged that the driver's seat flag f_{DR} is 1 (i.e. operations to the image G_{DR} for driver's seat have been set to be practicable), operation control on the image G_{DR} for driver's seat according to the operation is conducted (Step SA43), and then, the timer t_{DR} is returned to 0 (Step SA44).

On the other hand, when it is judged that the driver's seat flag f_{DR} is not 1, whether the passenger seat flag f_{PA} is 1 or not is judged (Step SA45). When it is judged that the passenger seat flag f_{PA} is 1 (i.e. operations to the image G_{PA} for passenger seat have been set to be practicable), operation control on the image G_{PA} for passenger seat according to the operation is conducted (Step SA46), and then, the timer t_{PA} is returned to 0 (Step SA47). When it is judged that the passenger seat flag f_{PA} is not 1, the operation is regarded as being invalid and the processing operation [6-2] is concluded at once.

When it is judged that an operating switch which receives only operation inputs to the image G_{DR} for driver's seat (e.g. the operating switch 49_{DR}, excluding the setting switch 41_{DR} and the cancel switch 42_{DR}) was operated in Step SA41, whether the driver's seat flag f_{DR} is 1 or not is judged (Step SA48). When it is judged that the driver's seat flag f_{DR} is 1 (i.e. operations to the image G_{DR} for driver's seat have been set to be practicable), operation control according to the operation is conducted (Step SA49), and then, the timer t_{DR} is returned to 0 (Step SA50). On the other hand, when it is judged that the driver's seat flag f_{DR} is not 1, the operation is regarded as being invalid and the processing operation [6-2] is concluded at once.

When it is judged that an operating switch which receives only operation inputs to the image G_{PA} for passenger seat (e.g. the operating switch 49_{PA}, excluding the setting switch 41_{PA} and the cancel switch 42_{PA}) was operated in Step SA41, whether the passenger seat flag f_{PA} is 1 or not is judged (Step SA51). When it is judged that the passenger seat flag f_{PA} is 1 (i.e. operations to the image G_{PA} for passenger seat have been set to be practicable), operation control according to the operation is conducted (Step SA52), and then, the timer t_{PA} is returned to 0 (Step SA53). On the other hand, when it is judged that the passenger seat flag f_{PA} is not 1, the operation is regarded as being invalid and the processing operation [6-2] is concluded at once.

When it is judged that the cancel switch 42_{DR} for canceling the separate display formed on the image G_{DR} for driver's seat was operated in Step SA41, whether the driver's seat flag f_{DR} is 1 or not is judged (Step SA54). When it is judged that the driver's seat flag f_{DR} is 1, the setting switches 41_{DR} and 41_{PA}, and the cancel switches 42_{DR} and 42_{PA} are erased from the screen (Step SA55), the image G_{DR} for driver's seat is erased and the image G_{PA} for passenger seat is displayed in a full-screen mode (Step SA56). And the timers t_{DR} and t_{PA} are brought to a stop (Step SA57), the driver's seat flag f_{DR} and the passenger seat flag f_{PA} are returned to 0 (Step SA58), and then, the separate display flag f_{SE} is returned to 0 (Step SA59). On the other hand, when it is judged that the driver's seat flag f_{DR} is not 1, the operation is regarded as being invalid and the processing operation [6-2] is concluded at once.

When it is judged that the cancel switch 42_{PA} for canceling the separate display formed on the image G_{PA} for passenger seat was operated in Step SA41, whether the passenger seat flag f_{PA} is 1 or not is judged (Step SA60). When it is judged that the passenger seat flag f_{PA} is 1, the setting switches 41_{DR} and 41_{PA}, and the cancel switches 42_{DR} and 42_{PA} are erased from the screen (Step SA61), the image G_{PA} for passenger seat is erased and the image G_{DR} for driver's seat is displayed in the full-screen mode (Step SA62), and then, the processing operation goes to Step SA57.

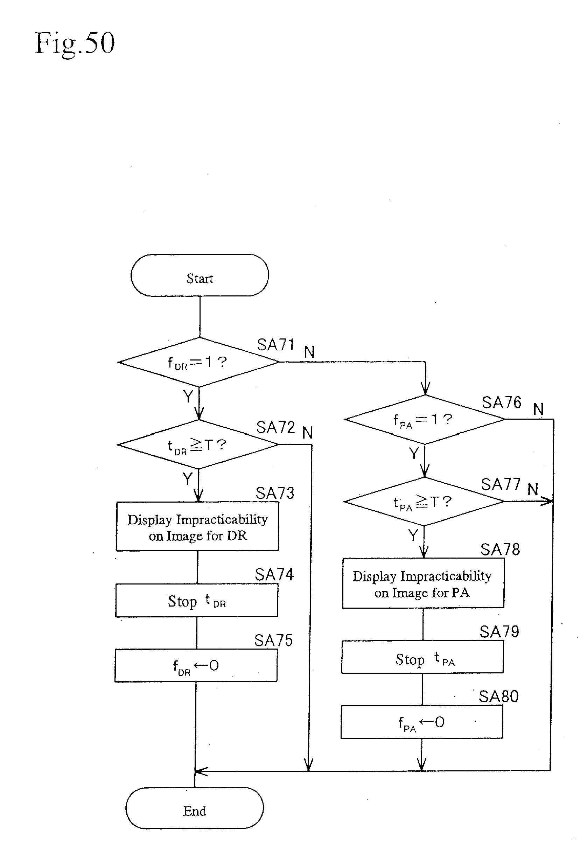

A processing operation [6-3] performed by the control unit 100 in the AV navigation system wherein the display device according to the sixth embodiment is adopted is described below with a flowchart shown in Fig. 50. Here, this processing operation [6-3] is performed at every prescribed interval in the separate display mode (i.e. when the separate display flag f_{SE} is 1).

Whether the driver's seat flag f_{DR} is 1 or not is judged (Step SA71). When it is judged that the driver's seat flag f_{DR} is 1, whether the timer t_{DR} has counted to a predetermined time T (e.g. 6 sec.) or more is judged (Step SA72). When it is judged that the timer t_{DR} has counted to the predetermined time T or more (i.e. 6 sec. has elapsed since the last operation was conducted), the mark '○' 51_{DR} displayed on the image G_{DR} for driver's seat is erased and in place of that, the mark '×' 50_{DR} is displayed (Step SA73). And the timer t_{DR} is brought to a stop (Step SA74), and the driver's seat flag f_{DR} is turned to 0 (Step SA75). On the other hand, when it is judged that the timer t_{DR} has counted to less than the predetermined time T, the processing operation [6-3] is concluded at once.

When it is judged that the driver's seat flag f_{DR} is not 1 in Step SA71, whether the passenger seat flag f_{PA} is 1 or not is judged (Step SA76). When it is judged that the passenger seat flag f_{PA} is 1, whether the timer t_{PA} has counted to the predetermined time T or more is judged (Step SA77). When it is judged that the timer t_{PA} has counted to the predetermined time T or more (i.e. 6 sec. has elapsed since the last operation was conducted), the mark '○' 51_{PA} displayed on the image G_{PA} for passenger seat is erased and in place of that, the mark '×' 50_{PA} is displayed (Step SA78). And the timer t_{PA} is brought to a stop (Step SA79), and the passenger seat flag f_{PA} is turned to 0 (Step SA80). On the other hand, when it is judged that the timer t_{PA} has counted to less than the predetermined time T or that the passenger seat flag f_{PA} is not 1, the processing operation [6-3] is concluded at once.

By using the AV navigation system wherein the display device according to the sixth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable, or operations to neither of them are practicable.

Therefore, for example, in cases where the operating switches 43_{DR}-48_{DR} and 43_{PA}-48_{PA} arranged in the same areas E₇-E₁₂ as shown in Figs. 39 and 40 are operated when operations to the image G_{DR} for driver's seat are practicable, operation control corresponding to the operating switches 43_{DR}-48_{DR} is conducted. That is, operation control on the image to which operations are impracticable is not conducted.

Furthermore, by using the display device according to the sixth embodiment, every user is notified whether operations to the image the user is watching are practicable or not. For example, the driver DR is notified whether operations to the image G_{DR} for driver's seat are practicable or not, while the passenger PA in the passenger seat is notified whether operations to the image G_{PA} for passenger seat are practicable or not. As a result, the driver DR and the passenger PA in the passenger seat can correctly recognize whether operations to the image one can see are practicable or not. Thus, it is possible to prevent wrong operations by the users.

In the display device according to the sixth embodiment, both the image to which operations are practicable and the image to which operations are impracticable are changed in display mode, respectively. But in another embodiment, only the display mode of either of them may be changed.

An AV navigation system wherein a display device according to a seventh embodiment is adopted is described below. Here, since the construction of said AV navigation system is similar to that of the AV navigation system shown in Fig. 5 except the control unit 100, a control unit is differently marked and the other components are not described below.

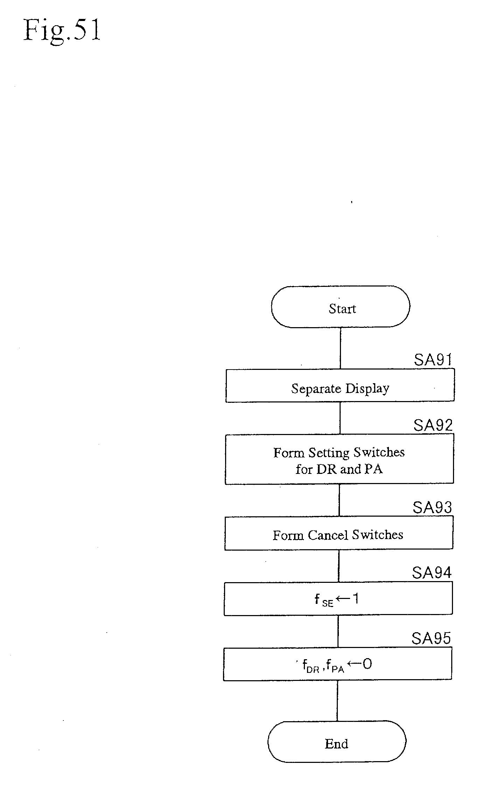

A processing operation [7-1] performed by the control unit 100A in the AV navigation system wherein the display device according to the seventh embodiment is adopted is described below with a flowchart shown in Fig. 51. Here, this processing operation [7-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on a display unit 4, an operating unit 15, a remote control 123 or the like.

Here, in cases where the separate display is standard (i.e. the separate display starts after turning-on of the AV navigation system), the user's instruction for separate display is not required. And therefore, the processing operation [7-1] described below is not needed and a separate display flag f_{SE} for showing that the separate display has been conducted is not required.

When an instruction for separate display is provided by the user, based on prescribed conditions, one of two images is displayed as an image G_{DR} for driver's seat and the rest is displayed as an image G_{PA} for passenger seat (Step SA91). As shown in Figs. 39 and 40, a setting switch 41_{DR} for setting operations to the image G_{DR} for driver's seat to be practicable is formed on the upper right portion of said image G_{DR}, while a setting switch 41_{PA} for setting operations to the image G_{PA} for passenger seat to be practicable is formed on the upper left portion of said image G_{PA} (Step SA92).

Cancel switches 42_{DR} and 42_{PA} for canceling this separate display are formed on the image G_{DR} for driver's seat and the image G_{PA} for passenger seat, respectively (Step SA93). Thereafter, the separate display flag f_{SE} for showing that the separate display has been conducted is turned to 1 (Step SA94), and a driver's seat flag f_{DR} and a passenger seat flag f_{PA} are set to be 0 (i.e. operations to the image G_{DR} for driver's seat and the image G_{PA} for passenger seat are impracticable) (Step SA95).

When operations to the image G_{DR} for driver's seat are practicable, as shown in Fig. 52, a word 'DR SEAT' 55_{DR} is displayed on the upper right portion of the image G_{DR} for driver's seat, while a word 'DR SEAT' 55_{PA} is displayed on the upper left portion of the image G_{PA} for passenger seat, whereby the driver DR and the passenger PA in the passenger seat are notified that operations to the image G_{DR} for driver's seat are practicable. On the other hand, when operations to the image G_{PA} for passenger seat are practicable, as shown in Fig. 53, a word 'PA SEAT' 56_{DR} is displayed on the upper right portion of the image G_{DR} for driver's seat, while a word 'PA SEAT' 56_{PA} is displayed on the upper left portion of the image G_{PA} for passenger seat.

The mode of notifying that operations to the image G_{DR} for driver's seat are practicable or that operations to the image G_{PA} for passenger seat are practicable, is not limited to the display of the words 'DR SEAT' 55_{DR} and 55_{PA} and the words 'PA SEAT' 56_{DR} and 56_{PA}. In another embodiment, for example, as shown in Fig. 44, by displaying 'steering wheel' marks 54_{DR} and 54_{PA}, it may be notified that operations to the image G_{DR} for driver's seat are practicable, or by conducting picture processing such as deformation, coloring or composition on the image wholly or partially, to which image operations are practicable may be notified.

In still another embodiment, picture processing such as deformation, coloring or composition may be conducted on the operating switches 41_{DR}-49_{DR} and 41_{PA}-49_{PA} or key display pictures 211a-211g and 212a-212g describing the functions of operating switches 15a-15g arranged around the display unit 4 as shown in Fig. 46.

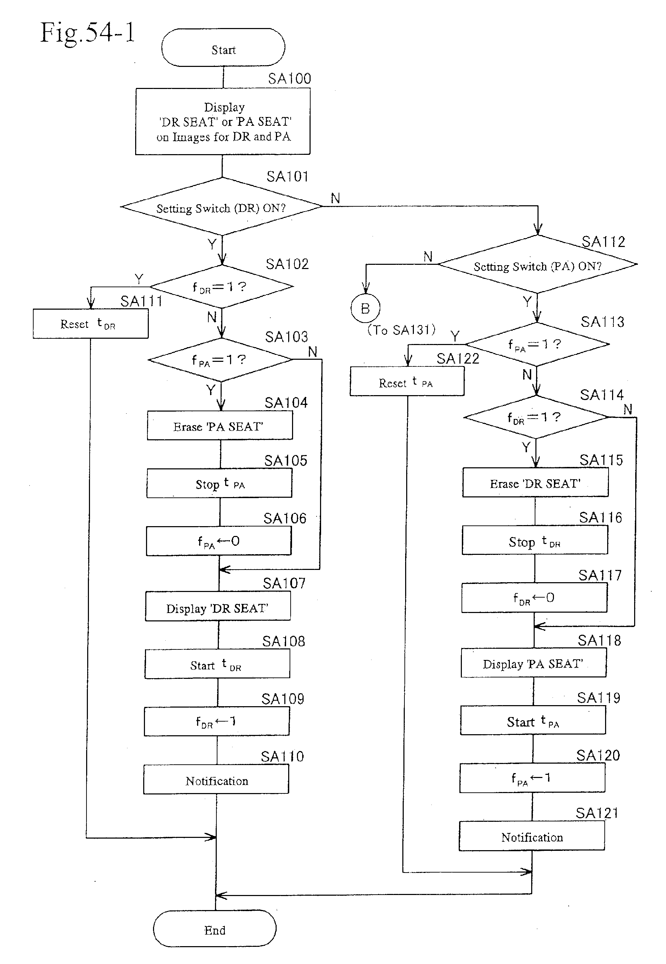

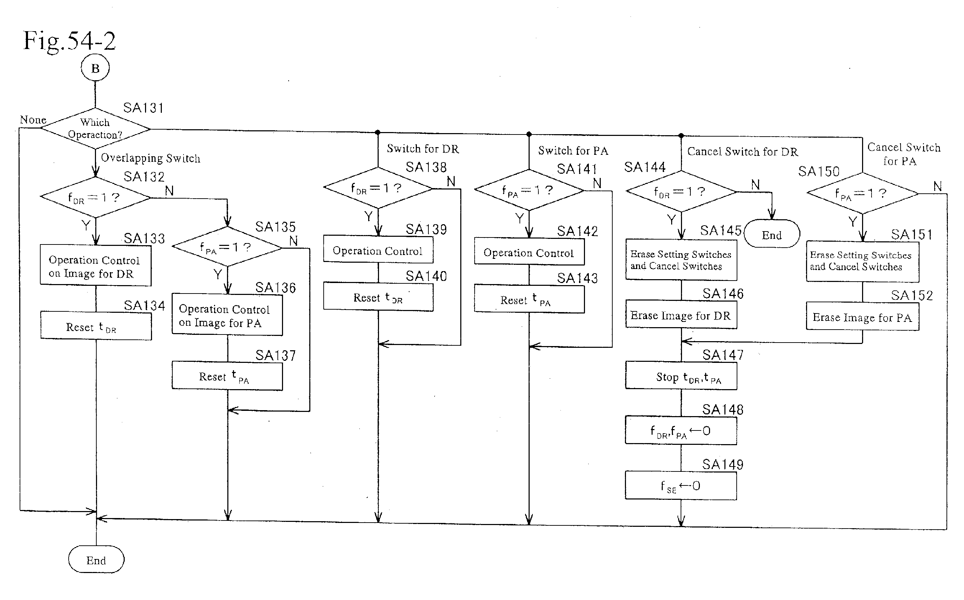

A processing operation [7-2] performed by the control unit 100A in the AV navigation system wherein the display device according to the seventh embodiment is adopted is described below with flowcharts shown in Figs. 54-1 and 54-2. Here, this processing operation [7-2] is performed in cases where the user operated the setting switch 41_{DR} or 41_{PA}, the cancel switch 42_{DR} or 42_{PA}, or the operating switches 43_{DR}-49_{DR} or 43_{PA}-49_{PA} formed on the display unit 4, the operating switches 15a-15h constituting the operating unit 15, the remote control 123 or the like.

To which image of the image G_{DR} for driver's seat and the image G_{PA} for passenger seat operations are practicable is judged from the driver's seat flag f_{DR} and the passenger seat flag f_{PA}. And based on the judgment result, when operations to the image G_{DR} for driver's seat are practicable, the words 'DR SEAT' 55_{DR} and 55_{PA} are displayed on both of the images G_{DR} and G_{PA} so as to inform the user that operations to the image G_{DR} for driver's seat are practicable. On the other hand, when operations to the image G_{PA} for passenger seat are practicable, the words 'PA SEAT' 56_{DR} and 56_{PA} are displayed on both of the images G_{DR} and G_{PA} so as to inform the user that operations to the image G_{PA} for passenger seat are practicable (Step SA100). Here, a case where the words 'DR SEAT' 55_{DR} and 55_{PA} and the words 'PA SEAT' 56_{DR} and 56_{PA} are displayed has been described, but as described above, the mode of notifying that operations to the image is practicable or impracticable is not limited to this. However, in order to make the description simpler, a case where the words 'DR SEAT' 55_{DR} and 55_{PA} are displayed when operations to the image G_{DR} for driver's seat are practicable and the words 'PA SEAT' 56_{DR} and 56_{PA} are displayed when operations to the image G_{PA} for passenger seat are practicable is described here.

Whether the setting switch 41_{DR} for setting operations to the image G_{DR} for driver's seat to be practicable was operated or not is judged (Step SA101). When it is judged that the setting switch 41_{DR} was operated, whether the driver's seat flag f_{DR} showing that operations to said image G_{DR} are practicable/impracticable is 1 or not is judged (Step SA102).

When it is judged that the driver's seat flag f_{DR} is not 1 (i.e. operations to the image G_{DR} for driver's seat have not been set to be practicable), whether the passenger seat flag f_{PA} showing that operations to the image G_{PA} for passenger seat are practicable/impracticable is 1 or not is judged (Step SA103). When it is judged that the passenger seat flag f_{PA} is 1 (i.e. operations to the image G_{PA} for passenger seat have been set to be practicable), the words 'PA SEAT' 56_{DR} and 56_{PA} displayed on the image G_{DR} for driver's seat and the image G_{PA} for passenger seat are erased (Step SA104). A timer t_{PA} for measuring a time during which no operation to the image G_{PA} for passenger seat is conducted (i.e. a time elapsed after the last operation) is brought to a stop (Step SA105), the passenger seat flag f_{PA} is returned to 0 (Step SA106), and then, the processing operation goes to Step SA107. On the other hand, when it is judged that the passenger seat flag f_{PA} is not 1 in Step SA103, Steps SA104-SA106 are bypassed and the processing operation directly goes to Step SA107.

The words 'DR SEAT' 55_{DR} and 55_{PA} are displayed on the image G_{DR} for driver's seat and the image G_{PA} for passenger seat as shown in Fig. 52 (Step SA107). A timer t_{DR} for measuring a time during which no operation to the image G_{DR} for driver's seat is conducted (i.e. a time elapsed after the last operation) is turned to 0 and started up (Step SA108), the driver's seat flag f_{DR} is set to be 1 (Step SA109), and then, the user is notified that operations to the image G_{DR} for driver's seat were set to be practicable (Step SA110). Here, as a method for notification, a method of outputting by voice through speakers 17 (beeps may be adoptable) and a method of displaying a notification picture are exemplified, and the display of the above-described words 'DR SEAT' 55_{DR} and 55_{PA} may work as a notification.

When it is judged that the driver's seat flag f_{DR} is 1 (i.e. operations to the image G_{DR} for driver's seat have been already set to be practicable) in Step SA102, the timer t_{DR} is returned to 0 (Step SA111) and the processing operation [7-2] is concluded at once.

On the other hand, when it is judged that the setting switch 41_{DR} has not been operated in Step SA101, whether the setting switch 41_{PA} for setting operations to the image G_{PA} for passenger seat to be practicable was operated or not is judged (Step SA112). When it is judged that the setting switch 41_{PA} was operated, whether the passenger seat flag f_{PA} is 1 or not is judged (Step SA113).

When it is judged that the passenger seat flag f_{PA} is not 1 (i.e. operations to the image G_{PA} for passenger seat have not been set to be practicable), whether the driver's seat flag f_{DR} is 1 or not is judged (Step SA114). When it is judged that the driver's seat flag f_{DR} is 1 (i.e. operations to the image G_{DR} for driver's seat have been set to be practicable), the words 'DR SEAT' 55_{DR} and 55_{PA} displayed on the image G_{DR} for driver's seat and the image G_{PA} for passenger seat are erased (Step SA115), the timer t_{DR} is brought to a stop (Step SA116), the driver's seat flag f_{DR} is returned to 0 (Step SA117), and then, the processing operation goes to Step SA118. On the other hand, when it is judged that the driver's seat flag f_{DR} is not 1 in Step SA114, Steps SA115-SA117 are bypassed and the processing operation directly goes to Step SA118.

The words 'PA SEAT' 56_{DR} and 56_{PA} are displayed on the image G_{DR} for driver's seat and the image G_{PA} for passenger seat as shown in Fig. 53 (Step SA118), the timer t_{PA} is turned to 0 and started up (Step SA119), the passenger seat flag f_{PA} is set to be 1 (Step SA120), and then, the user is notified that operations to the image G_{PA} for passenger seat were set to be practicable (Step SA121). Here, as a method for notification, a method of outputting by voice through the speakers 17 (beeps may be adoptable) and a method of displaying a notification picture are exemplified, and the display of the above-described words 'PA SEAT' 56_{DR} and 56_{PA} may work as a notification.

When it is judged that the passenger seat flag f_{PA} is 1 (i.e. operations to the image G_{PA} for passenger seat have been already set to be practicable) in Step SA113, the timer t_{PA} is returned to 0 (Step SA122) and the processing operation [7-2] is concluded at once.

On the other hand, when it is judged that the setting switch 41_{PA} has not been operated (i.e. neither the setting switch 41_{DR} nor 41_{PA} has been operated) in Step SA112, the processing operation goes to Step SA131 (Fig. 54-2), wherein which operation other than operations to the setting switches 41_{DR} and 41_{PA} was conducted is judged. Here, since Steps SA131-SA152 shown in Fig. 54-2 are similar to Steps SA41-62 shown in Fig. 49-2, they are not described below.

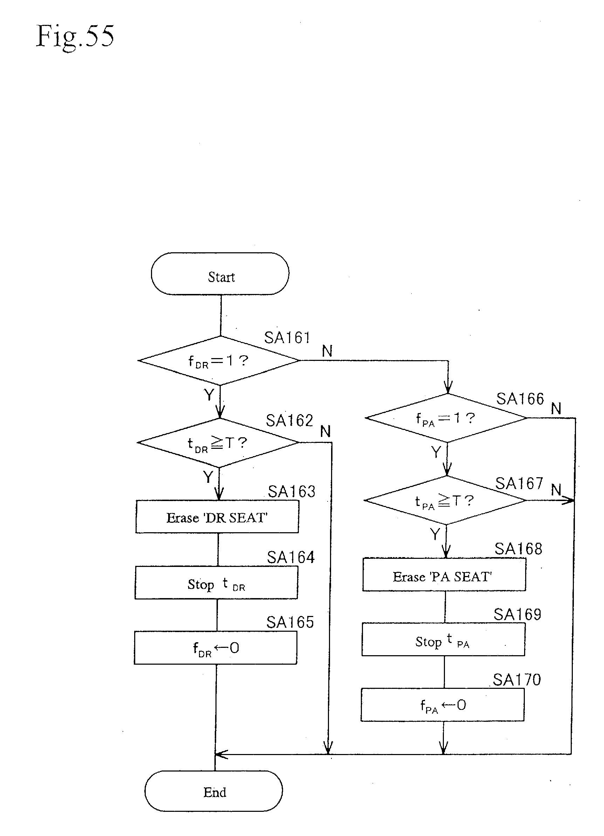

A processing operation [7-3] performed by the control unit 100A in the AV navigation system wherein the display device according to the seventh embodiment is adopted is described below with a flowchart shown in Fig. 55. Here, this processing operation [7-3] is performed at every prescribed interval in the separate display mode (i.e. when the separate display flag f_{SE} is 1).

Whether the driver's seat flag f_{DR} is 1 or not is judged (Step SA161). When it is judged that the driver's seat flag f_{DR} is 1, whether the timer t_{DR} has counted to a predetermined time T (e.g. 6 sec.) or more is judged (Step SA162). When it is judged that the timer t_{DR} has counted to the predetermined time T or more (i.e. 6 sec. has elapsed since the last operation was conducted), the words 'DR SEAT' 55_{DR} and 55_{PA} displayed on the image G_{DR} for driver's seat and the image G_{PA} for passenger seat are erased (Step SA163), the timer t_{DR} is brought to a stop (Step SA164), and the driver's seat flag f_{DR} is turned to 0 (Step SA165). On the other hand, when it is judged that the timer t_{DR} has counted to less than the predetermined time T, the processing operation [7-3] is concluded at once.

When it is judged that the driver's seat flag f_{DR} is not 1 in Step SA161, whether the passenger seat flag f_{PA} is 1 or not is judged (Step SA166). When it is judged that the passenger seat flag f_{PA} is 1, whether the timer t_{PA} has counted to the predetermined time T or more is judged (Step SA167). When it is judged that the timer t_{PA} has counted to the predetermined time T or more (i.e. 6 sec. has elapsed since the last operation was conducted), the words 'PA SEAT' 56_{DR} and 56_{PA} displayed on the image G_{DR} for driver's seat and the image G_{PA} for passenger seat are erased (Step SA168), the timer t_{PA} is brought to a stop (Step SA169), and the passenger seat flag f_{PA} is turned to 0 (Step SA170). On the other hand, when it is judged that the timer t_{PA} has counted to less than the predetermined time T or that the passenger seat flag f_{PA} is not 1, the processing operation [7-3] is concluded at once.

By using the AV navigation system wherein the display device according to the seventh embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable, or operations to neither of them are practicable.

Therefore, for example, in cases where the operating switches 43_{DR}-48_{DR} and 43_{PA}-48_{PA} arranged in the same areas E₇-E₁₂ are operated when operations to the image G_{DR} for driver's seat are practicable as shown in Fig. 52, operation control corresponding to the operating switches 43_{DR}-48_{DR} is conducted. On the other hand, in cases where the operating switches 43_{DR}-48_{DR} and 43_{PA}-48_{PA} are operated when operations to the image G_{PA} for passenger seat are practicable as shown in Fig. 53, operation control corresponding to the operating switches 43_{PA}-48_{PA} is conducted. That is, operation control on the image to which operations are impracticable is not conducted.

Furthermore, by using the display device according to the seventh embodiment, the user is notified operations to which image of the image G_{DR} for driver's seat and the image G_{PA} for passenger seat are practicable. For example, both the driver DR and the passenger PA in the passenger seat are notified that operations to the image G_{DR} for driver's seat are practicable. As a result, the users can correctly recognize whether operations to the image one can see are practicable or not. Thus, it is possible to prevent wrong operations by the users.

In the display device according to the seventh embodiment, both the image to which operations are practicable and the image to which operations are impracticable are changed in display mode, respectively, but in another embodiment, the display mode of either of them may be changed.

An AV navigation system wherein a display device according to an eighth embodiment is adopted is described below. Here, since the construction of said AV navigation system is similar to that of the AV navigation system shown in Fig. 5 except the control unit 100, a control unit is differently marked and the other components are not described below.

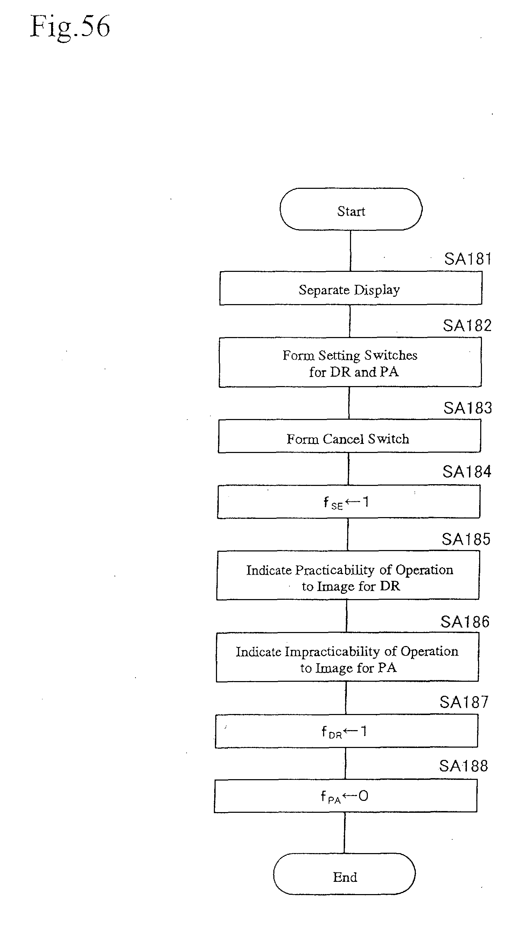

A processing operation [8-1] performed by the control unit 100B in the AV navigation system wherein the display device according to the eighth embodiment is adopted is described below with a flowchart shown in Fig. 56. Here, this processing operation [8-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on a display unit 4, an operating unit 15, a remote control 123 or the like.

Here, in cases where the separate display is standard (i.e. the separate display starts after turning-on of the AV navigation system), the user's instruction for separate display is not required. And therefore, the processing operation [8-1] described below is not needed and a separate display flag f_{SE} for showing that the separate display has been conducted is not required.

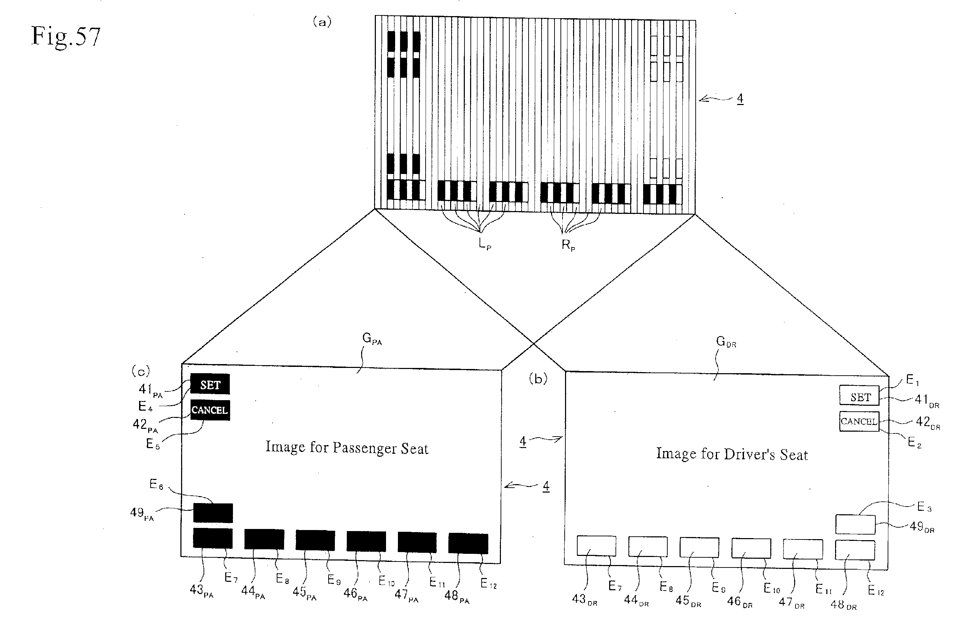

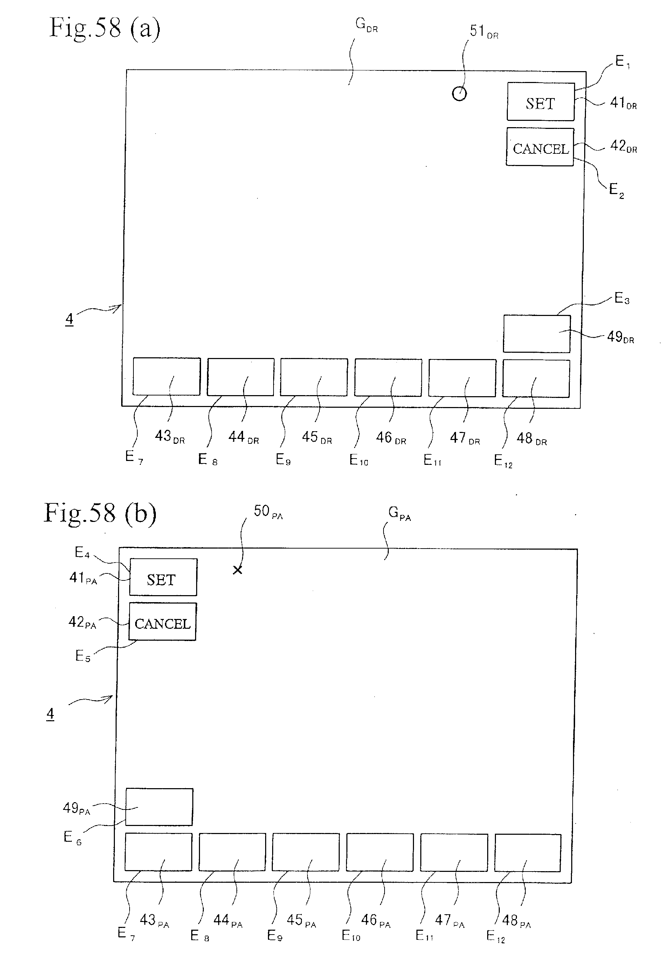

When an instruction for separate display is provided by the user, based on prescribed conditions, one of two images is displayed as an image G_{DR} for driver's seat and the rest is displayed as an image G_{PA} for passenger seat as shown in Figs. 57 and 58 (Step SA181). A setting switch 41_{DR} for setting operations to the image G_{DR} for driver's seat to be practicable is formed on the upper right portion of said image G_{DR}, while a setting switch 41_{PA} for setting operations to the image G_{PA} for passenger seat to be practicable is formed on the upper left portion of said image G_{PA} (Step SA182).

Fig. 57(a) is an illustration to describe pixels used for the image G_{DR} for driver's seat and pixels used for the image G_{PA} for passenger seat, Fig. 57(b) is a diagram showing an example of the image G_{DR} for driver's seat and Fig. 57(c) is a diagram showing an example of the image G_{PA} for passenger seat. As shown in Fig. 57(a), a half of the total number of lateral pixels, even-numbered lines (pixels R_{P} for the right) are used for the image G_{DR} for driver's seat, while odd-numbered lines (pixels Lp for the left) are used for the image G_{PA} for passenger seat.

Fig. 58(a) is an enlarged diagram showing an example of the image G_{DR} for driver's seat, and Fig. 58(b) is an enlarged diagram showing an example of the image G_{PA} for passenger seat. As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified.

As can be seen from Figs. 57 and 58, the setting switch 41_{DR}, a cancel switch 42_{DR} and an operating switch 49_{DR} are arranged within areas E₁-E₃, while the setting switch 41_{PA}, a cancel switch 42_{PA} and an operating switch 49_{PA} are arranged within areas E₄-E₆ which do not overlap the areas E₁-E₃. And the setting switch 41_{DR}, the cancel switch 42_{DR} and the operating switch 49_{DR} are arranged in such a manner to receive only operation inputs related to the image G_{DR} for driver's seat, while the setting switch 41_{PA}, the cancel switch 42_{PA} and the operating switch 49_{PA} are arranged in such a manner to receive only operation inputs related to the image G_{PA} for passenger seat.

Operating switches 43_{DR}-48_{DR} formed on the image G_{DR} for driver's seat and operating switches 43_{PA}-48_{PA} formed on the image G_{PA} for passenger seat are arranged within the same areas E₇-E₁₂. These switches are arranged in such a manner that the operation areas for the image G_{DR} for driver's seat on the display screen and the operation areas for the image G_{PA} for passenger seat on the display screen overlap each other. Operating switches 15a-15h (see Fig. 9) arranged around the display unit 4 may include only switches which can deal with both the image G_{DR} for driver's seat and the image G_{PA} for passenger seat, or switches which can deal with either of them, or a combination of the both.

After the processing in Step SA182, the cancel switches 42_{DR} and 42_{PA} for canceling this separate display are formed on the image G_{DR} for driver's seat and the image G_{PA} for passenger seat, respectively (Step SA183). Thereafter, the separate display flag f_{SE} for showing that the separate display has been conducted is set to be 1 (Step SA184). In order to inform the driver DR that operations to the image G_{DR} for driver's seat are practicable, a display indicating practicability of the operations is made on the image G_{DR} for driver's seat, while in order to inform the passenger PA in the passenger seat that operations to the image G_{PA} for passenger seat are impracticable, a display indicating impracticability of the operations is made on the image G_{PA} for passenger seat (Steps SA185 and SA186).

For example, as shown in Fig. 58, by displaying a mark '○' 51_{DR} on the upper right portion of the image G_{DR} for driver's seat, the driver DR is notified that operations to the image G_{DR} for driver's seat are practicable, while by displaying a mark '×' 50_{PA} on the upper left portion of the image G_{PA} for passenger seat, the passenger PA in the passenger seat is notified that operations to the image G_{PA} for passenger seat are impracticable.

A driver's seat flag f_{DR} for showing that operations to the image G_{DR} for driver's seat are practicable/impracticable is set to be 1 (operations to the image G_{DR} for driver's seat are practicable), while a passenger seat flag f_{PA} for showing that operations to the image G_{PA} for passenger seat are practicable/impracticable is set to be 0 (operations to the image G_{PA} for passenger seat are impracticable) (Step SA188).

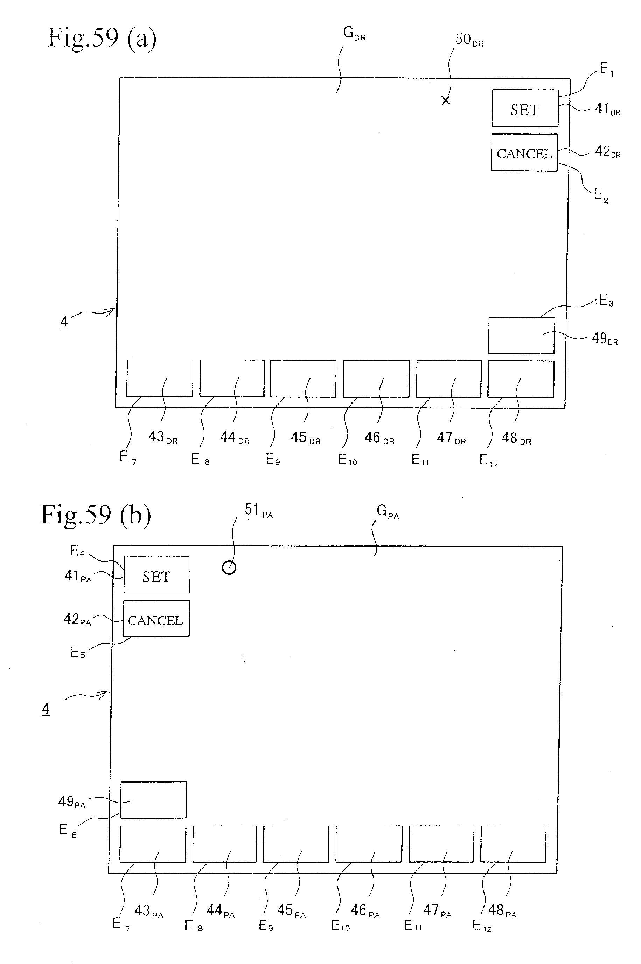

In cases where operations to the image G_{PA} for passenger seat are practicable, as shown in Fig. 59, by displaying a mark '×' 50_{DR} on the upper right portion of the image G_{DR} for driver's seat, the driver DR is notified that operations to the image G_{DR} for driver's seat are impracticable, while by displaying a mark '○' 51_{PA} on the upper left portion of the image G_{PA} for passenger seat, the passenger PA in the passenger seat is notified that operations to the image G_{PA} for passenger seat are practicable.

Here, the mode of notifying that operations to the image is practicable or impracticable is not limited to the display of the marks '○' 51_{DR} and 51_{PA}, and the marks '×' 50_{DR} and 50_{PA}. As shown in Figs. 52 and 53, words 'DR SEAT' 55_{DR} and 55_{PA}, and words 'PA SEAT' 56_{DR} and 56_{PA} may be displayed.

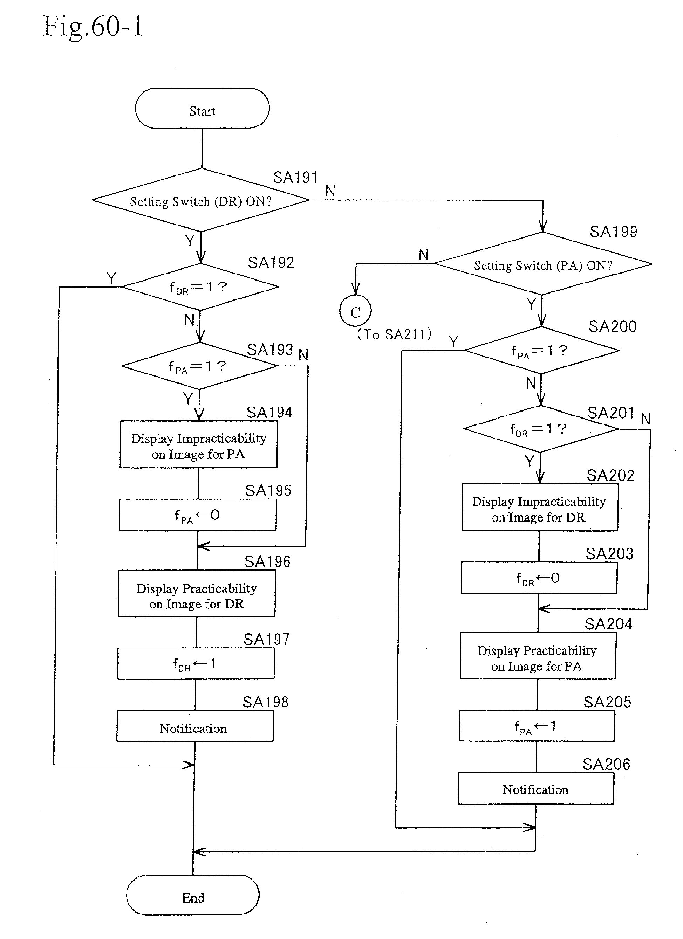

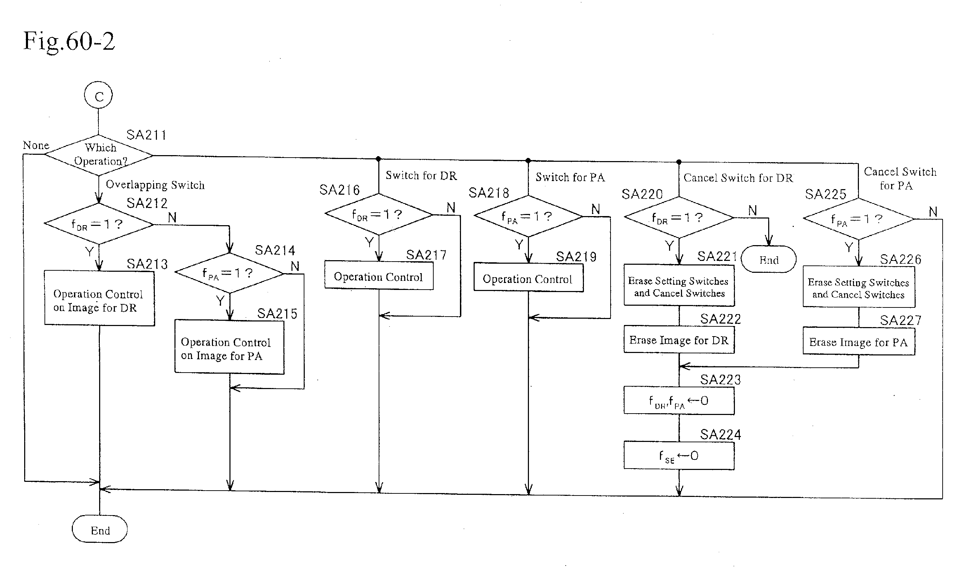

A processing operation [8-2] performed by the control unit 100B in the AV navigation system wherein the display device according to the eighth embodiment is adopted is described below with flowcharts shown in Figs. 60-1 and 60-2. Here, this processing operation [8-2] is performed in cases where the user operated the setting switch 41_{DR} or 41_{PA}, the cancel switch 42_{DR} or 42_{PA}, or the operating switches 43_{DR}-49_{DR} or 43_{PA}-49_{PA} formed on the display unit 4, the operating switches 15a-15h constituting the operating unit 15, the remote control 123 or the like. In another embodiment, the processing operation [8-2] may be performed when a user's finger approached an operating switch or the like, or when a start of operation can be estimated. Here, as described above, when the separate display is standard, as a matter of course, the separate display flag f_{SE} is not required, and therefore, it is not included in starting conditions that the separate display flag f_{SE} is 1.

Whether the setting switch 41_{DR} for setting operations to the image G_{DR} for driver's seat to be practicable was operated or not is judged (Step SA191). When it is judged that the setting switch 41_{DR} was operated, whether the driver's seat flag f_{DR} showing that operations to the image G_{DR} for driver's seat are practicable/impracticable is 1 or not is judged (Step SA192).

When it is judged that the driver's seat flag f_{DR} is not 1 (i.e. operations to the image G_{DR} for driver's seat have not been set to be practicable), whether the passenger seat flag f_{PA} showing that operations to the image G_{PA} for passenger seat are practicable/impracticable is 1 or not is judged (Step SA193). When it is judged that the passenger seat flag f_{PA} is 1 (i.e. operations to the image G_{PA} for passenger seat have been set to be practicable), the mark '○' 51_{PA} displayed on the image G_{PA} for passenger seat is erased and in place of that, the mark '×' 50_{PA} is displayed (Step SA194), the passenger seat flag f_{PA} is returned to 0 (Step SA195), and then, the processing operation goes to Step SA196. On the other hand, when it is judged that the passenger seat flag f_{PA} is not 1 in Step SA193, Steps SA194 and SA195 are bypassed and the processing operation directly goes to Step SA196.

Here, a case where the mark '○' 51_{DR} or 51_{PA} and the mark '×' 50_{DR} or 50_{PA} are displayed has been described, but as described above, the mode of notifying that operations to the image is practicable or impracticable is not limited to this. However, in order to make the description simpler, a case where the mark '○' 51_{DR} or 51_{PA} is displayed on an image to which operations are practicable and the mark '×' 50_{DR} or 50_{PA} is displayed on an image to which operations are impracticable is described here.

The mark '×' 50_{DR} displayed on the image G_{DR} for driver's seat is erased and in place of that, the mark '○' 51_{DR} is displayed (Step SA196). The driver's seat flag f_{DR} is set to be 1 (Step SA197), and then, the user is notified that operations to the image G_{DR} for driver's seat were set to be practicable (Step SA198). Here, as a method for notification, a method of outputting by voice through speakers 17 (beeps may be adoptable) and a method of displaying a notification picture are exemplified, and the display of the above-described mark '○' 51_{DR} and mark '×' 50_{DR} may work as a notification.

When it is judged that the driver's seat flag f_{DR} is 1 (i.e. operations to the image G_{DR} for driver's seat have been already set to be practicable) in Step SA192, the processing operation [8-2] is concluded at once.

On the other hand, when it is judged that the setting switch 41_{DR} has not been operated in Step SA191, whether the setting switch 41_{PA} for setting operations to the image G_{PA} for passenger seat to be practicable was operated or not is judged (Step SA199). When it is judged that the setting switch 41_{PA} was operated, whether the passenger seat flag f_{PA} is 1 or not is judged (Step SA200).

When it is judged that the passenger seat flag f_{PA} is not 1 (i.e. operations to the image G_{PA} for passenger seat have not been set to be practicable), whether the driver's seat flag f_{DR} is 1 or not is judged (Step SA201). When it is judged that the driver's seat flag f_{DR} is 1 (i.e. operations to the image G_{DR} for driver's seat have been set to be practicable), the mark '○' 51_{DR} displayed on the image G_{DR} for driver's seat is erased and in place of that, the mark '×' 50_{DR} is displayed (Step SA202). The driver's seat flag f_{DR} is returned to 0 (Step SA203), and then, the processing operation goes to Step SA204. On the other hand, when it is judged that the driver's seat flag f_{DR} is not 1 in Step SA201, Steps SA202 and SA203 are bypassed and the processing operation directly goes to Step SA204.

The mark '×' 50_{PA} displayed on the image G_{PA} for passenger seat is erased and in place of that, the mark '○' 51_{PA} is displayed (Step SA204). The passenger seat flag f_{PA} is set to be 1 (Step SA205), and then, the user is notified that operations to the image G_{PA} for passenger seat were set to be practicable (Step SA206). Here, as a method for notification, a method of outputting by voice through the speakers 17 (beeps may be adoptable) and a method of displaying a notification picture are exemplified, and the display of the above-described mark '○' 51_{PA} and mark '×' 50_{DR} may work as a notification.

When it is judged that the passenger seat flag f_{PA} is 1 (i.e. operations to the image G_{PA} for passenger seat have been already set to be practicable) in Step SA200, the processing operation [8-2] is concluded at once.

On the other hand, when it is judged that the setting switch 41_{PA} has not been operated (i.e. neither the setting switch 41_{DR} nor 41_{PA} has been operated) in Step SA199, the processing operation goes to Step SA211 (Fig. 60-2), wherein which operation other than operations to the setting switches 41_{DR} and 41_{PA} was conducted is judged.

When it is judged that an operating switch arranged in such a manner that the operation area for the image G_{DR} for driver's seat on the display screen and the operation area for the image G_{PA} for passenger seat on the display screen overlap each other (an overlapping switch (e.g. the operating switches 43_{DR}-48_{DR} and 43_{PA}-48_{PA})) was operated, whether the driver's seat flag f_{DR} is 1 or not is judged (Step SA212). When it is judged that the driver's seat flag f_{DR} is 1 (i.e. operations to the image G_{DR} for driver's seat have been set to be practicable), operation control on the image G_{DR} for driver's seat according to the operation is conducted (Step SA213).

On the other hand, when it is judged that the driver's seat flag f_{DR} is not 1, whether the passenger seat flag f_{PA} is 1 or not is judged (Step SA214). When it is judged that the passenger seat flag f_{PA} is 1 (i.e. operations to the image G_{PA} for passenger seat have been set to be practicable), operation control on the image G_{PA} for passenger seat according to the operation is conducted (Step SA215). When it is judged that the passenger seat flag f_{PA} is not 1, the operation is regarded as being invalid and the processing operation [8-2] is concluded at once.

When it is judged that an operating switch which receives only operation inputs to the image G_{DR} for driver's seat (e.g. the operating switch 49_{DR}, excluding the setting switch 41_{DR} and the cancel switch 42_{DR}) was operated in Step SA211, whether the driver's seat flag f_{DR} is 1 or not is judged (Step SA216). When it is judged that the driver's seat flag f_{DR} is 1 (i.e. operations to the image G_{DR} for driver's seat have been set to be practicable), operation control according to the operation is conducted (Step SA217). On the other hand, when it is judged that the driver's seat flag f_{DR} is not 1, the operation is regarded as being invalid and the processing operation [8-2] is concluded at once.

When it is judged that an operating switch which receives only operation inputs to the image G_{PA} for passenger seat (e.g. the operating switch 49_{PA}, excluding the setting switch 41_{PA} and the cancel switch 42_{PA}) was operated in Step SA211, whether the passenger seat flag f_{PA} is 1 or not is judged (Step SA218). When it is judged that the passenger seat flag f_{PA} is 1 (i.e. operations to the image G_{PA} for passenger seat have been set to be practicable), operation control according to the operation is conducted (Step SA219). On the other hand, when it is judged that the passenger seat flag f_{PA} is not 1, the operation is regarded as being invalid and the processing operation [8-2] is concluded at once.

When it is judged that the cancel switch 42_{DR} for canceling the separate display formed on the image G_{DR} for driver's seat was operated in Step SA211, whether the driver's seat flag f_{DR} is 1 or not is judged (Step SA220). When it is judged that the driver's seat flag f_{DR} is 1, the setting switches 41_{DR} and 41_{PA}, and the cancel switches 42_{DR} and 42_{PA} are erased from the screen (Step SA221). The image G_{DR} for driver's seat of the two images is erased and the image G_{PA} for passenger seat is displayed in a full-screen mode (Step SA222). The driver's seat flag f_{DR} and the passenger seat flag f_{PA} are returned to 0 (Step SA223), and then, the separate display flag f_{SE} is returned to 0 (Step SA224). On the other hand, when it is judged that the driver's seat flag f_{DR} is not 1, the operation is regarded as being invalid and the processing operation [8-2] is concluded at once.

When it is judged that the cancel switch 42_{PA} for canceling the separate display formed on the image G_{PA} for passenger seat was operated in Step SA211, whether the passenger seat flag f_{PA} is 1 or not is judged (Step SA225). When it is judged that the passenger seat flag f_{PA} is 1, the setting switches 41_{DR} and 41_{PA}, and the cancel switches 42_{DR} and 42_{PA} are erased from the screen (Step SA226). The image G_{PA} for passenger seat of the two images is erased and the image G_{DR} for driver's seat is displayed in the full-screen mode (Step SA227), and then, the processing operation goes to Step SA223.

By using the AV navigation system wherein the display device according to the eighth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable.

Furthermore, every user is notified whether operations to the image the user is watching are practicable or not. For example, the driver DR is notified whether operations to the image G_{DR} for driver's seat are practicable or not, while the passenger PA in the passenger seat is notified whether operations to the image G_{PA} for passenger seat are practicable or not. As a result, the driver DR and the passenger PA in the passenger seat can correctly recognize whether operations to the image one is watching are practicable or not. Thus, it is possible to prevent wrong operations by the users. And since operations to one of the image G_{DR} for driver's seat and the image G_{PA} for passenger seat are always practicable, differently from the display device according to the sixth embodiment, it is possible to reduce the frequency of operating the setting switches 41_{DR} and 41_{PA}.

By using the display device according to the eighth embodiment, every user is notified whether operations to the image the user is watching are practicable or not, like the display device according to the sixth embodiment, but in another embodiment, the users may be notified to which image of the image G_{DR} for driver's seat and the image G_{PA} for passenger seat operations are practicable, like the display device according to the seventh embodiment.

By using the display devices according to the sixth to eighth embodiments, when the setting switch 41_{DR} is operated, operations to the image G_{DR} for driver's seat are set to be practicable, while when the setting switch 41_{PA} is operated, operations to the image G_{PA} for passenger seat are set to be practicable. But in another embodiment, the setting switches 41_{DR} and 41_{PA} may have the same function, wherein when either of the setting switches 41_{DR} and 41_{PA} is operated, the image to which operations are practicable may be switched in a cyclic manner.

In still another embodiment, without forming the setting switches 41_{DR} and 41_{PA} for the driver's seat and the passenger seat, respectively, the image to which operations are practicable may be switched in a cyclic manner by operating one switch. Or the switching of the image to which operations are practicable may be conducted not by operating one switch but with an elapse of time (e.g. switching every one minute).

An AV navigation system wherein a display device according to a ninth embodiment is adopted is described below. Here, since the construction of said AV navigation system is similar to that of the AV navigation system shown in Fig. 5 except the control unit 100, a control unit is differently marked and the other components are not described below.

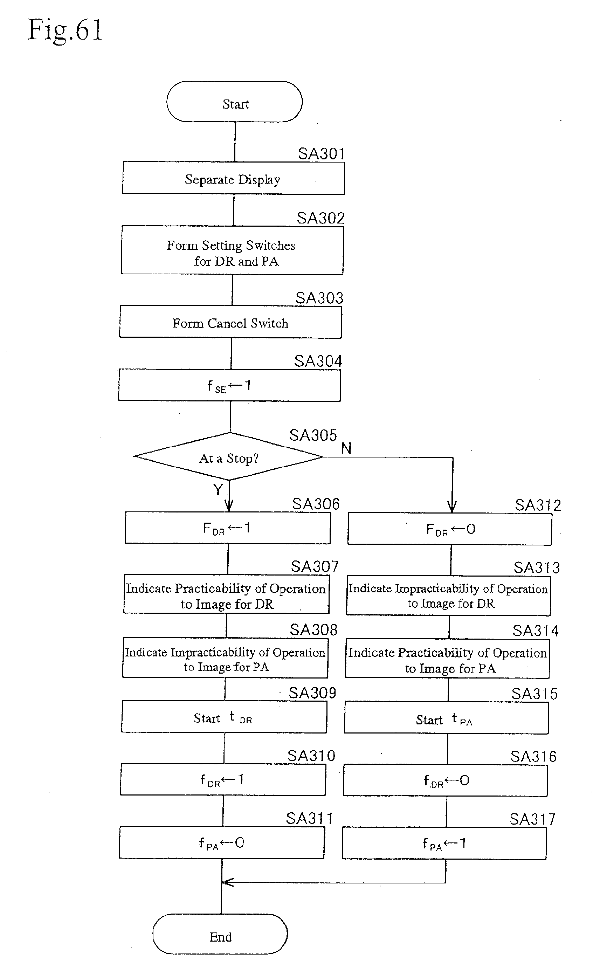

A processing operation [9-1] performed by the control unit 100C in the AV navigation system wherein the display device according to the ninth embodiment is adopted is described below with a flowchart shown in Fig. 61. Here, this processing operation [9-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on a display unit 4, an operating unit 15, a remote control 123 or the like.

Here, in cases where the separate display is standard (i.e. the separate display starts after turning-on of the AV navigation system), the user's instruction for separate display is not required. And therefore, the processing operation [9-1] described below is not needed and a separate display flag f_{SE} for showing that the separate display has been conducted is not required.

When an instruction for separate display is provided by the user, based on prescribed conditions, one of two images is displayed as an image G_{DR} for driver's seat and the rest is displayed as an image G_{PA} for passenger seat as shown in Figs. 57 and 58 (Step SA301). A setting switch 41_{DR} for setting operations to the image G_{DR} for driver's seat to be practicable is formed on the upper right portion of said image G_{DR}, while a setting switch 41_{PA} for setting operations to the image G_{PA} for passenger seat to be practicable is formed on the upper left portion of said image G_{PA} (Step SA302).

Cancel switches 42_{DR} and 42_{PA} for canceling this separate display are formed on the image G_{DR} for driver's seat and the image G_{PA} for passenger seat, respectively (Step SA303). Thereafter, the separate display flag f_{SE} for showing that the separate display has been conducted is set to be 1 (Step SA304). Based on speed information obtained from a navigation unit 106, whether the vehicle is at a stop or not is judged (Step SA305). Here, the speed information may be directly obtained from a speed sensor.

When it is judged that the vehicle is at a stop, a priority flag F_{DR} is turned to 1 and priority is given to the image G_{DR} for driver's seat (Step SA306). In order to inform the driver DR that operations to the image G_{DR} for driver's seat are practicable, a display indicating practicability of the operations is made on the image G_{DR} for driver's seat, while in order to inform the passenger PA in the passenger seat that operations to the image G_{PA} for passenger seat are impracticable, a display indicating impracticability of the operations is made on the image G_{PA} for passenger seat (Steps SA307 and SA308).

For example, as shown in Fig. 58, by displaying a mark '○' 51_{DR} on the upper right portion of the image G_{DR} for driver's seat, the driver DR is notified that operations to the image G_{DR} for driver's seat are practicable, while by displaying a mark '×' 50_{PA} on the upper left portion of the image G_{PA} for passenger seat, the passenger PA in the passenger seat is notified that operations to the image G_{PA} for passenger seat are impracticable.

A timer t_{DR} for measuring a time during which no operation to the image G_{DR} for driver's seat is conducted (i.e. a time elapsed after the last operation) is turned to 0 and started up (Step SA309). A driver's seat flag f_{DR} for showing that operations to the image G_{DR} for driver's seat are practicable/impracticable is set to be 1 (operations to the image G_{DR} for driver's seat are practicable) (Step SA310), while a passenger seat flag f_{PA} for showing that operations to the image G_{PA} for passenger seat are practicable/impracticable is set to be 0 (operations to the image G_{PA} for passenger seat are impracticable) (Step SA311).

On the other hand, when it is judged that the vehicle is not at a stop in Step SA305, the priority flag F_{DR} is turned to 0 and priority is given to the image G_{PA} for passenger seat (Step SA312). In order to inform the driver DR that operations to the image G_{DR} for driver's seat are impracticable, a display indicating impracticability of the operations is made on the image G_{DR} for driver's seat, while in order to inform the passenger PA in the passenger seat that operations to the image G_{PA} for passenger seat are practicable, a display indicating practicability of the operations is made on the image G_{PA} for passenger seat (Steps SA313 and SA314).

For example, as shown in Fig. 59, by displaying a mark '×' 50_{DR} on the upper right portion of the image G_{DR} for driver's seat, the driver DR is notified that operations to the image G_{DR} for driver's seat are impracticable, while by displaying a mark '○' 51_{PA} on the upper left portion of the image G_{PA} for passenger seat, the passenger PA in the passenger seat is notified that operations to the image G_{PA} for passenger seat are practicable.

A timer t_{PA} for measuring a time during which no operation to the image G_{PA} for passenger seat is conducted (i.e. a time elapsed after the last operation) is turned to 0 and started up (Step SA315). The driver's seat flag f_{DR} is set to be 0 (operations to the image G_{DR} for driver's seat are impracticable) (Step SA316), while the passenger seat flag f_{PA} is set to be 1 (operations to the image G_{PA} for passenger seat are practicable) (Step SA317). Here, the mode of notifying that operations to the image are practicable or impracticable is not limited to the display of the marks '○' 51_{DR} and 51_{PA}, and the marks '×' 50_{DR} and 50_{PA}. As shown in Figs. 52 and 53, words 'DR SEAT' 55_{DR} and 55_{PA}, and words 'PA SEAT' S6_{DR} and 56_{PA} may be displayed.

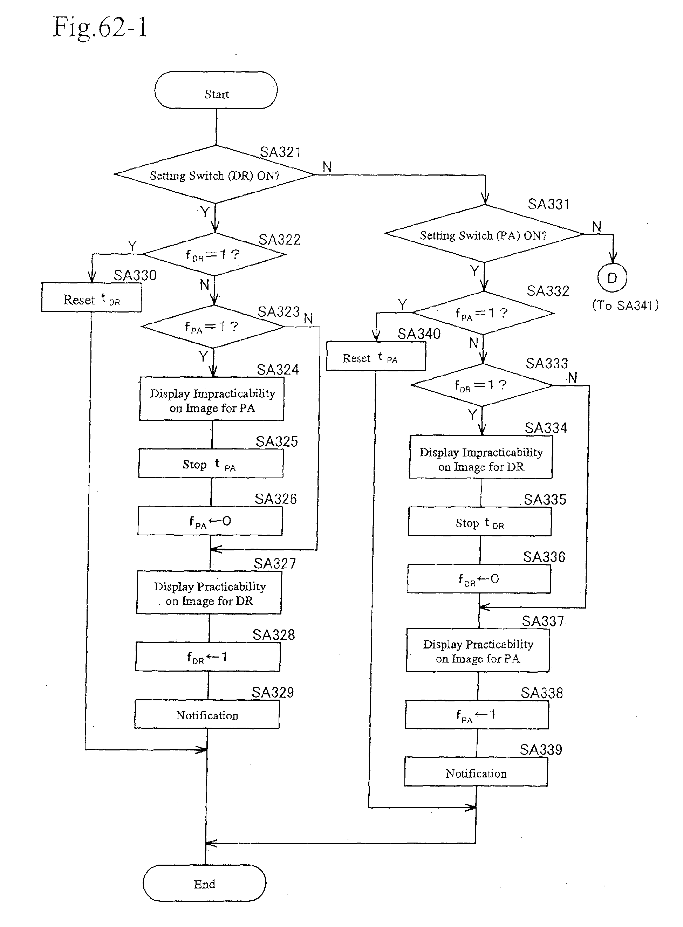

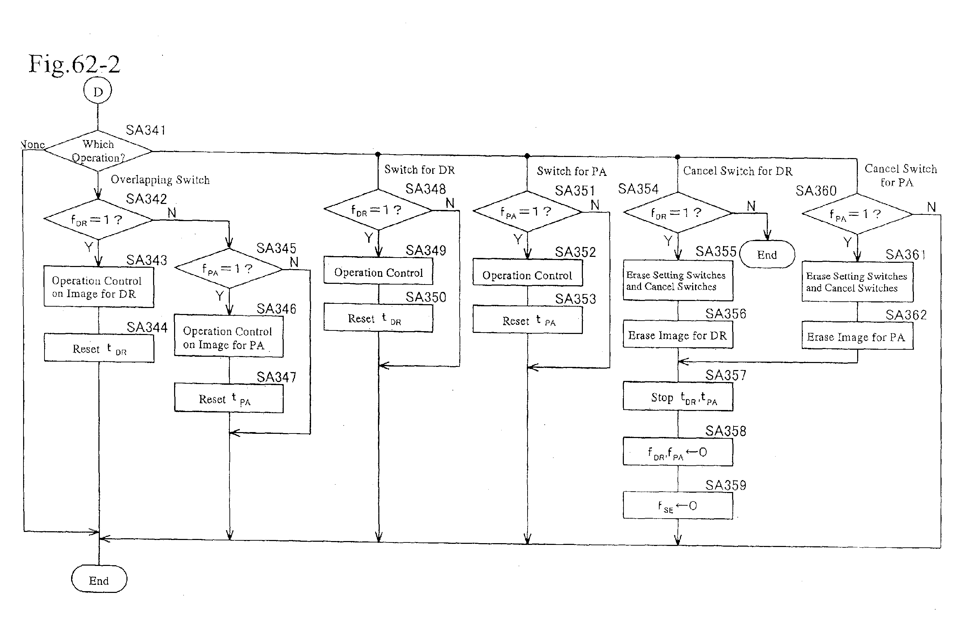

A processing operation [9-2] performed by the control unit 100C in the AV navigation system wherein the display device according to the ninth embodiment is adopted is described below with flowcharts shown in Figs. 62-1 and 62-2. Here, this processing operation [9-2] is performed in cases where the user operated the setting switches 41_{DR} or 41_{PA}, the cancel switches 42_{DR} or 42_{PA}, or operating switches 43_{DR}-49_{DR} or 43_{PA}-49_{PA} formed on the display unit 4, operating switches 15a-15h constituting the operating unit 15 or the like.

Whether the setting switch 41_{DR} for setting operations to the image G_{DR} for driver's seat to be practicable was operated or not is judged (Step SA321). When it is judged that the setting switch 41_{DR} was operated, whether the driver's seat flag f_{DR} showing that operations to the image G_{DR} for driver's seat are practicable/impracticable is 1 or not is judged (Step SA322).

When it is judged that the driver's seat flag f_{DR} is not 1 (i.e. operations to the image G_{DR} for driver's seat have not been set to be practicable), whether the passenger seat flag f_{PA} showing that operations to the image G_{PA} for passenger seat are practicable/impracticable is 1 or not is judged (Step SA323). When it is judged that the passenger seat flag f_{PA} is 1 (i.e. operations to the image G_{PA} for passenger seat have been set to be practicable), the mark '○' 51_{PA} displayed on the image G_{PA} for passenger seat is erased and in place of that, the mark '×' 50_{PA} is displayed (Step SA324). The timer t_{PA} is brought to a stop (Step SA325), the passenger seat flag f_{PA} is returned to 0 (Step SA326), and then, the processing operation goes to Step SA327. On the other hand, when it is judged that the passenger seat flag f_{PA} is not 1 in Step SA323, Steps SA324-SA326 are bypassed and the processing operation directly goes to Step SA327.

Here, a case where the mark '○' 51_{DR} or 51_{PA} and the mark '×' 50_{DR} or 50_{PA} are displayed has been described, but as described above, the mode of notifying that operations to the image are practicable or impracticable is not limited to this. However, in order to make the description simpler, a case where the mark '○' 51_{DR} or 51_{PA} is displayed on an image to which operations are practicable and the mark '×' 50_{DR} or 50_{PA} is displayed on an image to which operations are impracticable is described here.

The mark '×' 50_{DR} displayed on the image G_{DR} for driver's seat is erased and in place of that, the mark '○' 51_{DR} is displayed (Step SA327). The driver's seat flag f_{DR} is set to be 1 (Step SA328), and then, the user is notified that operations to the image G_{DR} for driver's seat were set to be practicable (Step SA329). Here, as a method for notification, a method of outputting by voice through speakers 17 (beeps may be adoptable) and a method of displaying a notification picture are exemplified, and the display of the above-described mark '○' 51_{DR} and mark '×' 50_{PA} may work as a notification.

When it is judged that the driver's seat flag f_{DR} is 1 (i.e. operations to the image G_{DR} for driver's seat have been already set to be practicable) in Step SA322, the timer t_{DR} is returned to 0 (Step SA330), and the processing operation [9-2] is concluded at once.

On the other hand, when it is judged that the setting switch 41_{DR} has not been operated in Step SA321, whether the setting switch 41_{PA} for setting operations to the image G_{PA} for passenger seat to be practicable was operated or not is judged (Step SA331). When it is judged that the setting switch 41_{PA} was operated, whether the passenger seat flag f_{PA} is 1 or not is judged (Step SA332).

When it is judged that the passenger seat flag f_{PA} is not 1 (i.e. operations to the image G_{PA} for passenger seat have not been set to be practicable), whether the driver's seat flag f_{DR} is 1 or not is judged (Step SA333). When it is judged that the driver's seat flag f_{DR} is 1 (i.e. operations to the image G_{DR} for driver's seat have been set to be practicable), the mark '○' 51_{DR} displayed on the image G_{DR} for driver's seat is erased and in place of that, the mark '×' 50_{DR} is displayed (Step SA334). The timer t_{DR} is brought to a stop (Step SA335), the driver's seat flag f_{DR} is returned to 0 (Step SA336), and then, the processing operation goes to Step SA337. On the other hand, when it is judged that the driver's seat flag f_{DR} is not 1 in Step SA333, Steps SA334-SA336 are bypassed and the processing operation directly goes to Step SA337.

The mark '×' 50_{PA} displayed on the image G_{PA} for passenger seat is erased and in place of that, the mark '○' 51_{PA} is displayed (Step SA337). The passenger seat flag f_{PA} is set to be 1 (Step SA338), and then, the user is notified that operations to the image G_{PA} for passenger seat were set to be practicable (Step SA339). Here, as a method for notification, a method of outputting by voice through the speakers 17 (beeps may be adoptable) and a method of displaying a notification picture are exemplified, and the display of the above-described mark '○' 51_{PA} and mark '×' 50_{DR} may work as a notification.

When it is judged that the passenger seat flag f_{PA} is 1 (i.e. operations to the image G_{PA} for passenger seat have been already set to be practicable) in Step SA332, the timer t_{PA} is returned to 0 (Step SA340) and the processing operation [9-2] is concluded at once.

On the other hand, when it is judged that the setting switch 41_{PA} has not been operated (i.e. neither the setting switch 41_{DR} nor 41_{PA} has been operated) in Step SA331, the processing operation goes to Step SA341 (Fig. 62-2), wherein which operation other than operations to the setting switches 41_{DR} and 41_{PA} was conducted is judged. Here, since Steps SA341-SA362 shown in Fig. 62-2 are similar to Steps SA41-62 shown in Fig. 49-2, they are not described below.

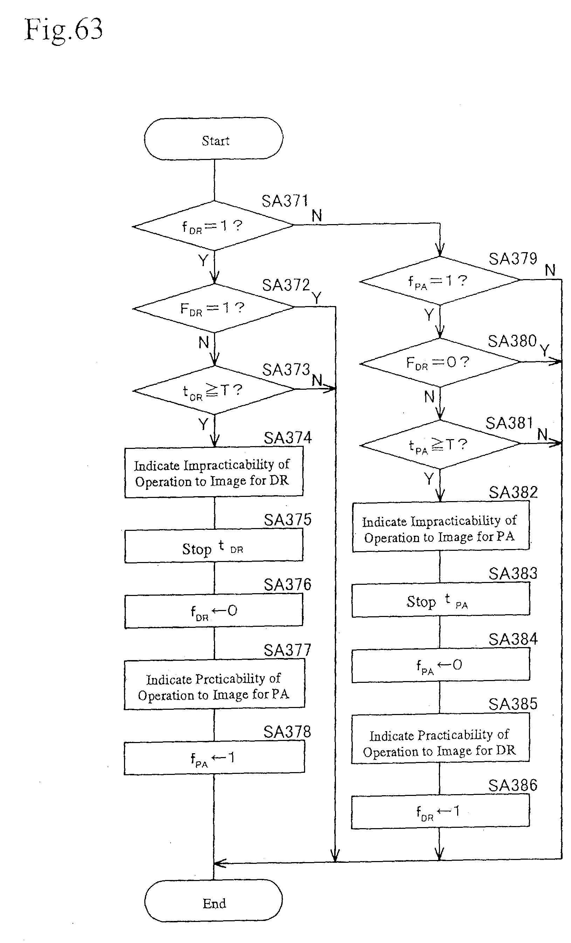

A processing operation [9-3] performed by the control unit 100C in the AV navigation system wherein the display device according to the ninth embodiment is adopted is described below with a flowchart shown in Fig. 63. Here, this processing operation [9-3] is performed at every prescribed interval in the separate display mode (i.e. when the separate display flag f_{SE} is 1).

Whether the driver's seat flag f_{DR} is 1 or not is judged (Step SA371). When it is judged that the driver's seat flag f_{DR} is 1, whether the priority flag F_{DR} is 1 or not is judged (Step SA372). When it is judged that the priority flag F_{DR} is not 1 (i.e. priority has been given to not the image G_{DR} for driver's seat but the image G_{PA} for passenger seat), whether the timer top has counted to a predetermined time T (e.g. 6 sec.) or more is judged (Step SA373).

When it is judged that the timer t_{DR} has counted to the predetermined time T or more (i.e. 6 sec. has elapsed since the last operation was conducted), the mark '○' 51_{DR} displayed on the image G_{DR} for driver's seat is erased and in place of that, the mark '×' 50_{DR} is displayed (Step SA374). The timer t_{DR} is brought to a stop (Step SA375), and the driver's seat flag f_{DR} is returned to 0 (Step SA376). And the mark '×' 50_{PA} displayed on the image G_{PA} for passenger seat is erased and in place of that, the mark '○' 51_{PA} is displayed (Step SA377), and the passenger seat flag f_{PA} is turned to 1 (Step SA378).

On the other hand, when it is judged that the timer t_{DR} has counted to less than the predetermined time T, or when it is judged that the priority flag F_{DR} is 1 (i.e. priority has been given to the image G_{DR} for driver's seat), it is not necessary to switch an image to which operations are practicable from the image G_{DR} for driver's seat to the image G_{PA} for passenger seat, and therefore, the processing operation [9-3] is concluded at once.

When it is judged that the driver's seat flag f_{DR} is not 1 in Step SA371, whether the passenger seat flag f_{PA} is 1 or not is judged (Step SA379). When it is judged that the passenger seat flag f_{PA} is 1, whether the priority flag F_{DR} is 0 or not is judged (Step SA380). When it is judged that the priority flag F_{DR} is not 0 (i.e. priority has been given to not the image G_{PA} for passenger seat but the image G_{DR} for driver's seat), whether the timer t_{PA} has counted to the predetermined time T or more is judged (Step SA381).

When it is judged that the timer t_{PA} has counted to the predetermined time T or more (i.e. 6 sec. has elapsed since the last operation was conducted), the mark '○' 51_{PA} displayed on the image G_{PA} for passenger seat is erased and in place of that, the mark '×' 50_{PA} is displayed (Step SA382). The timer t_{PA} is brought to a stop (Step SA383), and the passenger seat flag f_{PA} is turned to 0 (Step SA384). And the mark '×' 50_{DR} displayed on the image G_{DR} for driver's seat is erased and in place of that, the mark '○' 51_{DR} is displayed (Step SA385), and the driver's seat flag f_{DR} is turned to 1 (Step SA386).

On the other hand, when it is judged that the timer t_{PA} has counted to less than the predetermined time T, or when it is judged that the priority flag F_{DR} is 0 (i.e. priority has been given to the image G_{PA} for passenger seat), it is not necessary to switch an image to which operations are practicable from the image G_{PA} for passenger seat to the image G_{DR} for driver's seat, and therefore, the processing operation [9-3] is concluded at once. In addition, when it is judged that the passenger seat flag f_{PA} is not 1 in Step SA379, the processing operation [9-3] is concluded at once.

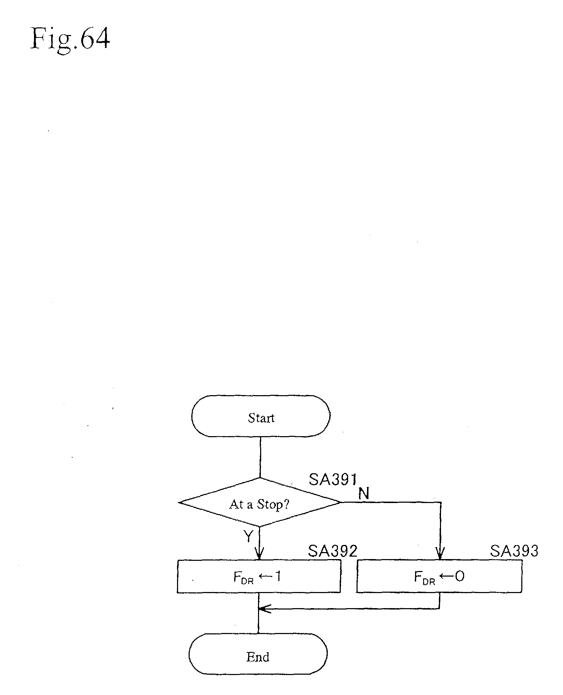

A processing operation [9-4] performed by the control unit 100C in the AV navigation system wherein the display device according to the ninth embodiment is adopted is described below with a flowchart shown in Fig. 64. Here, this processing operation [9-4] is performed at every prescribed interval in the separate display mode (i.e. when the separate display flag f_{SE} is 1).

Based on speed information obtained from the navigation unit 106, whether the vehicle is at a stop or not is judged (Step SA391). When it is judged that the vehicle is at a stop, the priority flag F_{DR} is turned to 1 and priority is given to the image G_{DR} for driver's seat (Step SA392). On the other hand, when it is judged that the vehicle is not at a stop, the priority flag F_{DR} is turned to 0 and priority is given to the image G_{PA} for passenger seat (Step SA393).

In the AV navigation system wherein the display device according to the ninth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable.

Furthermore, every user is notified whether operations to the image the user is watching are practicable or not. For example, the driver DR is notified whether operations to the image G_{DR} for driver's seat are practicable or not, while the passenger PA in the passenger seat is notified whether operations to the image G_{PA} for passenger seat are practicable or not. As a result, the driver DR and the passenger PA in the passenger seat can correctly recognize whether operations to the image one can see are practicable or not. Thus, it is possible to prevent wrong operations by the users. And since operations to one of the image G_{DR} for driver's seat and the image G_{PA} for passenger seat are always practicable, differently from the display device according to the sixth embodiment, it is possible to reduce the frequency of operating the setting switches 41_{DR} and 41_{PA}.

By using the display device according to the ninth embodiment, in a case where a condition for keeping operations to an image without priority practicable became unsatisfied (here, in a case where a period of time during which no operation was conducted continued for 6 sec.) when the priority has been given to either of the image G_{DR} for driver's seat and the image G_{PA} for passenger seat and operations to the image without the priority are practicable, the image to which operations are practicable is switched.

For example, in a case where no operation to the image G_{PA} for passenger seat was conducted for 6 sec. when the priority has been given to the image G_{DR} for driver's seat and operations to the image G_{PA} for passenger seat are practicable, a condition for keeping operations to the image G_{PA} for passenger seat practicable is considered as having become unsatisfied, and the image to which operations are practicable is switched to the image G_{DR} for driver's seat. Thus, it is possible to take some of the load of operating off the user.

Here, the priority is switched depending on whether the vehicle is at a stop or not, but the priority may be fixed on one side. And the priority may be switched depending on not whether the vehicle is at a stop or not, but other running states, or the priority may be switched based on other parameters such as a load state of the vehicle.

For example, when the driver DR is not in the vehicle, the priority may be given to the image G_{PA} for passenger seat, while when the passenger PA in the passenger seat is not in the vehicle, the priority may be given to the image G_{DR} for driver's seat. Concerning the load state of the vehicle, a passenger detection sensor may be arranged in the vehicle and based on information obtained from the passenger detection sensor, it may be judged.

By using the display device according to the ninth embodiment, when the setting switch 41_{DR} is operated, operations to the image G_{DR} for driver's seat are set to be practicable, while when the setting switch 41_{PA} is operated, operations to the image G_{PA} for passenger seat are set to be practicable. But in another embodiment, setting switches 41_{DR} and 41_{PA} may have the same function, wherein when either of the setting switches 41_{DR} and 41_{PA} is operated, an image to which operations are practicable may be switched in a cyclic manner.

In still another embodiment, without forming setting switches 41_{DR} and 41_{PA} for a driver's seat and a passenger seat, respectively, an image to which operations are practicable may be switched in a cyclic manner by operating one switch.

By using the display devices according to the sixth to ninth embodiments, every user is always notified whether operations to the image the user is watching are practicable or not (or to which image operations are practicable), but in another embodiment, a period of time during which the user is notified may be limited. For example, the user may be notified only during a period of time when the user is operating (the user is touching a touch panel 118), or the notification may be started when the user started the operation and be finished when no operation was conducted for a predetermined period of time.

By using the display devices according to the sixth to ninth embodiments, to which image operations are practicable is notified by changing the display mode of images, but in another embodiment, it may be notified by voice. For example, when operations to the image G_{DR} for driver's seat are practicable, a piece of music A may be presented, while when operations to the image G_{PA} for passenger seat are practicable, a piece of music B different from the piece of music A may be presented.

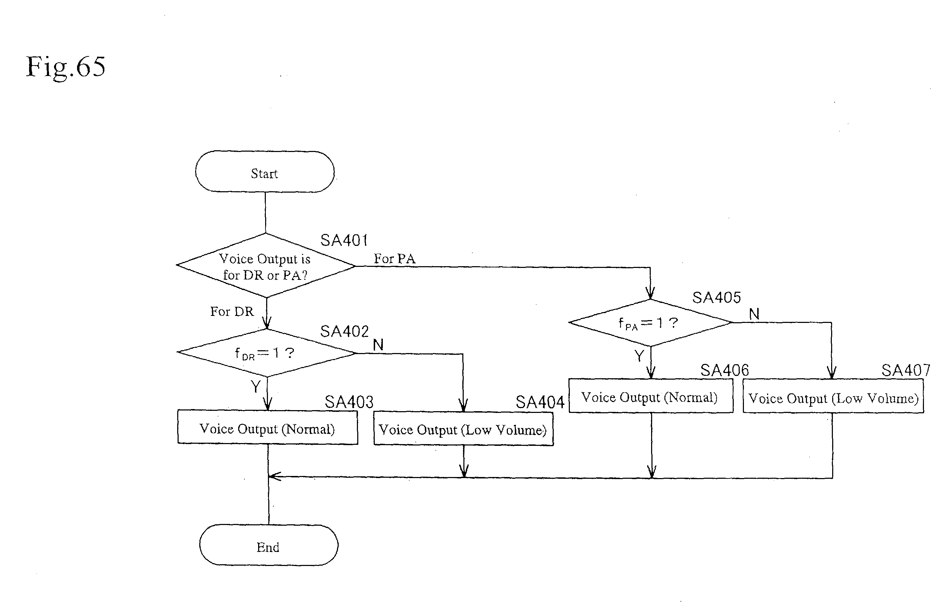

In another embodiment, voice outputs to an image to which operations are practicable and voice outputs to an image to which operations are impracticable may be differentiated. A processing operation performed by a control unit 100 (100A-100C) in this case is described below with a flowchart shown in Fig. 65. Here, this processing operation is performed when voice to each image is output.

Which image of an image G_{DR} for driver's seat and an image G_{PA} for passenger seat a voice output is related to is judged (Step SA401). When it is judged that the voice output is related to the image G_{DR} for driver's seat, whether a driver's seat flag f_{DR} is 1 or not is judged (Step SA402). When it is judged that the driver's seat flag f_{DR} is 1, the voice output is conducted at a volume level selected by a user (Step SA403). On the other hand, when it is judged that the driver's seat flag f_{DR} is not 1, the voice output is conducted at a low volume level (Step SA404).

On the other hand, when it is judged that the voice output is related to the image G_{PA} for passenger seat in Step SA401, whether a passenger seat flag f_{PA} is 1 or not is judged (Step SA405). When it is judged that the passenger seat flag f_{PA} is 1, the voice output is conducted at a volume level selected by the user (Step SA406). On the other hand, when it is judged that the passenger seat flag f_{PA} is not 1, the voice output is conducted at a low volume level (Step SA407).

Thus, for example, in a case where operations to the image G_{DR} for driver's seat are practicable when a map image by a navigation system is displayed as the image G_{DR} for driver's seat and a DVD image is displayed as the image G_{PA} for passenger seat, the guidance voice of the navigation is output at a normal volume level selected by the user, but the DVD voice is output at a low volume level.

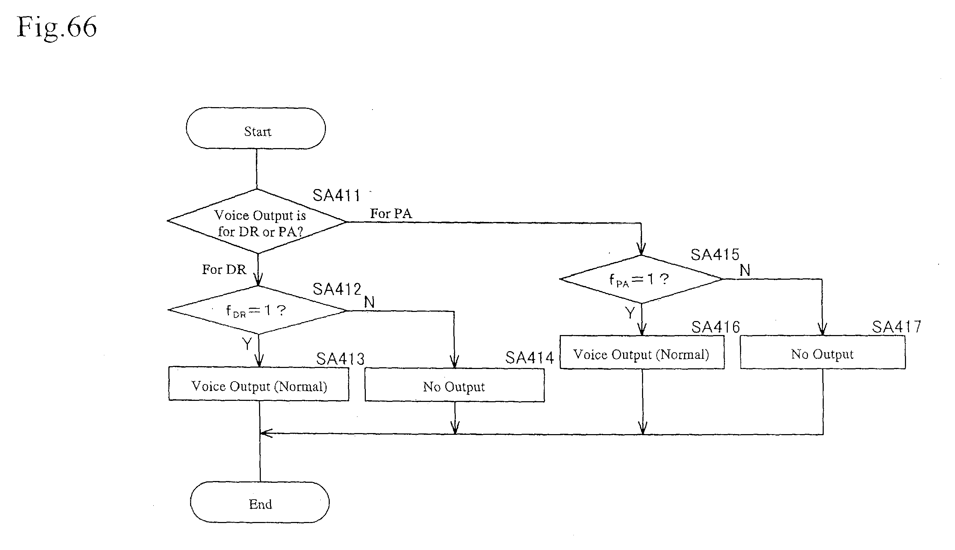

Here, the voice related to the image to which operations are impracticable is output even at a low volume level, but in another embodiment, as shown in Fig. 66, only voice related to an image to which operations are practicable may be output (Steps SA413 and SA416) and voice related to an image to which operations are impracticable may not be output (Steps SA414 and SA417).

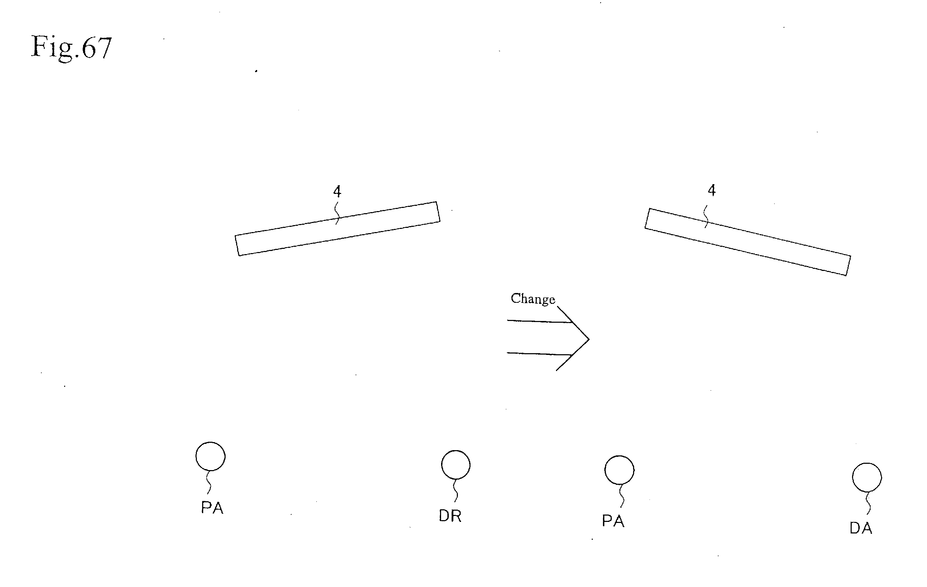

In a display device according to still another embodiment, according to an image to which operations are practicable, a positional status of a display unit 4 (display unit 201) may be changed, or a lighting state of illuminating members such as LEDs may be changed. For example, as shown in Fig. 67, when operations to an image G_{DR} for driver's seat are practicable, the angle of the display unit 4 may be changed in such a manner that a driver DR can easily watch, while when operations to an image G_{PA} for passenger seat are practicable, the angle of the display unit 4 may be changed in such a manner that a passenger PA in a passenger seat can easily watch.

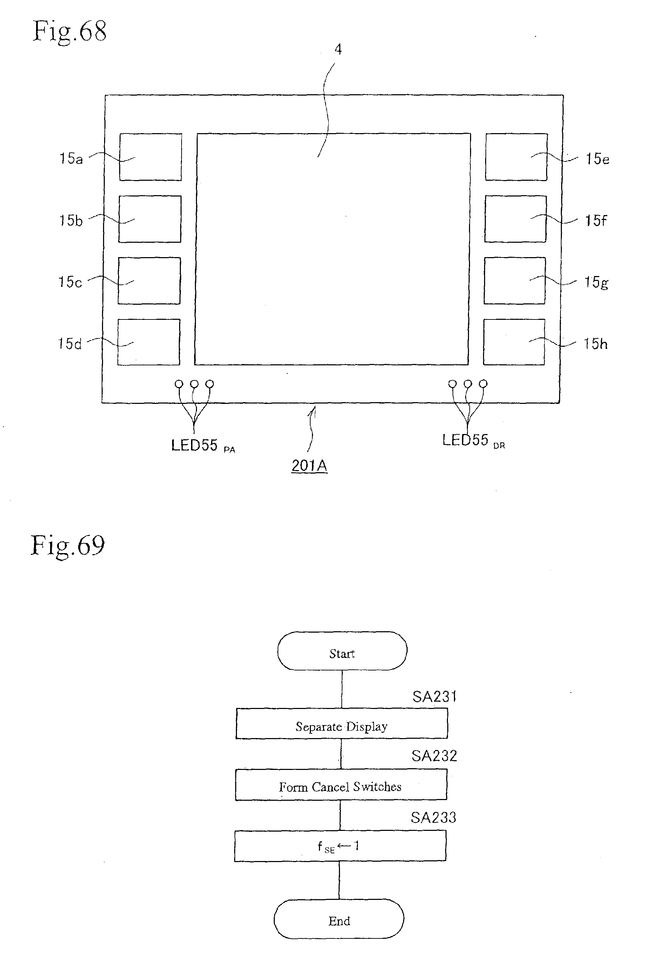

As shown in Fig. 68, when operations to an image G_{DR} for driver's seat are practicable, LEDs 55_{DR} arranged on the front of the display unit 201A at the driver's seat side may be lit up, while when operations to the image G_{PA} for passenger seat are practicable, LEDs 55_{PA} arranged on the front of the display unit 201A at the passenger seat side may be lit up.

An AV navigation system wherein a display device according to a tenth embodiment is adopted is described below. Here, since the construction of said AV navigation system is similar to that of the AV navigation system shown in Fig. 5 except the control unit 100, a control unit is differently marked and the other components are not described below.

A processing operation [10-1] performed by the control unit 100D in the AV navigation system wherein the display device according to the tenth embodiment is adopted is described below with a flowchart shown in Fig. 69. Here, this processing operation [10-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on a display unit 4, an operating unit 15, a remote control 123 or the like.

Here, in cases where the separate display is standard (i.e. the separate display starts after tuning-on of the AV navigation system), the user's instruction for separate display is not required. And therefore, the processing operation [10-1] described below is not needed and a separate display flag f_{SE} for showing that the separate display has been conducted is not required.

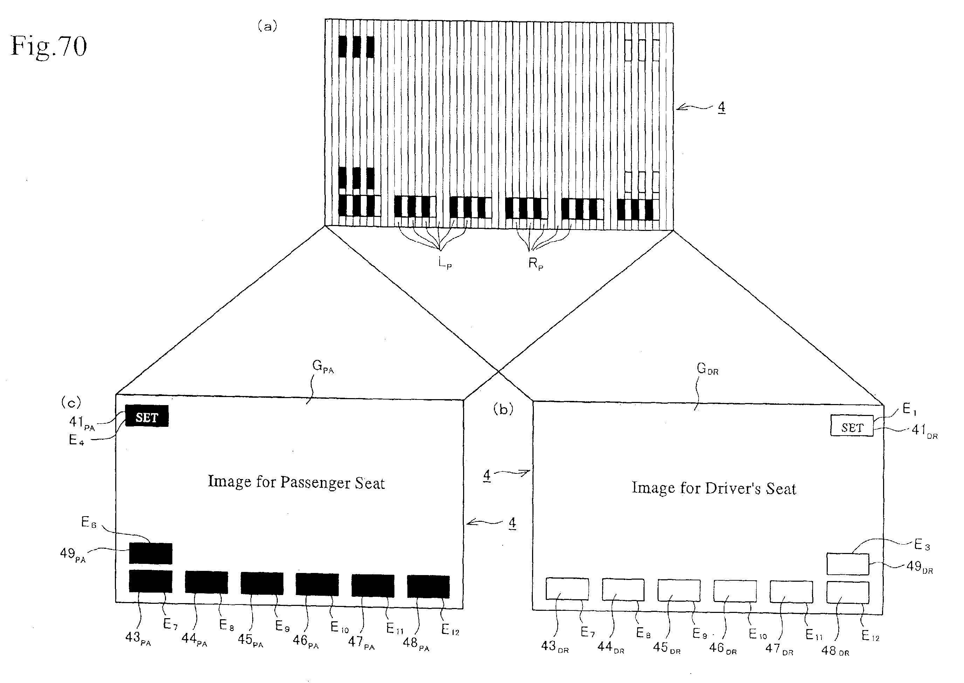

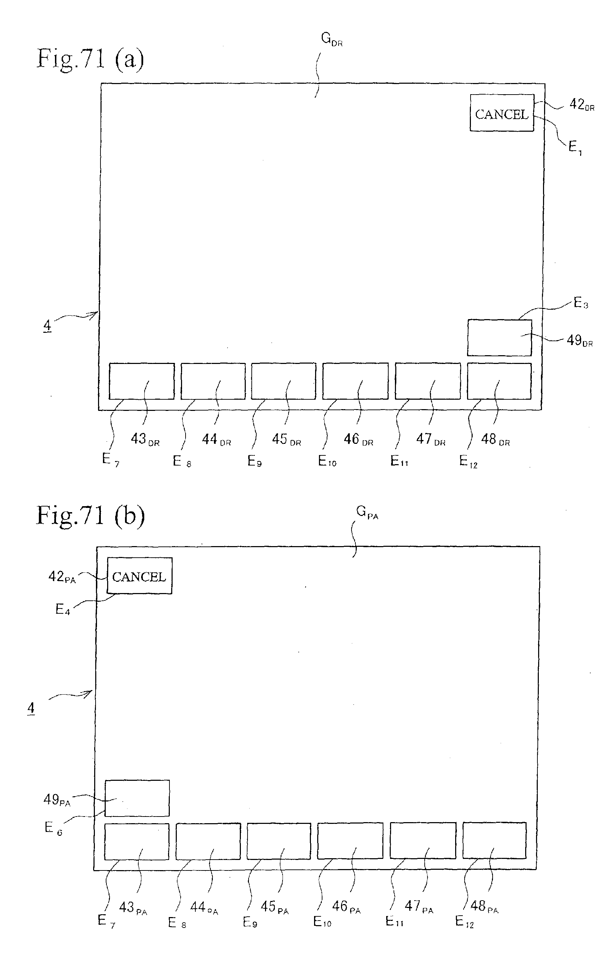

When an instruction for separate display is provided by the user, based on prescribed conditions, one of two images is displayed as an image G_{DR} for driver's seat and the rest is displayed as an image G_{PA} for passenger seat as shown in Figs. 70 and 71 (Step SA231). A cancel switch 42_{DR} for canceling this separate display is formed on the upper right portion of the image G_{DR} for driver's seat, while a cancel switch 42_{PA} for the same is formed on the upper left portion of the image G_{PA} for passenger seat (Step SA232). And then, the separate display flag f_{SE} for showing that the separate display has been conducted is set to be 1 (Step SA233).

Fig. 70(a) is an illustration to describe pixels used for the image G_{DR} for driver's seat and pixels used for the image G_{PA} for passenger seat, Fig. 70(b) is a diagram showing an example of the image G_{DR} for driver's seat and Fig. 70(c) is a diagram showing an example of the image G_{PA} for passenger seat. As shown in Fig. 70(a), a half of the total number of lateral pixels, even-numbered lines (pixels R_{P} for the right) are used for the image G_{DR} for driver's seat, while odd-numbered lines (pixels L_{P} for the left) are used for the image G_{PA} for passenger seat.

Fig. 71(a) is an enlarged diagram showing an example of the image G_{DR} for driver's seat, and Fig. 71(b) is an enlarged diagram showing an example of the image G_{PA} for passenger seat. As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified.

As can be seen from Figs. 70 and 71, the cancel switch 42_{DR} and an operating switch 49_{DR} are arranged within areas E₁ and E₃, while the cancel switch 42_{PA} and an operating switch 49_{PA} are arranged within areas E₄ and E₆ which do not overlap the areas E₁ and E₃. And the cancel switch 42_{DR} and the operating switch 49_{DR} are arranged in such a manner to receive only operation inputs related to the image G_{DR} for driver's seat, while the cancel switch 42_{PA} and the operating switch 49_{PA} are arranged in such a manner to receive only operation inputs related to the image G_{PA} for passenger seat.

Operating switches 43_{DR}-48_{DR} formed on the image G_{DR} for driver's seat and operating switches 43_{PA}-48_{PA} formed on the image G_{PA} for passenger seat are arranged within the same areas E₇-E₁₂. These switches are arranged in such a manner that the operation areas for the image G_{DR} for driver's seat on the display screen and the operation areas for the image G_{PA} for passenger seat on the display screen overlap each other. Operating switches 15a-15h (see Fig. 9) arranged around the display unit 4 may include only switches which can deal with both the image G_{DR} for driver's seat and the image G_{PA} for passenger seat, or switches which can deal with either of them, or a combination of the both.

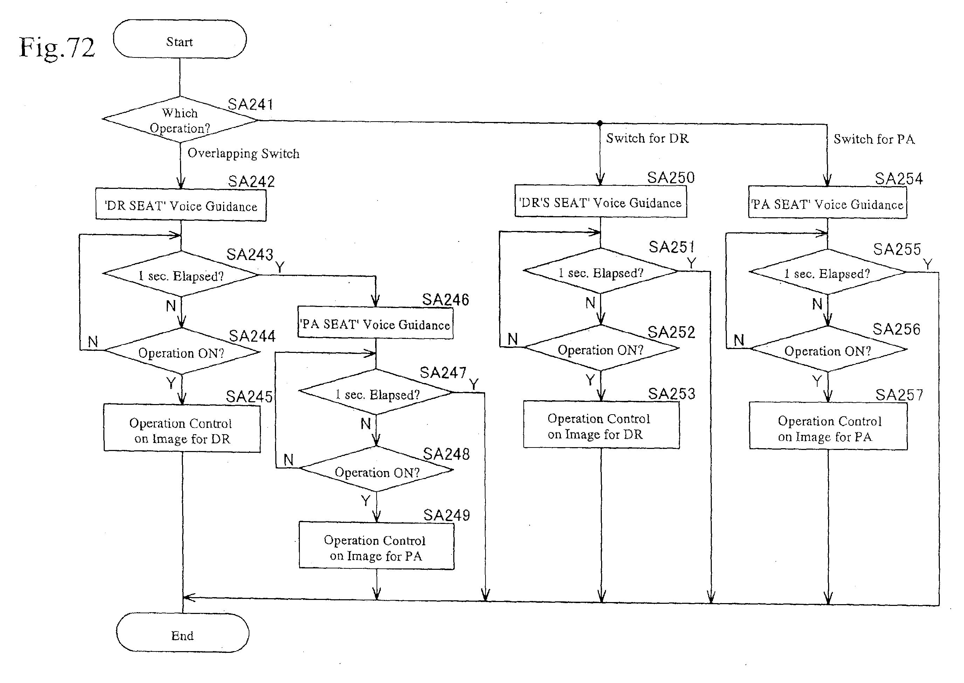

A processing operation [10-2] performed by the control unit 100D in the AV navigation system wherein the display device according to the tenth embodiment is adopted is described below with a flowchart shown in Fig. 72. Here, this processing operation [10-2] is performed in cases where the user operated the cancel switch 42_{DR} or 42_{PA} formed on the display unit 4, the operating switches 15a-15h constituting the operating unit 15 or the like. Here, as described above, when the separate display is standard, as a matter of course, the separate display flag f_{SE} is not required, and therefore, it is not included in starting conditions that the separate display flag f_{SE} is 1.

Which operation was conducted is judged (Step SA241). When it is judged that an operating switch (an overlapping switch (e.g. the operating switches 43_{DR}-48_{DR} and 43_{PA}-48_{PA})) arranged in such a manner that the operation area for the image G_{DR} for driver's seat on the display screen and the operation area for the image G_{PA} for passenger seat on the display screen overlap each other was operated, a voice of 'Driver's seat' is output through speakers 17 (Step SA242). Then, whether the same operating switch was operated within one second or not is judged (Steps SA243 and SA244).

When it is judged that the same operating switch was operated within one second after outputting the voice of 'Driver's seat', the user is regarded as the driver DR and operation control on the image G_{DR} for driver's seat according to the operation is conducted (Step SA245). On the other hand, when it is judged that the same operating switch was not operated within one second, a voice of 'Passenger seat' is output through the speakers 17 (Step SA246). Then, whether the same operating switch was operated within one second or not is judged (Steps SA247 and SA248).

When it is judged that the same operating switch was operated within one second after outputting the voice of 'Passenger seat', the user is regarded as the passenger PA in the passenger seat and operation control on the image G_{PA} for passenger seat according to the operation is conducted (Step SA249). On the other hand, when it is judged that the same operating switch was not operated within one second, the operation is regarded as being invalid and the processing operation [10-2] is concluded at once.

When it is judged that an operating switch (e.g. the operating switch 49_{DR} or the cancel switch 42_{DR}) which only receives operation inputs to the image G_{DR} for driver's seat was operated in Step SA241, the voice of 'Driver's seat' is output through the speakers 17 (Step SA250). Then, whether the same operating switch was operated within one second or not is judged (Steps SA251 and SA252).

When it is judged that the same operating switch was operated within one second after outputting the voice of 'Driver's seat', the user is regarded as the driver DR and operation control on the image G_{DR} for driver's seat according to the operation is conducted (Step SA253). On the other hand, when it is judged that the same operating switch was not operated within one second, the operation is regarded as being invalid and the processing operation [10-2] is concluded at once.

When it is judged that an operating switch (e.g. the operating switch 49_{PA} or the cancel switch 42_{PA}) which only receives operation inputs to the image G_{PA} for passenger seat was operated in Step SA241, the voice of 'Passenger seat' is output through the speakers 17 (Step SA254). Then, whether the same operating switch was operated within one second or not is judged (Steps SA255 and SA256).

When it is judged that the same operating switch was operated within one second after outputting the voice of 'Passenger seat', the user is regarded as the passenger PA in the passenger seat and operation control on the image G_{PA} for passenger seat according to the operation is conducted (Step SA257). On the other hand, when it is judged that the same operating switch was not operated within one second, the operation is regarded as being invalid and the processing operation [10-2] is concluded at once.

By using the AV navigation system wherein the display device according to the tenth embodiment is adopted, when an operation to the operating switches 43_{DR}-48_{DR} or 43_{PA}-48_{PA} arranged in such a manner that the operation areas for the image G_{DR} for driver's seat on the display screen and the operation areas for the image G_{PA} for passenger seat on the display screen overlap each other was conducted, a notification of each viewing direction is conducted by voice in turn. Based on the timing of this notification and the timing of a prescribed operation by the user, a viewing direction (an image) which is subjected to operation control is decided, and operation control on the decided image is conducted.

Thus, without switching an image to which operations are practicable, the user can perform operations to the image which the user can see. In addition, since each viewing direction (image) is announced recognizably by voice, the user can perform appropriate operations without watching the screen.

As to the display device according to the tenth embodiment, as a notification whereby each viewing direction (image) can be recognized, a method wherein voice guidance such as 'Driver's seat' or 'Passenger seat' is provided was described, but in another embodiment, voice guidance such as 'NAVI' or 'DVD' as kinds of images, or voice guidance such as 'Detailed display (of map)' or 'Stop (DVD playback)' as functions corresponding to the operating switches may be provided.

Here, by double pressing of the operating switch, the user's intention is confirmed and a viewing direction (an image) to be subjected to operation control is decided. But in another embodiment, a user is allowed to long press an operating switch and based on the timing at which the finger was moved off the operating switch, a viewing direction (an image) to be subjected to operation control may be decided.

Hitherto, cases where the display device is adopted in an AV navigation system and mounted on a vehicle have been described, but the display devices according to the present invention are not adopted only in systems to be mounted on a vehicle. They may be adopted in a television set for home use. The present invention is effective for products which display individual information in a plurality of viewing directions on a common screen. The number of viewing directions is not limited to two. It may be three or more.

A display device according to an eleventh embodiment of the present invention is described below by reference to Figures. Since the constructions shown in Figs. 1-8 are similar to those of the display device according to the eleventh embodiment, they are not described here.

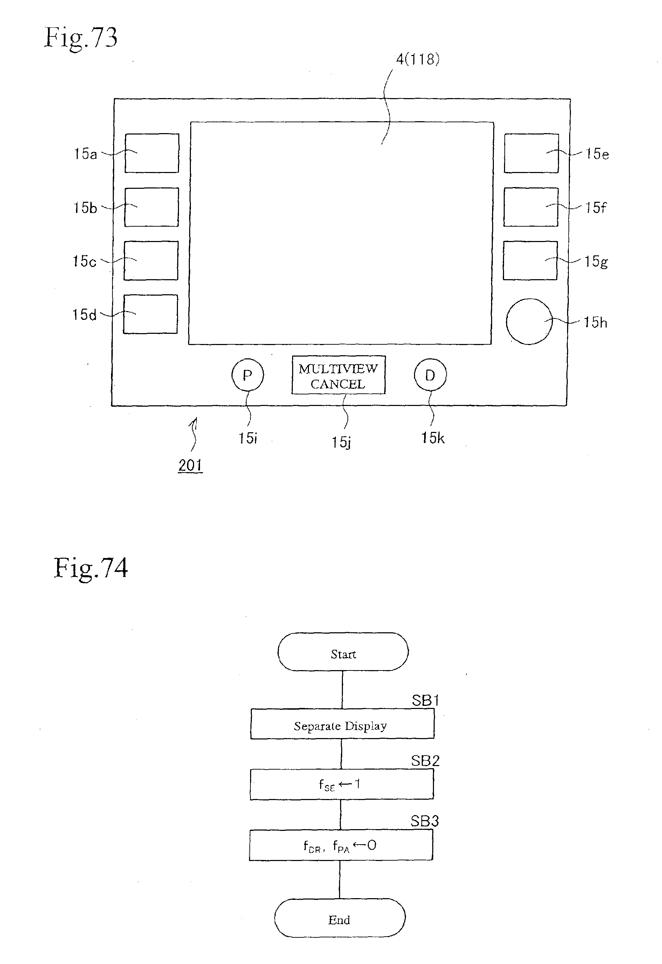

Fig. 73 is an external front view of the display device according to the eleventh embodiment. Reference numeral 201 in Fig. 73 represents a display device, comprising a display unit 4 with a touch panel 118 formed on a surface thereof, an operating unit 15 (operating switches 15a-15h) arranged therearound, and a passenger seat selection switch (P) 15i, a separate display cancel switch (multiview cancel) 15j and a driver's seat selection switch (D) 15k described later in detail.

The display unit 4 comprises parallax barriers 26 and associated parts as shown in Fig. 3. On a common screen thereof, an image G_{DR} for driver's seat and an image G_{PA} for passenger seat can be separately displayed, and therefore, it is possible to allow a driver DR to see the image G_{DR} for driver's seat and to allow a passenger PA in a passenger seat to see the image G_{PA} for passenger seat.

A processing operation [11-1] performed by a control unit 100 in an AV navigation system wherein the display device according to the eleventh embodiment is adopted is described below with a flowchart shown in Fig. 74. Here, this processing operation [11-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on the display unit 4, the operating unit 15, a remote control 123 or the like.

Here, in cases where the separate display is standard (i.e. the separate display starts after turning-on of the AV navigation system), the user's instruction for separate display is not required. And therefore, the processing operation [11-1] described below is not needed and a separate display flag f_{SE} for showing that the separate display has been conducted is not required.

When an instruction for separate display is provided by the user, based on prescribed conditions, one of two images is displayed as an image G_{DR} for driver's seat and the rest is displayed as an image G_{PA} for passenger seat as shown in Fig. 75 (Step SB1). The separate display flag f_{SE} for showing that the separate display has been conducted is set to be 1 (Step SB2). And a driver's seat flag f_{DR} for showing that operations to the image G_{DR} for driver's seat are practicable/impracticable is set to be 0 (impracticability of operations to the image G_{DR} for driver's seat), while a passenger seat flag f_{PA} for showing that operations to the image G_{PA} for passenger seat are practicable/impracticable is set to be 0 (impracticability of operations to the image G_{PA} for passenger seat) (Step SB3).

As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified.

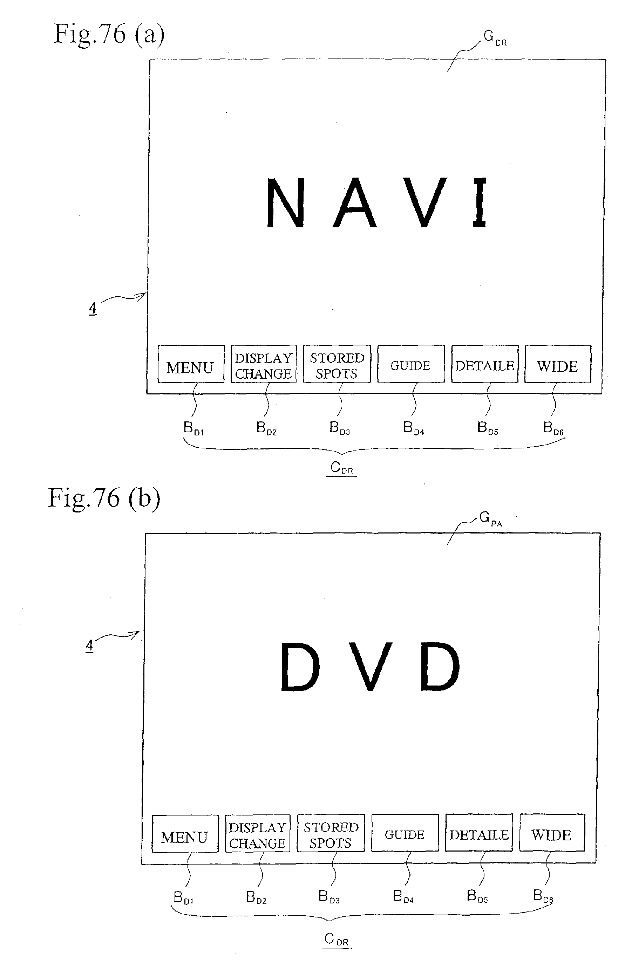

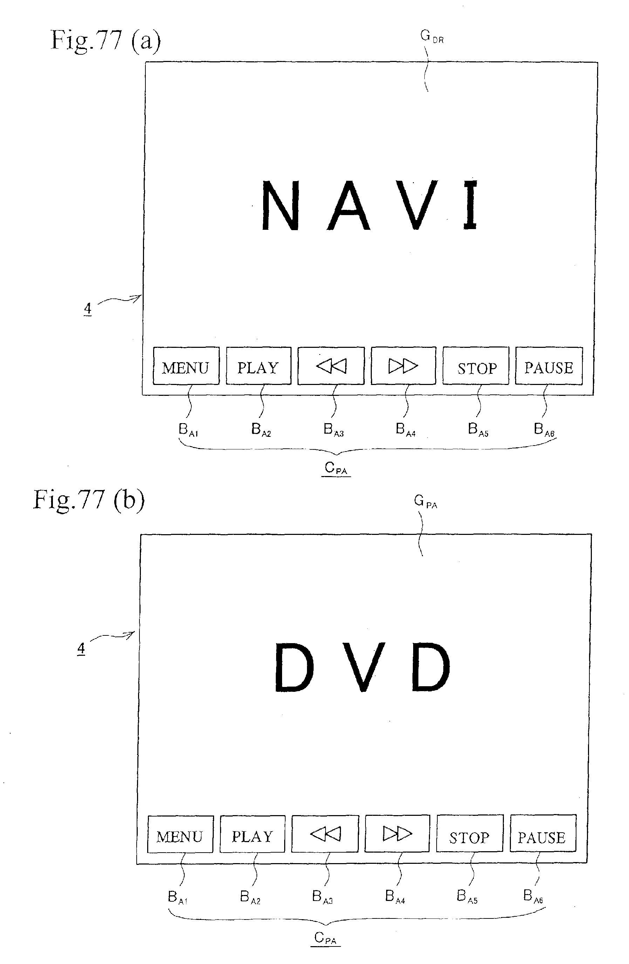

Fig. 75(a) is a diagram showing an example of the image G_{DR} for driver's seat, and Fig. 75(b) is a diagram showing an example of the image G_{PA} for passenger seat. Here, when operations to the image G_{DR} for driver's seat are practicable, as shown in Fig. 76, an operation picture C_{DR} for operation inputs associated with the image G_{DR} for driver's seat is displayed on the image G_{DR} for driver's seat and the image G_{PA} for passenger seat. On the other hand, when operations to the image G_{PA} for passenger seat are practicable, as shown in Fig. 77, an operation picture C_{PA} for operation inputs associated with the image G_{PA} for passenger seat is displayed on the image G_{DR} for driver's seat and the image G_{PA} for passenger seat.

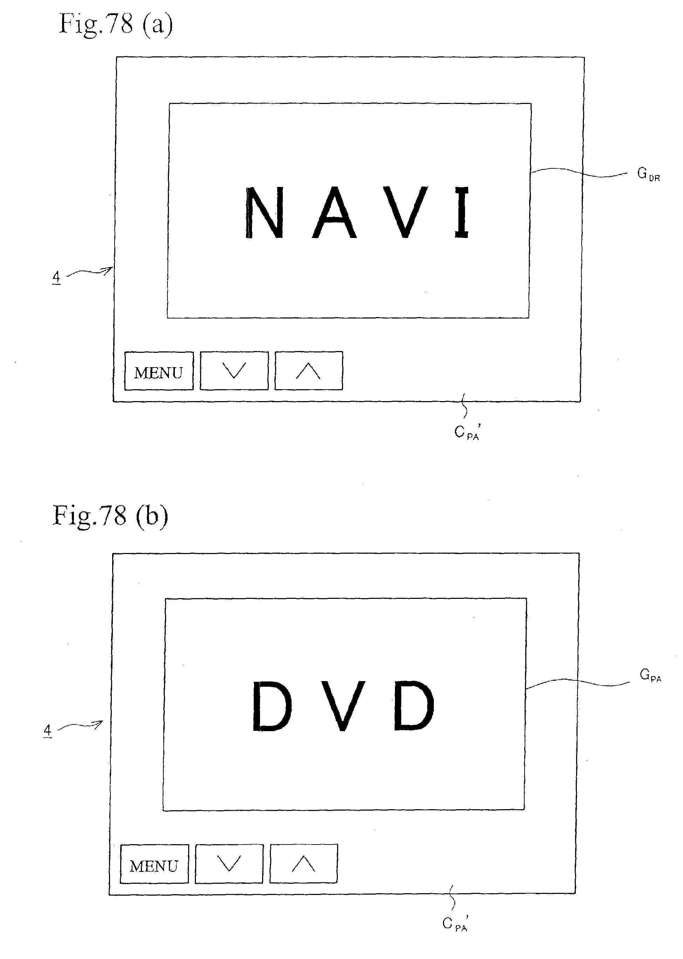

Here, a case where the operation picture C_{DR} and the operation picture C_{PA} are simply overlaid for display on the image G_{DR} for driver's seat and the image G_{PA} for passenger seat was exemplified, but the display style of operation pictures is not limited to that. In another embodiment, as shown in Fig. 78, an image G_{DR} for driver's seat and an image G_{PA} for passenger seat may be reduced in size and an operation picture C_{PA}' may be displayed therearound.

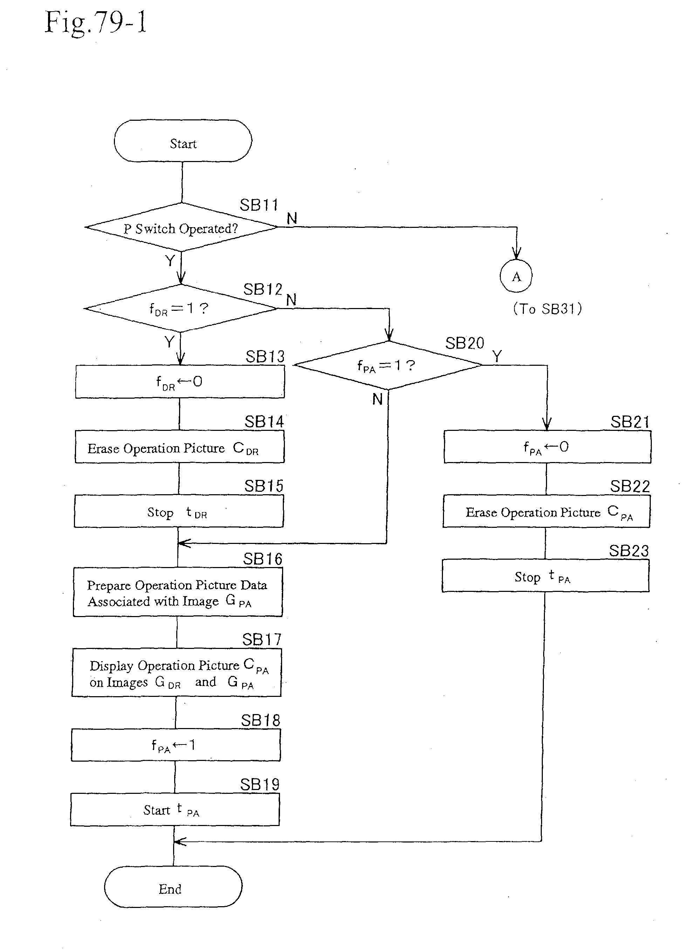

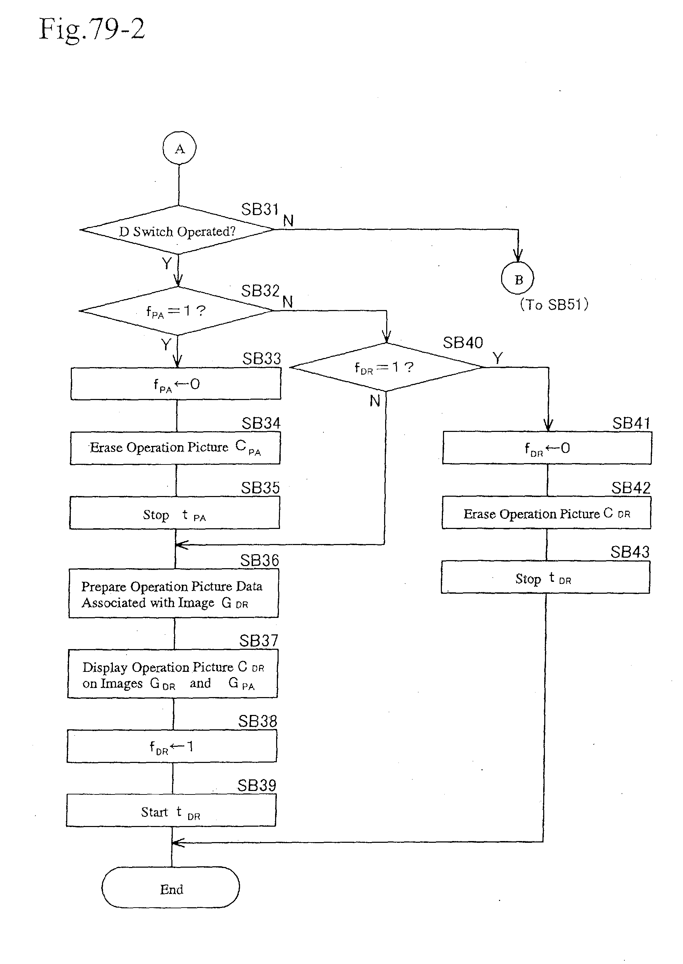

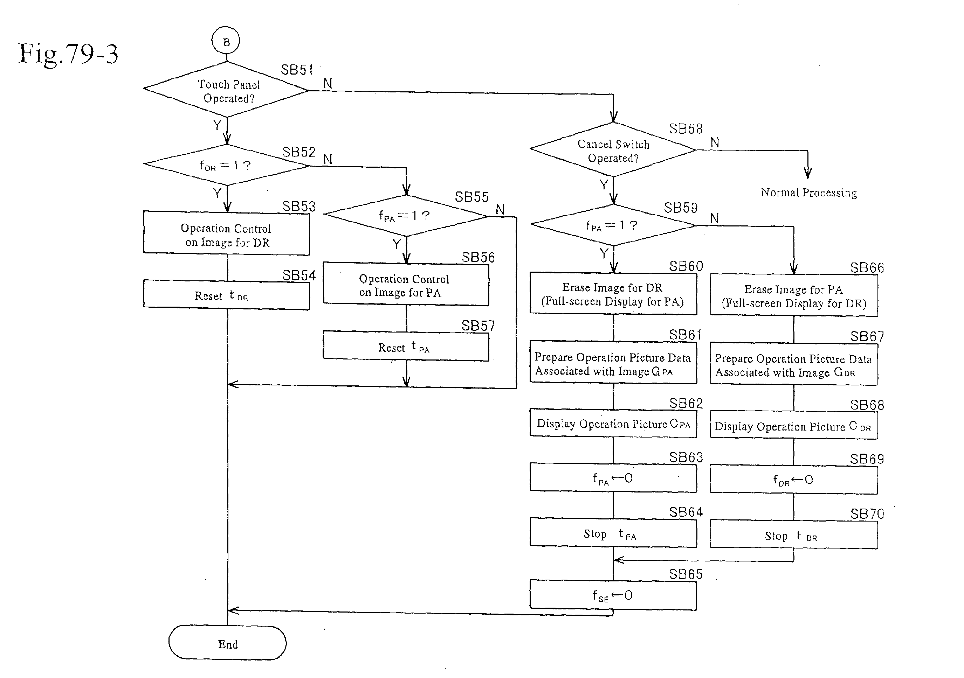

A processing operation [11-2] performed by the control unit 100 in the AV navigation system wherein the display device according to the eleventh embodiment is adopted is described below with flowcharts shown in Figs. 79-1 to 79-3. Here, this processing operation [11-2] is performed in cases where the user operated the touch panel (operating switches B_{D1}-B_{D6} or B_{A1}-B_{A6}) formed on the display unit 4, the operating switches 15a-15k constituting the operating unit 15, the remote control 123 or the like. Here, as described above, when the separate display is standard, as a matter of course, the separate display flag f_{SE} is not required, and therefore, it is not included in starting conditions that the separate display flag f_{SE} is 1.

Whether the passenger seat selection switch 15i for setting operations to the image G_{PA} for passenger seat to be practicable was operated or not is judged (Step SB11). When it is judged that the passenger seat selection switch 15i was operated, whether the driver's seat flag f_{DR} is 1 or not is judged (Step SB12).

When it is judged that the driver's seat flag f_{DR} is 1 (i.e. operations to the image G_{DR} for driver's seat have been set to be practicable) (see Fig. 76), in order to switch an image to which operations are practicable to the image G_{PA} for passenger seat, the driver's seat flag f_{DR} is returned to 0 (Step SB 13), the operation picture C_{DR} is erased from the display unit 4 (Step SB 14), and a timer t_{DR} for measuring a time during which no operation input to the image G_{DR} for driver's seat is conducted (i.e. a time elapsed after the last operation) is brought to a stop (Step SB15).

Operation picture data for operation inputs to the image G_{PA} for passenger seat is prepared (Step SB16), and by using the prepared operation picture data, as shown in Fig. 77, an operation picture C_{PA} for operation inputs associated with the image G_{PA} for passenger seat is displayed on both of the image G_{DR} for driver's seat and the image G_{PA} for passenger seat (Step SB17). Then, the passenger seat flag f_{PA} is set to be 1 (Step SB18), and a timer t_{PA} for measuring a time during which no operation input to the image G_{PA} for passenger seat is conducted (i.e. a time elapsed after the last operation) is turned to 0 and started up (Step SB19).

On the other hand, when it is judged that the driver's seat flag f_{DR} is not 1 (i.e. operations to the image G_{DR} for driver's seat have not been set to be practicable) in Step SB 12, whether the passenger seat flag f_{PA} is 1 or not is judged (Step SB20). When it is judged that the passenger seat flag f_{PA} is not 1 (i.e. operations to the image G_{PA} for passenger seat have not been set to be practicable) (see Fig. 75), the processing operation goes to Step SB16, wherein processing for setting operations to the image G_{PA} for passenger seat to be practicable is conducted.

On the other hand, when it is judged that the passenger seat flag f_{PA} is 1 (i.e. operations to the image G_{PA} for passenger seat have been set to be practicable) in Step SB20 (see Fig. 77), the operation to the passenger seat selection switch 15i admitted in Step SB11 is regarded as an instruction for returning the image G_{PA} for passenger seat to an image to which operations are impracticable. And the passenger seat flag f_{PA} is returned to 0 (Step SB21), the operation picture C_{PA} is erased from the display unit 4 (Step SB22) and the timer t_{PA} is brought to a stop (Step SB23).

When it is judged that the passenger seat selection switch 15i has not been operated in Step SB11, the processing operation goes to Step SB31 (Fig. 79-2), wherein whether the driver's seat selection switch 15k for setting operations to the image G_{DR} for driver's seat to be practicable was operated or not is judged. When it is judged that the driver's seat selection switch 15k was operated, whether the passenger seat flag f_{PA} is 1 or not is judged (Step SB32).

When it is judged that the passenger seat flag f_{PA} is 1 (i.e. operations to the image G_{PA} for passenger seat have been set to be practicable) (see Fig. 77), in order to switch an image to which operations are practicable to the image G_{DR} for driver's seat, the passenger seat flag f_{PA} is returned to 0 (Step SB33), the operation picture C_{PA} is erased from the display unit 4 (Step SB34) and the timer t_{PA} is brought to a stop (Step SB35).

Operation picture data for operation inputs to the image G_{DR} for driver's seat is prepared (Step SB36), and by using the prepared operation picture data, as shown in Fig. 76, an operation picture C_{DR} for operation inputs associated with the image G_{DR} for driver's seat is displayed on both of the image G_{DR} for driver's seat and the image G_{PA} for passenger seat (Step SB37). Then, the driver's seat flag f_{DR} is set to be 1 (Step SB38), and the timer t_{DR} is turned to 0 and started up (Step SB39).

On the other hand, when it is judged that the passenger seat flag f_{PA} is not 1 (i.e. operations to the image G_{PA} for passenger seat have not been set to be practicable) in Step SB32, whether the driver's seat flag f_{DR} is 1 or not is judged (Step SB40). When it is judged that the driver's seat flag f_{DR} is not 1 (i.e. operations to the image G_{DR} for driver's seat have not been set to be practicable) (see Fig. 75), the processing operation goes to Step SB36, wherein processing for setting operations to the image G_{DR} for driver's seat to be practicable is conducted.

On the other hand, when it is judged that the driver's seat flag f_{DR} is 1 (i.e. operations to the image G_{DR} for driver's seat have been set to be practicable) in Step SB40 (see Fig. 76), the operation to the driver's seat selection switch 15k admitted in Step SB31 is regarded as an instruction for returning the image G_{DR} for driver's seat to an image to which operations are impracticable. And the driver's seat flag f_{DR} is returned to 0 (Step SB41), the operation picture C_{DR} is erased from the display unit 4 (Step SB42) and the timer t_{DR} is brought to a stop (Step SB43).

When it is judged that the driver's seat selection switch 15k has not been operated in Step SB31, the processing operation goes to Step SB51 (Fig. 79-3), wherein whether the touch panel 118 formed on the display unit 4 was operated or not is judged. When it is judged that the touch panel 118 was operated, whether the driver's seat flag f_{DR} is 1 or not is judged (Step SB52).

When it is judged that the driver's seat flag f_{DR} is 1 (i.e. operations to the image G_{DR} for driver's seat have been set to be practicable), operation control on the image G_{DR} for driver's seat according to the operation is conducted (Step SB53), and then, the timer t_{DR} is returned to 0 (Step SB54). On the other hand, when it is judged that the driver's seat flag f_{DR} is not 1, whether the passenger seat flag f_{PA} is 1 or not is judged (Step SB55).

When it is judged that the passenger seat flag f_{PA} is 1 (i.e. operations to the image G_{PA} for passenger seat have been set to be practicable), operation control on the image G_{PA} for passenger seat according to the operation is conducted (Step SB56), and then, the timer t_{PA} is returned to 0 (Step SB57). On the other hand, when it is judged that the passenger seat flag f_{PA} is not 1, the operation is regarded as being invalid and the processing operation [11-2] is concluded at once.

When it is judged that the touch panel 118 has not been operated in Step SB51, whether the separate display cancel switch 15j was operated or not is judged (Step SB58). When it is judged that the separate display cancel switch 15j was operated, whether the passenger seat flag f_{PA} is 1 or not is judged (Step SB59).

When it is judged that the passenger seat flag f_{PA} is 1 (i.e. operations to the image G_{PA} for passenger seat have been set to be practicable), in order to keep the image G_{PA} for passenger seat of the two images, the image G_{DR} for driver's seat is erased and the image G_{PA} for passenger seat is displayed in a full-screen mode (Step SB60). And operation picture data for operation inputs to the image G_{PA} for passenger seat is prepared (Step SB61), and by using the prepared operation picture data, an operation picture C_{PA} for operation inputs to the image G_{PA} for passenger seat is displayed on said image G_{PA} (Step SB62).

Then, the passenger seat flag f_{PA} is returned to 0 (Step SB63), the timer t_{PA} is brought to a stop (Step SB64), and the separate display flag f_{SE} is returned to '0' (Step SB65). Here, the image G_{PA} for passenger seat is displayed in the full-screen mode, but in another embodiment, in the separate display mode, the same as an image G_{PA} for passenger seat displayed only with pixels in odd-numbered lines may be displayed in the driver's seat direction. That is, the image displayed in the passenger seat direction in the separate display mode is similarly displayed only with pixels in even-numbered lines.

On the other hand, when it is judged that the passenger seat flag f_{PA} is not 1 (i.e. operations to the image G_{PA} for passenger seat have not been set to be practicable) in Step SB59, in order to keep the image G_{DR} for driver's seat of the two images, the image G_{PA} for passenger seat is erased and the image G_{DR} for driver's seat is displayed in the full-screen mode (Step SB66). And operation picture data for operation inputs to the image G_{DR} for driver's seat is prepared (Step SB67), and by using the prepared operation picture data, an operation picture C_{DR} for operation inputs to the image G_{DR} for driver's seat is displayed on said image G_{DR} (Step SB68).

Then, the driver's seat flag f_{DR} is returned to 0 (Step SB69), the timer t_{DR} is brought to a stop (Step SB70), and then, the processing operation goes to Step SB65, wherein the separate display flag f_{SE} is returned to 0. Here, the image G_{DR} for driver's seat is displayed in the full-screen mode, but in another embodiment, in the separate display mode, the same as an image G_{DR} for driver's seat displayed only with pixels in even-numbered lines may be displayed in the passenger seat direction. That is, the image displayed in the driver's seat direction in the separate display mode is similarly displayed only with pixels in odd-numbered lines.
When it is judged that the separate display cancel switch 15j has not been operated in Step SB58, conventional processing according to the other operations is conducted.

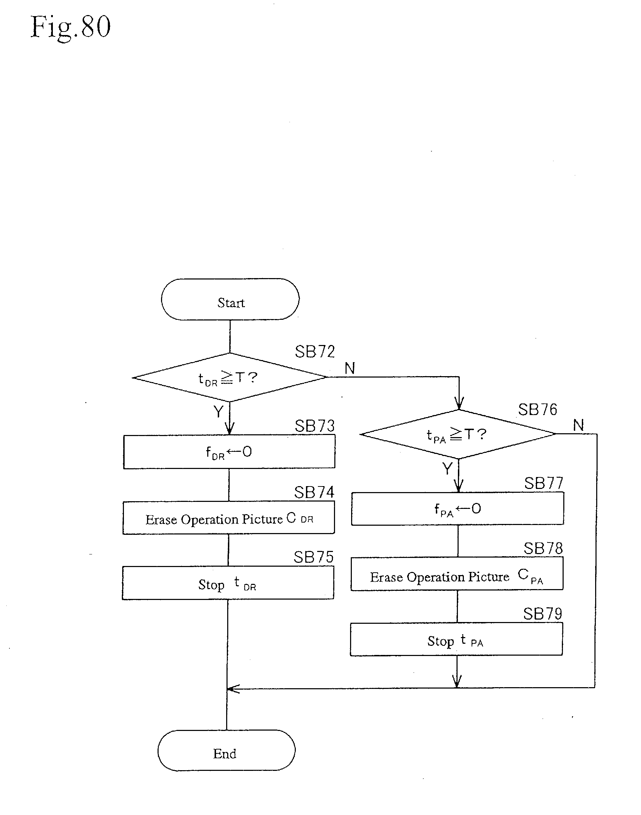

A processing operation [11-3] performed by the control unit 100 in the AV navigation system wherein the display device according to the eleventh embodiment is adopted is described below with a flowchart shown in Fig. 80. Here, this processing operation [11-3] is performed at every prescribed interval in the separate display mode (i.e. when the separate display flag f_{SE} is 1).

Whether the timer t_{DR} has counted to a predetermined time T (e.g. 6 sec.) or more is judged (Step SB72). When it is judged that the timer t_{DR} has counted to the predetermined time T or more (i.e. 6 sec. has elapsed since the last operation to the image G_{DR} for driver's seat was conducted), in order to return the image G_{DR} for driver's seat to an image to which operations are impracticable, the driver's seat flag f_{DR} is returned to 0 (Step SB73), the operation picture C_{DR} is erased from the display unit 4 (Step SB74), and the timer t_{DR} is brought to a stop (Step SB75).

On the other hand, when it is judged that the timer t_{DR} has counted to less than the predetermined time T, whether the timer t_{PA} has counted to the predetermined time T (e.g. 6 sec.) or more is judged (Step SB76). When it is judged that the timer t_{PA} has counted to the predetermined time T or more (i.e. 6 sec. has elapsed since the last operation to the image G_{PA} for passenger seat was conducted), in order to return the image G_{PA} for passenger seat to an image to which operations are impracticable, the passenger seat flag f_{PA} is returned to 0 (Step SB77), the operation picture C_{PA} is erased from the display unit 4 (Step SB78), and the timer t_{PA} is brought to a stop (Step SB79). On the other hand, when it is judged that the timer t_{PA} has counted to less than the predetermined time T, the processing operation [11-3] is concluded at once.

By using the AV navigation system wherein the display device according to the eleventh embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable, or operations to neither of the images are practicable. Since operation control on an image to which operations are impracticable is not conducted, it is possible to prevent wrong operations.

By using the display device according to the eleventh embodiment, when operations to the image G_{PA} for passenger seat (e.g. a DVD image) which can be seen from the passenger seat direction have been set to be practicable, as shown in Fig. 77(a), an operation picture C_{PA} for operation inputs to the image G_{PA} for passenger seat (e.g. an operation picture for operations such as fast forward/reverse of a DVD image) is displayed on the image G_{DR} for driver's seat which can be seen from the driver's seat direction, and therefore, the operation picture C_{PA} can be seen even from the driver's seat direction.

Conversely, when operations to the image G_{DR} for driver's seat (e.g. a map image) which can be seen from the driver's seat direction have been set to be practicable, as shown in Fig. 76(b), an operation picture C_{DR} for operation inputs to the image G_{DR} for driver's seat is displayed on the image G_{PA} for passenger seat which can be seen from the passenger seat direction, and the operation picture C_{DR} can be seen even from the passenger seat direction.

Thus, for example, without moving and looking into the image G_{PA} for passenger seat from the passenger seat side, the driver DR can see the operation picture C_{PA}, and therefore, the driver DR can keep watch on which operation the passenger PA in the passenger seat is doing. In addition, the driver DR can perform operations instead of the passenger PA in the passenger seat. This is especially effective when the passenger PA in the passenger seat is a small child or an elderly person, or a machine-illiterate person.

Here, by pressing the passenger seat selection switch 15i or the driver's seat selection switch 15k, the user is allowed to present one's intention (to which image operations should be set to be practicable), but in another embodiment, a question may be output by voice through speakers 17 and depending on a reply given by the user or the direction from which the user's voice came, the image to which operations are practicable may be decided.

By using the display device according to the eleventh embodiment, operation pictures for operation inputs to different images are not displayed at the same time. For example, the operation picture C_{DR} and the operation picture C_{PA} are not displayed simultaneously on the display unit 4. That is, a plurality of pieces of operation picture data do not have to be prepared at the same time.

When the operation picture data is prepared, a processing circuit for it is required. Therefore, when a plurality of pieces of operation picture data are prepared at the same time, separate processing circuits are required. That is, a plurality of processing circuits must be mounted, resulting in a higher cost. However, by using the display device according to the eleventh embodiment, a plurality of pieces of operation picture data do not have to be prepared at the same time. As a result, a plurality of processing circuits do not have to be mounted, resulting in prevention of a higher cost.

An AV navigation system wherein a display device according to a twelfth embodiment is adopted is described below. Here, since the construction of said AV navigation system is similar to that of the AV navigation system shown in Fig. 5 except the control unit 100, a control unit is differently marked and the other components are not described below.

A control unit 100A performs a processing operation [12-1] similar to the processing operation [11-1] (see Fig. 74) performed by the control unit 100, and controls pixel display, whereby an image G_{DR} for driver's seat is displayed toward a driver DR as shown in Fig. 75(a), while an image G_{PA} for passenger seat is displayed toward a passenger PA in a passenger seat as shown in Fig. 75(b).

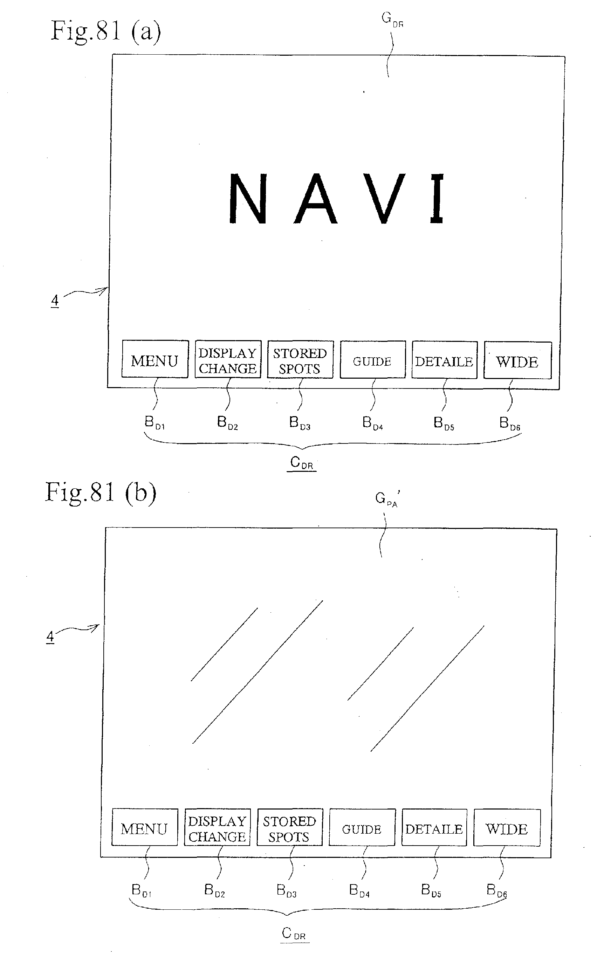

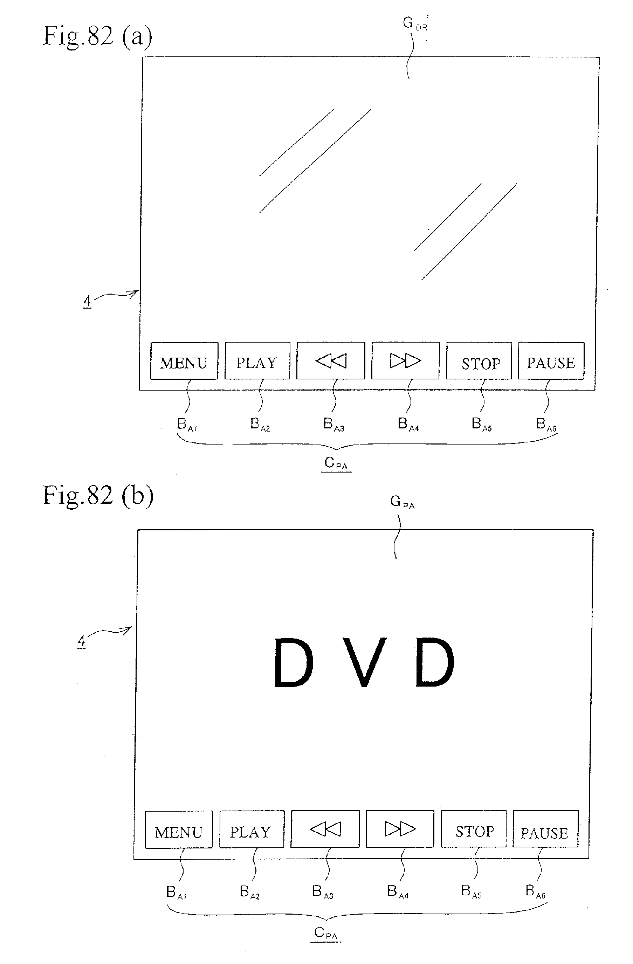

When operations to the image G_{DR} for driver's seat are practicable, as shown in Fig. 81, an operation picture C_{DR} for operation inputs to the image G_{DR} for driver's seat is displayed on said image G_{DR} as an image to be displayed in the driver's seat direction, while as an image to be displayed in the passenger seat direction, the operation picture C_{DR} is displayed on a blue background G_{PA}'. On the other hand, when operations to the image G_{PA} for passenger seat are practicable, as shown in Fig. 82, an operation picture C_{PA} for operation inputs to the image G_{PA} for passenger seat is displayed on a blue background G_{DR}' as an image to be displayed in the driver's seat direction, while as an image to be displayed in the passenger seat direction, the operation picture C_{PA} is displayed on the image G_{PA} for passenger seat.

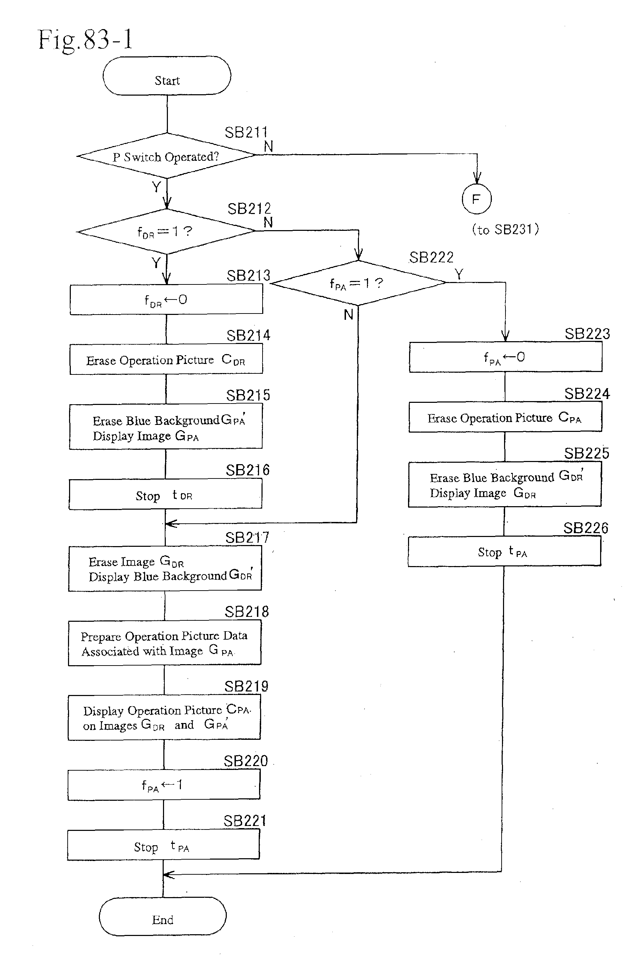

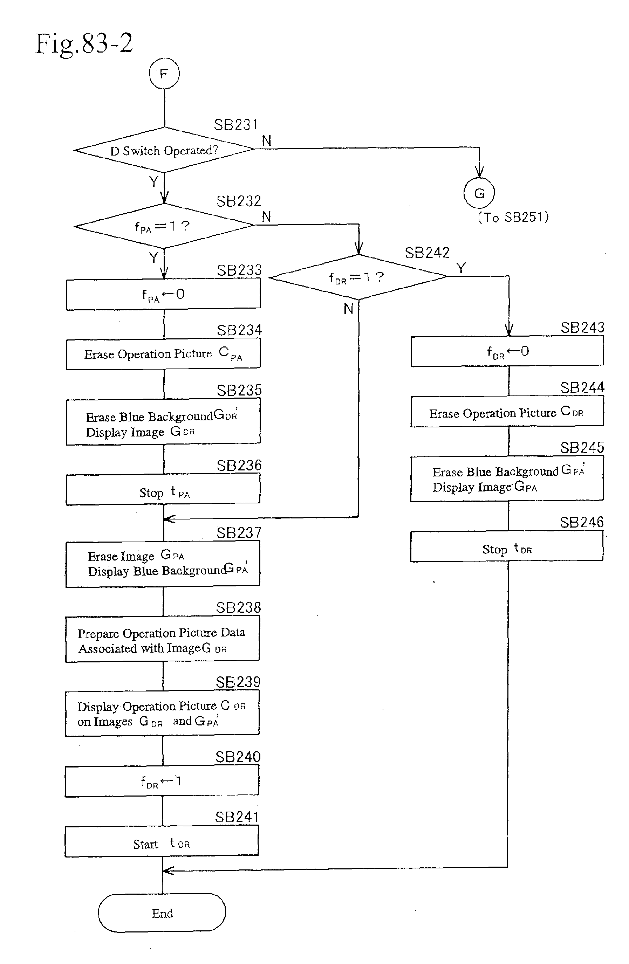

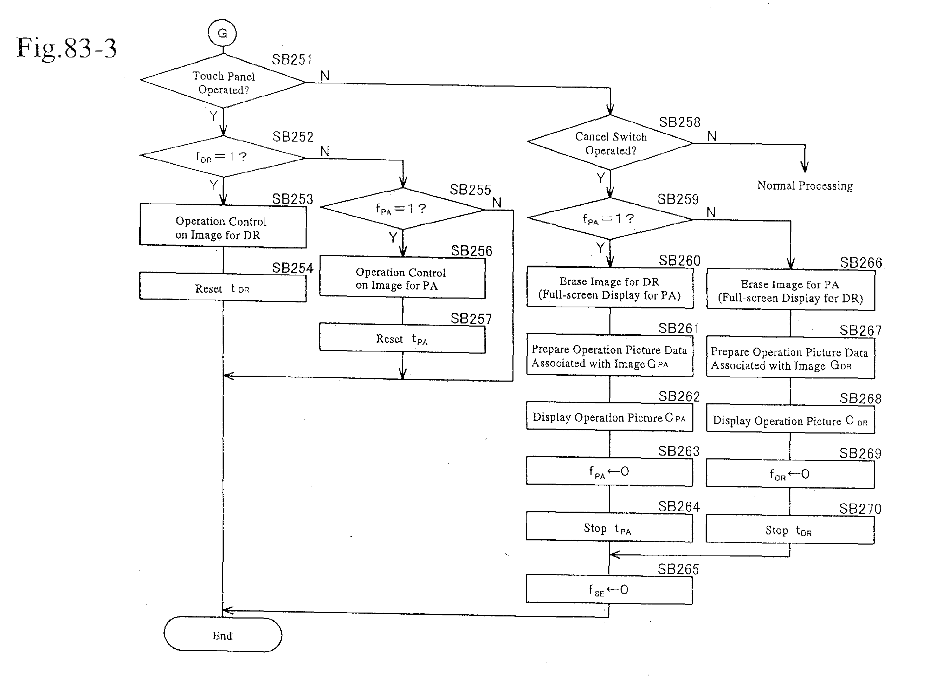

A processing operation [12-2] performed by the control unit 100A in the AV navigation system wherein the display device according to the twelfth embodiment is adopted is described below with flowcharts shown in Figs. 83-1 to 83-3. Here, this processing operation [12-2] is performed in cases where the user operated a touch panel (operating switches B_{D1}-B_{D6} or B_{A1}-B_{A6}) formed on a display unit 4, operating switches 15a-15k constituting an operating unit 15, a remote control 123 or the like. Here, as described above, when the separate display is standard, as a matter of course, a separate display flag f_{SE} is not required, and therefore, it is not included in starting conditions that the separate display flag f_{SE} is 1.

Whether the passenger seat selection switch 15i for setting operations to an image G_{PA} for passenger seat to be practicable was operated or not is judged (Step SB211). When it is judged that the passenger seat selection switch 15i was operated, whether a driver's seat flag f_{DR} is 1 or not is judged (Step SB212).

When it is judged that the driver's seat flag f_{DR} is 1 (i.e. operations to an image G_{DR} for driver's seat have been set to be practicable) (see Fig. 81), in order to switch an image to which operations are practicable to the image G_{PA} for passenger seat, the driver's seat flag f_{DR} is returned to 0 (Step SB213), and the operation picture C_{DR} is erased from the display unit 4 (Step SB214). The blue background G_{PA}' displayed in place of the image G_{PA} for passenger seat is erased and the image G_{PA} for passenger seat is displayed (Step SB215), and a timer t_{DR} for measuring a time during which no operation input to the image G_{DR} for driver's seat is conducted (i.e. a time elapsed after the last operation) is brought to a stop (Step SB216).

The image G_{DR} for driver's seat is erased and the blue background G_{DR}' is displayed (Step SB217), and operation picture data for operation inputs to the image G_{PA} for passenger seat is prepared (Step SB218). By using the prepared operation picture data, as shown in Fig. 82, an operation picture C_{PA} for operation inputs to the image G_{PA} for passenger seat is displayed on the blue background G_{DR}' and the image G_{PA} for passenger seat (Step SB219). Then, a passenger seat flag f_{PA} is set to be 1 (Step SB220), and a timer t_{PA} for measuring a time during which no operation input to the image G_{PA} for passenger seat is conducted (i.e. a time elapsed after the last operation) is turned to 0 and started up (Step SB221).

On the other hand, when it is judged that the driver's seat flag f_{DR} is not 1 (i.e. operations to the image G_{DR} for driver's seat have not been set to be practicable) in Step SB212, whether the passenger seat flag f_{PA} is 1 or not is judged (Step SB222). When it is judged that the passenger seat flag f_{PA} is not 1 (i.e. operations to the image G_{PA} for passenger seat have not been set to be practicable) (see Fig. 75), the processing operation goes to Step SB217, wherein processing for setting operations to the image G_{PA} for passenger seat to be practicable is conducted.

On the other hand, when it is judged that the passenger seat flag f_{PA} is 1 (i.e. operations to the image G_{PA} for passenger seat have been set to be practicable) in Step SB222 (see Fig. 82), the operation to the passenger seat selection switch 15i admitted in Step SB211 is regarded as an instruction for returning the image G_{PA} for passenger seat to an image to which operations are impracticable. And the passenger seat flag f_{PA} is returned to 0 (Step SB223), the operation picture C_{PA} is erased from the display unit 4 (Step SB224), the blue background G_{DR}' displayed in place of the image G_{DR} for driver's seat is erased and the image G_{DR} for driver's seat is displayed (Step SB225). And the timer t_{PA} is brought to a stop (Step SB226).

When it is judged that the passenger seat selection switch 15i has not been operated in Step SB211, the processing operation goes to Step SB231 (Fig. 83-2), wherein whether the driver's seat selection switch 15k for setting operations to the image G_{DR} for driver's seat to be practicable was operated or not is judged. When it is judged that the driver's seat selection switch 15k was operated, whether the passenger seat flag f_{PA} is 1 or not is judged (Step SB232).

When it is judged that the passenger seat flag f_{PA} is 1 (i.e. operations to the image G_{PA} for passenger seat have been set to be practicable) (see Fig. 82), in order to switch an image to which operations are practicable to the image G_{DR} for driver's seat, the passenger seat flag f_{PA} is returned to 0 (Step SB233). The operation picture C_{PA} is erased from the display unit 4 (Step SB234), the blue background G_{DR}' displayed in place of the image G_{DR} for driver's seat is erased and the image G_{DR} for driver's seat is displayed (Step SB235). And the timer t_{PA} is brought to a stop (Step SB236).

The image G_{PA} for passenger seat is erased and the blue background G_{PA}' is displayed (Step SB237), and operation picture data for operation inputs to the image G_{DR} for driver's seat is prepared (Step SB238). By using the prepared operation picture data, as shown in Fig. 81, an operation picture C_{DR} for operation inputs to the image G_{DR} for driver's seat is displayed on the image G_{DR} for driver's seat and the blue background G_{PA}' (Step SB239). Then, the driver's seat flag f_{DR} is set to be 1 (Step SB240), and the timer t_{DR} is turned to 0 and started up (Step SB241).

On the other hand, when it is judged that the passenger seat flag f_{PA} is not 1 (i.e. operations to the image G_{PA} for passenger seat have not been set to be practicable) in Step SB232, whether the driver's seat flag f_{DR} is 1 or not is judged (Step SB242). When it is judged that the driver's seat flag f_{DR} is not 1 (i.e. operations to the image G_{DR} for driver's seat have not been set to be practicable) (see Fig. 75), the processing operation goes to Step SB237, wherein processing for setting operations to the image G_{DR} for driver's seat to be practicable is conducted.

On the other hand, when it is judged that the driver's seat flag f_{DR} is 1 (i.e. operations to the image G_{DR} for driver's seat have been set to be practicable) in Step SB242 (see Fig. 81), the operation to the driver's seat selection switch 15k admitted in Step SB231 is regarded as an instruction for returning the image G_{DR} for driver's seat to an image to which operations are impracticable and the driver's seat flag f_{DR} is returned to 0 (Step SB243). The operation picture C_{DR} is erased from the display unit 4 (Step SB244), the blue background G_{PA}' displayed in place of the image G_{PA} for passenger seat is erased and the image G_{PA} for passenger seat is displayed (Step SB245), and the timer t_{DR} is brought to a stop (Step SB246).

When it is judged that the driver's seat selection switch 15k has not been operated in Step SB231, the processing operation goes to Step SB251 (Fig. 83-3), wherein whether the touch panel 118 formed on the display unit 4 was operated or not is judged. When it is judged that the touch panel 118 was operated, whether the driver's seat flag f_{DR} is 1 or not is judged (Step SB252).

When it is judged that the driver's seat flag f_{DR} is 1 (i.e. operations to the image G_{DR} for driver's seat have been set to be practicable), operation control on the image G_{DR} for driver's seat according to the operation is conducted (Step SB253), and then, the timer t_{DR} is returned to 0 (Step SB254). On the other hand, when it is judged that the driver's seat flag f_{DR} is not 1, whether the passenger seat flag f_{PA} is 1 or not is judged (Step SB255).

When it is judged that the passenger seat flag f_{PA} is 1 (i.e. operations to the image G_{PA} for passenger seat have been set to be practicable), operation control on the image G_{PA} for passenger seat according to the operation is conducted (Step SB256), and then, the timer t_{PA} is returned to 0 (Step SB257). On the other hand, when it is judged that the passenger seat flag f_{PA} is not 1, the operation is regarded as being invalid and the processing operation [12-2] is concluded at once.

When it is judged that the touch panel 118 has not been operated in Step SB251, whether the separate display cancel switch 15j was operated or not is judged (Step SB258). When it is judged that the separate display cancel switch 15j was operated, whether the passenger seat flag f_{PA} is 1 or not is judged (Step SB259).

When it is judged that the passenger seat flag f_{PA} is 1 (i.e. operations to the image G_{PA} for passenger seat have been set to be practicable), in order to keep the image G_{PA} for passenger seat of the two images, the image G_{DR} for driver's seat is erased and the image G_{PA} for passenger seat is displayed in a full-screen mode (Step SB260). And operation picture data for operation inputs to the image G_{PA} for passenger seat is prepared (Step SB261), and by using the prepared operation picture data, an operation picture C_{PA} for operation inputs to the image G_{PA} for passenger seat is displayed on said image G_{PA} (Step SB262).

Then, the passenger seat flag f_{PA} is returned to 0 (Step SB263), the timer t_{PA} is brought to a stop (Step SB264), and the separate display flag f_{SE} is returned to 0 (Step SB265). Here, the image G_{PA} for passenger seat is displayed in the full-screen mode, but in another embodiment, in the separate display mode, the same as an image G_{PA} for passenger seat displayed only with pixels in odd-numbered lines may be displayed in the driver's seat direction. That is, the image displayed in the passenger seat direction in the separate display mode is similarly displayed only with pixels in even-numbered lines.

On the other hand, when it is judged that the passenger seat flag f_{PA} is not 1 (i.e. operations to the image G_{PA} for passenger seat have not been set to be practicable) in Step SB259, in order to keep the image G_{DR} for driver's seat of the two images, the image G_{PA} for passenger seat is erased and the image G_{DR} for driver's seat is displayed in the full-screen mode (Step SB266). And operation picture data for operation inputs to the image G_{DR} for driver's seat is prepared (Step SB267), and by using the prepared operation picture data, an operation picture C_{DR} for operation inputs to the image G_{DR} for driver's seat is displayed on said image G_{DR} (Step SB268).

Then, the driver's seat flag f_{DR} is returned to 0 (Step SB269), the timer t_{DR} is brought to a stop (Step SB270), and then, the processing operation goes to Step SB265, wherein the separate display flag f_{SE} is returned to 0. Here, the image G_{DR} for driver's seat is displayed in the full-screen mode, but in another embodiment, in the separate display mode, the same as an image G_{DR} for driver's seat displayed only with pixels in even-numbered lines may be displayed in the passenger seat direction. That is, the image displayed in the driver's seat direction in the separate display mode is similarly displayed only with pixels in odd-numbered lines.
When it is judged that the separate display cancel switch 15j has not been operated in Step SB258, conventional processing according to the other operations is conducted.

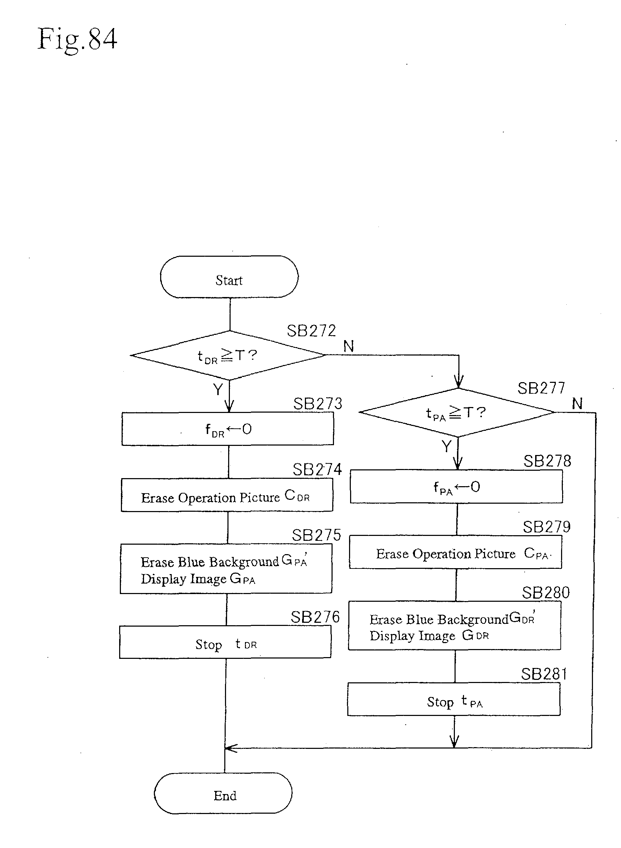

A processing operation [12-3] performed by the control unit 100A in the AV navigation system wherein the display device according to the twelfth embodiment is adopted is described below with a flowchart shown in Fig. 84. Here, this processing operation [12-3] is performed at every prescribed interval in the separate display mode (i.e. when the separate display flag f_{SE} is 1).

Whether the timer t_{DR} has counted to a predetermined time T (e.g. 6 sec.) or more is judged (Step SB272). When it is judged that the timer t_{DR} has counted to the predetermined time T or more (i.e. 6 sec. has elapsed since the last operation to the image G_{DR} for driver's seat was conducted), in order to return the image G_{DR} for driver's seat to an image to which operations are impracticable, the driver's seat flag f_{DR} is returned to 0 (Step SB273). The operation picture C_{DR} is erased from the display unit 4 (Step SB274), the blue background G_{PA}' displayed in place of the image G_{PA} for passenger seat is erased and the image G_{PA} for passenger seat is displayed (Step SB275), and the timer t_{DR} is brought to a stop (Step SB276).

On the other hand, when it is judged that the timer t_{DR} has counted to less than the predetermined time T, whether the timer t_{PA} has counted to the predetermined time T (e.g. 6 sec.) or more is judged (Step SB277). When it is judged that the timer t_{PA} has counted to the predetermined time T or more (i.e. 6 sec. has elapsed since the last operation to the image G_{PA} for passenger seat was conducted), in order to return the image G_{PA} for passenger seat to an image to which operations are impracticable, the passenger seat flag f_{PA} is returned to 0 (Step SB278). The operation picture C_{PA} is erased from the display unit 4 (Step SB279), the blue background G_{DR}' displayed in place of the image G_{DR} for driver's seat is erased and the image G_{DR} for driver's seat is displayed (Step SB280), and the timer t_{PA} is brought to a stop (Step SB281). On the other hand, when it is judged that the timer t_{PA} has counted to less than the predetermined time T, the processing operation [12-3] is concluded at once.

By using the AV navigation system wherein the display device according to the twelfth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable, or operations to neither of the images are practicable. Since operation control on an image to which operations are impracticable is not conducted, it is possible to prevent wrong operations.

An AV navigation system wherein a display device according to a thirteenth embodiment is adopted is described below. Here, since the construction of said AV navigation system is similar to that of the AV navigation system shown in Fig. 5 except the control unit 100, a control unit is differently marked and the other components are not described below.

A control unit 100B performs a processing operation [13-1] similar to the processing operation [11-1] (see Fig. 74) performed by the control unit 100, and controls pixel display to display an image G_{DR} for driver's seat in a driver's seat direction as shown in Fig. 75(a), and to display an image G_{PA} for passenger seat in a passenger seat direction as shown in Fig. 75(b).

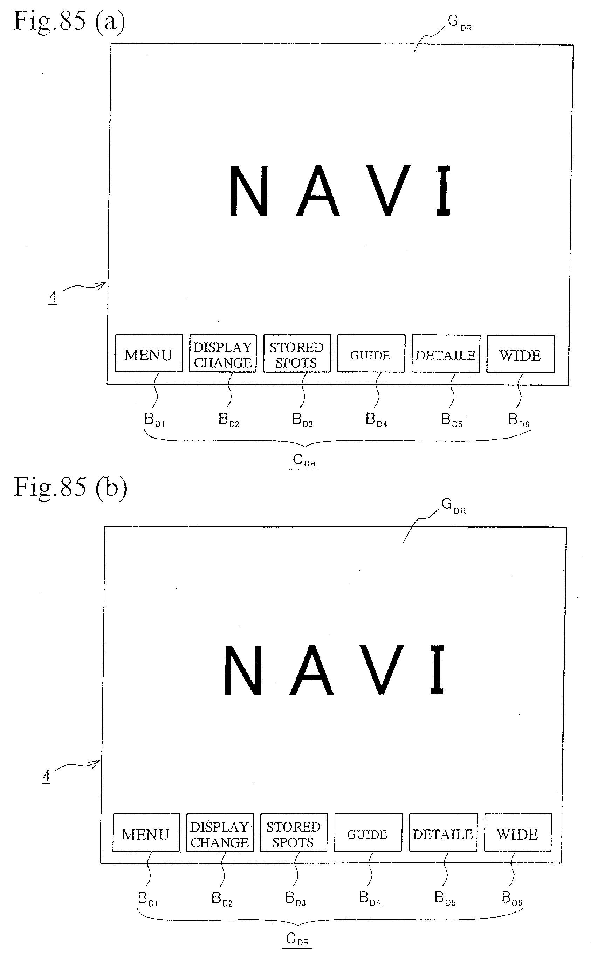

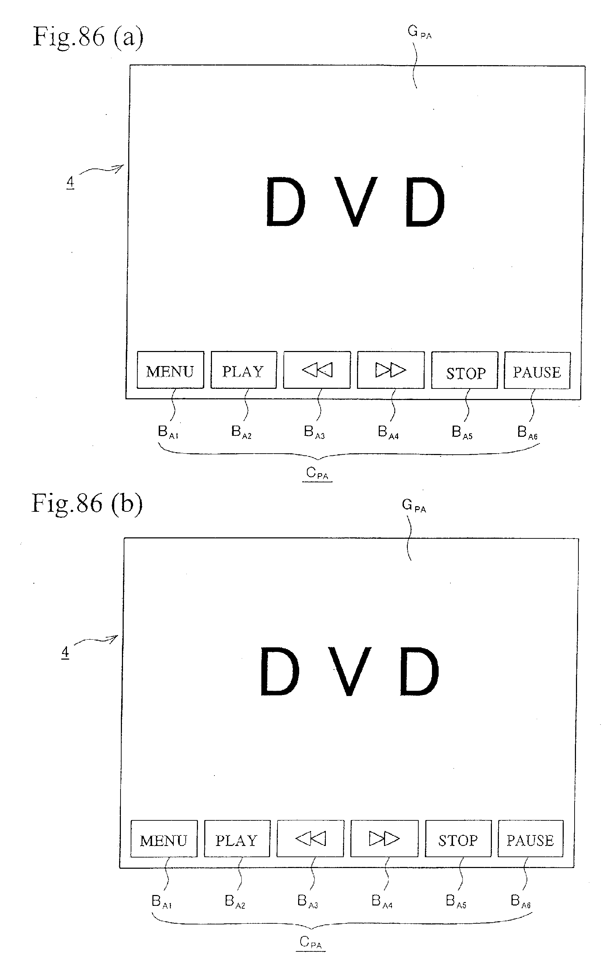

When operations to the image G_{DR} for driver's seat are practicable, as shown in Fig. 85, an operation picture C_{DR} for operation inputs to the image G_{DR} for driver's seat is displayed on said image G_{DR} as an image to be displayed in the driver's seat and passenger seat directions. On the other hand, when operations to the image G_{PA} for passenger seat are practicable, as shown in Fig. 86, an operation picture C_{PA} for operation inputs to the image G_{PA} for passenger seat is displayed on said image G_{PA} as an image to be displayed in the driver's seat and passenger seat directions.

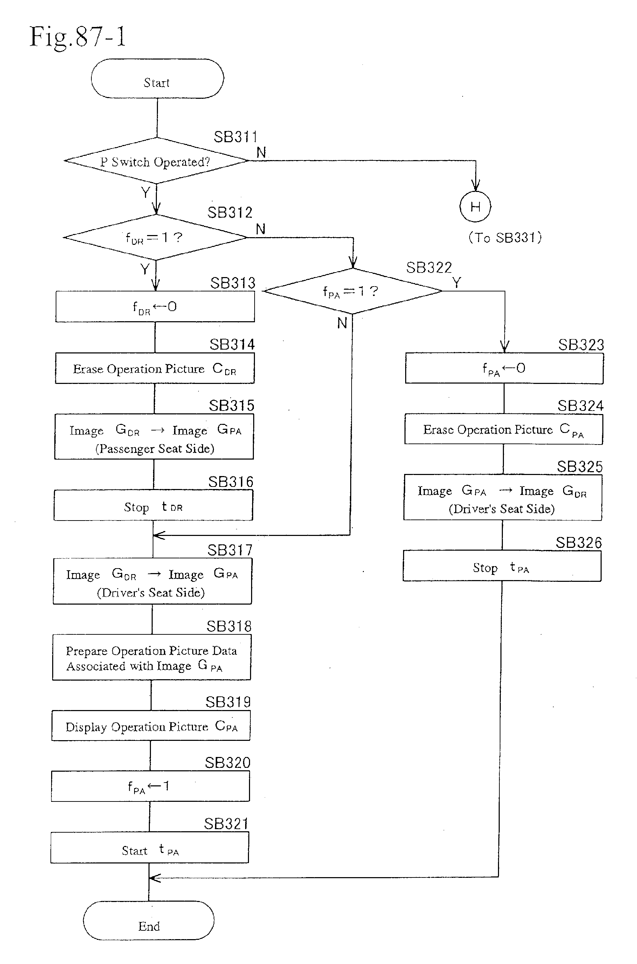

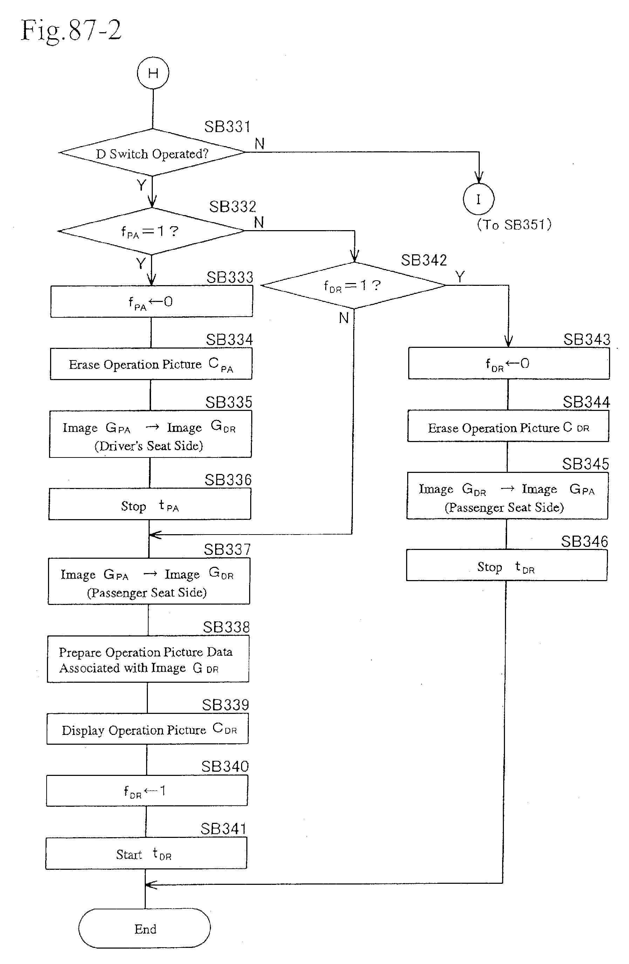

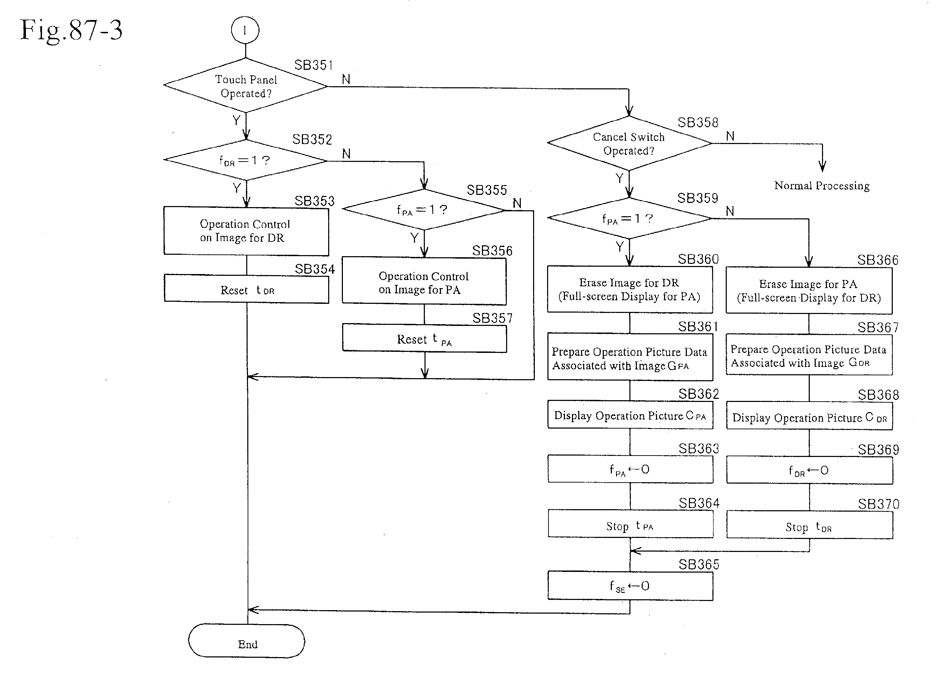

A processing operation [13-2] performed by the control unit 100B in the AV navigation system wherein the display device according to the thirteenth embodiment is adopted is described below with flowcharts shown in Figs. 87-1 to 87-3. Here, this processing operation [13-2] is performed in cases where the user operated a touch panel (operating switches B_{D1}-B_{D6} or B_{A1}-B_{A6}) formed on a display unit 4, operating switches 15a-15k constituting an operating unit 15, a remote control 123 or the like. Here, as described above, when the separate display is standard, as a matter of course, a separate display flag f_{SE} is not required, and therefore, it is not included in starting conditions that the separate display flag f_{SE} is 1.

Whether the passenger seat selection switch 15i for setting operations to the image G_{PA} for passenger seat to be practicable was operated or not is judged (Step SB311). When it is judged that the passenger seat selection switch 15i was operated, whether a driver's seat flag f_{DR} is 1 or not is judged (Step SB312).

When it is judged that the driver's seat flag f_{DR} is 1 (i.e. operations to the image G_{DR} for driver's seat have been set to be practicable) (see Fig. 85), in order to switch an image to which operations are practicable to the image G_{PA} for passenger seat, the driver's seat flag f_{DR} is returned to 0 (Step SB313). The operation picture C_{DR} is erased from the display unit 4 (Step SB314), the image G_{DR} for driver's seat displayed in place of the image G_{PA} for passenger seat is erased and the image G_{PA} for passenger seat is displayed in the passenger seat direction (Step SB315). And a timer t_{DR} for measuring a time during which no operation input to the image G_{DR} for driver's seat is conducted (i.e. a time elapsed after the last operation) is brought to a stop (Step SB316).

The image G_{DR} for driver's seat is erased and the image G_{PA} for passenger seat is displayed in the driver's seat direction (Step SB317). Operation picture data for operation inputs to the image G_{PA} for passenger seat is prepared (Step SB318), and by using the prepared operation picture data, as shown in Fig. 86, an operation picture C_{PA} for operation inputs to the image G_{PA} for passenger seat is displayed on said image G_{PA} (Step SB319). Then, a passenger seat flag f_{PA} is set to be 1 (Step SB320), and a timer t_{PA} for measuring a time during which no operation input to the image G_{PA} for passenger seat is conducted (i.e. a time elapsed after the last operation) is turned to 0 and started up (Step SB321).

On the other hand, when it is judged that the driver's seat flag f_{DR} is not 1 (i.e. operations to the image G_{DR} for driver's seat have not been set to be practicable) in Step SB312, whether the passenger seat flag f_{PA} is 1 or not is judged (Step SB322). When it is judged that the passenger seat flag f_{PA} is not 1 (i.e. operations to the image G_{PA} for passenger seat have not been set to be practicable) (see Fig. 75), the processing operation goes to Step SB317, wherein processing for setting operations to the image G_{PA} for passenger seat to be practicable is conducted.

On the other hand, when it is judged that the passenger seat flag f_{PA} is 1 (i.e. operations to the image G_{PA} for passenger seat have been set to be practicable) in Step SB322 (see Fig. 86), the operation to the passenger seat selection switch 15i admitted in Step SB311 is regarded as an instruction for returning the image G_{PA} for passenger seat to an image to which operations are impracticable, and the passenger seat flag f_{PA} is returned to 0 (Step SB323). The operation picture C_{PA} is erased from the display unit 4 (Step SB324), the image G_{PA} for passenger seat displayed in place of the image G_{DR} for driver's seat is erased and the image G_{DR} for driver's seat is displayed in the driver's seat direction (Step SB325), and the timer t_{PA} is brought to a stop (Step SB326).

When it is judged that the passenger seat selection switch 15i has not been operated in Step SB311, the processing operation goes to Step SB331 (Fig. 87-2), wherein whether the driver's seat selection switch 15k for setting operations to the image G_{DR} for driver's seat to be practicable was operated or not is judged. When it is judged that the driver's seat selection switch 15k was operated, whether the passenger seat flag f_{PA} is 1 or not is judged (Step SB332).

When it is judged that the passenger seat flag f_{PA} is 1 (i.e. operations to the image G_{PA} for passenger seat have been set to be practicable) (see Fig. 86), in order to switch an image to which operations are practicable to the image G_{PA} for passenger seat, the passenger seat flag f_{PA} is returned to 0 (Step SB333). The operation picture C_{PA} is erased from the display unit 4 (Step SB334), the image G_{PA} for passenger seat displayed in place of the image G_{DR} for driver's seat is erased and the image G_{DR} for driver's seat is displayed in the driver's seat direction (Step SB335), and the timer t_{PA} is brought to a stop (Step SB336).

The image G_{PA} for passenger seat is erased and the image G_{DR} for driver's seat is displayed in the passenger seat direction (Step SB337). Operation picture data for operation inputs to the image G_{DR} for driver's seat is prepared (Step SB338), and by using the prepared operation picture data, as shown in Fig. 85, an operation picture C_{DR} for operation inputs to the image G_{DR} for driver's seat is displayed on said image G_{DR} (Step SB339). Then, the driver's seat flag f_{DR} is set to be 1 (Step SB340), and the timer t_{DR} is turned to 0 and started up (Step SB341).

On the other hand, when it is judged that the passenger seat flag f_{PA} is not 1 (i.e. operations to the image G_{PA} for passenger seat have not been set to be practicable) in Step SB332, whether the driver's seat flag f_{DR} is 1 or not is judged (Step SB342). When it is judged that the driver's seat flag f_{DR} is not 1 (i.e. operations to the image G_{DR} for driver's seat have not been set to be practicable) (see Fig. 75), the processing operation goes to Step SB337, wherein processing for setting operations to the image G_{DR} for driver's seat to be practicable is conducted.

On the other hand, when it is judged that the driver's seat flag f_{DR} is 1 (i.e. operations to the image G_{DR} for driver's seat have been set to be practicable) in Step SB342 (see Fig. 85), the operation to the driver's seat selection switch 15k admitted in Step SB331 is regarded as an instruction for returning the image G_{DR} for driver's seat to an image to which operations are impracticable, and the driver's seat flag f_{DR} is returned to 0 (Step SB343). The operation picture C_{DR} is erased from the display unit 4 (Step SB344), the image G_{DR} for driver's seat displayed in place of the image G_{PA} for passenger seat is erased and the image G_{PA} for passenger seat is displayed in the passenger seat direction (Step SB345), and the timer t_{DR} is brought to a stop (Step SB346).

When it is judged that the driver's seat selection switch 15k has not been operated in Step SB331, the processing operation goes to Step SB351 (Fig. 87-3), wherein whether the touch panel 118 formed on the display unit 4 was operated or not is judged. Here, since processing operations in Steps SB351-SB370 thereafter are similar to those in Steps SB251-SB270 shown in Fig. 83-3, they are not described below.

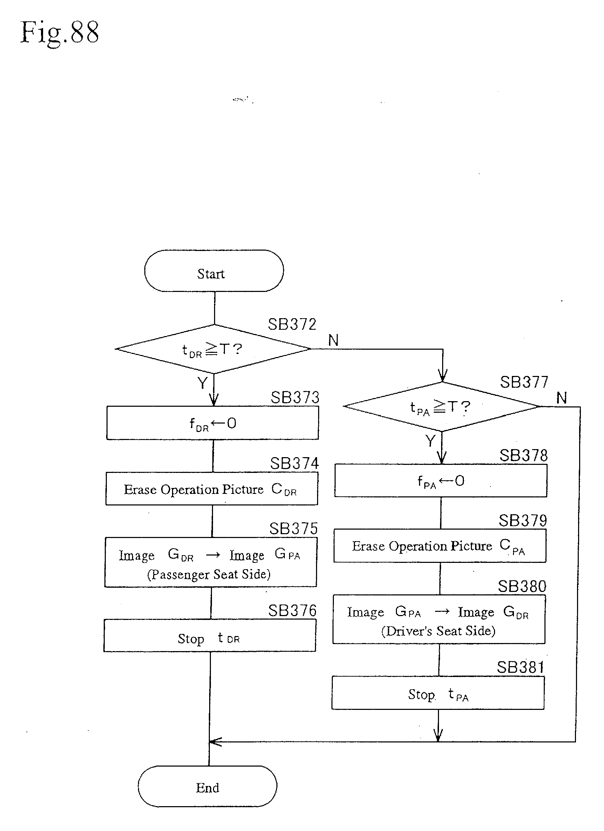

A processing operation [13-3] performed by the control unit 100B in the AV navigation system wherein the display device according to the thirteenth embodiment is adopted is described below with a flowchart shown in Fig. 88. Here, this processing operation [13-3] is performed at every prescribed interval in the separate display mode (i.e. when the separate display flag f_{SE} is 1).

Whether the timer t_{DR} has counted to a predetermined time T (e.g. 6 sec.) or more is judged (Step SB372). When it is judged that the timer t_{DR} has counted to the predetermined time T or more (i.e. 6 sec. has elapsed since the last operation to the image G_{DR} for driver's seat was conducted), in order to return the image G_{DR} for driver's seat to an image to which operations are impracticable, the driver's seat flag f_{DR} is returned to 0 (Step SB373). The operation picture C_{DR} is erased from the display unit 4 (Step SB374), the image G_{DR} for driver's seat displayed in place of the image G_{PA} for passenger seat is erased and the image G_{PA} for passenger seat is displayed in the passenger seat direction (Step SB375), and the timer t_{DR} is brought to a stop (Step SB376).

On the other hand, when it is judged that the timer t_{DR} has counted to less than the predetermined time T, whether the timer t_{PA} has counted to the predetermined time T (e.g. 6 sec.) or more is judged (Step SB377). When it is judged that the timer t_{PA} has counted to the predetermined time T or more (i.e. 6 sec. has elapsed since the last operation to the image G_{PA} for passenger seat was conducted), in order to return the image G_{PA} for passenger seat to an image to which operations are impracticable, the passenger seat flag f_{PA} is returned to 0 (Step SB378). The operation picture C_{PA} is erased from the display unit 4 (Step SB379), the image G_{PA} for passenger seat displayed in place of the image G_{DR} for driver's seat is erased and the image G_{DR} for driver's seat is displayed in the driver's seat direction (Step SB380), and the timer t_{PA} is brought to a stop (Step SB381). On the other hand, when it is judged that the timer t_{PA} has counted to less than the predetermined time T, the processing operation [13-3] is concluded at once.

By using the AV navigation system wherein the display device according to the thirteenth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable, or operations to neither of the images are practicable. Since operation control on an image to which operations are impracticable is not conducted, it is possible to prevent wrong operations.

By using the display devices according to the eleventh to thirteenth embodiments, an image to which operations are practicable and an operation picture for operation inputs to said image are displayed toward the other side, but whether to display the image and the operation picture for the other is effective or not may be decided case by case. For example, it cannot be said that to display a moving image such as a DVD image or a TV image as an image G_{PA} for passenger seat toward a driver DR during running is suitable from a viewpoint of safety.

In another embodiment, based on operation environments in which the user operates (e.g. driver's seat/passenger seat, during running/at a stop) or kinds of images, the display mode of an image to be displayed in the driver's seat direction or in the passenger seat direction may be changed.
As a method of changing the display mode, the below-described options a and b are exemplified.
(a) When the image G_{PA} for passenger seat was set to be an image to which operations are practicable:
   (i) When a vehicle is running:
      (1) The image G_{PA} for passenger seat is not displayed in the driver's seat direction.
         (2-1) When the image G_{PA} for passenger seat is a moving image such as a DVD image or a TV image, the image G_{PA} for passenger seat is not displayed in the driver's seat direction, or a still-frame picture is displayed.
         (2-2) When the image G_{PA} for passenger seat is not a moving image, the image G_{PA} for passenger seat is displayed in the driver's seat direction.
   (ii) When the vehicle is at a stop:
      (1) Without regard to the kind of the image, the image G_{PA} for passenger seat is displayed in the driver's seat direction.
(b) When the image G_{DR} for driver's seat was set to be an image to which operations are practicable:
   Without regard to the running state of the vehicle or the kind of the image, the image G_{DR} for driver's seat (e.g. a map image) is displayed in the passenger seat direction.

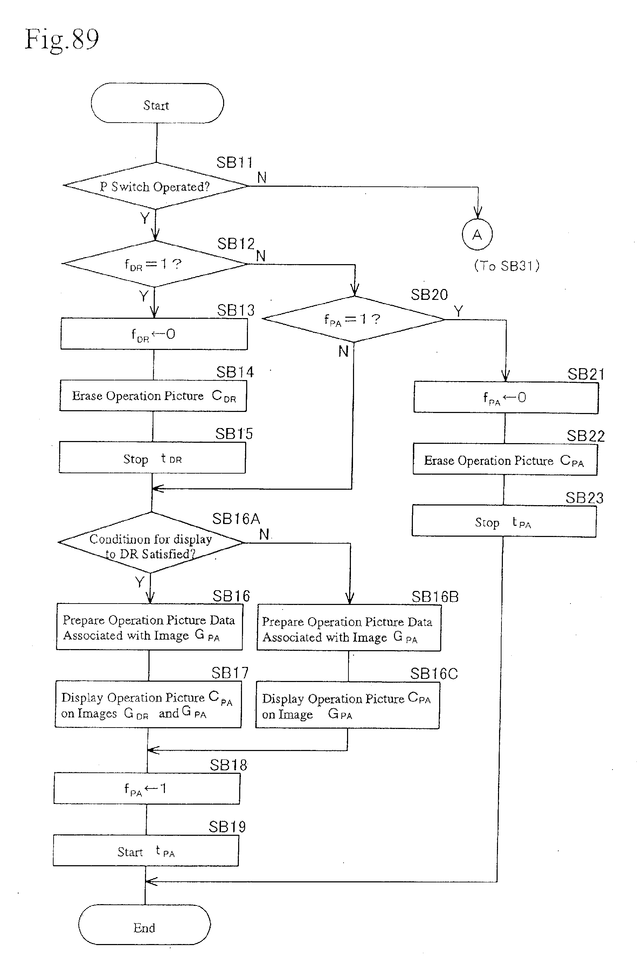

Processing operations [11-2A] to [13-2A] performed in cases where the display mode is changed based on the above-described operation environments or kinds of images are described below by reference to flowcharts shown in Figs. 89-91. Here, since the processing operations [11-2A] to [13-2A] are modified processing operations of [11-2] to [13-2] described in Figs. 79, 83 and 87, respectively, only the modified points are described below.

The processing operation [11-2A] is described based on the flowchart shown in Fig. 89. In Step SB16A, whether a condition for displaying an operation picture C_{PA} for conducting operation inputs to an image G_{PA} for passenger seat in the driver's seat direction has been satisfied or not is judged. When it is judged that the condition for the display has been satisfied, operation picture data for operation inputs to the image G_{PA} for passenger seat is prepared (Step SB 16), and by using the prepared operation picture data, as shown in Fig. 77, an operation picture C_{PA} is displayed on both of an image G_{DR} for driver's seat and the image G_{PA} for passenger seat (Step SB 17). Then, the processing operation goes to Step SB 18.

On the other hand, when it is judged that the display condition has not been satisfied, operation picture data for operation inputs to the image G_{PA} for passenger seat is prepared (Step SB16B), and by using the prepared operation picture data, an operation picture C_{PA} is displayed on the image G_{PA} for passenger seat (Step SB16C). Then, the processing operation goes to Step SB18. The operation picture C_{PA} is not displayed in the driver's seat direction.

Here, as the display condition, the below-described options a-c are exemplified.
a) A vehicle is not running.
b) The image G_{PA} for passenger seat is not a moving image such as a DVD image or a TV image.
c) A driver DR is in the vehicle.
d) A combination of the above-described options a-c

Whether the vehicle is running or at a stop can be judged based on information related to speed obtained from a navigation unit 106. As a matter of course, speed information may be directly captured from a speed sensor. Whether the image G_{PA} for passenger seat is a moving image such as a DVD image or a TV image or not can be judged based on information obtained from various kinds of sources such as a CD/MD player 101, a radio receiver 102, a TV receiver 103, a DVD player 104, an HD player 105 and the navigation unit 106. Whether the driver DR is in the vehicle or not can be judged based on information obtained from a passenger detection sensor arranged in the vehicle.

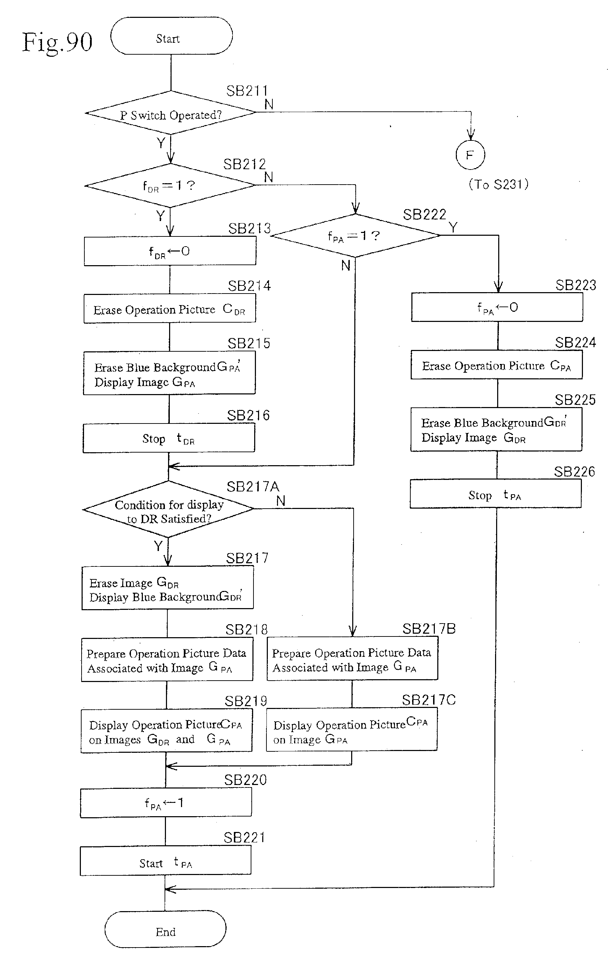

The processing operation [12-2A] is described based on the flowchart shown in Fig. 90. In Step SB217A, whether a condition for displaying an operation picture C_{PA} for conducting operation inputs to an image G_{PA} for passenger seat in the driver's seat direction has been satisfied or not is judged. When it is judged that the condition for the display has been satisfied, an image G_{DR} for driver's seat is erased and a blue background G_{DR}' is displayed (Step SB217). Operation picture data for operation inputs to the image G_{PA} for passenger seat is prepared (Step SB218), and by using the prepared operation picture data, as shown in Fig. 82, an operation picture C_{PA} for operation inputs to the image G_{PA} for passenger seat is displayed on the blue background G_{DR}' and the image G_{PA} for passenger seat (Step SB219). Then, the processing operation goes to Step SB220.

On the other hand, when it is judged that the display condition has not been satisfied, operation picture data for operation inputs to the image G_{PA} for passenger seat is prepared (Step SB217B), and by using the prepared operation picture data, an operation picture C_{PA} is displayed on the image G_{PA} for passenger seat (Step SB217C). Then, the processing operation goes to Step SB220. The operation picture C_{PA} is not displayed in the driver's seat direction.

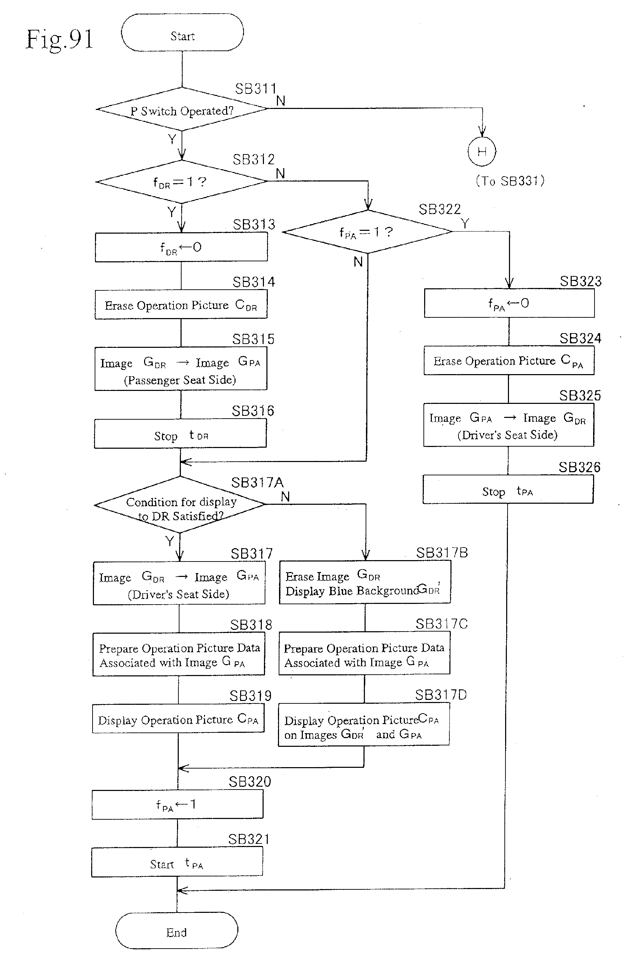

The processing operation [13-2A] is described based on the flowchart shown in Fig. 91. In Step SB317A, whether a condition for displaying an operation picture C_{PA} for conducting operation inputs to an image G_{PA} for passenger seat in the driver's seat direction has been satisfied or not is judged. When it is judged that the condition for the display has been satisfied, an image G_{DR} for driver's seat is erased and the image G_{PA} for passenger seat is displayed in the driver's seat direction (Step SB317). Operation picture data for operation inputs to the image G_{PA} for passenger seat is prepared (Step SB318), and by using the prepared operation picture data, as shown in Fig. 86, an operation picture C_{PA} for operation inputs to the image G_{PA} for passenger seat is displayed on said image G_{PA} (Step SB319). Then, the processing operation goes to Step SB320.

On the other hand, when it is judged that the display condition has not been satisfied, the image G_{DR} for driver's seat is erased and a blue background G_{DR}' is displayed (Step SB317B). Operation picture data for operation inputs to the image G_{PA} for passenger seat is prepared (Step SB317C), and by using the prepared operation picture data, an operation picture C_{PA} is displayed on the blue background G_{DR}' and the image G_{PA} for passenger seat (Step SB317D). Then, the processing operation goes to Step SB220.

By using the display devices according to the eleventh to thirteenth embodiments, either in a case where operations to the image G_{DR} for driver's seat are practicable or in a case where operations to the image G_{PA} for passenger seat are practicable, the operation pictures C_{DR} and C_{PA} are displayed both in the driver's seat direction and in the passenger seat direction, whereby the users can monitor the other side operations or operate to cover for the other side person. But when the passenger PA in the passenger seat is a small child or an elderly person, it appears that the passenger PA in the passenger seat need not be allowed to monitor operations by the driver DR.

In another embodiment, an operation-assisted image (an operation-assisted person) which requires operation assistance or an operation assistant who assists operations may be set in order to add limitation to display of operation pictures C_{DR} and C_{PA}. For more concrete descriptions, the below-described options a-d are exemplified.
(a) When an image G_{PA} for passenger seat which has been set to an operation-assisted image was set to an image to which operations are practicable:
   as shown in Fig. 77(a), an operation picture C_{PA} associated with the image G_{PA} for passenger seat is displayed on an image G_{DR} for driver's seat.
(b) When the image G_{DR} for driver's seat which has not been set to an operation-assisted image was set to an image to which operations are practicable:
   an operation picture C_{DR} associated with the image G_{DR} for driver's seat is not displayed on the image G_{PA} for passenger seat.
(c) When a driver DR has been set to an operation assistant and the image G_{PA} for passenger seat was set to an image to which operations are practicable:
   as shown in Fig. 77(a), an operation picture C_{PA} associated with the image G_{PA} for passenger seat is displayed on the image G_{DR} for driver's seat.
(d) When a passenger PA in a passenger seat has not been set to an operation assistant and the image G_{DR} for driver's seat was set to an image to which operations are practicable:
   an operation picture C_{DR} associated with the image G_{DR} for driver's seat is not displayed on the image G_{PA} for passenger seat.

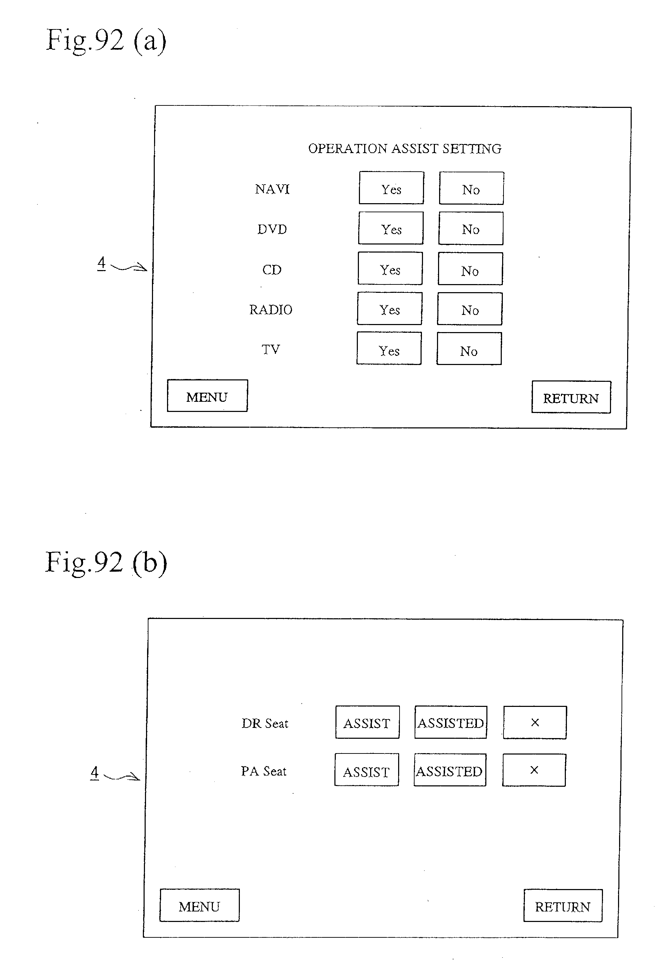

Which image is an operation-assisted image, who is an operation-assisted person and who is an operation assistant may be freely set by the user by using a remote control 123 on an image displayed on a display unit 4 as shown in Fig. 92, for example.

Whether operation assistance is required to a map image by a navigation unit 106, an image (e.g. a movie) displayed in DVD playback, an image displayed in CD playback, an image displayed in receiving radio broadcast and an image displayed in receiving TV broadcast, respectively, can be set on an image shown in Fig. 92(a).

Each of the driver's seat (driver DR) and the passenger seat (passenger PA in the passenger seat) can be set to be any of an operation assistant side, operation assisted side and neither of them on an image shown in Fig. 92(b). As an initial setting, the driver DR may be an operation assistant and the passenger PA in the passenger seat may be an operation-assisted person.

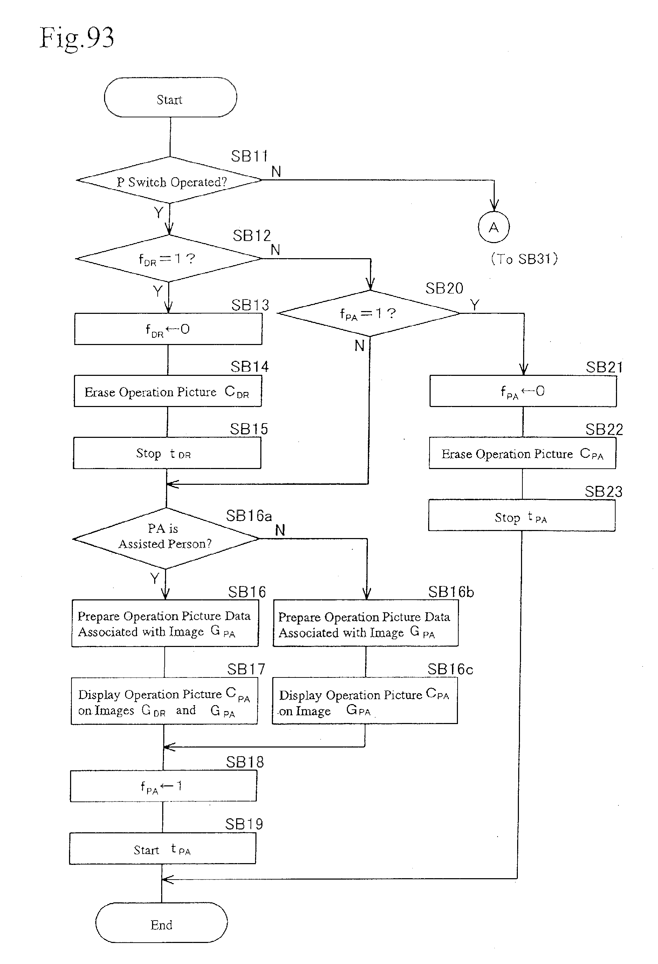

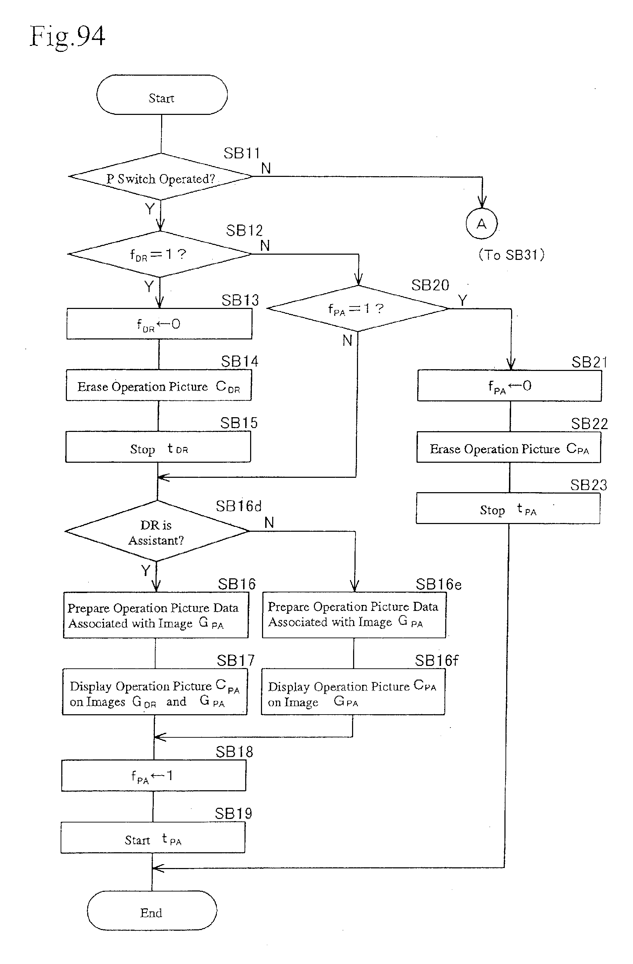

Processing operations [11-2B] and [11-2C] in a case where the display mode is changed in consideration of an operation assistant and an operation-assisted person are described below with flowcharts shown in Figs. 93 and 94. Here, since the processing operations [11-2B] and [11-2C] are modified processing operations of [11-2] described in Fig. 79, only the modified points are described below.

The processing operation [11-2B] is described based on the flowchart shown in Fig. 93. In Step SB16a, whether a passenger PA in a passenger seat is an operation-assisted person or not is judged. When it is judged that the passenger PA in the passenger seat is an operation-assisted person, operation picture data for operation inputs to an image G_{PA} for passenger seat is prepared (Step SB 16). And by using the prepared operation picture data, as shown in Fig. 77, an operation picture C_{PA} is displayed on both of an image G_{DR} for driver's seat and the image G_{PA} for passenger seat (Step SB 17). Then, the processing operation goes to Step SB 18.

On the other hand, when it is judged that the passenger PA in the passenger seat is not an operation-assisted person, operation picture data for operation inputs to the image G_{PA} for passenger seat is prepared (Step SB16b). And by using the prepared operation picture data, an operation picture C_{PA} is displayed only on the image G_{PA} for passenger seat (Step SB16c). Then, the processing operation goes to Step SB18.

Here, as a method of judging whether the passenger PA in the passenger seat is an operation-assisted person or not, a method of judging based on the contents set by the user on the image shown in Fig. 92(b), and a method wherein, when the passenger PA in the passenger seat is a small child or an elderly person, the passenger PA in the passenger seat is judged to be an operation-assisted person are exemplified.

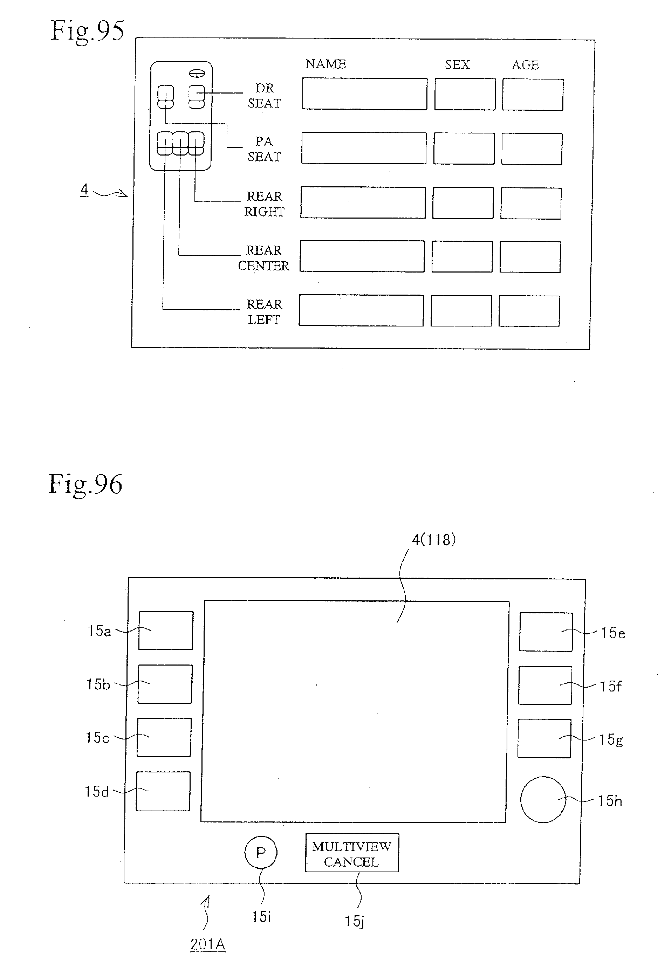

As a method of judging whether the passenger PA in the passenger seat is a small child or an elderly person or not, a method of installing a load sensor in the passenger seat to judge from the weight of the passenger sitting in the passenger seat, and a method wherein information about passengers has been previously registered on an image shown in Fig. 95 and it is judged based on the registered information are exemplified.

The processing operation [11-2C] is described based on the flowchart shown in Fig. 94. In Step SB16d, whether a driver DR is an operation assistant or not is judged. When it is judged that the driver DR is an operation assistant, operation picture data for operation inputs to an image G_{PA} for passenger seat is prepared (Step SB16). And by using the prepared operation picture data, as shown in Fig. 77, an operation picture C_{PA} is displayed on both of an image G_{DR} for driver's seat and the image G_{PA} for passenger seat (Step SB17). Then, the processing operation goes to Step SB18.

On the other hand, when it is judged that the driver DR is not an operation assistant, operation picture data for operation inputs to the image G_{PA} for passenger seat is prepared (Step SB16e). And by using the prepared operation picture data, an operation picture C_{PA} is displayed only on the image G_{PA} for passenger seat (Step SBl6f). Then, the processing operation goes to Step SB18.

An AV navigation system wherein a display device according to a fourteenth embodiment is adopted is described below. Here, since the construction of said AV navigation system is similar to that of the AV navigation system shown in Fig. 5 except the control unit 100, a control unit is differently marked and the other components are not described below.

Fig. 96 is an external front view of the display device according to the fourteenth embodiment. Reference numeral 201A in Fig. 96 represents a display device, comprising a display unit 4 with a touch panel 118 formed on a surface thereof, an operating unit 15 (operating switches 15a-15h) arranged therearound, a passenger seat selection switch (P) 15i and a separate display cancel switch (multiview cancel) 15j.

The display unit 4 comprises parallax barriers 26 and associated parts as shown in Fig. 3. On the same screen thereof, an image G_{DR} for driver's seat and an image G_{PA} for passenger seat can be separately displayed, and therefore, it is possible to allow a driver DR to see the image G_{DR} for driver's seat and to allow a passenger PA in a passenger seat to see the image G_{PA} for passenger seat.

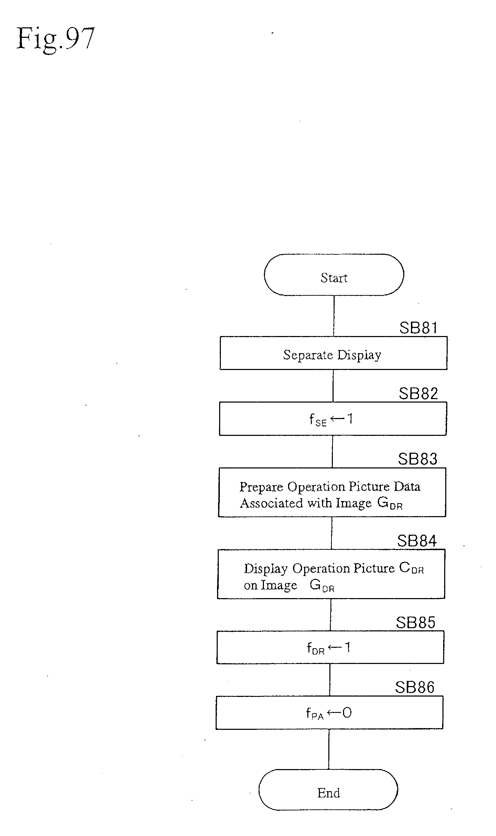

A processing operation [14-1] performed by the control unit 100C in the AV navigation system wherein the display device according to the fourteenth embodiment is adopted is described below with a flowchart shown in Fig. 97. Here, this processing operation [14-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on the display unit 4, the operating unit 15, a remote control 123 or the like.

Here, in cases where the separate display is standard (i.e. the separate display starts after turning-on of the AV navigation system), the user's instruction for separate display is not required. And therefore, the processing operation [14-1] described below is not needed and a separate display flag f_{SE} for showing that the separate display has been conducted is not required.

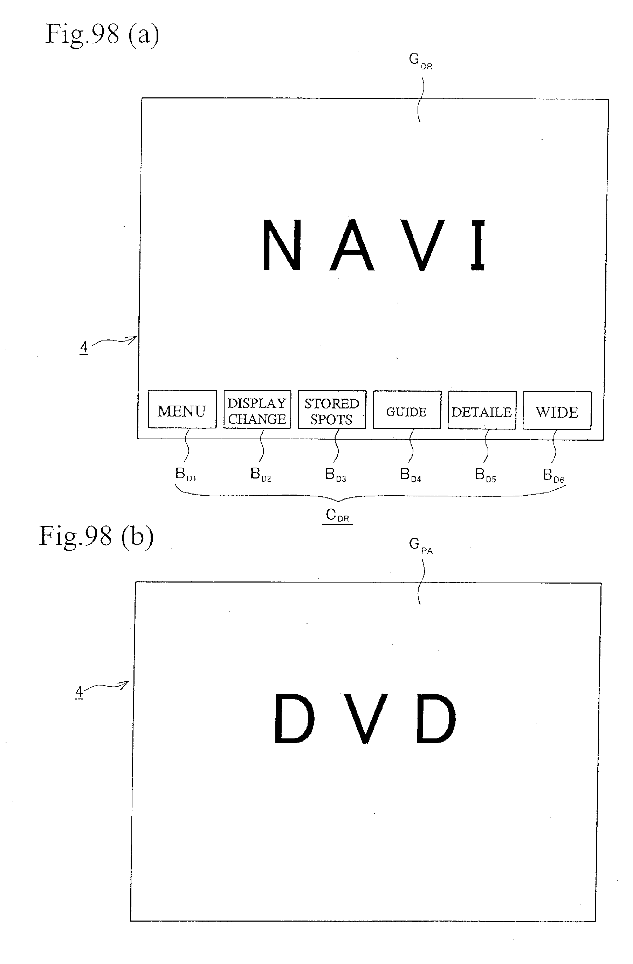

When an instruction for separate display is provided by the user, based on prescribed conditions, one of two images is displayed as an image G_{DR} for driver's seat and the rest is displayed as an image G_{PA} for passenger seat as shown in Fig. 98 (Step SB81). Then, the separate display flag f_{SE} for showing that the separate display has been conducted is set to be 1 (Step SB82).

As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified. Here, priority has been given to the image G_{DR} for driver's seat, and therefore, operations to the image G_{DR} for driver's seat are practicable when the separate display is started.

Operation picture data for operation inputs to the image G_{DR} for driver's seat to which priority has been given is prepared (Step SB83), and by using the prepared operation picture data, an operation picture C_{DR} for operation inputs to the image G_{DR} for driver's seat is displayed on said image G_{DR} (Step SB84). Then, a driver's seat flag f_{DR} is set to be 1 and a passenger seat flag f_{PA} is set to be 0 (Steps SB85 and SB86). Thus, the image G_{DR} for driver's seat is an image to which operations are practicable at this time.

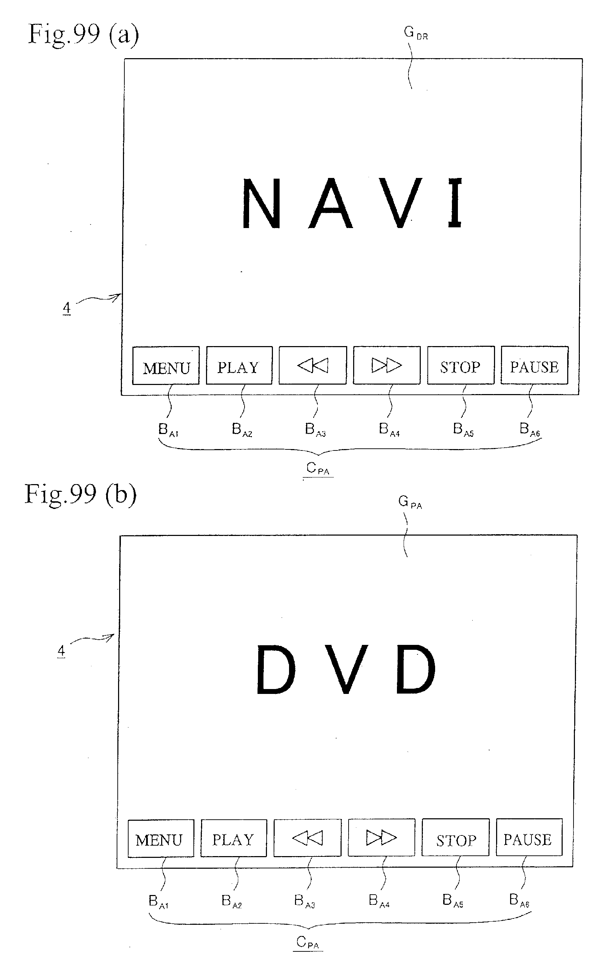

Fig. 98(a) is a diagram showing an example of the image G_{DR} for driver's seat, and Fig. 98(b) is a diagram showing an example of the image G_{PA} for passenger seat. Operations to the image G_{DR} for driver's seat are practicable and the operation picture C_{DR} for operation inputs to the image G_{DR} for driver's seat is displayed on said image G_{DR}. On the other hand, when operations to the image G_{PA} for passenger seat are practicable, as shown in Fig. 99, an operation picture C_{PA} for operation inputs to the image G_{PA} for passenger seat is displayed on the image G_{DR} for driver's seat and the image G_{PA} for passenger seat.

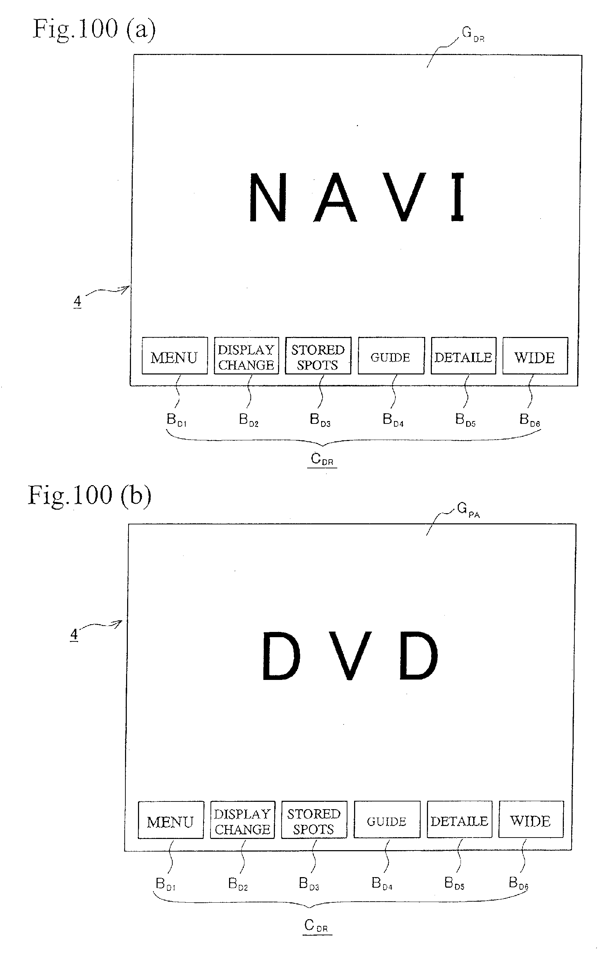

Here, the operation picture C_{DR} is displayed only on the image G_{DR} for driver's seat, not on the image G_{PA} for passenger seat. But in another embodiment, as shown in Fig. 100, an operation picture C_{DR} may be displayed also on an image G_{PA} for passenger seat.

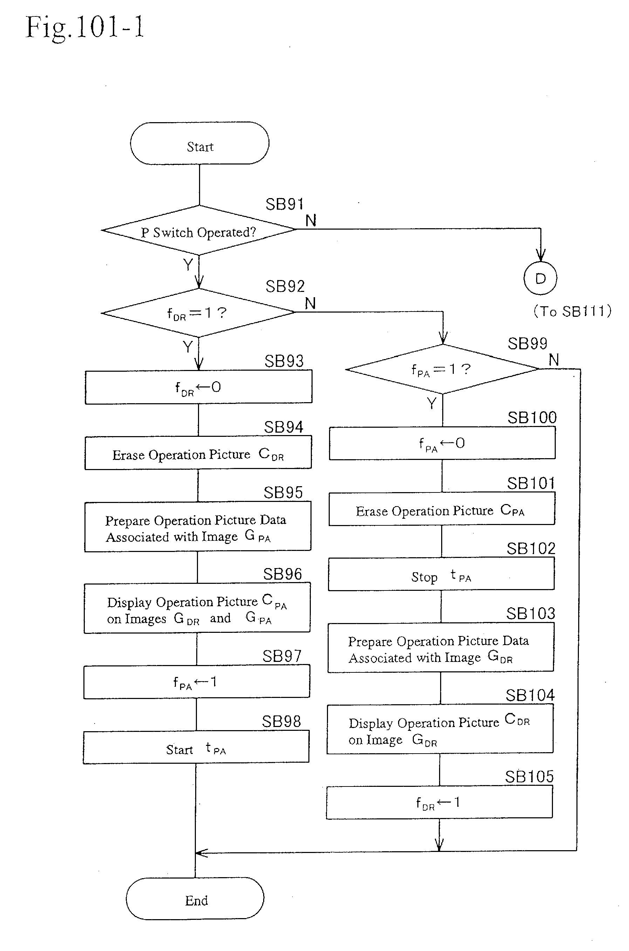

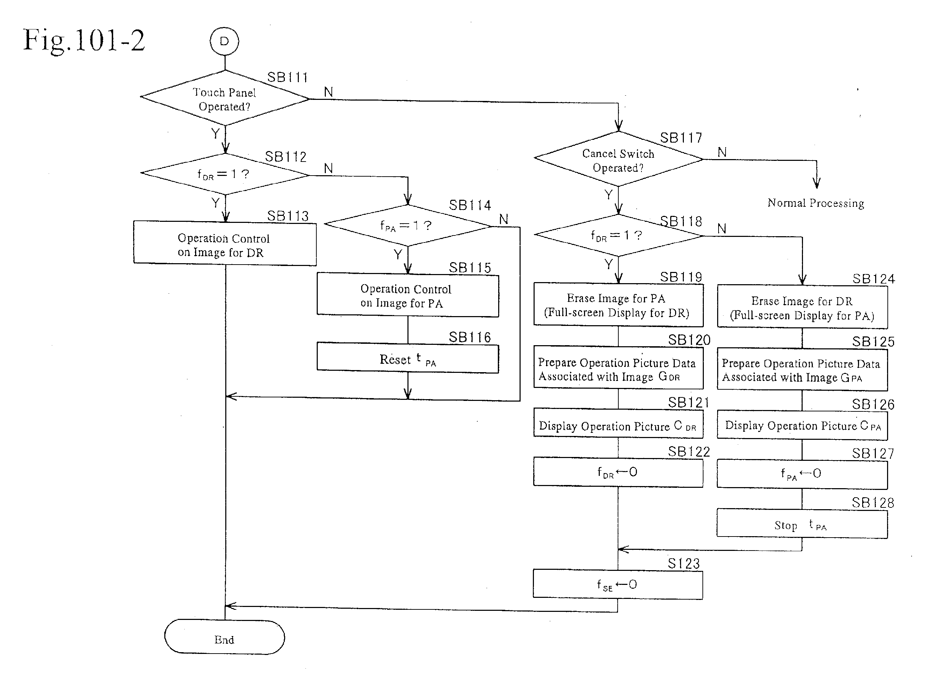

A processing operation [14-2] performed by the control unit 100C in the AV navigation system wherein the display device according to the fourteenth embodiment is adopted is described below with flowcharts shown in Figs. 101-1 and 101-2. Here, this processing operation [14-2] is performed in cases where the user operated the touch panel (operating switches B_{D1}-B_{D6} or B_{A1}-B_{A6}) formed on the display unit 4, the operating switches 15a-15j constituting the operating unit 15, the remote control 123 or the like. Here, as described above, when the separate display is standard, as a matter of course, the separate display flag f_{SE} is not required, and therefore, it is not included in starting conditions that the separate display flag f_{SE} is 1.

Whether the passenger seat selection switch 15i used for switching an image to which operations are practicable to the image G_{PA} for passenger seat was operated or not is judged (Step SB91). When it is judged that the passenger seat selection switch 15i was operated, whether the driver's seat flag f_{DR} is 1 or not is judged (Step SB92).

When it is judged that the driver's seat flag f_{DR} is 1 (i.e. operations to the image G_{DR} for driver's seat have been set to be practicable) (see Fig. 98), in order to switch an image to which operations are practicable to the image G_{PA} for passenger seat, the driver's seat flag f_{DR} is returned to 0 (Step SB93), and the operation picture C_{DR} is erased from the display unit 4 (Step SB94).

Operation picture data for operation inputs to the image G_{PA} for passenger seat is prepared (Step SB95), and by using the prepared operation picture data, as shown in Fig. 99, an operation picture C_{PA} for operation inputs to the image G_{PA} for passenger seat is displayed on both of the image G_{DR} for driver's seat and the image G_{PA} for passenger seat (Step SB96). Then, the passenger seat flag f_{PA} is set to be 1 (Step SB97), and a timer t_{PA} is turned to 0 and started up (Step SB98).

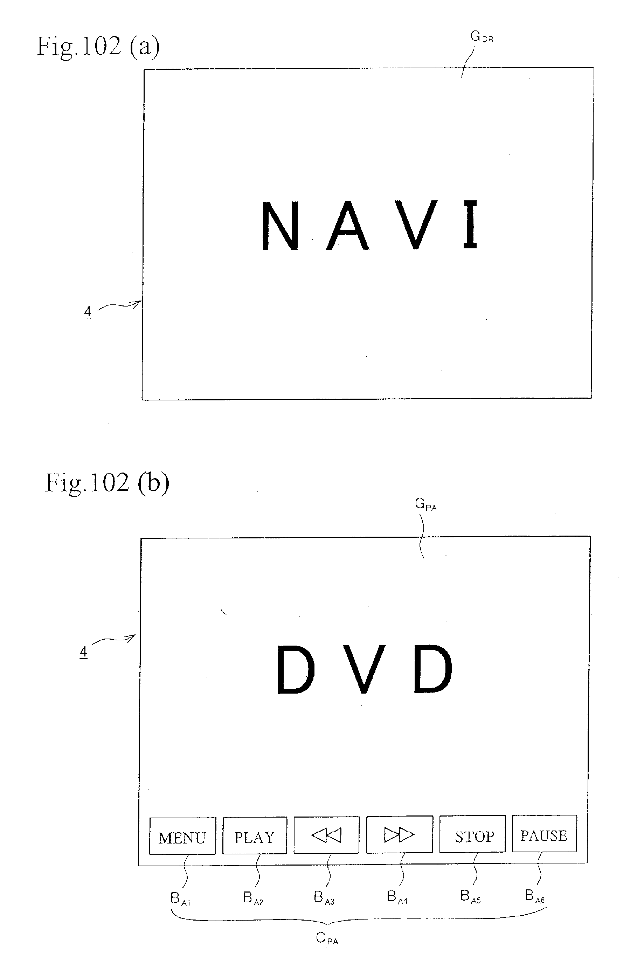

Here, the operation picture C_{PA} is displayed on both of the image G_{DR} for driver's seat and the image G_{PA} for passenger seat, but in another embodiment, as shown in Fig. 102, an operation picture C_{PA} may not be displayed on an image G_{DR} for driver's seat and may be displayed only on an image G_{PA} for passenger seat.

On the other hand, when it is judged that the driver's seat flag f_{DR} is not 1 (i.e. operations to the image G_{DR} for driver's seat have not been set to be practicable) in Step SB92, whether the passenger seat flag f_{PA} is 1 or not is judged (Step SB99). When it is judged that the passenger seat flag f_{PA} is 1 (i.e. operations to the image G_{PA} for passenger seat have been set to be practicable) (see Fig. 99), the operation to the passenger seat selection switch 15i admitted in Step SB91 is regarded as an instruction for returning the image G_{PA} for passenger seat to an image to which operations are impracticable. And the passenger seat flag f_{PA} is returned to 0 (Step SB100), the operation picture C_{PA} is erased from the display unit 4 (Step SB101), and the timer t_{PA} is brought to a stop (Step SB102).

Operation picture data for operation inputs to the image G_{DR} for driver's seat is prepared (Step SB103), and by using the prepared operation picture data, as shown in Fig. 98, an operation picture C_{DR} is displayed on the image G_{DR} for driver's seat (Step SB 104). Then, the driver's seat flag f_{DR} is set to be 1 (Step SB 105). On the other hand, when it is judged that the passenger seat flag f_{PA} is not 1 in Step SB99, the processing operation [14-2] is concluded at once.

When it is judged that the passenger seat selection switch 15i has not been operated in Step SB91, the processing operation goes to Step SB111 (Fig. 101-2), wherein whether the touch panel 118 formed on the display unit 4 was operated or not is judged. When it is judged that the touch panel 118 was operated, whether the driver's seat flag f_{DR} is 1 or not is judged (Step SB112).

When it is judged that the driver's seat flag f_{DR} is 1 (i.e. operations to the image G_{DR} for driver's seat have been set to be practicable), operation control on the image G_{DR} for driver's seat according to the operation is conducted (Step SB 113). On the other hand, when it is judged that the driver's seat flag f_{DR} is not 1, whether the passenger seat flag f_{PA} is 1 or not is judged (Step SB114).

When it is judged that the passenger seat flag f_{PA} is 1 (i.e. operations to the image G_{PA} for passenger seat have been set to be practicable), operation control on the image G_{PA} for passenger seat according to the operation is conducted (Step SB 115), and then, the timer t_{PA} is returned to 0 (Step SB 116). On the other hand, when it is judged that the passenger seat flag f_{PA} is not 1, the operation is regarded as being invalid, and the processing operation [14-2] is concluded at once.

When it is judged that the touch panel 118 has not been operated in Step SB111, whether the separate display cancel switch 15j was operated or not is judged (Step SB117). When it is judged that the separate display cancel switch 15j was operated, whether the driver's seat flag f_{DR} is 1 or not is judged (Step SB118).

When it is judged that the driver's seat flag f_{DR} is 1 (i.e. operations to the image G_{DR} for driver's seat have been set to be practicable), in order to keep the image G_{DR} for driver's seat of the two images, the image G_{PA} for passenger seat is erased and the image G_{DR} for driver's seat is displayed in a full-screen mode (Step SB119). And operation picture data for operation inputs to the image G_{DR} for driver's seat is prepared (Step SB 120), and by using the prepared operation picture data, an operation picture C_{DR} for operation inputs to the image G_{DR} for driver's seat is displayed on said image G_{DR} (Step SB121).

Then, the passenger seat flag f_{DR} is returned to 0 (Step SB 122), and the separate display flag f_{SE} is returned to 0 (Step SB123). Here, the image G_{DR} for driver's seat is displayed in the full-screen mode, but in another embodiment, in the separate display mode, the same as an image G_{DR} for driver's seat displayed only with pixels in even-numbered lines may be displayed in the passenger seat direction. That is, the image displayed in the driver's seat direction in the separate display mode is similarly displayed only with pixels in odd-numbered lines.

On the other hand, when it is judged that the driver's seat flag f_{DR} is not 1 in Step SB 118, in order to keep the image G_{PA} for passenger seat of the two images, the image G_{DR} for driver's seat is erased and the image G_{PA} for passenger seat is displayed in the full-screen mode (Step SB 124). And operation picture data for operation inputs to the image G_{PA} for passenger seat is prepared (Step SB 125), and by using the prepared operation picture data, an operation picture C_{PA} for operation inputs to the image G_{PA} for passenger seat is displayed on said image G_{PA} (Step SB 126).

Then, the passenger seat flag f_{PA} is returned to 0 (Step SB127), the timer t_{PA} is brought to a stop (Step SB128), and then, the processing operation goes to Step SB123, wherein the separate display flag f_{SE} is returned to 0. Here, the image G_{PA} for passenger seat is displayed in the full-screen mode, but in another embodiment, in the separate display mode, the same as an image G_{PA} for passenger seat displayed only with pixels in odd-numbered lines may be displayed in the driver's seat direction. That is, the image displayed in the passenger seat direction in the separate display mode is similarly displayed only with pixels in even-numbered lines.
When it is judged that the separate display cancel switch 15j has not been operated in Step SB117, conventional processing according to the other operations is conducted.

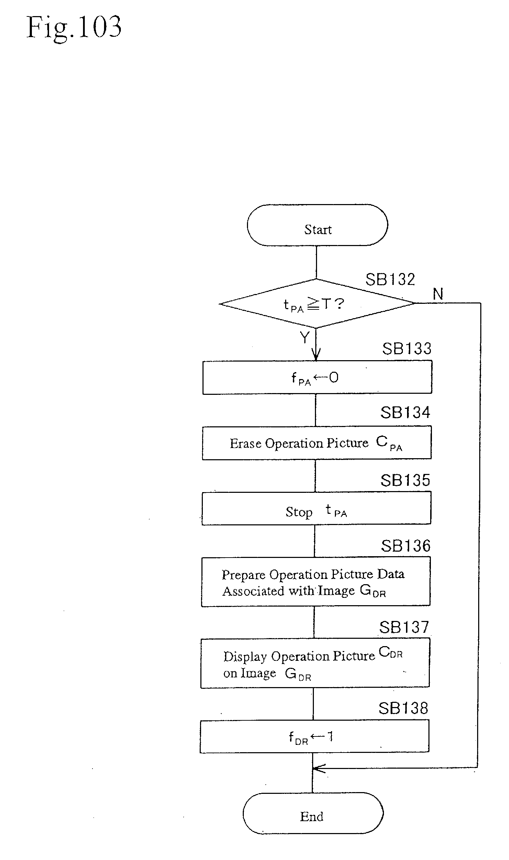

A processing operation [14-3] performed by the control unit 100C in the AV navigation system wherein the display device according to the fourteenth embodiment is adopted is described below with a flowchart shown in Fig. 103. Here, this processing operation [14-3] is performed at every prescribed interval in the separate display mode (i.e. when the separate display flag f_{SE} is 1).

Whether the timer t_{PA} has counted to a predetermined time T (e.g. 6 sec.) or more is judged (Step SB132). When it is judged that the timer t_{PA} has counted to the predetermined time T or more (i.e. 6 sec. has elapsed since the last operation to the image G_{PA} for passenger seat was conducted), in order to return the image G_{PA} for passenger seat to an image to which operations are impracticable, the passenger seat flag f_{PA} is returned to 0 (Step SB133), the operation picture C_{PA} is erased from the display unit 4 (Step SB 134), and the timer t_{PA} is brought to a stop (Step SB 135). On the other hand, when it is judged that the timer t_{PA} has counted to less than the predetermined time T, the processing operation [14-3] is concluded at once.

Operation picture data for operation inputs to the image G_{DR} for driver's seat is prepared (Step SB136), and by using the prepared operation picture data, an operation picture C_{DR} is displayed on the image G_{DR} for driver's seat as shown in Fig. 98 (Step SB137), and then, the driver's seat flag f_{DR} is set to be 1 (Step SB138).

By using the AV navigation system wherein the display device according to the fourteenth embodiment is adopted, operations to no more than one of the image G_{DR} for driver's seat and the image G_{PA} for passenger seat are practicable. That is, only operations to either of the image G_{DR} for driver's seat and the image G_{PA} for passenger seat are practicable. Since operation control on an image to which operations are impracticable is not conducted, it is possible to prevent wrong operations.

By using the display device according to the fourteenth embodiment, when the image G_{PA} for passenger seat (e.g. a DVD image) which can be seen from the passenger seat direction has been set to an image to which operations are practicable, an operation picture C_{PA} for operation inputs to the image G_{PA} for passenger seat (e.g. an operation picture for operations such as fast forward/reverse of a DVD image) is displayed not only on the image G_{PA} for passenger seat but also on the image G_{DR} for driver's seat (see Fig. 99).

Thus, without moving and looking into the image G_{PA} for passenger seat from the passenger seat side, the driver DR can see the operation picture C_{PA}, and therefore, the driver DR can keep watch on which operation the passenger PA in the passenger seat is doing. In addition, the driver DR can conduct operations instead of the passenger PA in the passenger seat. This is especially effective when the passenger PA in the passenger seat is a small child or an elderly person, or a machine-illiterate person.

Conversely, when the image G_{DR} for driver's seat to which priority has been given has been set to an image to which operations are practicable, an operation picture C_{DR} for operation inputs to the image G_{DR} for driver's seat is not displayed on the image G_{PA} for passenger seat and is displayed only on the image G_{DR} for driver's seat (see Fig. 98). Thus, it is possible to prevent images more than necessary from being displayed.

Regarding the display device according to the fourteenth embodiment, a case where priority has been given to the image G_{DR} for driver's seat is described, but the display device according to the present invention is not limited to the case where priority has been given to the image G_{DR} for driver's seat. Priority may be given to the image G_{PA} for passenger seat.

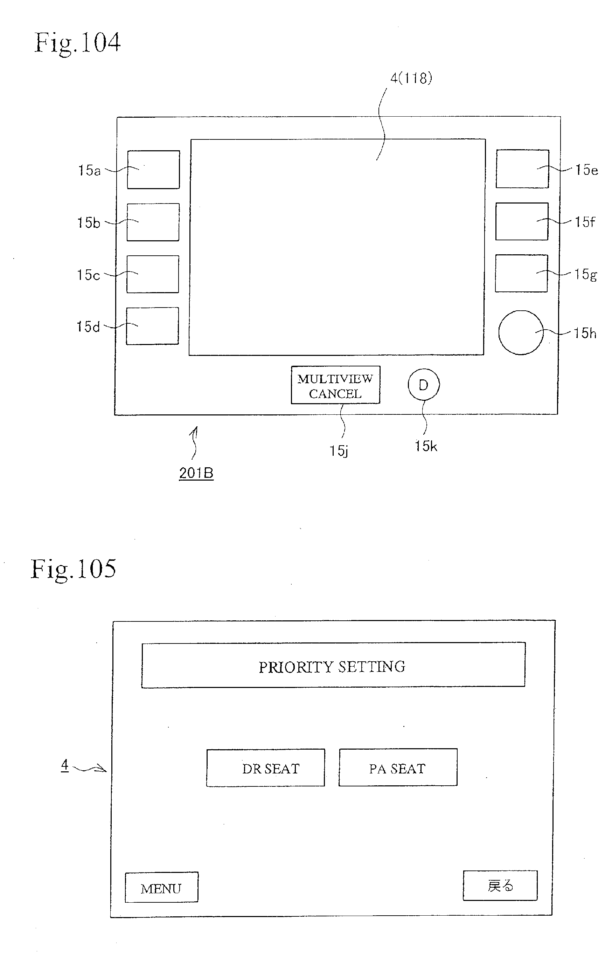

In that case, it is desired that a display device 201B, comprising a display unit 4 with a touch panel 118 formed on a surface thereof, an operating unit 15 (operating switches 15a-15h) arranged therearound, a separate display cancel switch (multiview cancel) 15j and a driver's seat selection switch (D) 15k as shown in Fig. 104 should be adopted.

The priority may be freely set by the user on an image shown in Fig. 105. In this case, it is desired that a display device 201, comprising a passenger seat selection switch (P) 15i and a driver's seat selection switch (D) 15k as shown in Fig. 73, should be adopted.

An AV navigation system wherein a display device according to a fifteenth embodiment is adopted is described below. Here, since the construction of said AV navigation system is similar to that of the AV navigation system shown in Fig. 5 except the control unit 100, a control unit is differently marked and the other components are not described below.

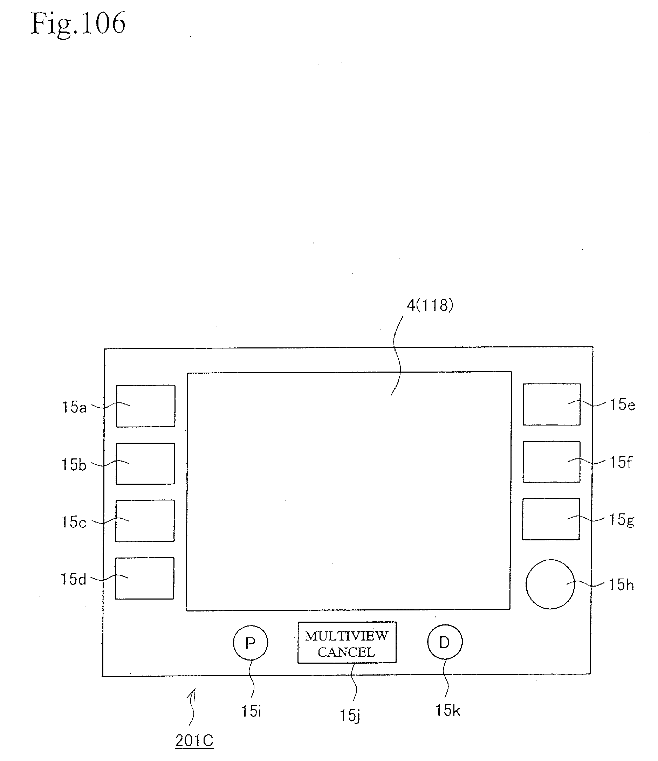

Fig. 106 is an external front view of the display device according to the fifteenth embodiment. Reference numeral 201C in Fig. 106 represents a display device, comprising a display unit 4 with a touch panel 118 formed on a surface thereof, an operating unit 15 (operating switches 15a-15h) arranged therearound, a passenger seat selection switch (P) 15i, a separate display cancel switch (multiview cancel) 15j and a driver's seat selection switch (D) 15k.

The display unit 4 comprises parallax barriers 26 and associated parts as shown in Fig. 3. On a common screen thereof, an image G_{DR} for driver's seat and an image G_{PA} for passenger seat can be separately displayed, and therefore, it is possible to allow a driver DR to see the image G_{DR} for driver's seat and to allow a passenger PA in a passenger seat to see the image G_{PA} for passenger seat.

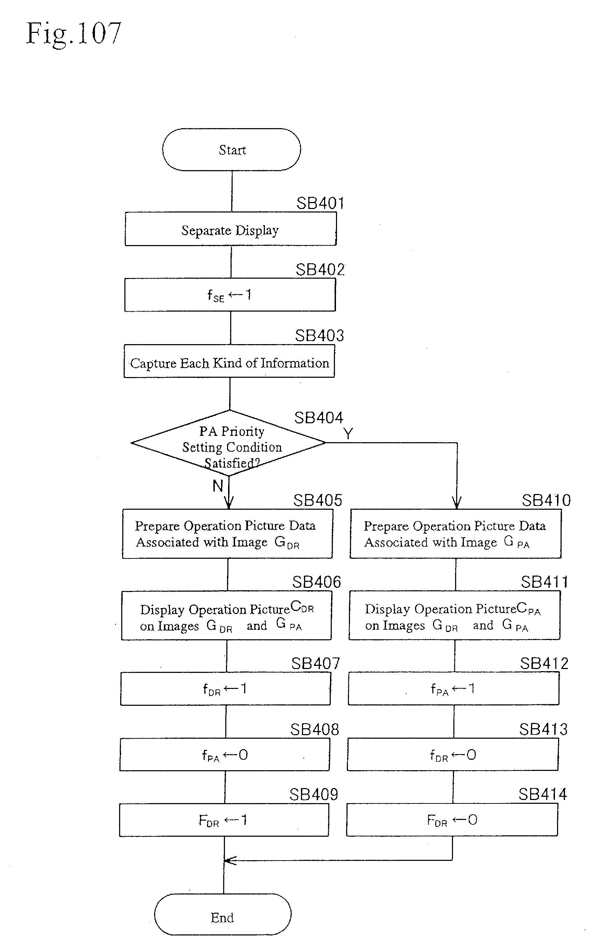

A processing operation [15-1] performed by the control unit 100D in the AV navigation system wherein the display device according to the fifteenth embodiment is adopted is described below with a flowchart shown in Fig. 107. Here, this processing operation [15-1] is performed in cases where a user provides an instruction for separate display (multiview) whereby a driver DR is allowed to see an image G_{DR} for driver's seat and a passenger PA in a passenger seat is allowed to see an image G_{PA} for passenger seat by conducting an operation to operating switches formed on the display unit 4, the operating unit 15, a remote control 123 or the like.

Here, in cases where the separate display is standard (i.e. the separate display starts after turning-on of the AV navigation system), the user's instruction for separate display is not required. And therefore, the processing operation [15-1] described below is not needed and a separate display flag f_{SE} for showing that the separate display has been conducted is not required.

When an instruction for separate display is provided by the user, based on prescribed conditions, one of two images is displayed as an image G_{DR} for driver's seat and the rest is displayed as an image G_{PA} for passenger seat as shown in Fig. 75 (Step SB401). Then, the separate display flag f_{SE} for showing that the separate display has been conducted is set to be 1 (Step SB402).

As a method of separate display, a method wherein, when a map image for guiding to a destination is displayed, for example, the map image is displayed as the image G_{DR} for driver's seat and a TV image or a movie is displayed as the image G_{PA} for passenger seat, and a method wherein each last memory or frequently selected image displayed in each viewing direction is displayed, are exemplified. Here, priority has been given to the image G_{DR} for driver's seat and therefore, operations to the image G_{DR} for driver's seat are practicable when the separate display is started.

Each kind of information used for judging whether a condition for setting the image G_{PA} for passenger seat to have priority has been satisfied or not is captured (Step SB403), and based on the captured information of each kind, whether the condition for setting the image G_{PA} for passenger seat to have priority has been satisfied or not is judged (Step SB404). When it is judged that the setting condition has not been satisfied, the priority is given to the image G_{DR} for driver's seat. And operation picture data for operation inputs to the image G_{DR} for driver's seat is prepared (Step SB405), and by using the prepared operation picture data, an operation picture C_{DR} for operation inputs to the image G_{DR} for driver's seat is displayed on the image G_{DR} for driver's seat and the image G_{PA} for passenger seat as shown in Fig. 76 (Step SB406). Then, a driver's seat flag f_{DR} is set to be 1 and a passenger seat flag f_{PA} is set to be 0 (Steps SB407 and SB408). A priority flag F_{DR} showing that priority has been given to the image G_{DR} for driver's seat is turned to 1 (Step SB409). Thus, the image G_{DR} for driver's seat is an image to which operations are practicable at this time.

Here, the operation picture C_{DR} is displayed on the image G_{DR} for driver's seat and the image G_{PA} for passenger seat. But in another embodiment, as shown in Fig. 98, an operation picture C_{DR} may be displayed only on an image G_{DR} for driver's seat.

On the other hand, when it is judged that the setting condition has been satisfied in Step SB404, priority is given to the image G_{PA} for passenger seat. And operation picture data for operation inputs to the image G_{PA} for passenger seat is prepared (Step SB410), and by using the prepared operation picture data, an operation picture C_{PA} for operation inputs to the image G_{PA} for passenger seat is displayed on the image G_{DR} for driver's seat and the image G_{PA} for passenger seat as shown in Fig. 77 (Step SB411). Then, the passenger seat flag f_{PA} is set to be 1 and the driver's seat flag f_{DR} is set to be 0 (Steps SB412 and SB413), and the priority flag F_{DR} is turned to 0 (Step SB414). Thus, the image G_{PA} for passenger seat is an image to which operations are practicable at this time.

Here, the operation picture C_{PA} is displayed on the image G_{DR} for driver's seat and the image G_{PA} for passenger seat. But in another embodiment, an operation picture C_{PA} may be displayed only on an image G_{PA} for passenger seat.

As a method of judging whether a condition for setting the image G_{PA} for passenger seat to have priority (a setting condition) has been satisfied or not, the below-described options a-d are exemplified.
a) Displayed images of every kind are ranked. When the image G_{PA} for passenger seat is on a higher rank than the image G_{DR} for driver's seat, it is judged that the setting condition has been satisfied.
   Rank A Map images
   Rank B Images in receiving radio broadcast and TV images
   Rank C Images in CD/MD playback and DVD images
   Rank D Others
   For example, when a map image is displayed as the image G_{DR} for driver's seat and a DVD image is displayed as the image G_{PA} for passenger seat, it is judged that the setting condition has not been satisfied.
b) Judging based on the running state of a vehicle
   - When the vehicle is running, it is judged that the setting condition has been satisfied.
      The running state of the vehicle can be judged based on information concerning speed obtained from a navigation unit 106.
c) Judging based on the load state of the vehicle
   - When the driver DR is not in the vehicle, it is judged that the setting condition has been satisfied.
      The load state of the vehicle can be judged based on information obtained from a passenger detection sensor arranged in the vehicle.
d) When an estimated operation frequency to the image G_{PA} for passenger seat is higher than an estimated operation frequency to the image G_{DR} for driver's seat, it is judged that the setting condition has been satisfied.

It appears that the number of operations to a map image such as a destination setting operation is relatively large before guiding to the destination is started, but it appears that the number of operations thereto becomes smaller once guiding to the destination was started. In other words, it is estimated that the operation frequency to a map image is high before a start of guiding but that the operation frequency to a map image is low after a start of guiding.

It is estimated that the operation frequency to a DVD image (particularly a movie) also becomes low after a start of playback. When music is reproduced on a CD/MD, it is estimated that selection operations may be sometimes performed and that the operation frequency is average.

For example, when a map image (high frequency/low frequency) is displayed as the image G_{DR} for driver's seat and an image in CD/MD playback (average frequency) is displayed as the image G_{PA} for passenger seat, the setting condition is not satisfied before a start of guiding, but the setting condition becomes satisfied after a start of guiding.

Here, as a method of judging whether guiding was started or not, a method of judging based on information obtained from the navigation unit 106 and a method of judging whether a certain time has elapsed after turning-on of the engine or not are exemplified.

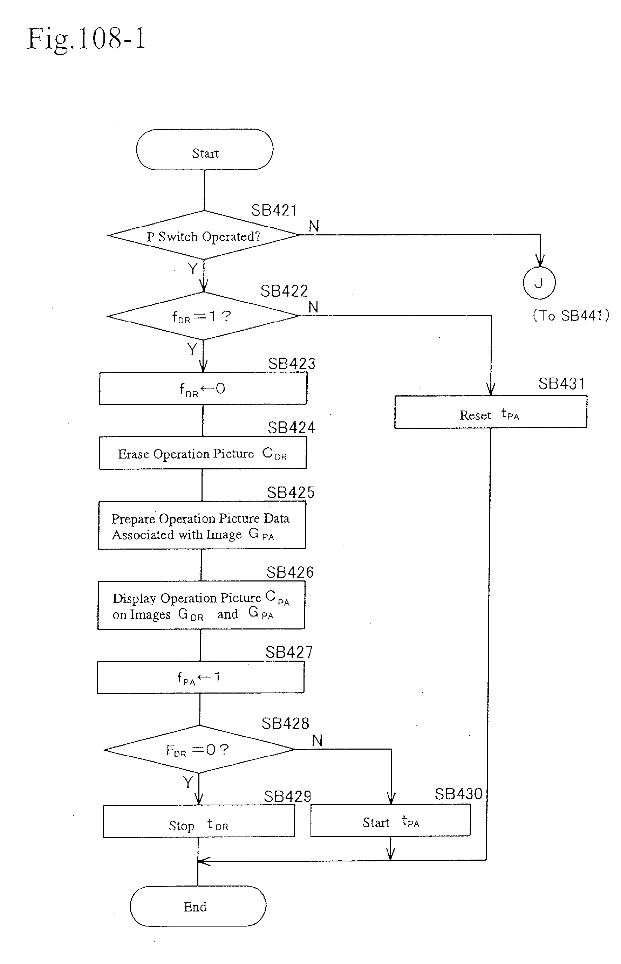

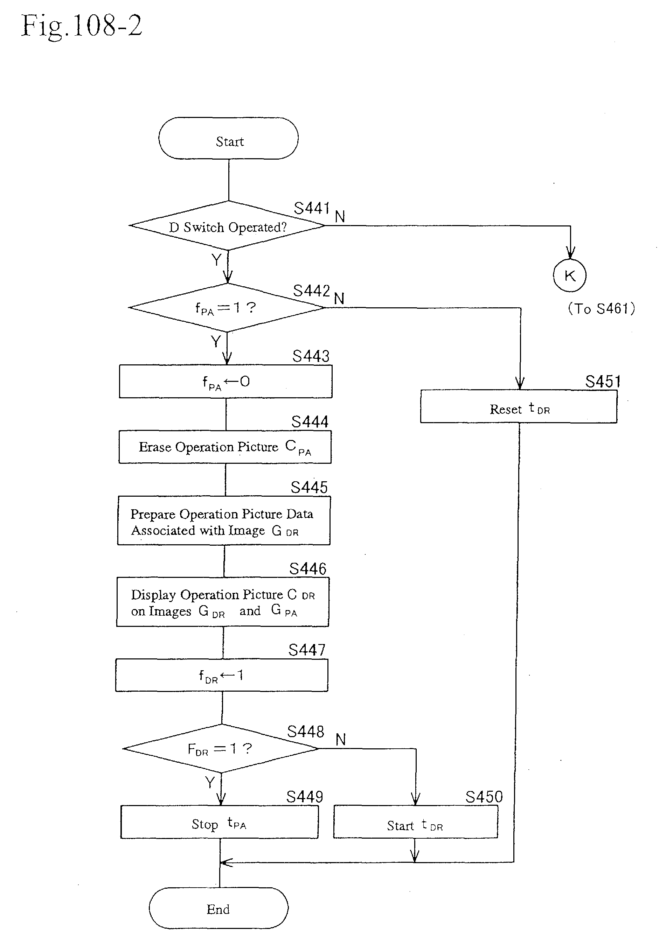

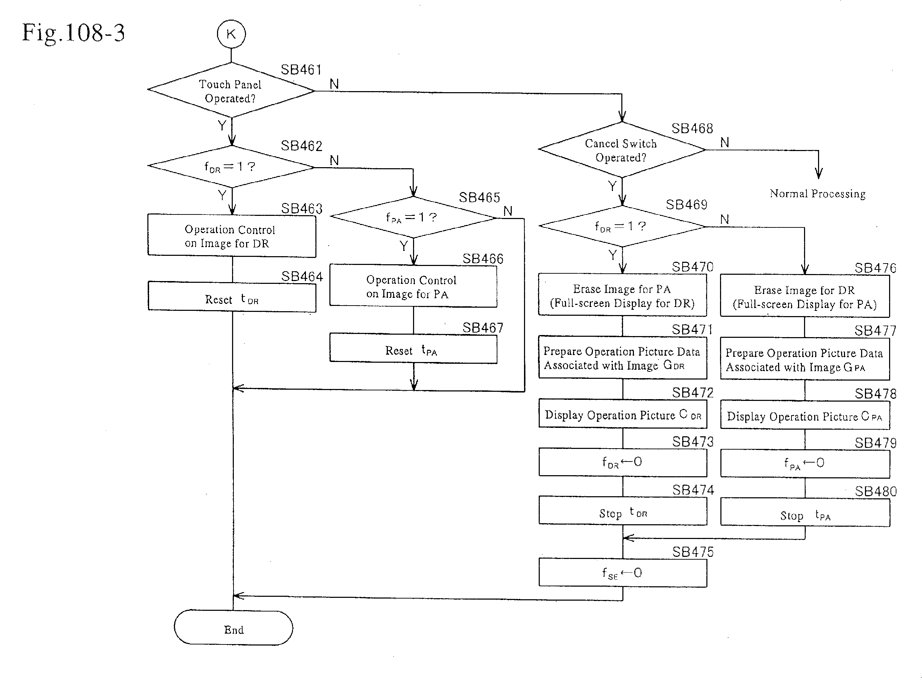

A processing operation [15-2] performed by the control unit 100D in the AV navigation system wherein the display device according to the fifteenth embodiment is adopted is described below with flowcharts shown in Figs. 108-1 to 108-3. Here, this processing operation [15-2] is performed in cases where the user operated the touch panel (operating switches B_{D1}-B_{D6} or B_{A1}-B_{A6}) formed on the display unit 4, the operating switches 15a-15k constituting the operating unit 15, the remote control 123 or the like. Here, as described above, when the separate display is standard, as a matter of course, the separate display flag f_{SE} is not required, and therefore, it is not included in starting conditions that the separate display flag f_{SE} is 1.

Whether the passenger seat selection switch 15i for setting operations to the image G_{PA} for passenger seat to be practicable was operated or not is judged (Step SB421). When it is judged that the passenger seat selection switch 15i was operated, whether the driver's seat flag f_{DR} is 1 or not is judged (Step SB422).

When it is judged that the driver's seat flag f_{DR} is 1 (i.e. operations to the image G_{DR} for driver's seat have been set to be practicable) (see Fig. 76), in order to switch an image to which operations are practicable to the image G_{PA} for passenger seat, the driver's seat flag f_{DR} is returned to 0 (Step SB423), and the operation picture C_{DR} is erased from the display unit 4 (Step SB424).

Operation picture data for operation inputs to the image G_{PA} for passenger seat is prepared (Step SB425), and by using the prepared operation picture data, as shown in Fig. 77, an operation picture C_{PA} for operation inputs to the image G_{PA} for passenger seat is displayed on both of the image G_{DR} for driver's seat and the image G_{PA} for passenger seat (Step SB426). Then, the passenger seat flag f_{PA} is set to be 1 (Step SB427), and whether the priority flag F_{DR} is 0 or not is judged (Step SB428).

When it is judged that the priority flag F_{DR} is 0 (i.e. priority has been given to the image G_{PA} for passenger seat), a timer t_{DR} in action is brought to a stop (Step SB429). On the other hand, when it is judged that the priority flag F_{DR} is not 0, a timer t_{PA} for measuring a time during which no operation input to the image G_{PA} for passenger seat is conducted (i.e. a time after the last operation) is turned to 0 and started up (Step SB430).

On the other hand, when it is judged that the driver's seat flag f_{DR} is not 1 (i.e. operations to the image G_{DR} for driver's seat have not been set to be practicable) in Step SB422, the timer t_{PA} is returned to 0 (Step SB431) and the processing operation [15-2] is concluded.

When it is judged that the passenger seat selection switch 15i has not been operated in Step SB421, the processing operation goes to Step SB441 (Fig. 108-2), wherein whether the driver's seat selection switch 15k for setting operations to the image G_{DR} for driver's seat to be practicable was operated or not is judged. When it is judged that the driver's seat selection switch 15k was operated, whether the passenger seat flag f_{PA} is 1 or not is judged (Step SB442).

When it is judged that the passenger seat flag f_{PA} is 1 (i.e. operations to the image G_{PA} for passenger seat have been set to be practicable) (see Fig. 77), in order to switch an image to which operations are practicable to the image G_{DR} for driver's seat, the passenger seat flag f_{PA} is returned to 0 (Step SB443), and the operation picture C_{PA} is erased from the display unit 4 (Step SB444).

Operation picture data for operation inputs to the image G_{DR} for driver's seat is prepared (Step SB445), and by using the prepared operation picture data, as shown in Fig. 76, an operation picture C_{DR} for operation inputs to the image G_{DR} for driver's seat is displayed on both of the image G_{DR} for driver's seat and the image G_{PA} for passenger seat (Step SB446). Then, the driver's seat flag f_{DR} is set to be 1 (Step SB447), and whether the priority flag F_{DR} is 1 or not is judged (Step SB448).

When it is judged that the priority flag F_{DR} is 1 (i.e. priority has been given to the image G_{DR} for driver's seat), the timer t_{PA} in action is brought to a stop (Step SB449). On the other hand, when it is judged that the priority flag F_{DR} is not 1, a timer t_{DR} for measuring a time during which no operation input to the image G_{DR} for driver's seat is conducted (i.e. a time elapsed after the last operation) is turned to 0 and started up (Step SB450).

On the other hand, when it is judged that the passenger seat flag f_{PA} is not 1 (i.e. operations to the image G_{PA} for passenger seat have not been set to be practicable) in Step SB442, the timer t_{DR} is returned to 0 (Step SB451) and the processing operation [15-2] is concluded.

When it is judged that the driver's seat selection switch 15k has not been operated in Step SB441, the processing operation goes to Step SB461 (Fig. 108-3), wherein whether the touch panel 118 formed on the display unit 4 was operated or not is judged. When it is judged that the touch panel 118 was operated, whether the driver's seat flag f_{DR} is 1 or not is judged (Step SB462).

When it is judged that the driver's seat flag f_{DR} is 1 (i.e. operations to the image G_{DR} for driver's seat have been set to be practicable), operation control on the image G_{DR} for driver's seat according to the operation is conducted (Step SB463), and then, the timer t_{DR} is returned to 0 (Step SB464). On the other hand, when it is judged that the driver's seat flag f_{DR} is not 1, whether the passenger seat flag f_{PA} is 1 or not is judged (Step SB465).

When it is judged that the passenger seat flag f_{PA} is 1 (i.e. operations to the image G_{PA} for passenger seat have been set to be practicable), operation control on the image G_{PA} for passenger seat according to the operation is conducted (Step SB466), and then, the timer t_{PA} is returned to 0 (Step SB467). On the other hand, when it is judged that the passenger seat flag f_{PA} is not 1, the operation is regarded as being invalid, and the processing operation [15-2] is concluded at once.

When it is judged that the touch panel 118 has not been operated in Step SB461, whether the separate display cancel switch 15j was operated or not is judged (Step SB468). When it is judged that the separate display cancel switch 15j was operated, whether the driver's seat flag f_{DR} is 1 or not is judged (Step SB469).

When it is judged that the driver's seat flag f_{DR} is 1 (i.e. operations to the image G_{DR} for driver's seat have been set to be practicable), in order to keep the image G_{DR} for driver's seat of the two images, the image G_{PA} for passenger seat is erased and the image G_{DR} for driver's seat is displayed in a full-screen mode (Step SB470). Operation picture data for operation inputs to the image G_{DR} for driver's seat is prepared (Step SB471), and by using the prepared operation picture data, an operation picture C_{DR} for operation inputs to the image G_{DR} for driver's seat is displayed on said image G_{DR} (Step SB472).

Then, the driver's seat flag f_{DR} is returned to 0 (Step SB473), the timer t_{DR} is brought to a stop (Step SB474) and the separate display flag f_{SE} is returned to 0 (Step SB475). Here, the image G_{DR} for driver's seat is displayed in the full-screen mode, but in another embodiment, the same as an image G_{DR} for driver's seat displayed only with pixels in even-numbered lines in the separate display mode may be displayed in the passenger seat direction. That is, the image displayed in the driver's seat direction in the separate display mode is similarly displayed only with pixels in odd-numbered lines.

On the other hand, when it is judged that the driver's seat flag f_{DR} is not 1 in Step SB469, in order to keep the image G_{PA} for passenger seat of the two images, the image G_{DR} for driver's seat is erased and the image G_{PA} for passenger seat is displayed in the full-screen mode (Step SB476). Operation picture data for operation inputs to the image G_{PA} for passenger seat is prepared (Step SB477), and by using the prepared operation picture data, an operation picture C_{PA} for operation inputs to the image G_{PA} for passenger seat is displayed on said image G_{PA} (Step SB478).

Then, the passenger seat flag f_{PA} is returned to 0 (Step SB479), the timer t_{PA} is brought to a stop (Step SB480), and then, the processing operation goes to Step SB475, wherein the separate display flag f_{SE} is returned to 0. Here, the image G_{PA} for passenger seat is displayed in the full-screen mode, but in another embodiment, the same as an image G_{PA} for passenger seat displayed only with pixels in odd-numbered lines in the separate display mode may be displayed in the driver's seat direction. That is, the image displayed in the passenger seat direction in the separate display mode is similarly displayed only with pixels in even-numbered lines.
When it is judged that the separate display cancel switch 15j has not been operated in Step SB468, conventional processing according to the other operations is conducted.

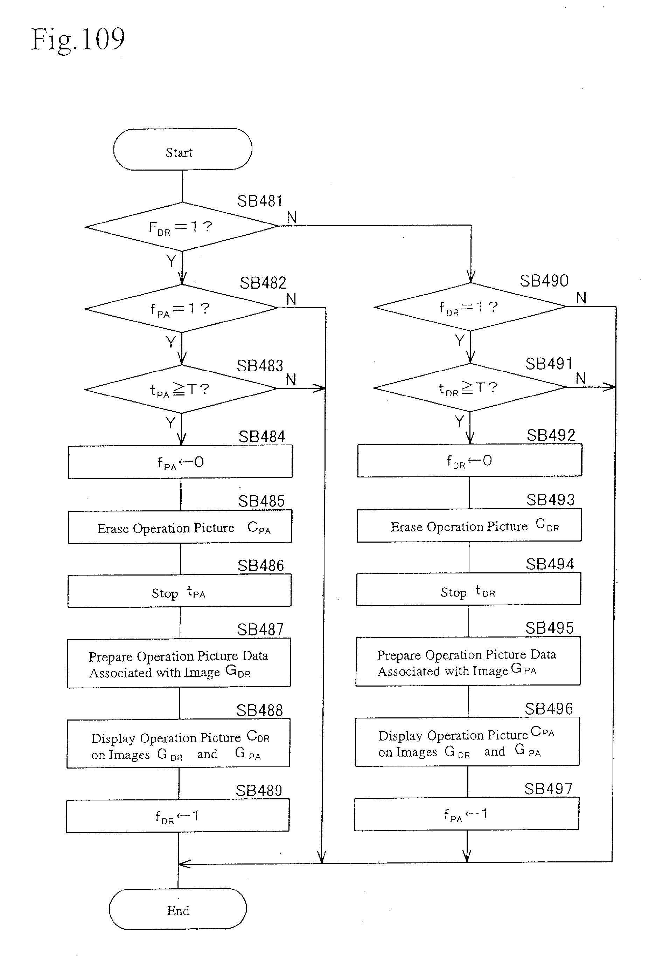

A processing operation [15-3] performed by the control unit 100D in the AV navigation system wherein the display device according to the fifteenth embodiment is adopted is described below with a flowchart shown in Fig. 109. Here, this processing operation [15-3] is performed at every prescribed interval in the separate display mode (i.e. when the separate display flag f_{SE} is 1).

Whether the priority flag F_{DR} is 1 or not is judged (Step SB481). When it is judged that the priority flag F_{DR} is 1 (i.e. priority has been given to the image G_{DR} for driver's seat), whether the passenger seat flag f_{PA} is 1 or not is judged (Step SB482). When it is judged that the passenger seat flag f_{PA} is 1 (i.e. priority has been given to the image G_{DR} for driver's seat, but operations to the image G_{PA} for passenger seat have been set to be practicable), whether the timer t_{PA} has counted to a predetermined time T (e.g. 6 sec.) or more is judged (Step SB483).

On the other hand, when it is judged that the passenger seat flag f_{PA} is not 1 (i.e. operations to the image G_{DR} for driver's seat with the priority have been set to be practicable), the processing operation [15-3] is concluded at once.

When it is judged that the timer t_{PA} has counted to the predetermined time T or more (i.e. 6 sec. has elapsed since the last operation to the image G_{PA} for passenger seat was conducted) in Step SB483, in order to make the image G_{DR} for driver's seat with the priority an image to which operations are practicable and make the image G_{PA} for passenger seat an image to which operations are impracticable, the passenger seat flag f_{PA} is turned to 0 (Step SB484), the operation picture C_{PA} is erased from the display unit 4 (Step SB485), and the timer t_{PA} is brought to a stop (Step SB486). On the other hand, when it is judged that the timer t_{PA} has counted to less than the predetermined time T, the processing operation [15-3] is concluded at once.

Operation picture data for operation inputs to the image G_{DR} for driver's seat is prepared (Step SB487), and by using the prepared operation picture data, an operation picture C_{DR} is displayed on the image G_{DR} for driver's seat and the image G_{PA} for passenger seat as shown in Fig. 76 (Step SB488). Then, the driver's seat flag f_{DR} is set to be 1 (Step SB489).

When it is judged that the priority flag F_{DR} is not 1 (i.e. priority has been given to the image G_{PA} for passenger seat) in Step SB481, whether the driver's seat flag f_{DR} is 1 or not is judged (Step SB490). When it is judged that the driver's seat flag f_{DR} is 1 (i.e. priority has been given to the image G_{PA} for passenger seat, but operations to the image G_{DR} for driver's seat have been set to be practicable), whether the timer t_{DR} has counted to the predetermined time T (e.g. 6 sec.) or more is judged (Step SB491).
On the other hand, when it is judged that the driver's seat flag f_{DR} is not 1 (i.e. operations to the image G_{PA} for passenger seat with the priority have been set to be practicable), the processing operation [15-3] is concluded at once.

When it is judged that the timer t_{DR} has counted to the predetermined time T or more (i.e. 6 sec. has elapsed since the last operation to the image G_{DR} for driver's seat was conducted) in Step SB491, in order to make the image G_{PA} for passenger seat with the priority an image to which operations are practicable and make the image G_{DR} for driver's seat an image to which operations are impracticable, the driver's seat flag f_{DR} is turned to 0 (Step SB492), the operation picture C_{DR} is erased from the display unit 4 (Step SB493), and the timer t_{PA} is brought to a stop (Step SB494). On the other hand, when it is judged that the timer t_{DR} has counted to less than the predetermined time T, the processing operation [15-3] is concluded at once.

Operation picture data for operation inputs to the image G_{PA} for passenger seat is prepared (Step SB495), and by using the prepared operation picture data, an operation picture C_{PA} is displayed on the image G_{DR} for driver's seat and the image G_{PA} for passenger seat as shown in Fig. 77 (Step SB496). Then, the passenger seat flag f_{PA} is set to be 1 (Step SB497).

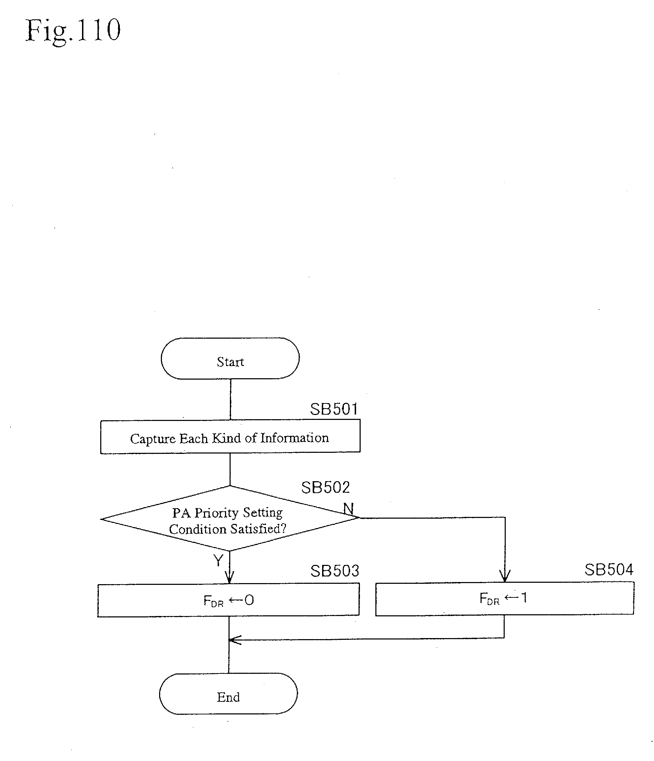

A processing operation [15-4] performed by the control unit 100D in the AV navigation system wherein the display device according to the fifteenth embodiment is adopted is described below with a flowchart shown in Fig. 110. Here, this processing operation [15-4] is performed at every prescribed interval in the separate display mode (i.e. when the separate display flag f_{SE} is 1).

Each kind of information used for judging whether a condition for setting the image G_{PA} for passenger seat to have the priority has been satisfied or not is captured (Step SB501), and based on the captured information of each kind, whether the condition for setting the image G_{PA} for passenger seat to have the priority has been satisfied or not is judged (Step SB502).

When it is judged that the setting condition has been satisfied, the priority flag F_{DR} is turned to 0 and the priority is given to the image G_{PA} for passenger seat (Step SB503). On the other hand, when it is judged that the setting condition has not been satisfied, the priority flag F_{DR} is turned to 1 and the priority is given to the image G_{DR} for driver's seat (Step SB504).

By using the AV navigation system wherein the display device according to the fifteenth embodiment is adopted, since the priority is not fixed and an image with the priority can be changed depending on the situation at that time, the convenience can be enhanced, the safety of driving can be improved, and the degree of user's satisfaction can be heightened.

Here, concerning the display device according to the fifteenth embodiment, a case where an image with the priority is automatically changed based on kinds of displayed images, running states, load states and operation frequencies to each image was described above. But in another embodiment, by arranging a toggle switch which can switch two conditions alternatively every time the same operation is conducted, an image with priority may be switched in a cyclic manner with an intention of the user.

Hitherto, cases where the display device is adopted in an AV navigation system to be mounted on a vehicle have been described, but the display devices according to the present invention are not adopted only in systems to be mounted on a vehicle. They may be adopted in a home-use TV set or the like. The present invention is effective in products which display individual information in a plurality of viewing directions on a common screen. The number of viewing directions is not limited to two. Three or more viewing directions may be acceptable.

A display device according to a sixteenth embodiment is described below with reference to drawings. Since the constructions shown in Figs. 1-9 are the same in the display device according to the sixteenth embodiment, they are not described below.

Operation input control processing and display processing in the display device according to the sixteenth embodiment are described below. As described above, when a multidisplay whereby different images on a single display can be seen from sitting angles of passengers, respectively, is adopted, a map image can be seen from a driver's seat side and an operation picture of destination can be seen from a passenger seat, for example. The operation picture for destination setting (by touch panel) can be seen from the passenger seat side and the operation can be conducted. However, by using a conventional device, since the operation is restricted during running or the like, even an operation from the passenger seat side cannot be received and therefore, a passenger in the passenger seat cannot conduct operations.

In the display device according to this embodiment, even with that restriction in running, operations from the passenger seat side (except from the driver's seat side) are received. That is, when one's vehicle is at a stop, an operation picture (e.g. buttons of a touch panel) for activating a navigation system is displayed toward the driver's seat side and the passenger seat side, respectively. When the one's vehicle is running, an operation picture (e.g. buttons of the touch panel) for activating the navigation system is not displayed toward the driver's seat side as before and an image suitable for driving is displayed (or buttons are displayed but operations are not received). On the other hand, an operation picture (e.g. buttons of the touch panel) for activating the navigation system is displayed toward the passenger seat side, and operations can be conducted from the passenger seat side. Here, without sticking to the navigation system, a display/an operation picture related to an audio/visual system and the like may be adaptable.

Not only the above-described reception of operations, but also to control and present a display suitable for the driver's seat side and a display suitable for the passenger seat side (except the driver's seat), respectively, is a characteristic. For example, concerning a movie or the like, displaying toward the driver's seat side is prohibited, while displaying toward the passenger seat side is allowed. As a result, generally speaking, in the multidisplay, only reception of operations from the driver's seat or displaying toward the driver's seat is limited to the contents suitable for driving, while reception of operations from passenger seats except the driver's seat or displaying toward the passenger seats is not limited.

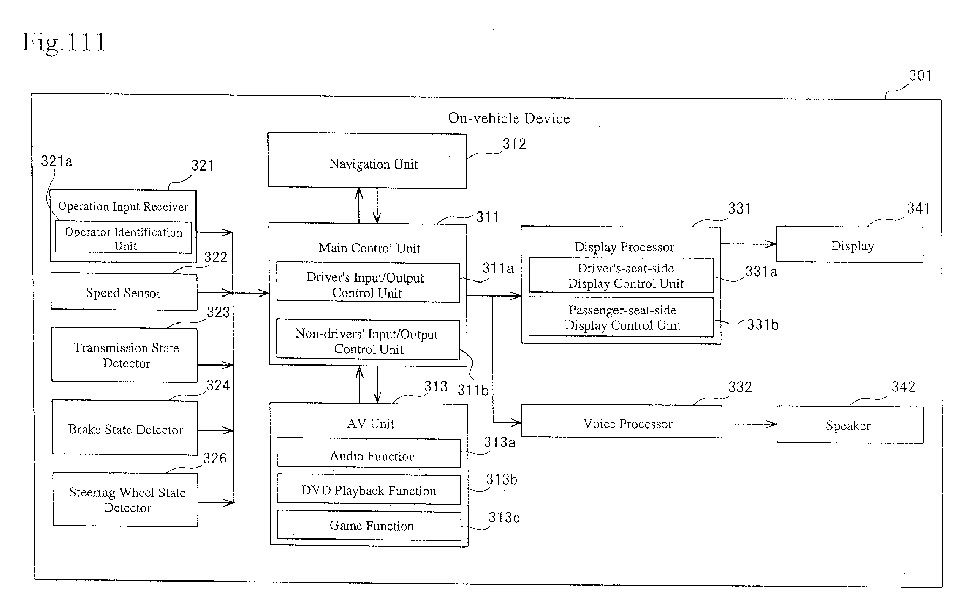

Fig. 111 is a construction diagram showing an overview construction of an on-vehicle device 301 as the display device according to the sixteenth embodiment. As shown in Fig. 111, the on-vehicle device 301 includes a main control unit 311, a navigation unit 312, an AV (audio/visual) unit 13, an operation input receiver 321, a speed sensor 322, a transmission state detector 323, a brake state detector 324, a steering wheel state detector 326, a display processor 331, a voice processor 332, a display 341 and speakers 342.

The operation input receiver 321 is a processor which receives operation inputs by passengers by using switches, a touch panel or the like, comprising an operator identification unit 321a. The operator identification unit 321a distinguishes whether the operation input was performed from the driver's seat side (i.e. by a driver) or from the passenger seat side (i.e. by a non-driver). As a concrete method of identification, the below-described options a-e are exemplified.
a) Judgment from a direction from which an approaching object (a finger) is approaching the touch panel
   i) Infrared rays are emitted in a vertical direction on the touch panel, and from which direction, left or right, the approaching object is approaching is judged from a place at which said infrared rays are interrupted.
b) Judgment from a difference of operation modes
   i) Judgment from a difference in pressing force
   ii) Judgment from a difference in pressing time
   iii) Judgment from a difference in number of presses (clicks)
c) Different objects (devices) are given to an occupant of the driver's seat and an occupant of the passenger seat, respectively and judgment from said objects (devices)
   i) Sender units having different sending frequencies or sending codes are fitted to fingers of the both occupants and judgment from the difference
   ii) Objects (rings in different colors) which can be distinguished by pictures are fitted to fingers of the both occupants and judgment from the difference
d) Biometric recognition (fingerprints etc.)
e) Judgment from whether someone exists there
   i) When no one is in the passenger seat, it is judged that the operation was conducted by the driver. On the other hand, when there is no driver, it is judged that the operation was conducted by an occupant of the passenger seat.

The speed sensor 322 is a sensor which detects a running speed of one's vehicle from a speed of rotation of wheels of the one's vehicle. The transmission state detector 323 is a sensor which captures a state of transmission of the one's vehicle. The brake state detector 324 is a sensor which detects an operational state of brake of the one's vehicle, and the steering wheel state detector 326 is a sensor which detects steering wheel operations by the driver.

The navigation unit 312 is a unit whereby setting of running route of the one's vehicle and guidance are conducted. Concretely, the navigation unit 312 captures the current position of the one's vehicle by the GPS (Global Positioning System), identifies a road on which the one's vehicle is running by using map data and performs route guidance with the display 341 and the speakers 342.

The AV unit 313 is a unit which provides contents data obtained by reception of radio broadcast, TV broadcast and the like or contents data read from recording media such as a CD, a DVD and an HD to passengers in the vehicle. Here, The AV unit 313 has an audio function 313a, a DVD playback function 313b and a game function 313c therein.

The speakers 342 are devices which conduct voice outputs to the passengers, and the output contents are prepared by the voice processor 332. The display 341 is a device which conducts display outputs to the passengers, and the display contents are prepared by the display processor 331.

Here, the display processor 331 has a driver's-seat-side display control unit 331a and a passenger-seat-side display control unit 331b. The driver's-seat-side display control unit 331a is a processor which prepares display pictures for a driver on the display 341, while the passenger-seat-side display control unit 331b is a processor which prepares display pictures for non-drivers on the display 341.

By the driver's-seat-side display control unit 331a and the passenger-seat-side display control unit 331b, a display picture for the driver and a display picture for the non-drivers can be prepared separately on the single display 341.

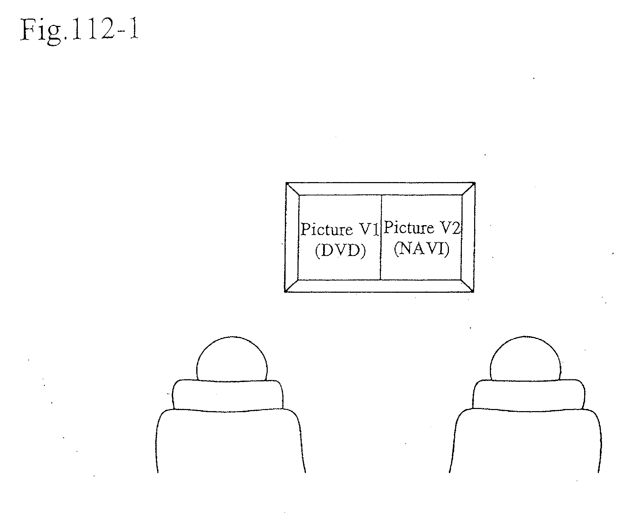

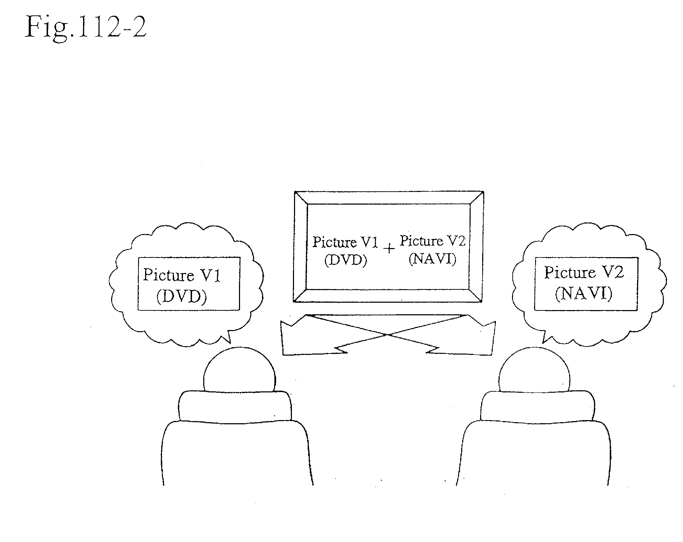

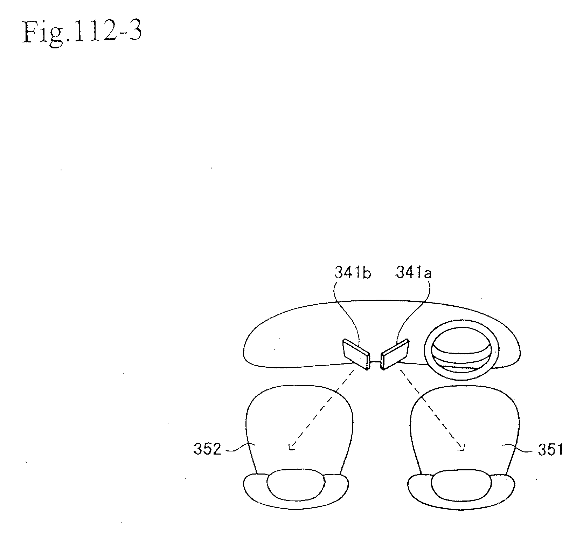

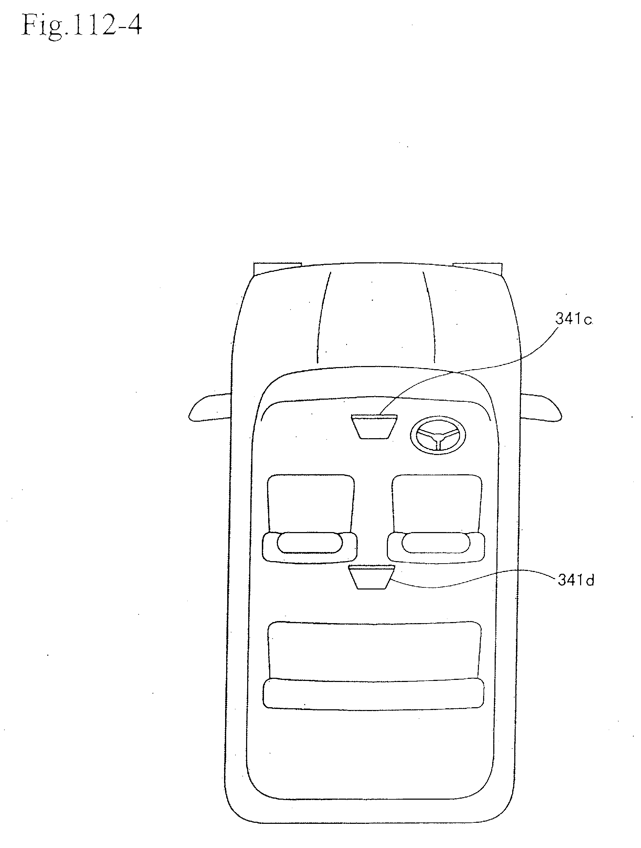

As a method of separately displaying a display picture for the driver and a display picture for the non-drivers on the single display 341, 'a method wherein the display screen is divided and each picture is displayed thereon (Fig. 112-1)' and 'a method wherein by means of a difference between the passengers' lines of sight, a plurality of pictures are combined for display (Fig. 112-2)' are exemplified. In the sixteenth embodiment of the present invention, a case where a single display is used is described, but a display dedicated to the driver and a display dedicated to the non-drivers may be arranged.

Construction examples in cases where displays are arranged individually for a driver and for non-drivers are shown in Figs. 112-3 and 112-4. In a construction in Fig. 112-3, a display 341a for a driver is installed facing to a driver's seat 351 side and a display 341b for a passenger in a passenger seat is installed facing to a passenger seat 352 side. In a construction in Fig. 112-4, a display 341c is installed for passengers in front seats (a driver's seat and a passenger seat) and a display 341d is installed for passengers in rear seats.

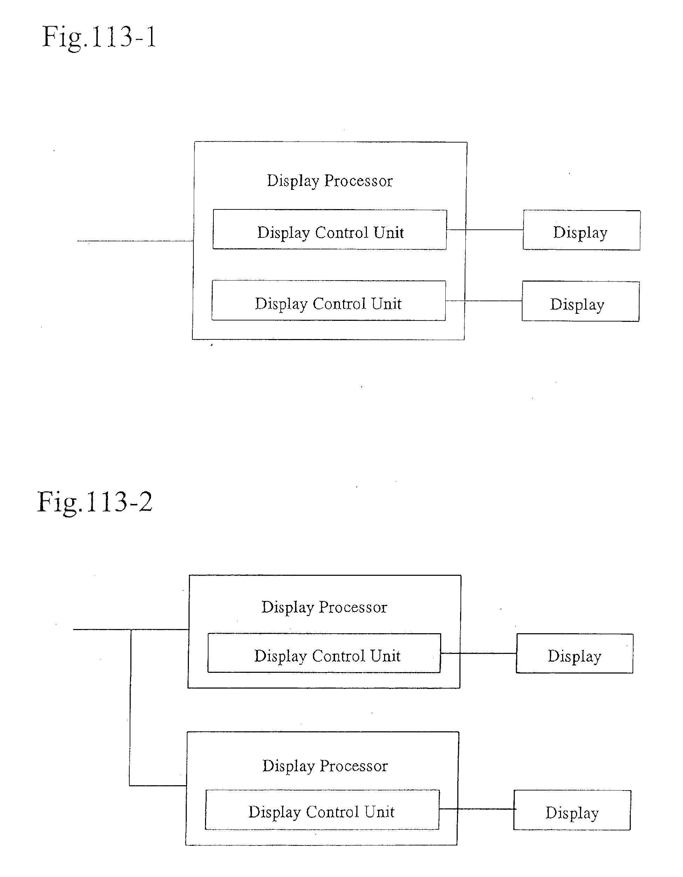

Here, when a plurality of displays are installed as described above, as shown in Fig. 113-1, multiple display control units may be arranged within a single display control unit and each display control unit may conduct display control on each display. Or as shown in Fig. 113-2, multiple display control units dealing with each display may be arranged. When a plurality of displays are installed, by registering the setting location of each display in the vehicle and conducting display control based on the setting location, input/output control suited to each seat can be realized.

The main control unit 311 is a control unit for totally controlling the on-vehicle device 301, which receives inputs from the operation input receiver 321, speed sensor 322, transmission state detector 323, brake state detector 324 and steering wheel state detector 326, controls the actions of the navigation unit 312 and the AV unit 313, and conducts outputs through the display processor 331 and the voice processor 332 to the display 341 and the speakers 342.

Moreover, the main control unit 311 has a driver's input/output control unit 311 a and a non-drivers' input/output control unit 311b. The driver's input/output control unit 311a is a control unit which controls reception of operation inputs by the driver and outputs to the driver, while the non-drivers' input/output control unit 311b is a control unit which controls reception of operation inputs by the non-drivers (a passenger sitting in the passenger seat in the sixteenth embodiment) and outputs to the non-drivers.

By the driver's input/output control unit 311a and the non-drivers' input/output control unit 311b, the main control unit 311 can control separately inputs by/outputs to the driver and inputs by/outputs to the non-drivers.
For example, when one's vehicle is running, the driver's input/output control unit 311a restricts complicated operations or inputs/outputs which the driver need watch the screen such as destination setting by the driver, but the non-drivers' input/output control unit 311b does not conduct that restriction. As a result, the destination setting during running only from the passenger seat side is received.

Whether the one's vehicle is running or not can be decided based on a running speed of the one's vehicle captured by the speed sensor 322, a state of a shift lever (whether or not the lever is in the 'parking' or 'neutral' position) captured by the transmission state detector 323, a state of brake (whether the parking brake is in action or not) captured by the brake state detector 324, a state of a steering wheel operation by the driver (whether the steering wheel is being operated frequently or not) captured by the steering wheel state detector 326 and the like.

Information about running of the one's vehicle, for example, traffic information such as an occurrence of traffic jam, guidance outputs by the navigation unit 312 or image outputs of surroundings of the one's vehicle are important for the driver, but relatively less important for the non-drivers. Therefore, when necessity of outputting information about running is caused, the driver's input/output control unit 311a conducts an output with priority by interrupt processing, but the non-drivers' input/output control unit 311b does not conduct interrupt processing.

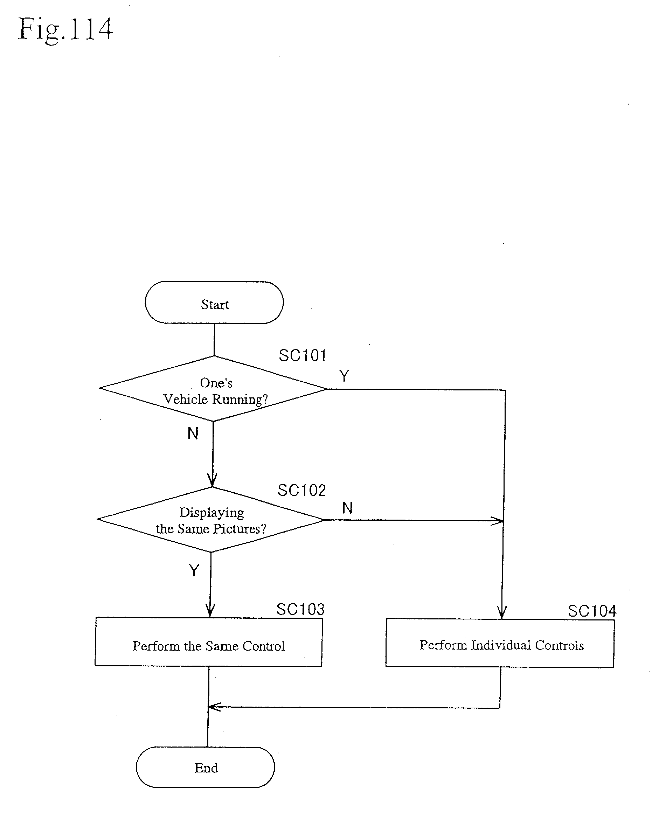

A processing operation of this main control unit 311 is described below by reference to Fig. 114. A flowchart in Fig. 114 shows processing repeatedly conducted during operation of the on-vehicle device 301. The main control unit 311 decides whether the one's vehicle is running or not based on inputs from the speed sensor 322, transmission state detector 323, brake state detector 324 and steering wheel state detector 326 (Step SC101).

As a result, when the one's vehicle is not running (Step SC101, No), the main control unit 311 decides whether the driver's-seat-side display control unit 331a and the passenger-seat-side display control unit 331b are displaying the same pictures or not (Step SC102). When the same pictures are being displayed (Step SC102, Yes), a single control, that is, the same control is performed for the driver and for the non-drivers (Step SC103) and the processing is concluded.

On the other hand, when the one's vehicle is running (Step SC101, Yes) or when the then displayed pictures are different (Step SC102, No), the main control unit 311 conducts separate controls, that is, conducts different controls for the driver and for the non-drivers (Step SC104) and the processing is concluded.

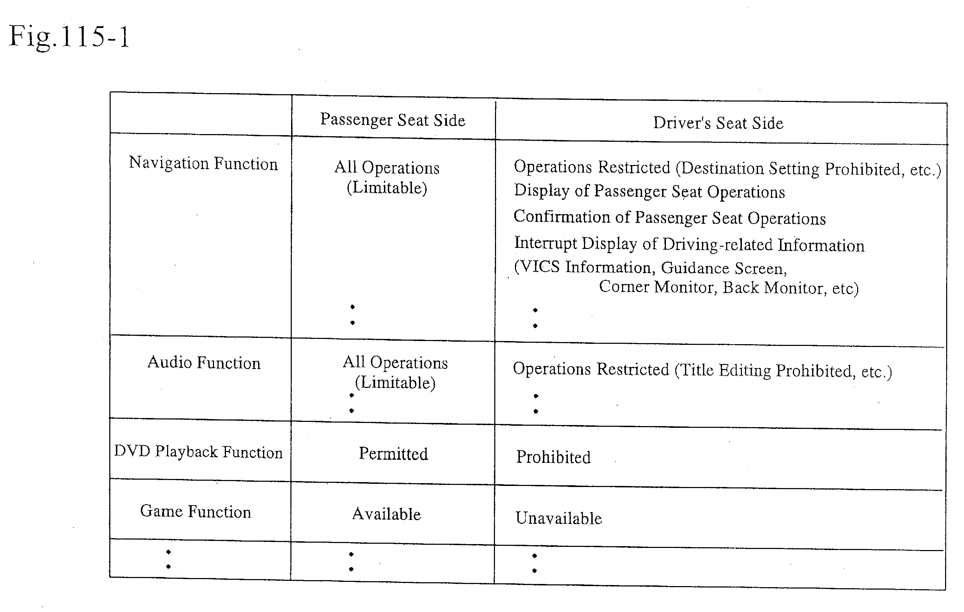

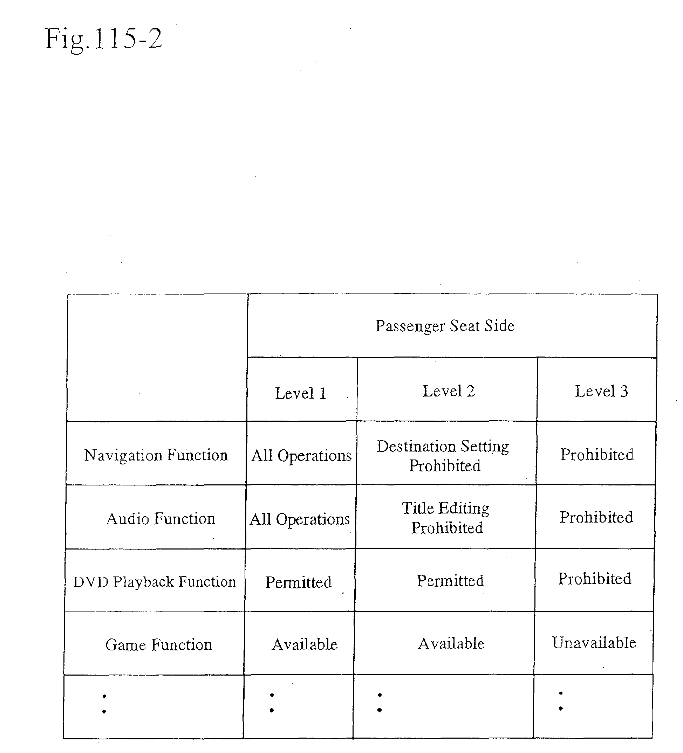

A specific example of separate controls by the driver's input/output control unit 311 a and the non-drivers' input/output control unit 311b is described below. Fig. 115 -1 is an illustration to describe controls on the passenger seat side (for the non-drivers) and on the driver's seat side (for the driver).

As shown in Fig. 115-1, regarding a navigation function, all operations are received on the passenger seat side. However, on the driver's seat side, operation restrictions such as prohibition of destination setting or every kind of search are conducted when the one's vehicle is running.

In addition, on the driver's seat side, when an operation was performed on the passenger seat side, display (display of a passenger seat operation) for notifying the driver that there was an operation input is conducted. Furthermore, when destination setting was conducted on the passenger seat side, for example, a final confirmation operation of whether the destination should be entered or not is conducted on the driver's seat side (confirmation of a passenger seat operation).

Thus, complicated operations such as destination setting are practicable only on the passenger seat side. An occurrence of an operation input is notified on the driver's seat side and the driver is allowed to confirm the operation contents. Therefore, inputs conducted by the driver and the non-drivers together can be realized and without blocking driving operations, complicated operations of the navigation function can be performed.

As still another control on the driver's seat side, by interrupt display of driving-related information (e.g. traffic information captured by the VICS and the like, a guide picture in route guidance, a corner monitor on which an image (a picture) of side areas of one's vehicle is displayed and a back monitor on which an image (a picture) of rear areas of the one's vehicle is displayed), control for allowing the driver to speedily recognize information to be used for driving is conducted.

Regarding the audio function, similarly, all operations are received on the passenger seat side. However, on the driver's seat side, restrictions are imposed on complicated operations or inputs/outputs which require the driver to watch the screen such as title editing of contents data when the one's vehicle is running.

Regarding the DVD playback function, the function, that is, playback of a DVD is permitted on the passenger seat side, but the playback thereof is not permitted on the driver's seat side. Likewise, regarding the game function, game contents are provided on the passenger seat side, that is, to the non-driver, but game contents are not provided on the driver's seat side, that is, to the driver.

Here, operations by non-drivers on the passenger seat side and the like can be restricted. This restriction may range all operations (kinds of operations), or a part of operations can be selectively restricted. For example, a person who sat in the passenger seat is identified and the range of restriction to the person can be set. That is, the range of restriction may be set in such a manner that, when the person in the passenger seat is an adult, operations are received, while when the person is a child, operations are prohibited. When a person in the passenger seat is identified to restrict operations on the passenger seat side, as a method of identifying the person who sat in the passenger seat, setting a person in the passenger seat in a start of the on-vehicle device, identifying by a pressure sensor arranged in the passenger seat, and identifying by detecting the placement of a child seat are exemplified.

An example of operation restrictions on the passenger seat side is shown in Fig. 115-2. In Fig. 115-2, operation receptions from the passenger seat are classified into three levels, levels 1-3. On operation receptions at level 1, no operation restriction is imposed on the passenger seat side. All operations of the navigation function and the audio function are permitted, use of the DVD playback function is permitted and the game function is provided.

On the other hand, in the case of operation receptions at level 2, operations on the passenger seat side are partially restricted. Concretely, destination setting by the navigation function is prohibited and title editing by the audio function is prohibited. In the case of operation receptions at level 3, all operations on the passenger seat side are prohibited.

Furthermore, the range of operations on the passenger seat side can be set based on running states. For example, processing may be conducted, wherein, when the vehicle is running at a stable speed on a relatively long straight road, destination setting on the passenger seat side is permitted, while when running on a road with successive curves such as a mountainside road, the operation is restricted even on the passenger seat side.

Operation restrictions on the driver's seat side are not necessarily controlled at two stages of 'during running' and 'at a stop'. It may be controlled variably depending on running speeds or shapes of roads on which the vehicle is running.

Here, in the present embodiment, the navigation function, the audio function, the DVD playback function and the game function are described as examples, and other functions such as a TV reception function can be similarly controlled.

Furthermore, the prohibition of playback of a DVD or the prohibition of providing the game function to the driver may be limited to during running. When the vehicle is at a stop, they can be conducted. Or they may be prohibited irrespective of whether during running or at a stop, that is, the DVD playback function and the game function may be limited to the use of non-drivers. When they are prohibited (during running), the screen is switched to another picture (e.g. a navigation picture, a most lately used source to be unrestricted among sources used before the DVD playback function or the game function, a fixed source, a most frequently used source or a notification picture such as 'Image output was cut off').

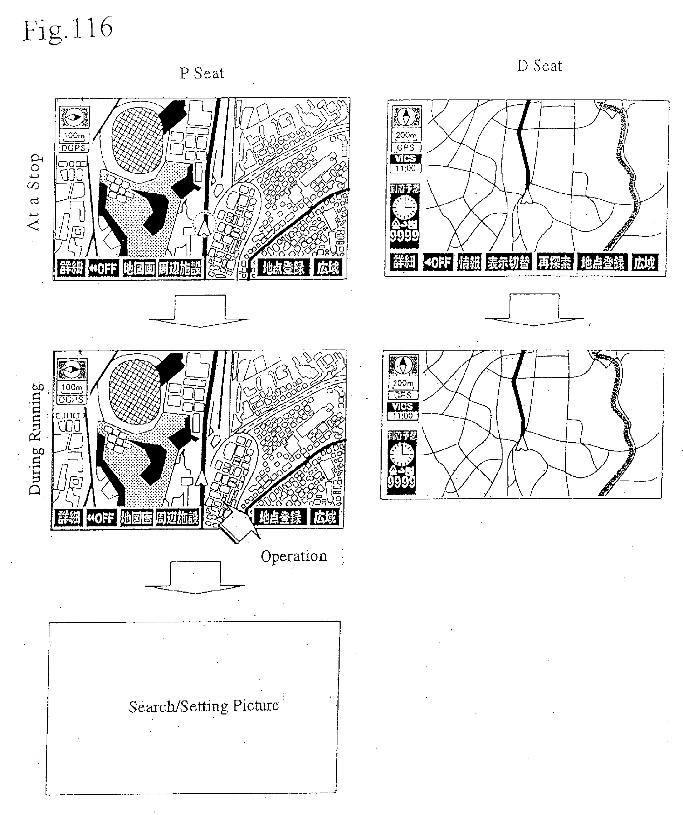

A specific example of pictures shown on the display 341 is described below. Fig. 116 is a concrete example of images when operations by the driver are restricted. When the vehicle is at a stop, in the display area for the passenger seat (P seat) and the display area for the driver's seat (D seat), respectively, virtual operation buttons by touch panel are displayed in addition to a map display.

However, during running, the operation buttons for the passenger seat side are continuously displayed to the passenger seat side (they are operable, for example, when a 'spot entry button' was pressed, the screen moves to a 'search/setting screen'), while in the display area for the driver's seat side, the operation buttons are erased so that no operation cannot be conducted by the driver. Here, instead of erasing the operation buttons, the display state of the operation buttons may be changed, for example, the tone of the display may be reduced in such a manner that the driver can see a state where operations are restricted (a state where no operation input is received).

Or the operation buttons are displayed and when one of them was operated, the picture is changed to a setting picture, but input operations thereafter may be prohibited, or when a button was operated, it may be informed by display or voice that operations are being restricted.

In Fig. 116, an example in which different maps designated at the passenger seat side and the driver's seat side, respectively, are being displayed was described, but there is no need to say that the similar control can be conducted when the same pictures are being displayed.

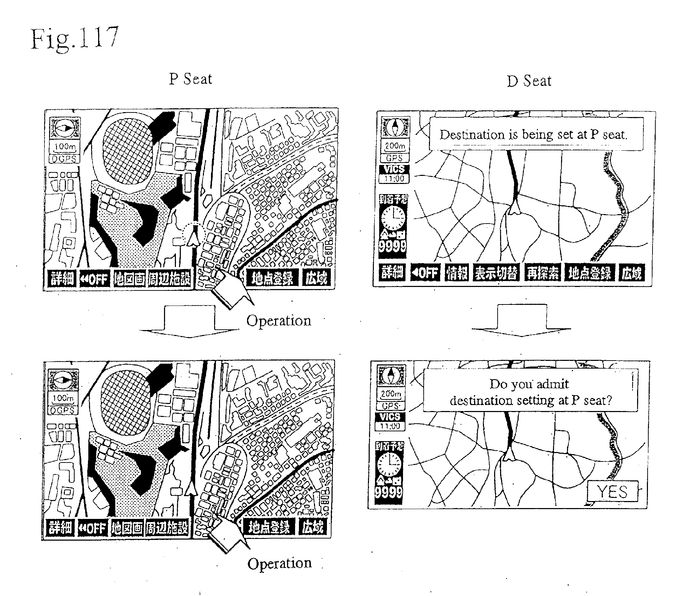

An example of display when the driver is allowed to know an operation at the passenger seat and confirm the operation is shown in Fig. 117. As shown in Fig. 117, when the 'spot entry button' was pressed at the passenger seat side, a notification message of 'Destination is being set at P seat.' is displayed on a picture at the driver's seat side. At a point when the destination input at the passenger seat side was completed, a confirmation message of 'Do you admit destination setting at P seat?' and a button (a button of 'YES' in Fig. 117) for receiving a confirmation input from the driver are displayed.

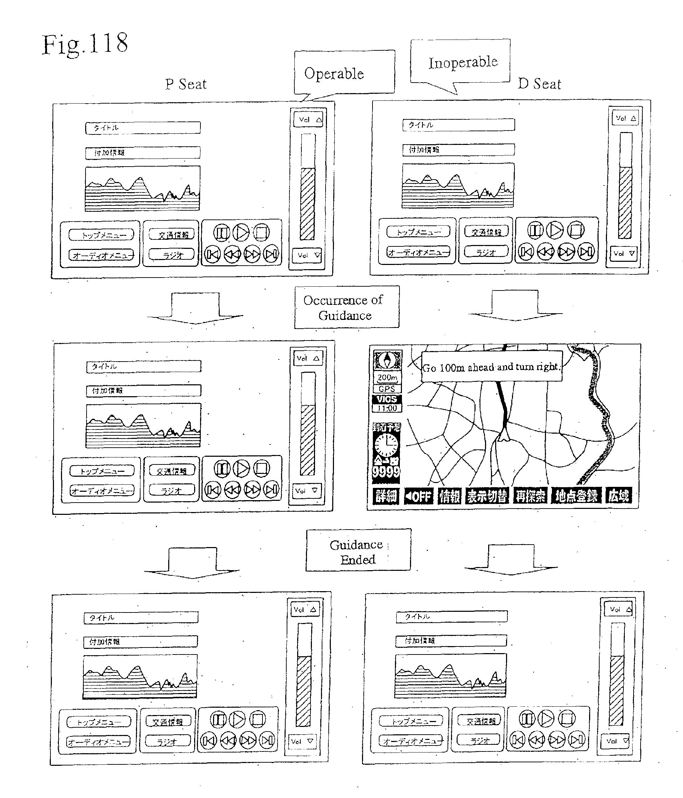

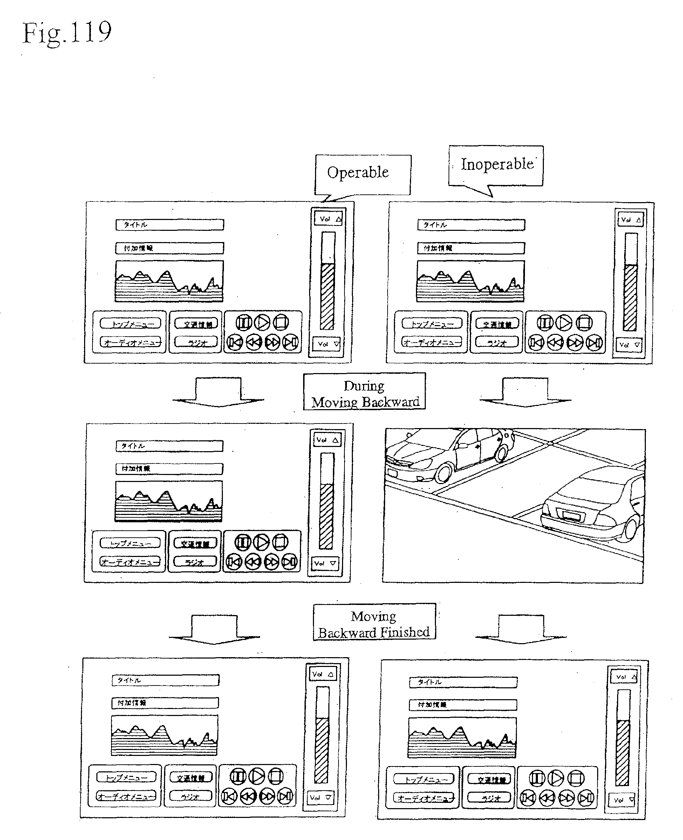

Specific examples of interrupt display to the driver are described by reference to Figs. 118 and 119. In Figs. 118 and 119, the same picture (an audio playback picture) is displayed each at the passenger seat (P seat) side and the driver's seat (D seat) side.
When a need of guidance display was caused by the vehicle's running, the guidance display is conducted only at the driver's seat side as shown in Fig. 118, and at a time when the guidance was completed, the screen is returned to the original audio picture. Likewise, when a need to display an image (a picture) of the rear areas of the vehicle was caused, for example, when the vehicle moves backward, an image (a picture) of the rear areas of the vehicle is displayed only toward the driver's seat as shown in Fig. 119, and the screen is returned to the original audio picture at a time when the backward-movement was completed.

Thus, by conducting an interrupt display associated with driving operations only to the driver and continuing an original display to the non-drivers such as the passenger in the passenger seat, the optimum display can be conducted to each of the driver and the non-drivers.

As described above, by using the on-vehicle device according to the sixteenth embodiment, since the driver's input/output control unit 311a and the non-drivers' input/output control unit 311b separately control inputs/outputs related to the driver and inputs/outputs related to the non-drivers based on the running speed of the one's vehicle, the state of the transmission, the state of the brake, the state of the steering wheel and the like, appropriate input/output control to each of them can be realized.

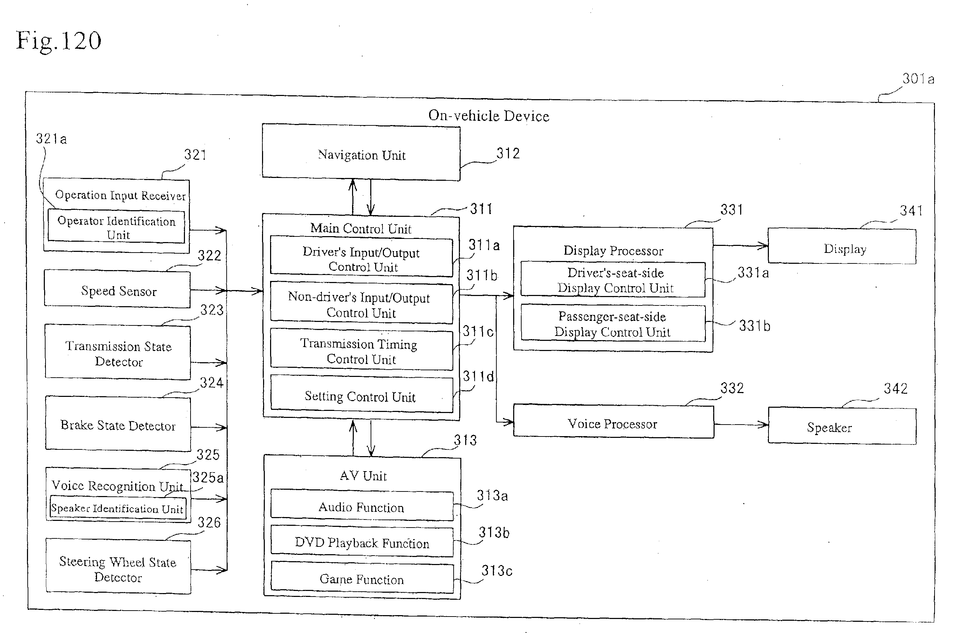

A display device according to a seventeenth embodiment is described below. Fig. 120 is a construction diagram showing an overview of an on-vehicle device 301a which is an on-vehicle device according to the seventeenth embodiment. As shown in Fig. 120, the on-vehicle device 301a further comprises a voice recognition unit 325 therein and has a transmission timing control unit 311c and a setting control unit 311d within a main control unit 311. Since other constructions and operations are similar to those of the on-vehicle device 301 shown in the sixteenth embodiment, the same components are similarly marked and not described below.

The voice recognition unit 325 receives voice inputs from a passenger by collecting voices inside the vehicle for voice recognition. Thus, the passenger can operate the on-vehicle device 301a by voice. In addition, the voice recognition unit 325 has a speaker identification unit 325a. The speaker identification unit 325a conducts processing for determining whose voice the voice is, that is, the speaker of the voice.

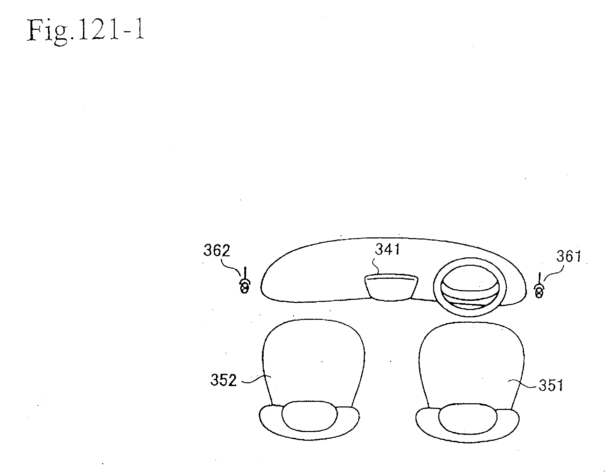

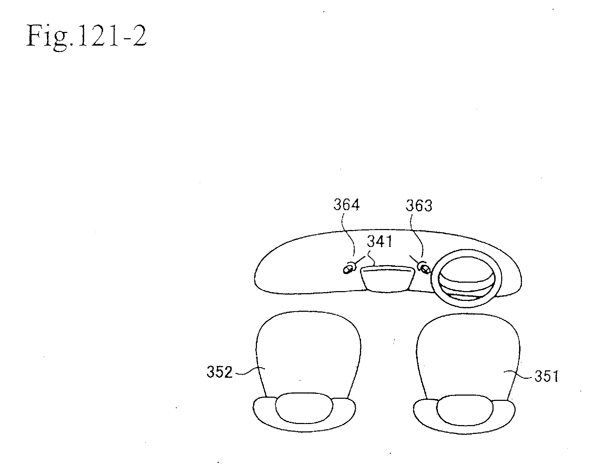

Concretely, the speaker identification unit 325a detects the input direction of the voice, that is, from which direction the voice was input to identify the speaker. Regarding this detection of the input direction of the voice, a concrete example is shown in Fig. 121.

Fig. 121-1 is an illustration to describe how to install two microphones near the driver's seat and the passenger seat. In Fig. 121-1, a microphone 361 is installed near a driver's seat 351, while a microphone 362 is installed near a passenger seat 352.
As a result, when the driver conducts a voice input, the input level of the microphone 361 becomes higher than the input level of the microphone 362. When a passenger sitting in the passenger seat 352 conducts a voice input, the input level of the microphone 362 becomes higher than the input level of the microphone 361. Thus, by installing two microphones apart from each other, even if the microphones are not directional, the speaker can be identified by comparison of the input levels.

Fig. 121-2 is an illustration to describe a method wherein directional microphones are used. In Fig. 121-2, directional microphones 363 and 364 are installed near a display 341, and a voice gathering part of the directional microphone 363 is directed to the driver's seat 351, while a voice gathering part of the directional microphone 364 is directed to the passenger seat 352.
As a result, the voice of a driver is selectively gathered by the directional microphone 363, while the voice of a passenger sitting in the passenger seat is selectively gathered by the directional microphone 364. Thus, by using directional microphones, the speaker can be identified even if their installed locations are close to each other.

The transmission timing control unit 311c conducts processing for controlling the transmission timing when the non-drivers' input/output control unit 311b transmits a request of a display to a display area for the driver. For example, when the passenger in the passenger seat is conducting each kind of processing by using a picture for the non-drivers, to conduct processing for transmitting the display area for the non-drivers to a picture for the driver for display in order to teach the contents to the driver is considered.

However, when a display request is conducted from the passenger seat side at the timing when the driver is confirming the picture for the driver, there is a possibility that the display to the driver may be inhibited. Likewise, when the driver is operating the on-vehicle device 301a, when a navigation unit 312 is outputting voice guidance or just before an occurrence of guidance output, or when the driver is busy driving and the driving operation is unstable due to successive curves and the like or just before that situation happens, a display request from the passenger seat should not be conducted.

Then, the transmission timing control unit 311c captures the operational state of the on-vehicle device 301a, the operating state of the on-vehicle device 301a by the driver, the driving state of the vehicle and the like, and conducts a display in the display area for the driver at the timing when the driver is not bothered.

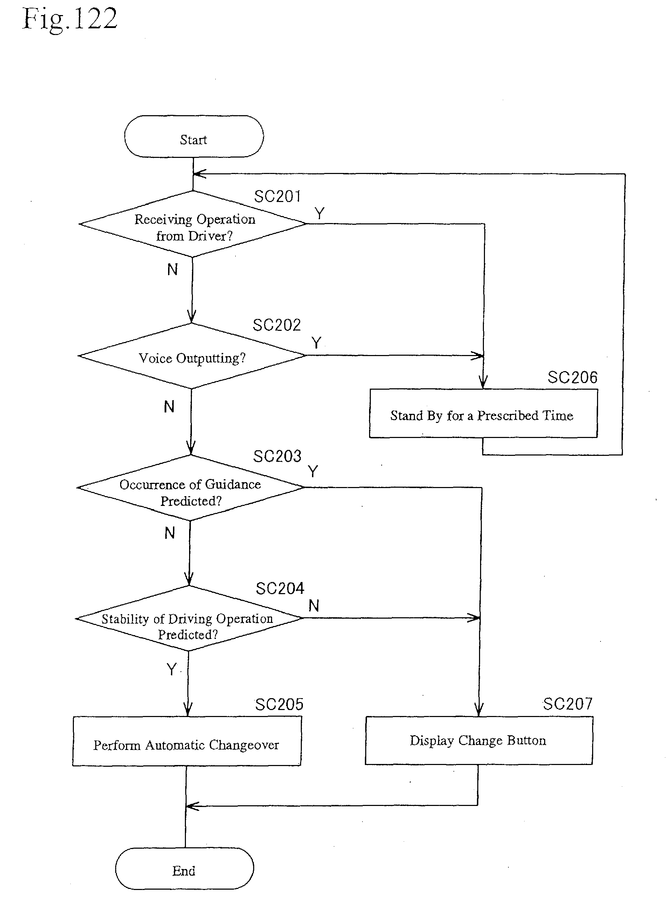

A specific example of a processing operation by this transmission timing control unit 311c is shown in Fig. 122. A flowchart shown in Fig. 122 is started when a necessity to transmit a display request to the display area for the driver from the non-drivers' input/output control unit 311b occurred.

The transmission timing control unit 311c decides whether the driver's input/output control unit 311a is receiving an operation from the driver or not (Step SC201). As a result, when it is not receiving an operation from the driver (Step SC201, No), whether the on-vehicle device 301a is outputting voice through speakers 342 or not (especially whether a voice output related to navigation is being executed or not) is decided (Step SC202).

When it is receiving an operation from the driver (Step SC201, Yes) or when voice is being outputted through the speakers 342 (Step SC202, Yes), the transmission timing control unit 311c stays on standby for a prescribed time (Step SC206) and moves to Step SC201 again.

On the other hand, when voice is not being outputted through the speakers 342 (Step SC202, No), the transmission timing control unit 311c decides whether an occurrence of guidance by the navigation unit 312 is predicted or not, that is, whether an output of guidance near the current position is scheduled or not (Step SC203).

As a result, when no output of guidance is scheduled (Step SC203, No), whether stability of driving operations is predicted or not (e.g. whether the road is a straight road on which there are few other vehicles) is decided based on a planned route of the one's vehicle and map information (Step SC204).

As a result, when stability of driving operations is predicted (Step SC204, Yes), the transmission timing control unit 311c transmits a display request from the non-drivers' input/output control unit 311b to a driver's-seat-side display control unit 331a to change the display picture for the driver and the processing is completed (Step SC205).

On the other hand, when an occurrence of a guide operation is predicted (Step SC203, Yes) or when the driving operations are unstable (Step SC204, No), the transmission timing control unit 311c displays a change button in the display area for the driver (Step SC207). This change button is a means of performing a change to a picture requested by the non-drivers' input/output control unit 311b when an operation by the driver was detected.

Thus, by monitoring the state of the on-vehicle device 301a or the state of the driver and controlling the transmission timing of a display request to the display area for the driver by the non-drivers' input/output control unit 311b, the picture can be changed without bothering the driver. In addition, according to the situation, by displaying a button for changing a picture, the driver oneself can be allowed to select the timing of change.

The transmission timing control processing shown here is just an example, and it can be freely changed for use. For example, processing wherein a change button is displayed in Step SC206 in Fig. 122 and the transmission timing control unit 311c stays on standby for a prescribed time in Step SC207 may be accepted.

The setting control unit 311d is a unit for deciding and modifying the setting of brightness, contrast and the like of the screen for each display source (such as the navigation unit 312, a DVD playback function 313b, a game function 313c and television broadcast).
This setting control unit 311d modifies the setting of the display source displayed in the display area for the passenger seat side at the time when an input of setting modification was received from the non-drivers' input/output control unit 311b, for example.

Furthermore, the non-drivers' input/output control unit 311b can also modify the setting of the display source displayed in the display area for the driver's seat side. In this case, it is desired that the display contents of the display area for the driver (a display picture for the driver) should be displayed in a portion of the display area for the non-drivers.

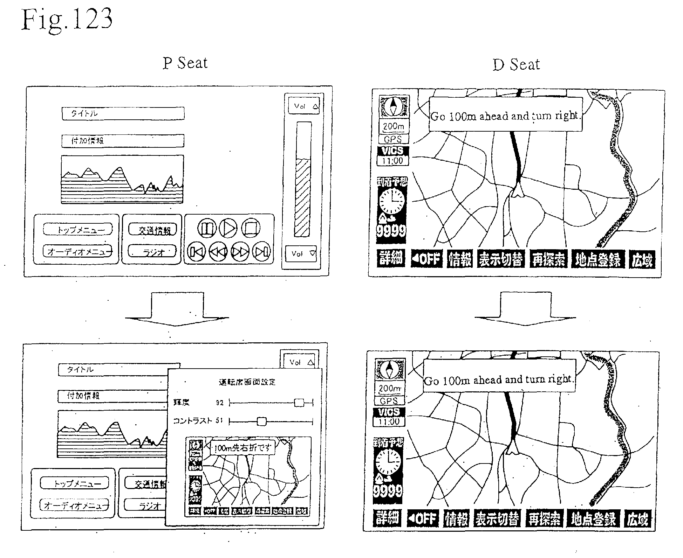

For example, in a screen example shown in Fig. 123, an audio playback picture is displayed in the display area for the passenger seat side, while a guide picture of route guidance is displayed in the display area for the driver's seat side. When a passenger in the passenger seat modifies the setting of the display area for the driver's seat side, a picture for setting including the contents of the display picture for the driver's seat side (guide picture) is prepared.

As described above, by using the on-vehicle device according to the seventeenth embodiment, as to voice inputs, individual input/output control can be conducted by determining who conducted the voice input. In addition, when the non-driver transmits a display request to the display area for the driver's seat, by controlling the transmission timing, the display control can be conducted without inhibiting the driver's operations.

Furthermore, the setting of the display source being displayed in the display area for the driver can be changeable based on operation inputs by the non-drivers. In the present embodiment, an example in which there is a single setting of each display source was described, but for example, when each user separately entries the display setting, the setting by the user who is a driver at that time can be changed by another passenger.

By displaying the same as the source displayed in the display area for the driver's seat side in the display area for the passenger seat side, operations to the display for the passenger seat side may be reflected in the display for the driver's seat side. In this case, at the time when a series of setting (decision) of menu items operated by menu operations was made, they are reflected in the display for the driver's seat side under reference of the transmission timing control unit 311c. On the passenger seat side, after reflection, by changing to another source, a display of another source and operations thereto can be conducted.

In the seventeenth embodiment, a double-screen display mode wherein a display screen on a single display is divided into two screens and a picture for a driver and a picture for a non-driver are displayed on each of the screens, and a dual view-area display mode wherein two different pictures are output in two viewing directions, respectively, were described. But a multi-screen display mode wherein a display screen on a single display is divided into three or more screens and pictures are displayed on each of the screens, a multi-direction display mode wherein different pictures are output in three or more viewing directions, or a multiple display mode wherein three or more displays are installed can be carried out.
Industrial Applicability

As described above, the display device according to the present invention is useful in control of display in a plurality of directions, and particularly suitable for control when different outputs are conducted to a driver and a non-driver in the case of the device being mounted on a vehicle.

## Claims

1. A display device, comprising:
a display unit for displaying individual information in a plurality of viewing directions on a common screen;
an operation input unit for receiving operation inputs;
a limiting unit for limiting the reception of operation inputs to reception of operation inputs associated with information displayed in a particular viewing direction; and
a switching unit for switching the particular viewing direction.

2. A display device according to Claim 1, comprising:
a prohibition unit for prohibiting reception of operation inputs associated with information displayed in viewing directions other than the particular viewing direction.

3. A display device according to Claim 1,
wherein a certain viewing direction has been set to the particular viewing direction under normal conditions.

4. A display device according to Claim 1,
wherein the switching unit switches a viewing direction in which information of more importance is displayed to the particular viewing direction based on the importance of individual information displayed in each viewing direction.

5. A display device according to Claim 1,
wherein the limiting unit erases individual information displayed in viewing directions other than the particular viewing direction from a screen.

6. A display device according to Claim 1,
wherein the limiting unit erases operation-related pictures for operation inputs individually displayed in viewing directions other than the particular viewing direction from a screen.

7. A display device according to Claim 1,
wherein the switching unit switches a certain viewing direction to the particular viewing direction for a predetermined period of time when it is judged that a condition for setting the certain viewing direction to the particular viewing direction was satisfied.

8. A display device according to Claim 1, comprising:
a notification unit for notifying a user of the particular viewing direction.

9. A display device according to Claim 1, comprising:
a notification unit for notifying a user of switching of the particular viewing direction.

10. A display device according to Claim 8,
wherein the notification unit notifies the particular viewing direction by changing at least either of at least a part of a display mode of information individually displayed in the particular viewing direction and at least a part of a display mode of information individually displayed in viewing directions other than the particular viewing direction.

11. A display device according to Claim 10,
wherein information whose display mode is changed includes each operation-related picture for operation inputs to be individually displayed.

12. A display device according to Claim 1, comprising:
a priority setting unit for setting information displayed in any one of the plurality of directions to have priority,
wherein the switching unit switches a viewing direction in which information with the priority is displayed to the particular viewing direction if it is judged that a condition for keeping a situation where a viewing direction in which information without the priority is displayed has been switched to the particular viewing direction became unsatisfied in the situation where the viewing direction in which the information without the priority is displayed has been switched to the particular viewing direction.

13. A display device according to Claim 8,
wherein the notification unit displays individual information displayed in the particular viewing direction in viewing directions other than the particular viewing direction.

14. A display device according to Claim 13,
wherein the information displayed in the viewing directions other than the particular viewing direction is an operation-related picture for operation inputs among the individual information displayed in the particular viewing direction.

15. A display device, comprising:
a display unit for displaying individual information in a plurality of viewing directions on a common screen; and
a control unit for controlling at least one of display of information displayed in a particular viewing direction of the plurality of viewing directions, reception of operation inputs associated with information displayed in the particular viewing direction and display of an operation input picture for operation inputs displayed in the particular viewing direction.

16. A display device according to Claim 15, further comprising:
a moving state detection unit for detecting a moving state of a movable body on which the display device is mounted,
wherein the control unit conducts the control based on a detection result by the moving state detection unit.

17. A display device according to Claim 16, further comprising:
a source selection unit whereby a source corresponding to the information can be selected,
wherein the control unit conducts the control based on a detection result by the moving state detection unit when the source corresponding to the information displayed in the particular viewing direction is a source to be restricted.

18. A display device according to Claim 15, comprising:
an operation input unit which can determine from which direction of the plurality of viewing directions an operation input is being performed.

19. A display device according to Claim 15, further comprising:
a voice recognition unit for receiving operation inputs by voice.

20. A display device according to Claim 19,
wherein the voice recognition unit has an identification unit for detecting a direction of the voice and determining from which direction of the plurality of viewing directions the voice came.
